(19) Europäisches Patentamt
European Patent Office
Office européen des brevets

(11) **EP 1 644 800 B1**

(12) **EUROPEAN PATENT SPECIFICATION**

(45) Date of publication and mention
of the grant of the patent:
**02.04.2014 Bulletin 2014/14**

(21) Application number: **04777195.1**

(22) Date of filing: **24.06.2004**

(51) Int Cl.:
***E21B 44/00*** *(2006.01)*

(86) International application number:
**PCT/US2004/020731**

(87) International publication number:
**WO 2005/001661 (06.01.2005 Gazette 2005/01)**

(54) **METHOD AND APPARATUS AND PROGRAM STORAGE DEVICE INCLUDING AN INTEGRATED WELL PLANNING WORKFLOW CONTROL SYSTEM WITH PROCESS DEPENDENCIES**

VERFAHREN UND VORRICHTUNG UND PROGRAMMSPEICHEREINRICHTUNG MIT EINEM INTEGRIERTEN BOHRLOCHPLANUNGSARBEITSFLUSS-REGELSYSTEM MIT PROZESSABHÄNGIGKEITEN

PROCEDE, APPAREIL, ET DISPOSITIF DE STOCKAGE DE PROGRAMME EQUIPE D'UN SYSTEME INTEGRE DE COMMANDE DE FLUX DE TRAVAUX DE PLANIFICATION D'UN PUITS A DEPENDANCES DE TRAITEMENT

(84) Designated Contracting States:
**AT BE BG CH CY CZ DE DK EE ES FI FR GB GR HU IE IT LI LU MC NL PL PT RO SE SI SK TR**

(30) Priority: **25.06.2003 US 482511 P**
**02.12.2003 US 726288**
**17.03.2004 US 802622**

(43) Date of publication of application:
**12.04.2006 Bulletin 2006/15**

(73) Proprietors:
• **Schlumberger Technology Corporation**
**Houston, TX 77056-2722 (US)**
Designated Contracting States:
**AT BE BG CH CY CZ DE DK EE ES FI GB GR HU IE IT LI LU MC NL PL**
• **Services Petroliers Schlumberger**
**75007 Paris (FR)**
Designated Contracting States:
**FR**
• **Schlumberger Evaluation & Production Service (UK) Limited**
**London**
**E14 9SH (GB)**
Designated Contracting States:
**AT BE BG CH CY CZ DE DK EE ES FI GB GR HU IE IT LI LU MC NL PL PT RO SE SI SK TR**

(72) Inventors:
• **GURPINAR, Omer**
**Denver, CO (US)**
• **DJANDJI, Selim**
**Sugar Land, TX 77479 (US)**
• **MILLER, Tommy**
**Cholsey, Wallingford,**
**Oxon OX10 9PT (GB)**
• **NEVILLE, Thomas, James**
**Beijing 100027 (CN)**
• **KLUMPEN, Hans, Eric**
**Austin, TX 78703 (US)**
• **VEENINGEN, Daan**
**Houston, TX 77005-3339 (US)**
• **GIVENS, Kris**
**Stafford, TX 77477 (US)**
• **CHEN, Patrick**
**Houston, TX 77056 (US)**

(74) Representative: **Osha Liang SARL et al**
**32, avenue de l'Opéra**
**75002 Paris (FR)**

(56) References cited:
**US-A1- 2002 049 575**

• **ANONYMOUS: "Primavera Project Planner Planning and Control Guide Version 3.0", PRIMAVERA SYSTEMS GUIDE, August 1999 (1999-08), pages I-300, XP002660584,**

- **SRIRAMDAS S: "Systems Analysis of Drilling Engineering and Management To Design a Relational Database", DISSERTATION,, 1 January 1998 (1998-01-01), pages 1-185, XP008107671,**
- **Primavera Project Planner as evidenced by at least Primavera Project Planner Planning and Control Guide Version 3.0 (1999), Pages 40, 53, 62 - 66, 79, 193**

- **ASADOLLAH HAYATDAVOUDI: 'Systems analysis of drilling engineering and management to design a relational database.' 1998, page 7,59, XP008107671**

**Description**

The subject matter of the present invention relates to a software package stored in the memory of a workstation or other computer system, hereinafter called the "Single Well Predictive Model" or "SWPM", that enables a user to introduce a first user objective and a first set of input data, a processor in the computer system executing the SWPM software in response to the first user objective and first set of input data, the SWPM software generating a first specific workflow, in response the first user objective and executing a first plurality of software modules which comprise the first specific workflow utilizing the first set of input data to thereby generate a first product or a result, of the execution, the SWPM software generating a second specific workflow in response a second user objective and executing a second plurality of software modules which comprise the second specific workflow utilizing a second set of input data to thereby generate a second product or result of the execution. More specifically, the present invention relates to a software system adapted to be stored in a computer system, such as a personal computer, for providing an integrated well planning workflow control system with process dependencies.

Software for well planning is known in the prior art, cf. SRIRAMDAS S, "Systems Analysis of Drilling Engineering and Management To Design a Relational Database", Master Thesis, University of South-western Louisiana, 1 January 1998, disclosing a relational data base for well cost estimation.

Generally speaking, during the execution of software in a processor of a computer system for the purpose of generating a final desired product, it is often necessary to execute a first software module in the processor of the computer system two produce a first product and then, separately and independently, execute a second software module in the processor in response to the first product to produce a second product, and then, separately and independently, execute a third software module in the processor in response to the second product to produce the final desired product. In order to produce the final desired product, it may be necessary to separately and independently execute in the processor of the computer system a multitude of software modules in order to produce the final desired product. The aforementioned execution of the multitude of software modules, in a separate and independent fashion, is very time consuming and is a very laborious task.

Accordingly; there exists a need for a 'software based computer system' (hereinafter called the 'Single Well Predictive Model' or 'SWPM') that: (1) automatically produces a first specific workflow comprised of a first plurality of software modules in response to a first set of user objectives and automatically executes the first specific workflow in response to a first set of input data to produce a first desired product, and (2) automatically produces a second specific workflow comprised of a second plurality of software modules in response to a second set of user objectives and automatically executes the second specific workflow in response to a second set of input data to produce a second desired product.

When the SWPM software based computer system is utilized, there is no longer any need to separately and independently execute the first plurality of software modules of the first workflow in order to produce the first desired product, and there is no longer any need to separately and independently execute the second plurality of software modules of the second workflow in order to produce the second desired product. As a result, a considerable amount of processor execution time is saved and, in addition, there is no longer any need to perform the aforementioned laborious task of separately and independently executing a plurality of software modules in order to produce a final desired product.

The aforementioned 'software based computer system' of the present invention, known as the 'Single Well Predictive Model' or 'SWPM', is adapted for use in the oil industry. In the oil industry, ideally, all production activities performed in connection with a well should utilize any knowledge concerning the reservoir (e.g., timely pressure interference and rock heterogeneity) adjacent to the well being drilled. However, as a result of the absence of a common three-dimensional (3D) predictive model that can be used not only by reservoir engineers but also by production/drilling/well services engineers, the gap between the reservoir knowledge and day-to-day well decisions remains one of the most significant sources of inefficiency in field management and field operations. Due to a similar gap between reservoir modeling and production modeling, it has been observed that practicioners rarely utilize much of the data that has been acquired and certainly do not maximize what can be interpreted from that data. Furthermore, most of the reservoirs do not have a realistic reservoir predictive model. It is estimated that only 20% of producing reservoir fields have a reservoir model, indicating that most of the reservoir fields are operated on the basis of knowledge about individual wells. There are a number of reasons for this, chief among them being: the need for necessary experienced personnel, the need for 'fit-for-purpose' software, the sheer size of the reservoir models, and the time required.

Accordingly, there exists a need for a 'Single Well Predictive Model' or 'SWPM' software based computer system that enables a user to get closer to well operations while empowering them with fast interpretation tools utilizing all available data and 3D reservoir models built around a specific well thus enhancing the quality of decisions in field management. The 'SWPM' software based computer system represents an opportunity for users to differentiate themselves in the market by 'adding value', where such value is added by introducing a new interpretation service (i.e., the SWPM software) to current and future data acquisition tools and services. In addition the 'real-time capability' associated with the 'Single Well Predictive Model (SWPM)' software based computer system will be appreciated and utilized significantly in the oil industry because the oil industry as a whole is rapidly progressing toward an 'on-time' and 'data-to-decision' work environment. Additionally, the attributes of the 'SWPM'.' software based computer system of the present invention, including integration an interactiveness and intuitiveness, will be considered when the next generation of 'fielid predictive models' is created. Finally, there exists a need for an interactive and intuitive flow simulation based 'Single Well Predictive Model (SWPM)' which is used for the purpose of integrating static and dynamic measurements with completion data that can be used by non-reservoir simulation experts. The SWPM enables the building of 3-D comparative prediction models starting from 1-D information (i.e., from the well). The SWPM will read the formation information of the subject well and create a reservoir flow model for the selected drainage area of the well. From 1 D to 3D, property creation is done stochastically and then fine-tuned with respect to the available dynamic data of the well. Once the most likely reservoir properties are estimated, SWPM is used to investigate various predictive scenarios such as customizing completion strategy, investigating drilling strategy, predicting well performance considering the impact on the reservoir, demonstrating the value of additional data on decision making, and demonstrating the value of new technologies. SWPM is built around optimized workflows including, petrophysical property estimation, static model construction, model tuning, drilling, completion, production, or intervention. Ease of use and intuitiveness are of utmost importance. SWPM is used either sequentially in elapsed time mode, or in fully automatic real-time mode.

For example, minimizing wellbore costs and associated risks requires wellbor construction planning techniques that account for the interdependencies involved in the wellbore design. The inherent difficulty is that most design processes and systems exist as independent tools used for individual tasks by the various disciplines involved in the planning process. Although the series of steps involved in well construction planning is well defined and understood, the interdependencies among those steps and the resultin workflow were never previously analyzed, and therefore no technical solution has been provided in the past for reducing the time required to create accurate results. In an environment where increasingly difficult wells of higher value are being drilled with fewer resources, there is now, more than ever, a need for a rapid well-planning, cost, and risk assessment tool.

This specification discloses a software system representing an automated process adapted for integrating both a wellbore construction planning workflow and accounting for process interdependencies. The automated process is based on a drilling simulator, the process representing a highly interactive process that is encompassed in a software system that: (1) allows well construction practices to be tightly linked to geological and geomechanical models, (2) enables asset teams to plan realistic well trajectories by automatically generating cost estimates with a risk assessment, thereby allowing quick screening and economic evaluation of prospects, (3) enables asset teams to quantify the value of additional information by providing insight into the business impact of project uncertainties, (4) reduces the time required for drilling engineers to assess risks and create probabilistic time and cost estimates faithful to an engineered swell design, (5) permits drilling engineers to immediately assess the business impact and associated risks of applying new technologies, new procedures, or different approaches to a well design. Discussion of these points illustrates the application of the workflow and verifies the value, speed, and accuracy of this integrated well planning and decision-support tool.

One aspect of the present invention involves a method of well planning in an automatic well planning system, comprising the steps of selecting one or more Tasks in a Task manager; verifying by a Task dependency a proper order of the one or more Tasks; retrieving by the Task manager from a Task base one or more sets of instructions associated with the one or more Tasks selected in the Task manager and verified by the Task dependency; retrieving by the Task manager from an access manager one or more sets of input data associated with the one or more sets of instructions retrieved by the Task manager from the Task base; verifying that each set of input data of the one or more sets of input data retrieved by the Task manager from the access manager is received by a corresponding one of the one or more sets of instructions retrieved by the Task manager from the Task base; executing, by the Task manager, the one or more sets of instructions and using, by the Task manager, the one or more sets of input data during the executing step thereby generating a set of results; and recording or displaying, by a Task view base, the set of results on a recorder or display device.

Another aspect of the present invention involves a program storage device readable by a machine tangibly embodying a program of instructions executable by the machine to perform method steps adapted for well planning in an automatic well planning system, the method steps comprising: selecting one or more Tasks in a Task manager; verifying by a Task dependency a proper order of the one or more Tasks; retrieving by the Task manager from a Task base one or more sets of instructions associated with the one or more Tasks selected in the Task manager and verified by the Task dependency; retrieving by the Task manager from an access manager one or more sets of input data associated with the one or more sets of instructions retrieved by the Task manager from the Task base; verifying that each set of input data of the one or more sets of input data retrieved by the Task manager from the access manager is received by a corresponding one of the one or more sets of instructions retrieved by the Task manager from the Task base; executing, by the Task manager, the one or more sets of instructions and using, by the Task manager, the one or more sets of input data during the executing step thereby generating a set of results; and recording or displaying, by a Task view base, the set of results on a recorder or display device.

Another aspect of the present invention involves an automatic well planning system, comprising: Task manager apparatus adapted for receiving one or more Tasks selected by a user; Task dependency apparatus adapted for verifying a proper order of the one or more Tasks, the Task manager apparatus retrieving from a Task base one or more sets of instructions associated with the one or more Tasks received in the Task manager apparatus and verified by the Task dependency apparatus, the Task manager apparatus retrieving from an access manager one or more sets of input data associated with the one or more sets of instructions retrieved by the Task manager from the Task base; translator apparatus adapted for verifying that each set of input data of the one or more sets of input data retrieved by the Task manager apparatus from the access manager is received by a corresponding one of the one or more sets of instructions retrieved by the Task manager apparatus from the Task base, the Task manager executing the one or more sets of instructions and using the one or more sets of input data during the execution of the one or more sets of instructions thereby generating a set of results; and Task view base apparatus adapted for recording or display the set of results on a recorder or display device.

On a broader level, the present invention involves a method for determining desired product corresponding to a user objective comprising the steps of: (a) providing a first user objective; (b) providing a first set of input data; (c) automatically generating a first workflow in response to the first user objective; (d) automatically selecting one or more software modules in response to the first workflow; (e) executing the one or more software modules in a processor in response to the first set of input data; and (f) determining a first desired product in response to the executing step (e).

A further aspect of the present invention involves a program storage device readable by a machine tangibly embodying a set of instructions executable by the machine to perform method steps for determining a desired product corresponding to a user objective, the method steps comprising: (a) receiving a first user objective; (b) receiving a first set of input data; (c) automatically generating a first workflow in response to the first user objective; (d) automatically selecting one or more software modules in response to the first workflow; (e) executing the one or more software modules in a processor in response to the first set of input data; and (f) determining a first desired product in response to the executing step (e).

A further aspect of the present invention involves a system responsive to a set of input data and a user objective adapted for generating a desired product corresponding to the user objective comprising: first apparatus adapted for receiving a first user objective and a first set of input data; second apparatus adapted for automatically generating a first workflow in response to the first user objective; third apparatus adapted for automatically selecting one or more software modules in response to the first workflow; and processor apparatus adapted for automatically executing the one or more software modules in response to the first set of input data and generating a first desired product in response to the execution of the one or more software modules.

A further aspect of the present invention involves a method for determining a final product in response to a user objective comprising the steps of: (a) providing the user objective and providing input data; (b) generating a specific workflow corresponding to the user objective; (c) selecting a plurality of software modules in response to the specific workflow, the plurality of software modules having a predetermined sequence; (d) executing the plurality of software modules in the predetermined sequence in response to the input data; and (e) generating the final product when the execution of the plurality of software modules in the predetermine d sequence is complete.

A further aspect of the present invention involves a program storage device readable by a machine tangibly embodying a set of instructions executable by the machine to perform method steps for determining a final product in response to a user objective, the method steps comprising: (a) providing the user objective and providing input data; (b) generating a specific workflow corresponding to the user objective; (c) selecting a plurality of software modules in response to the specific workflow in a predetermined sequence; (d) executing the plurality of software modules in the predetermined sequence in response to the input data; and (e) generating the final product when the execution of the plurality of software modules in the predetermine d sequence is complete.

A further aspect of the present invention involves a system adapted for determining a final product in response to a user objective comprising: first apparatus adapted for receiving the user objective and receiving input data; second apparatus adapted for generating a specific workflow corresponding to the user objective; third apparatus adapted for selecting a plurality of software modules in response to the specific workflow, the plurality of software modules having a predetermined sequence fourth apparatus adapted for executing the plurality of software modules in the predetermined sequence in response to the input data; and fifth apparatus adapted for generating the final product when the execution of the plurality of software modules in the predetermined sequence is complete.

Further scope of applicability of the present invention will become apparent from the detailed description presented herein. It should be understood, however, that the detailed description and the specific examples, while representing only a few embodiments of the present invention, are given by way of illustration only, since various changes and modifications within the spirit and scope of the invention will be obvious to one skilled in the art from a reading of the following detailed description. Similarly, an understanding of the present invention will be facilitated by the accompanying drawings, given by way of illustration only and not intended to be limitative of the present invention, and wherein:

figure 1 illustrates a workstation or other computer system representing the Single Well Predictive Model (SWPM) software based computer system of the present invention;

figure 2 illustrates the products generated by the recorder or display device of the computer system of figure 1;

figure 3 illustrates a simple example of model building and its ultimate purpose which is utilized by the SWPM software based computer system of figure 1;

figure 4 illustrates a simple example of the construction and the function operation of the SWPM software based computer system which stores the SWPM software illustrated in figure 1;

figure 5 illustrates a detailed construction of the SWPM software stored in the SWPM software based computer system of figure 1;

figure 6 illustrates the relationship between the Data Conditioner, the Decision Tool, and the Workflow Harness; this figure showing how the Data Conditioner and Decision Tool are connected;

figure 7 illustrates a schematic diagram of the Data Conditioner; this figure illustrating how multi-domain data coming from various sources (logs, image logs, MDT measurement, cores and production logs) will be processed to create a 'calibrated consistent 1-D petrophysical static model';

figure 8 illustrates the one-dimensional (1-D) product of the Data Conditioner; this figure showing how the Data Conditioner results are visualized;

figure 9 illustrates the steps, within the Decision Tool, which are taken in response to the 1-D product output of the Data Conditioner shown in figure 8; this figure showing how the Data Conditioner and the Decision Tool are connected (a detailed version of figure 6); it shows the steps to be taken to create product 'decisions' out of the Decision Tool;

figure 9A illustrates the architecture of the SWPM software shown in figures 1, 4-6; this figure showing how existing software and new software are organized (integrated) in a specific order to create the (SWPM) showing the engines in the background; the SWPM uses the software in a specific order (set according to the Decision Tool) while executing;

figures 10 and 11 illustrates a more detailed construction and functional operation of the SWPM software stored in the SWPM software based computer system of figure 1;

figures 12 through 17 illustrate examples of the functional operation of the SWPM software based computer system of figure 1 which stores the SWPM software of the present invention shown in figures 5, 10, and 11;

figure 18 illustrates a software architecture schematic indicating a modular nature to support custom workflows;

figure 19 including figures 19A, 19B, 19C, and 19D illustrates a typical task view consisting of workflow, help and data canvases;

figure 20 including figures 20A, 20B, 20C, and 20D illustrates wellbore stability, mud weights, and casing points;

figure 21 including figures 21A, 21B, 21C, and 21D illustrates risk assessment;

figure 22 including figures 22A, 22B, 22C, and 22D illustrates a Monte Carlo time and cost distribution;

figure 23 including figures 23A, 23B, 23C, and 23D illustrates a probabilistic time and cost vs. depth;

figure 24 including figures 24A, 24B, 24C, and 24D illustrates a summary montage;

figure 25 illustrates a workflow in an 'Automatic Well Planning Software System';

figure 26A illustrates a computer system which stores an Automatic Well Planning Risk Assessment Software;

figure 26B illustrates a display as shown on a Recorder or Display device of the Computer System of figure 26A;

figure 27 illustrates a detailed construction of the Automatic Well Planning Risk Assessment Software stored in the Computer System of figure 26A;

figure 28 illustrates a block diagram representing a construction of the Automatic Well Planning Risk Assessment software of figure 27 which is stored in the Computer System of figure 26A;

figure 29 illustrates a Computer System which stores an Automatic Well Planning Bit Selection software;

figure 30 illustrates a detailed construction of the Automatic Well Planning Bit Selection Software stored in the Computer System of figure 29;

figures 31A and 31B illustrate block diagrams representing a functional operation of the Automatic Well Planning Bit Selection software of figure 30;

figure 32 illustrates a Bit Selection display which is generated by a Recorder or Display device associated with the Computer System of figure 29 which stores the Automatic Well Planning Bit Selection software;

figure 33 illustrates a Computer System which stores an Automatic Well Planning Drillstring Design software;

figure 34 illustrates a detailed construction of the Automatic Well Planning Drillstring Design Software stored in the Computer System of figure 33;

figure 35 illustrates a more detailed construction of the Automatic Well Planning Drillstring Design software system of figures 33 and 34 including the Drillstring Design Algorithms and Logical Expressions;

figure 36 illustrates a typical 'Drillstring Design output display' which can be recorded or displayed on the recorder or display device 62b in figure 33 and which displays the Drillstring Design Output Data 62b1 in figure 33;

figure 37 illustrates a computer system of the types illustrated in figures 26A, 29, and 33 which stores the Automatic Well Planning Workflow Control System software (AWPWCSS) of the present invention;

figure 38 illustrates a block diagram of the AWPWCSS of the present invention

figures 39A through 39F illustrate a more detailed construction of each of the blocks which comprise the AWPWCSS of figure 38 of the present invention;

figure 40 illustrates a more detailed construction of the Task Base and the Task Manager associated with the AWPWCSS of the present invention of figures 20-22;

figures 41 and 42 illustrate a function associated with the Task manager of the AWPWCSS of the present invention pertaining to the selection by a user of one or more tasks to be performed in sequence;

figure 43 illustrates a more detailed construction of the task base including its interface with a Navigation Control, an Access Manager, and a Task View Base; and

figures 44 and 45 illustrate a function associated with the Navigation Control.

In more detail, the Single Well Predictive Model (SWPM) software-based computer system of the present invention, which stores the Single Well Predictive Model (SWPM) software of the present invention: (1) automatically produces a first specific workflow comprised of a first plurality of software modules in response to a first set of user objectives and automatically executes the first specific workflow in response to a first set of input data to produce a first desired product, and (2) automatically produces a second specific workflow comprised of a second plurality of software modules in response to a second set of user objectives and automatically executes the second specific workflow in response to a second set of input data to produce a second desired product. As a result, there is no longer any need to separately and independently execute the first plurality of software modules of the first workflow in order to produce the first desired product, and there is no longer any need two separately and independently execute the second plurality of software modules of the second workflow in order to produce the second desired product. As a result, a considerable amount of processor execution time is saved and, in addition there is no longer any need to perform the aforementioned laborious task of separately and independently executing a plurality of software modules in order to produce a final desired product.

In addition, the Single Well Predictive Model (SWPM) software based computer system of the present invention, which stores the SWPM software of the present invention, provides a workflow for the less specialized engineer for the purpose of building a model intuitively which can subsequently be used to predict production performance. The SWPM software of the present invention includes four modules: (1) Data Entry module used for the purpose of introducing 'input data', (2) a Model Creation module used for the purpose of generating a 'Specific Workflow', (3) a Model Calibration module used as a 'Data Conditioner', and (4) a Solutions module used as a 'Decision Tool'. Those modules are supported by a Workflow Storage database wich includes a background knowledge database and processes guidance system. According to the 'execution type' (e.g., sequential or real-time) and a chosen 'User-objective' which is provided by a user (e.g., Completion Optimization, Stimulation Optimization, Data Valuation, Test Design, Well Reserve & Recovery Estimator, etc), the user provides 'input data' guided by a 'specific workflow' representing the selected solution workflow. Data Entry (which provides the 'input data') will provide options to the user, including knowledge base and constant property values. When the 'input data' is introduced by the user into the Data Entry module and when the 'User-objective' is provided by the user, a 'specific workflow' is generated in the Model Creation module wherein a reservoir model around the subject well will be built automatically. The user, as an option, can guide the reservoir model building. Based on the ranges of input data possible realizations of the reservoir model will be built and provided to the user for selection. The SWPM software offers a selection methodology or alternatively, the user may choose to retain all realizations. When the 'specific workflow' model is generated in the Model Creation module, a 'Data Conditioner' will be provided wherein validation of the model (represented by the 'specific workflow') to observed transient and/or production data will be available in the Model Calibration module. When the representative reservoir flow model is in place (i.e., the 'Data Conditioner' has completed its function), the simulator can now be used to achieve the original objective selected at the beginning of the session. Alternatively, the user can choose to investigate other optimization scenarios in the Solutions module, also known as the 'Decision Tool'. A set of results are generated by the 'Decision Tool' in the Solutions module. The set of results generated by the 'Decision Tool' in the Solutions module include a series of predictions which are based on the operations and/or completion scenarios that were provided by the user. The 'real-time' version of the SWPM is able to build consecutive predictive models for specified intervals during the drilling process. The intervals can either be manually chosen or triggered by a geological/petropbysical (rock/fluid) property. Predictive models built during a drilling operation are saved and are accessible for comparative analysis.

A Single Well Predictive Model (SWPM) is an integrated and intuitive software tool that enables the user to build the following for an oil/gas well: (1) starting from well logs and other tests, determining storage and conductivity properties in the reservoir around the well bore, (2) constructing a 3D reservoir model around the well bore, and (3) forecasting the performance of the well under various completion and production scenarios (each of these three activities can be done manually with the help of many different software tools). When this stage is reached, the model can then be used for numerous forecasts that can lead to useful decisions, such as (1) where to complete well for optimizing production, (2) selection of well completion tubular for ensuring the planned production, (3) Modular Dynamic Tester (MDT) and Pressure Transient Test interpretations, (4) Production and pressure test design, and (5) Estimating the reserve around the well bore while drilling (this list can be expanded). The SWPM is an interactive and special guide system that leads the user from a 'data end' to a decision end'. During this interactive journey, the SWPM has access to numerous software tools in the background. The SWPM software includes: (1) a Data Conditioner, (2) a Decision Tool and (3) a Workflow Harness. The relationships between the Data Conditioner and the Decision Tool and the Workflow Harness will be discussed in the following sections of this specification.

After the disclosure of the SWPM and the above-described relationships, an 'Automatic Well Planning Software System' (AWPSS) will be described, the AWPSS utilizing an 'output' which is generated by the SWPM software, where that 'output' is comprised of a plurality of 'Tasks' to be executed in a particular sequence, the plurality of 'Tasks' being generated in response to a user objective which has been provided by a user. The AWPSS is a "smart" tool for rapid creation of a detailed drilling operational plan that provides economics and risk analysis. The user inputs trajectory and earth properties parameters; the system uses this data and various catalogs to calculate and deliver an optimum well design thereby generating a plurality of outputs, such as drill string design, casing seats, mud weights, bit selection and use, hydraulics, and the other essential factors for the drilling Task. System Tasks are arranged in a single workflow in which the output of one Task is included as input to the next. The user can modify most outputs, which permits fine-tuning of the input values for the next Task. The AWPSS has two primary user groups: (1) Geoscientist: Works with trajectory and earth properties data; the AWPSS provides the necessary drilling engineering calculations; this allows the user to scope drilling candidates rapidly in terms of time, costs, and risks; and (2) Drilling engineer: Works with wellbore geometry and drilling parameter outputs to achieve optimum activity plan and risk assessment; Geoscientists typically provide the trajectory and earth properties data. The scenario, which consists of the entire process and its output, can be exported for sharing with other users for peer review or as a communication tool to facilitate project management between office and field. Variations on a scenario can be created for use in business decisions. The AWPSS can also be used as a training tool for geoscientists and drilling engineers. The AWPSS enables the entire well construction workflow to be run through quickly. In addition, the AWPSS can ultimately be updated and re-run in a time-frame that supports operational decision making. The entire re-planning process must be fast enough to allow users to rapidly iterate to refine well plans through a series of what-if scenarios.

The decision support algorithms provided by the AWPSS disclosed in this specification link geological and geomechanical data with the drilling process (casing points, casing design, cement, mud, bits, hydraulics, etc) to produce estimates and a breakdown of the well time, costs, and risks. This linking allows interpretation variations, changes, and updates of the Earth Model to be quickly propagated through the well planning process.

The software associated with the aforementioned AWPSS accelerates prospect selection, screening, ranking, and well construction workflows. The target audiences are two fold: those who generate drilling prospects and those who plan and drill those prospects. More specifically, the target audiences include: Asset Managers, Asset Teams (Geologists, Geophysicists, Reservoir Engineers, and Production Engineers), Drilling Managers, and Drilling Engineers. Asset Teams will use the software associated with the AWPSS as a scoping tool for cost estimates, and assessing mechanical feasibility, so that target selection and well placement decisions can be made more knowledgeably, and more efficiently. This process will encourage improved subsurface evaluation and provide a better appreciation of risk and target accessibility. Since the system can be configured to adhere to company or local design standards, guidelines, and operational practices, users will be confident that well plans are technically sound. Drilling Engineers will use the software associated with the AWPSS disclosed in this specification for rapid scenario planning, risk identification, and well plan optimization. It will also be used for training, in planning centers, universities, and for looking at the drilling of specific wells, electronically drilling the well, scenario modeling and 'what-if' exercises, prediction and diagnosis of events, post-drilling review and knowledge transfer. The software associated with the AWPSS enables specialists and vendors to demonstrate differentiation amongst new or competing technologies. It allows operators to quantify the risk and business impact of the application of these new technologies or procedures.

Therefore, the AWPSS disclosed in this specification: (1) dramatically improves the efficiency of the well planning and drilling processes by incorporating all available data and well engineering processes in a single predictive well construction model, (2) integrates predictive models and analytical solutions for wellbore stability, mud weights and casing seat selection, tubular and hole size selection, tubular design, cementing, drilling fluids, bit selection, rate of penetration, BHA design, drillstring design, hydraulics, risk identification, operations planning, and probabilistic time and cost estimation, all within the framework of a mechanical earth model, (3) easily and interactively manipulates variables and intermediate results within individual scenarios to produce sensitivity analyses. As a result, when the AWPSS is utilized, the following results are achieved: (1) more accurate results, (2) more effective use of engineering resources, (3) increased awareness, (4) reduced risks while drilling, (5) decreased well costs, and (6) a standard methodology or process for optimization through iteration in planning and execution. As a result, during the implementation of the AWPSS, the emphasis was placed on architecture and usability.

In connection with the implementation of the AWPSS, the software development effort was driven by the requirements of a flexible architecture that permits the integration of existing algorithms and technologies with commercial-off-the-shelf (COTS) tools for data visualization. Additionally, the workflow demanded that the product be portable, lightweight and fast, and require a very small learning curve for users. Another key requirement was the ability to customize the workflow and configuration based on proposed usage, user profile and equipment availability.

The software associated with the AWPSS was developed using the OCEAN framework owned by Schlumberger Technology Corporation of Houston, Texas. This framework uses Microsoft's .NET technologies to provide a software development platform which allows for easy integration of COTS software tools with a flexible architecture that was specifically designed to support custom workflows based on existing drilling algorithms and technologies.

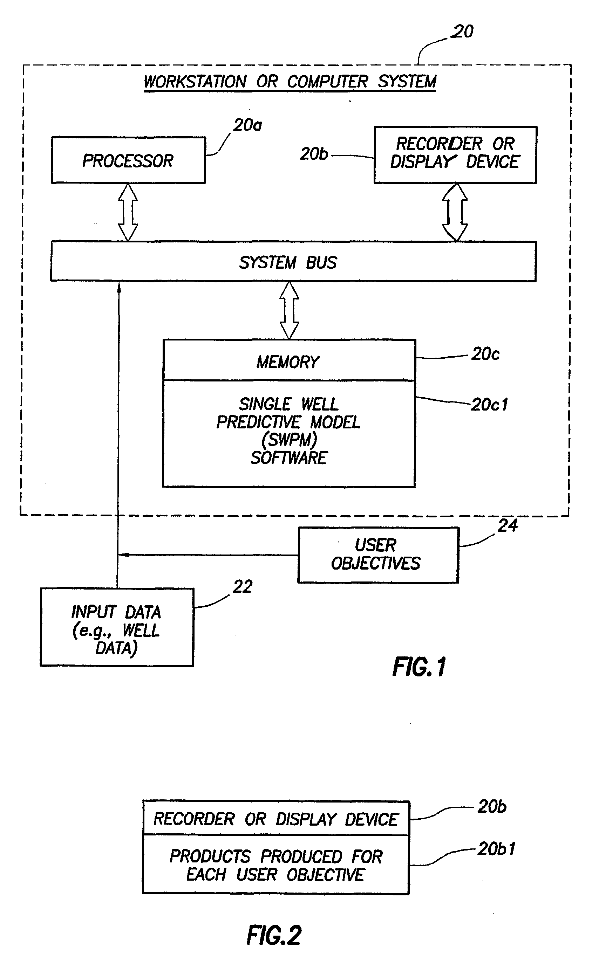

Referring to figures 1 and 2, a workstation or other computer system 20 is illustrated. The workstation or other computer system 20 includes a processor 26a connected to a system bus, a recorder or display device 20b connected to the system bus, and a program storage device 20c, such as a memory 20c, connected to the system bus. The program storage device/memory 20c stores a software package therein known as the 'Single Well Predictive Model (SWPM)' software 20cl. The system bus will receive 'Input Data' 22, such as wellbore data, and the system bus will also receive a set of 'User Objectives' 24. In figure 2, the recorder or display device 20b of figure 1 will ultimately generate, produce, or display one or more 'products produced for each User Objective' 20b1. In operation, with reference to figures 1 and 2, a user will enter the following information into the workstation/computer system 20 of figure 1: the 'Input Data' 22 and the 'User Objectives' 24. When the user provides both the 'Input Data' 22 and the set of 'User Objectives' 24, the processor 20a of the workstation/computer system 20 will execute the 'Single Well Predictive Model' software 20c1 (hereinafter, the SWPM software 20c1) and, when that execution is complete, the recorder to display device 20b of figures 1 and 2 will generate, produce, or display the 'products produced for each User Objective' 20b1. That is, a unique 'product' 20b1 of figure 2 will be generated by the recorder or display device 20b corresponding to each 'User Objective' 24. The workstation or computer system 20 of figure 1 may be a personal computer (PC), workstation, or mainframe. Examples of possible workstations include a Silicon Graphics Indigo 2 workstation, Sun SPARC workstation. Sun ULTRA workstation, or 0Sun BLADE workstation. The program storage device 20c/memory 20c is a computer readable medium or a program storage device which is readable by a machine, such as the processor 20a. The processor 20a may be, for example, a microprocessor, microcontroller, or a mainframe or workstation processor. The memory 20c, which stores the SWPM software 20c1, may be, for example, a hard disk, a ROM, a CD-ROM, a DRAM, or other RAM, a flash memory, a magnetic storage, an optical storage, registers, or other volatile and/or non-volatile memory.

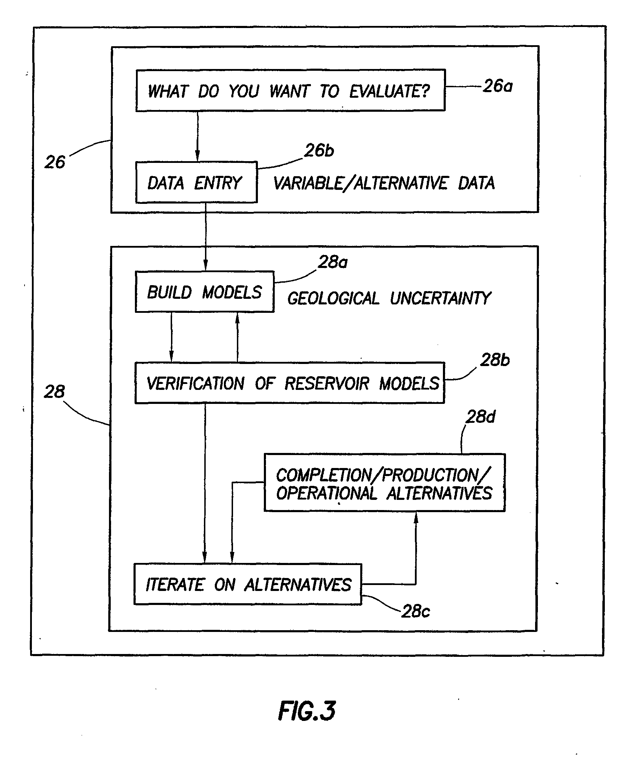

Referring to figure 3, a simple example of model building and its ultimate use or purpose, which is utilized by the SWPM software 20c1 stored in the software-based computer system 20 of figure 1, is illustrated. In figure 3, the simple example of computer model building and its use includes a plurality of steps. In a first step 26 entitled 'variable/alternative data' 26, one must decide 'what do you want to evaluate', step 26a. For example, what reservoir field is to be evaluated? Then, in step 26b, the 'data entry' phase 26b begins, the data being entered via the 'data entry' step 26b (into the computer system of figure 1) corresponding to the entity which one has decided, in step 26a, to evaluate. In a second step 28 entitled 'geological uncertainty', when the 'data entry' step 26b is complete, one must 'build models' in step 28a. In step 28a, the computer models must first be constructed, and, in step 28b 'verification of reservoir models', the computer model must be verified to ensure that it produces accurate results. Upon completion of steps 28a and 28b, a 'verified model' has been constructed and tested. The next steps 28c and 28d involve real-time use of the 'verified model'; that real-time use includes the following activity: iterating on various completion or production or operational alternatives.

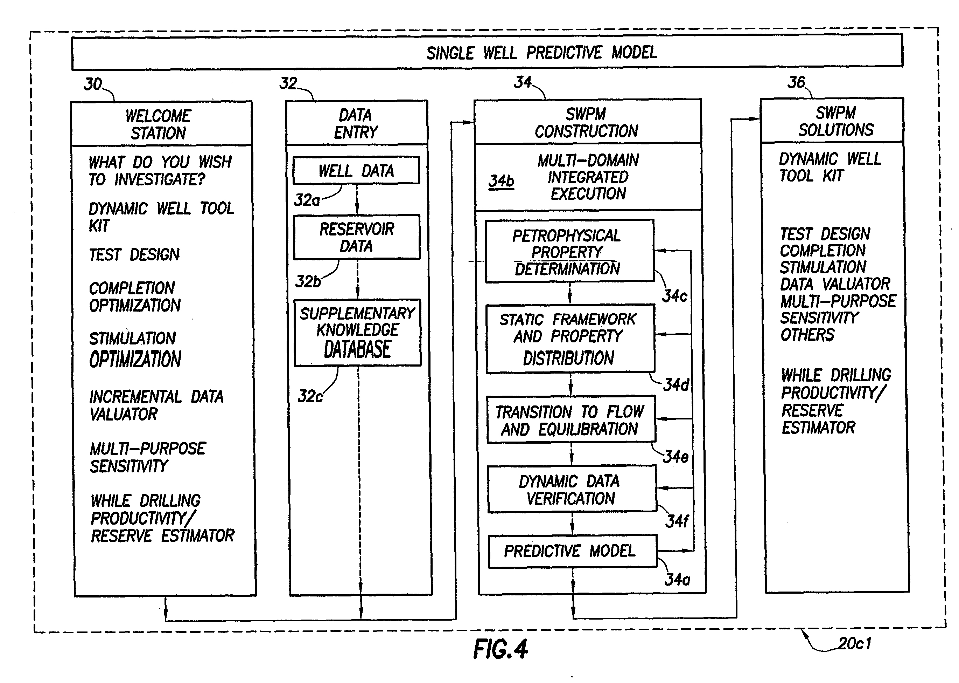

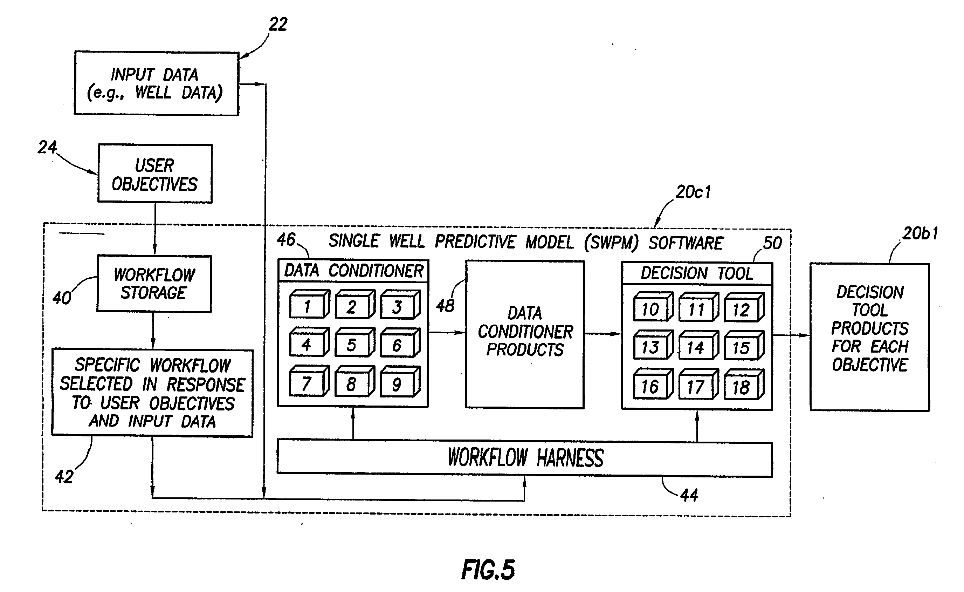

Referring to figure 4, a simple example of one aspect of the construction and the functional operation of the SWPM software based computer system 20 which stores the SWPM software 20c1 of figure 1 is illustrated. In figure 4, the SWPM software 20c1 of figure 1 includes four basic steps: (1) a welcome station 30, (2) a Data Entry step 32, (3) a single well predictive model construction and execution step 34, and (4) a solutions step 36 involving a presentation of generated 'solutions'. In the welcome station step 30 in figure 4, the user must decide 'what do you wish to investigate?'. The SWPM software 20c1 is a dynamic well tool kit that enables a user to perform, for example: test design, completion optimization, stimulation optimization, and the other investigation shown in figure 4. The SWPM 20c1 is an incremental data valuator having multi-purpose sensitivity and it can be a productivity/reserve estimator 'while drilling'. In the data entry step 32 of figure 4, when the user decides to investigate a 'particular entity' (such as a reservoir field) during the welcome station step 30, a plurality of 'input data' is entered into the computer system 20 of figure 1 corresponding to that 'particular entity', such as 'well data' 32a and 'reservoir data' 32b, thereby creating and storing! a 'supplementary knowledge database' 32c. When the 'supplementary knowledge database' 32c is created during the data entry step 32 in response to a set of 'input data' provided by a user (including the aforementioned 'well data' 32a and 'reservoir data' 32b), the next step 34 involves 'model building' and using the recently-built model to perform 'multi-domain integrated execution' 34b. In the SWPM construction step 34 of figure 4 (also called the 'model construction and execution' step 34), a 'predictive model' 34a is constructed. When the 'predictive model' 34a is constructed, the 'input data' of step 32 (i.e., the 'well data' 32a and the 'reservoir data' 32b and other data stored in the 'supplementary knowledge database' 32c) is used to 'interrogate' the 'predictive model' 34a during the 'multi-domain integrated execution' step 34b. That is, the 'well data' 32a and the 'reservoir data' 32b stored in the 'supplementary knowledge database' 32c of step 32 are used to 'interrogate' the 'predictive model' 34a to produce a set of results, where the set of results may include: 'petrophysical property determination' 34c or 'static framework and property distribution' 34d or 'transition to Flow and Equilibration' 34e, or 'Dynamic Data Verification' 34f. The results of that 'interrogation' of the 'predictive model' 34a (including the results generated during steps 34c, 34d, 34e, and 34f) will be presented to the user during the following 'solutions' step 36. In the SWPM 'solutions' step 36, the results of the 'interrogation' of the 'predictive model' 34a, which was performed during 'model construction and execution' step 34, are presented to a user during this 'solutions' step 36. Possible 'solutions' presented during this step 36 may include test design, completion, stimulation, data valuation, sensitivity, productivity/reserve estimator while drilling, etc. However, later in this specification, it will be demonstrated that the 'predictive model' 34a is first constructed in response to a set of 'User Objectives' and, when the 'predictive model' 34a is constructed, the 'well data' 32a and the 'reservoir data' 32b stored in the 'supplementary knowledge database' 32c of step 32 is used to 'interrogate' the newly constructed 'predictive model' 34a to produce the set of results. A more detailed construction of the SWPM software 20c1 of figures 1 and 4 is set forth in the following paragraphs of this specification with reference to figures 5-17 of the drawings.

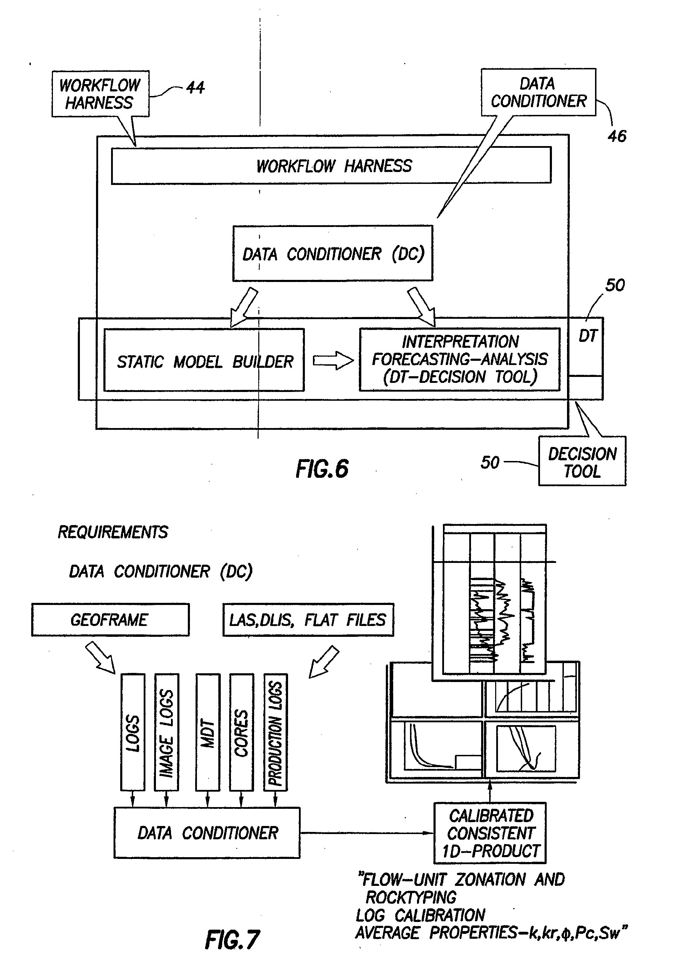

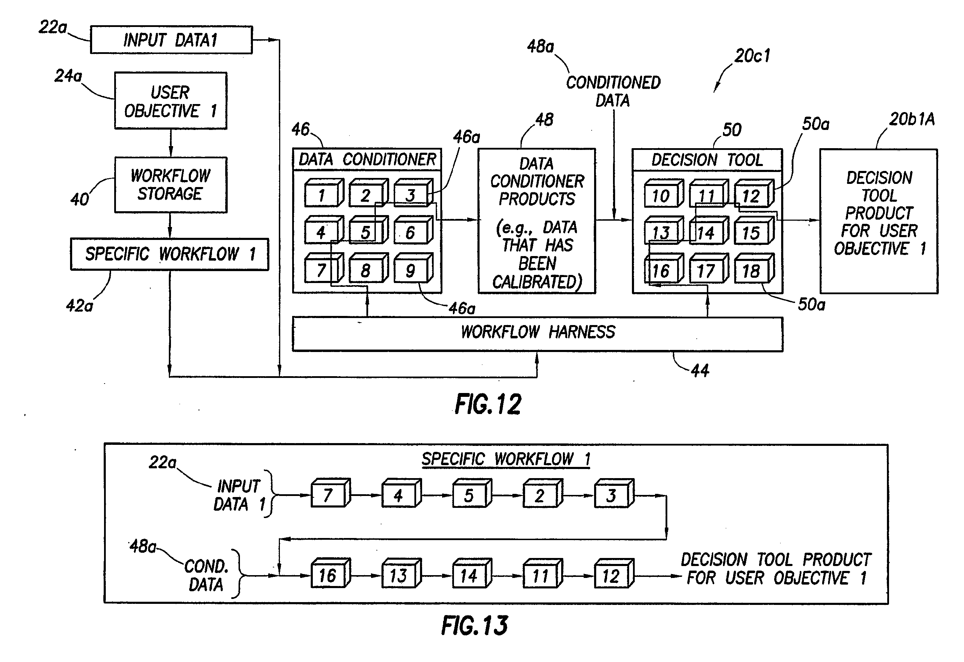

Referring to figure 5, a detailed construction of the SWPM software 20c1 of figures 1 and 4 which is stored in the SWPM software based computer system 20 of figure 1 is illustrated. In figure 5, the SWPM software 20c1 includes a workflow storage 40 adapted for storing a plurality of different workflows (where the term 'workflow' will be defined below) and adapted for generating a 'specific workflow selected in response to User Objective 24 provided by a user. The workflow storage 40 is structured similar to a table having two columns: (1) a first column comprised of a plurality of 'first column user objectives', and (2) a second column comprised of a plurality of 'second column specific workflows' which correspond, respectively, to the plurality of 'first column user objectives' in the first column of the table. When the workflow storage 40 receives a 'selected user objective' 24 which has been selected and provided by a user, that 'selected user objective' 24 is matched with one of the 'first column user objectives' set forth in the first column of the table of the workflow storage 40. As a result, a 'second column specific workflow' in the second column of the table of the workflow storage 40, which corresponds to the 'first column user objective' in the first column of the table of the workflow storage 40, is generated by the workflow storage 40. That 'second column specific workflow', which is generated by the workflow storage 40, will now represent the 'specific workflow selected in response to user objectives' 42 which is shown in figure 5 of the drawings. The SWPM software 20c1 also includes a workflow harness 44 adapted for receiving the 'specific workflow' from step 42 and, responsive to that 'specific workflow' from step 42, selecting a plurality of different software modules from the Data Conditioner and the Decision Tool in response to and in accordance with that 'specific workflow' (to be discussed in greater detail in the paragraphs to follow). The SWPM software 20c1 further includes a Data Conditioner 46 which is adapted for storing therein a plurality of software modules (or Tasks), including the following nine software modules (or Tasks) which are illustrated in figure 5 for purposes of discussion only since a multitude of software modules can be stored in the Data Conditioner 46: software module or Task 1, software module or Task 2, software module or Task 3, software module or Task 4, software module or Task 5, software module or Task 6, software module or Task 7, software module or Task 8, and software module or Task 9. The software modules or Tasks which are stored in the Data Conditioner 46 and are selected by the Workflow Harness 44 will 'condition' (e.g., calibrate) the 'Input Data' 22. When the 'Input Data' 22 is properly 'conditioned', the selected software modules or Tasks stored in the Data Conditioner 46 will generate certain particular 'Data Conditioner Products' 48. The SWPM software 20c1 further includes a Decision Tool 50 which is adapted for receiving the 'Data Conditioner Products' 48 and storing therein a further plurality of software modules or Tasks, including the following nine software modules or Tasks which are illustrated in figure 5 for purposes of discussion only since a multitude of software modules or Tasks can be stored in the Decision Tool 50: software module or Task 10, software module or Task 11, software module or Task 12, software module or Task 13, software module or Task 14, software module or Task 15, software module or Task 16, software module or Task 17, and software module or Task 18. The Decision Tool 50 will ultimately generate 'Decision Tool Products for each Objective' 20b1 which represent the 'Products produced for each User Objective' 20b1 of figure 2. Examples of the 'Decision Tool Products for each Objective' 20b1 include the output displays which are generated by the Risk Assessment Task, the Visualization of Risk Assessment Task, the Bit Selection Task, and the Drillstring Design Task, all of which are discussed below in later sections of this specification. A complete description of the functional operation of the SWPM software 20c1 of figure 5 of the present invention will be set forth in later sections of this specification with reference to figures 12 through 17 of the drawings. However, the following paragraphs of this specification with reference to figures 6-11 will provide further details with respect to the structure and the function of the SWPM software 20c1 of figure 5 of the present invention.

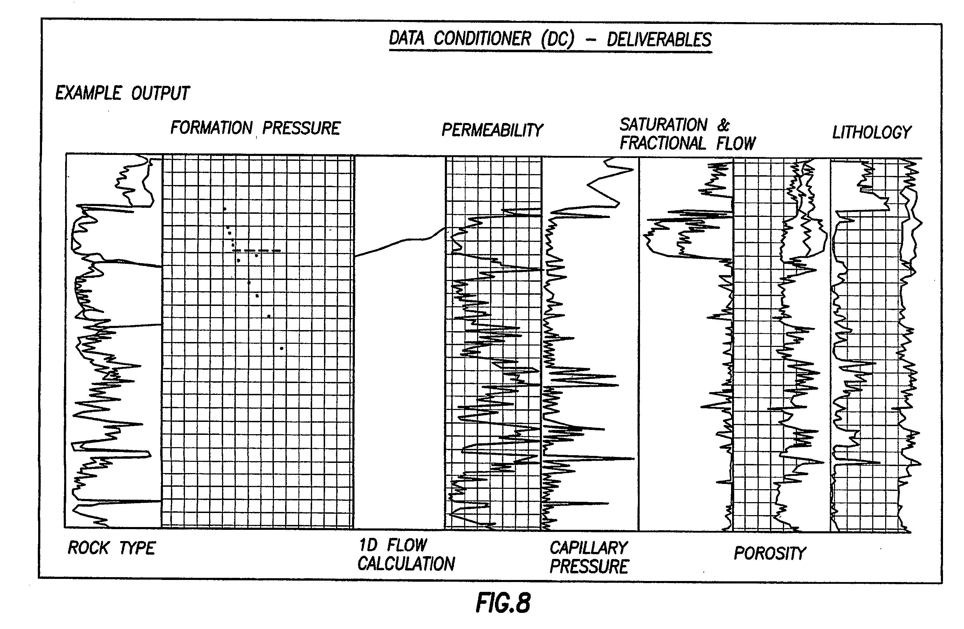

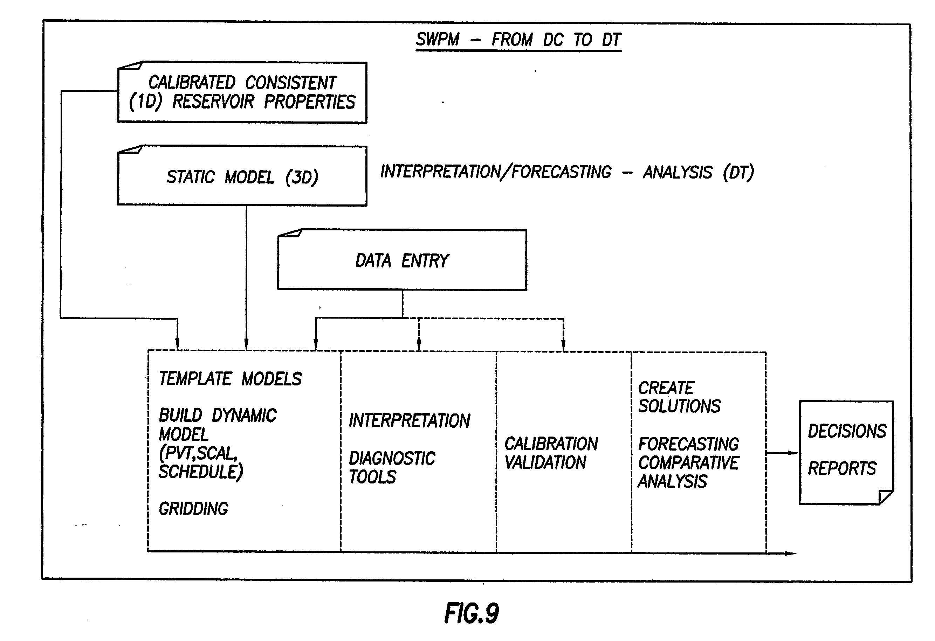

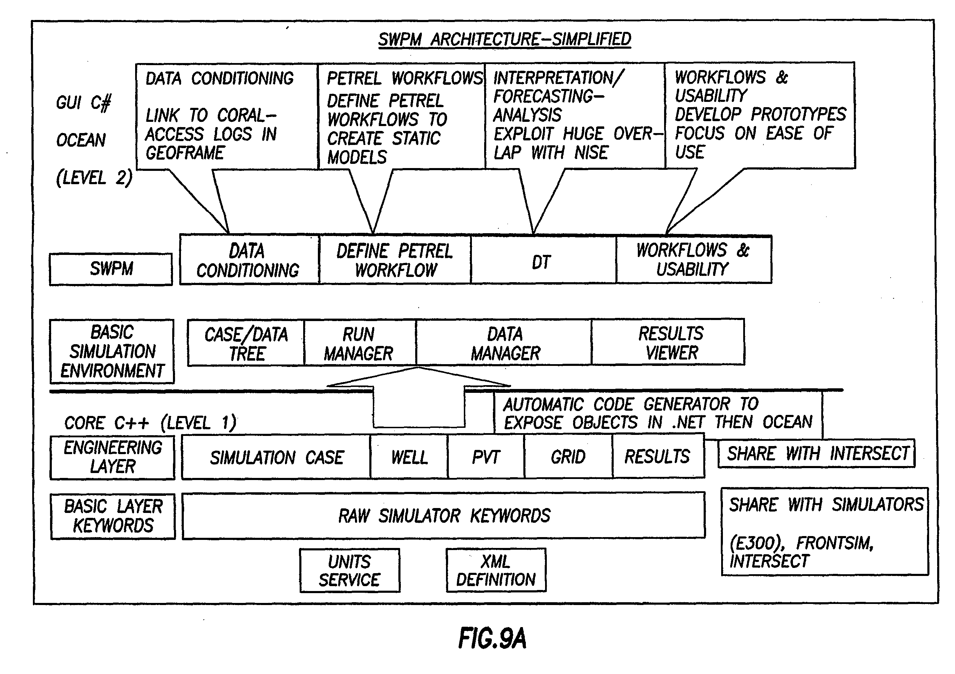

Referring to figures 6, 7, 8, 9, and 9A, recalling that the SWPM software 20c1 of figures 1, 4, and 5 include a Data Conditioner 46, a Decision Tool 50, and a Workflow Harness 44, figure 6 illustrates the relationships between the Data Conditioner 46, the Decision Tool 50, and the Workflow Harness 44, figure 6 showing how the Data Conditioner 46 and the Decision Tool 50 are connected. In figure 6, the Decision Tool 50 includes a Static Model Builder and an Interpretation, Forecasting, and Analysis toll. Figure 7 illustrates how multi-domain data coming from various sources (such as logs, image logs, Modular Dynamic Tester (MDT) measurements, cores, and production logs) is processed to create a 'calibrated consistent 1-D petrophysical static model'. In five 7, if we look at the key pieces in more detail, the Data Conditioner 46 will provide the 1-D (one-dimensional) reservoir properties measured at the well bore. All data is integrated and interpreted in the Data Conditioner 46 as the beginning of the SWPM execution. Schematically, the Data Conditioner 46 is illustrated in figure 7. The 1-D product output of the Data Conditioner 46 is illustrated in figure 8, which shows how a 'set of results' generated by the Data Conditioner 46 is visualized. Figure 9 shows how the Data Conditioner 46 and the Decision Tool 50 are connected, figure 9 representing a detailed version of figure 6. In particular, figure 9 shows the steps to be taken to generate product 'decisions-reports' from the Decision Tool 50. In figure 9, the 1-D product output of the Data Conditioner 46 shown in figure 8 will begin the execution of the Decision Tool 50. The steps within the Decision Tool 50, starting with the 1-D product output of the Data Conditioner 46 of figure 8, is illustrated in figure 9.

The third module of the SWPM software 20c1 is the Workflow Harness 44. The Workflow Harness 44 guides the user from the beginning of the session to the end. Once the user chooses the 'User Objective' from the list provided by the Workflow Harness 44, the Workflow Harness 44 then calls for an 'appropriate workflow,' from within a database, and the execution of the SWPM software 2Uc1 follows along that 'appropriate workflow'. The 'appropriate workflow' will call numerous software applications in the right and optimum order. The input/output protocol from one application software to another will also be arranged by the Workflow Harness 44. Figure 9A shows how a plurality of software modules' are organized or integrated together in a specific order or arrangement to thereby create a SWPM. Figure 9A basically shows the 'software modules' in the background that will be used in a 'specific order', established by the Decision Tool, while executing. In figure 9A, from a software structure point of view, a simplified illustration of the architecture of the SWPM software 20c1 of the present invention is illustrated. In figure 9A, the 'Basic Simulation Environment 'including the 'Case/Data Tree', 'Run Manager', 'Data Manager', and 'Results Viewer' can be found in U. S. Patent Application serial number 09/270,128 filed March 16, 1999, entitled "Simulation System including a Simulator and a Case Manager adapted for Organizing Data Files for the Simulator in a Tree-Like Structure". In figure 9A, the 'SWPM' is the SWPM software 20c1 disclosed in this specification.

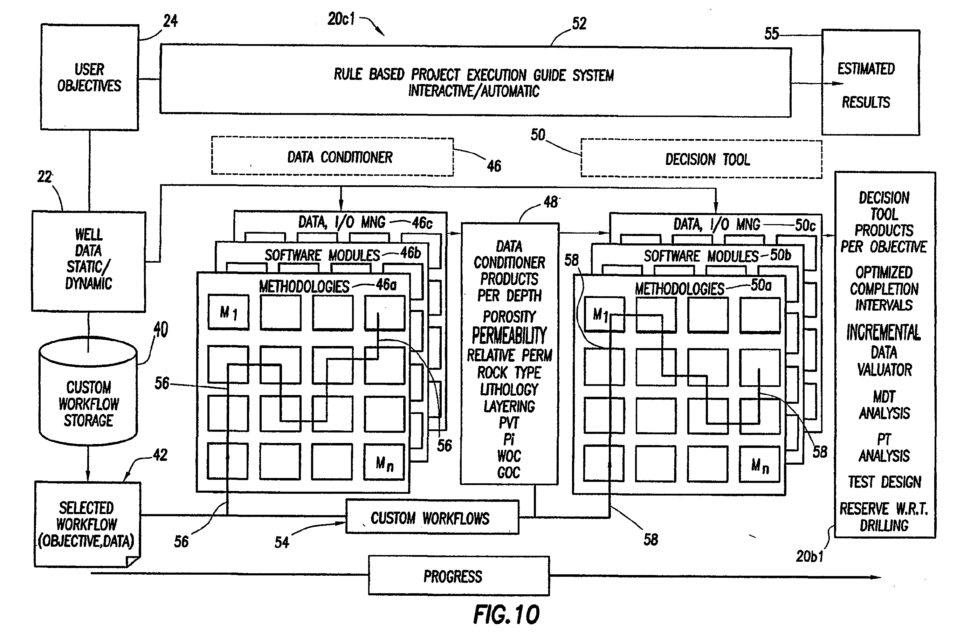

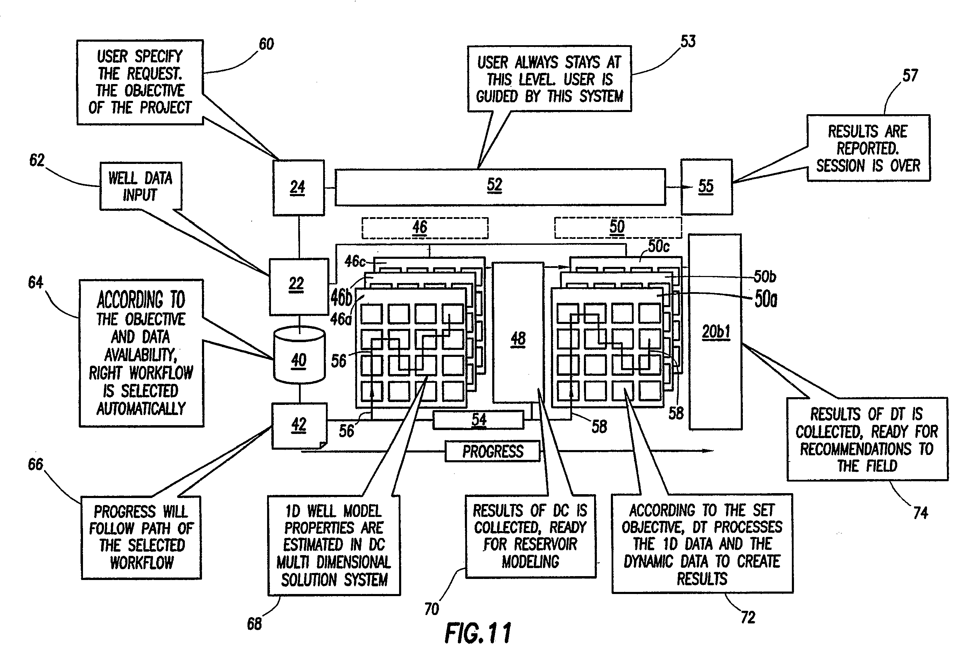

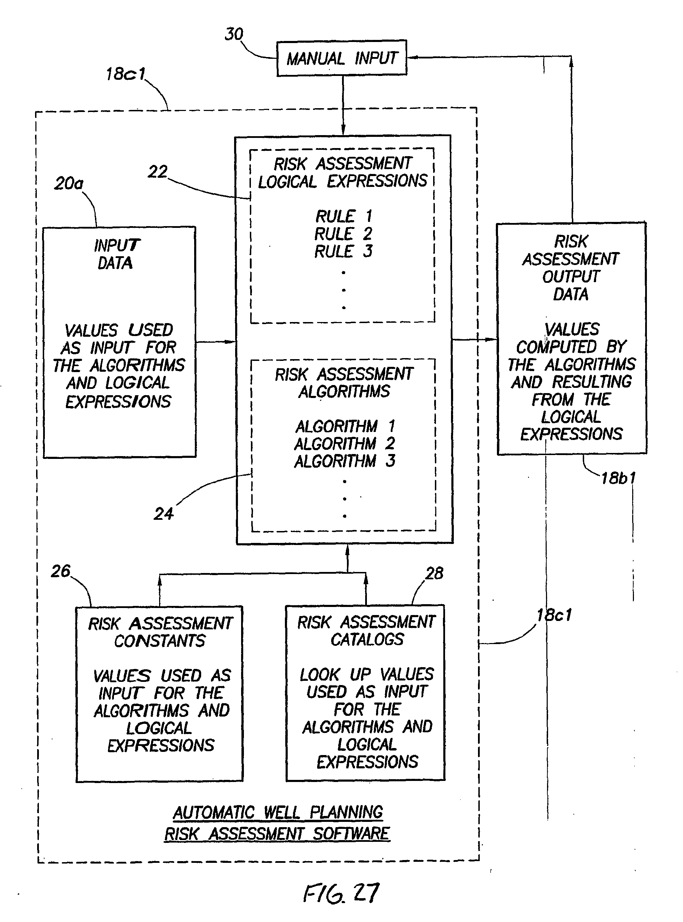

Referring to figures 10 and 11, a more detailed construction of the structure and the functional operation of the SWPM software 20c1 stored in the SWPM software based computer system 20 of figures 1 and 5 is illustrated. In figure 27, the SWPM software 20c1 includes the introduction, by a user, of a set of User Objectives 24. When the User Objectives 24 are input to the SWPM computer system 20 of figure 1, the user will interactively monitor the progress of the execution of the SWPM software 20c1 via the 'Rule Based Project Execution Guide System-Interactive/Automatic'52. When the user interactively monitors the progress of execution of the SWPM software 20c1 via the 'Rule Based Project Execution Guide System' 52, the user always stays at that level, since the user is guided by the system, as indicated by step 53 of figure 11. Estimated results 55 are generated, as indicated by step 55 of figures 10 and 11. The results 55 are reported, and the session is over, as indicated by step 57 in figure 11.

In addition to the set of User Objectives 24, the user will also provide the 'input data' represented by the 'well data' step 22 in figure 10. In response to the User Objectives 24 and the 'well data' 22, a 'selected workflow' 42 is chosen from a plurality of workflows stored in the 'custom workflow storage' 40, the 'selected workflow' 42 representing a 'custom workflow' 54. Recall that the workflow storage 40 is constructed similar to a table having two columns: a first column being comprised of user objectives, and a second column being comprised of workflows; when a user objective 24 is received from a user, that user objective 24 is matched with one of the user objectives in the first column of the table of the workflow storage 40; and, as a result, a 'selected workflow' 42 set forth in the second column of the table of the workflow storage 40, which corresponds to the user objective in the first column of the table, is generated by the custom workflow storage 40. Recalling the 'selected workflow' 42 represents a 'custom workflow' 54, that 'custom workflow' 54 includes a 'first plurality of selected software modules', or Tasks, which exist along a first path 56 in the Data Conditioner 46, and a 'second plurality of selected software modules', or Tasks, which exist along a second path 58 in the Decision Tool 50. When the 'first plurality of selected software modules', or Tasks, are executed by the processor 20a in figure 1, the Data Conditioner Products (per depth) 48 are generated, and, when the 'second plurality of selected software modules', or Tasks, are executed by the processor 20a in figure 1 in response to the Data Conditioner Products 48, the Decision Tool Products 20b1 are generated. The Data Conditioner Products 48, per unit of depth, include porosity, permeability, relative permeability, rock type, lithology, layering, PVT, Pi, WOC, GOC, etc. In figure 10, the Data Conditioner 46 includes: (1) methodologies 46a, (2) software modules 46b, and (3) Data and Input/Output 46c. The Decision Tool 50 also includes: (1) methodologies 50a, (2) software modules 50b, and (3) Data and Input/Output 50c. In response to the 'User Objective' 24 provided by the user and the 'Well Data' also provided by the user, and when the 'first plurality of software modules' along the first path 56 of figure 10 are executed by the processor 20a of figure 1, the 'second plurality of software modules' along the second path 58 of figure 10 will then be executed by the processor 20a of figure 1. When the 'second plurality of software modules' along the second path 58 is executed, a 'Decision Tool Product' 20b1 is generated which corresponds to the 'User Objective' 24 which is selected and provided by the user. In figure 11, the aforementioned functional operation of the SWPM software 20c1 discussed above with reference to figure 10 (whereby a 'User Objective' 24 and 'Input Data' in the form of 'Well Data' 22 are provided by the user and, responsive thereto, a corresponding 'custom workflow' 54 is generated from the workflow storage 40, the 'custom workflow' 54 being executed along two paths 56 and 58 in the Data Conditioner 46 and the Decision Tool 50 thereby generating 'Decision Tool Products' 20b1) is illustrated again in figure 11. In figure 11, a plurality of 'steps' associated with the functional operation of the SWPM software based computer system 20 of figure 1 which occurs when the SWPM software 20c1 is executed will be discussed below. In figure 11, step 60 in connection with the 'User Objectives' 24 indicates that the user must first introduce information corresponding to the 'request' where the term 'request' means the 'objective of the project' or the 'User Objective' 24. Step 62 indicates that 'input data' in the form of 'well data' 22 must then be introduced into the SWPM software based computer system 20 of figure 1. Step 64 indicates that, in response to the 'request' or 'User Objective' 24 and the 'input data' or the 'well data' 22 provided by the user and entered into the SWPM software based computer system 20 of figure 1, the appropriate 'workflow' is automatically selected from the 'workflow storage' 42. Step 66 indicates that 'progress' will follow the path of the 'selected workflow'; that is, a 'first plurality of software modules' will be selected from the Data Conditioner 46 and a 'second plurality of software modules' will be selected from the Decision Tool 50 in accordance with the 'selected workflow', the 'first plurality of software modules' and the 'second plurality of software modules' being executed in sequence by the processor 20a of the SWPM software based computer system 20 of figure 1. Step 68 indicates that, when the 'first plurality of software modules' of the Data Conditioner 46 are executed by the processor 20a of figure 1, one-dimensional (1-D) well model properties are estimated in the Data Conditioner 46 'multi dimensional solution system'. Step 70 indicates that, when the 'first plurality of software modules' of the Data Conditioner 46 are executed by the processor 20a of figure 1 and when the resultant one-dimensional (1-D) well model properties are estimated in the Data Conditioner 46 'multi-dimensional solution system' in response to the completion of the execution of the 'first plurality of software modules' of the Data Conditioner 46, a 'set of results' which are produced by the Data Conditioner 46 are collected in the Data Conditioner Products 48, that 'set of results' being ready for use in connection with 'reservoir modeling'. Step 72 indicates that, in response to the 'set of results' which have been collected in the Data Conditioner Products 48, the 'second plurality of software modules' in the Decision Tool 50 (which were selected from among other software modules in the Decision Tool 50 in accordance with the 'selected workflow' 42) will be executed in sequence by the processor 20a of figure 1 in accordance with the established 'User Objective' 24, and, as a result, processing within the Decision Tool 50 of the one-dimensional (1-D) data and other dynamic data will now begin. Step 74 indicates that, when the processing within the Decision Tool 50 of the one-dimensional (1-D) data and other dynamic data is complete, a 'second set of results' is generated by the Decision Tool 50 is collected, the 'second set of results' being ready for use for the ultimate purpose of formulating one or more recommendations which can be made to field personnel.

Referring to figures 12-17, a functional description of the operation of the Single Well Predictive Model (SWPM) software based computer system 20 of figure 1, including the SWPM software 20c1 of figures 1 and 5 stored in the computer system 20, will be set forth in the following paragraphs with reference to figures 12 through 17 of the drawings. The Single Well Predictive Model (SWPM) software based computer system 20 of the present invention (figure 1), which stores the Single Well Predictive Model (SWPM) software 20c1 of the present invention: (1) automatically produces a first specific workflow comprised of a first plurality of software modules in response to a first set of user objectives and automatically executes the first specific workflow in response to a first set of input data to produce a first desired product, and (2) automatically produces a second specific workflow comprised of a second plurality of software modules in response to a second set of user objectives and automatically executes the second specific workflow in response to a second set of input data to produce a second desired product. As a result, there is no longer any need to separately and independently execute the first plurality of software modules of the first workflow in order to produce the first desired product, and there is no longer any need to separately and independently execute the second plurality of software modules of the second workflow in order to produce the second desired product. As a result, a considerable amount of processor execution time is saved and, in addition, there is no longer any need to perform the aforementioned laborious task of separately and independently executing a plurality of software modules to produce a final desired product.

Recall that the SWPM software 20c1 of figures 1, 5, and 12-17 includes a Data Conditioner 46 which generates Data Conditioner Products 48, a Decision Tool 50, and a Workflow Harness 44 operatively connected to the Data Conditioner 46 and the Decision Tool 50, the function of which will be discussed below. Referring to figure 12, assume that the user introduces, as input data, the following information into the SWPM software based computer system 20 of figure 1: (1) a first set of User Objectives (i.e., User Objective 1) 24a, and (2) a first set of Input Data (i.e., Input Data 1) 22a. The first set of Input Data 22a are input to the workflow harness 44. The first set of User Objectives 24a are input to the Workflow Storage 40, and, responsive thereto, a first specific workflow (specific workflow 1) 42a corresponding to the first set of User Objectives 24a is generated from the workflow storage 40, the first specific workflow 42a being input to the Workflow Harness 44. Recall that the Data Conditioner 46 includes a 'first plurality of software modules' 46a including the following software modules: software module 1, software module 2, software module 3, software module 4, software module 5, software module 6, software module 7, software module 8, and software module 9. Recall that the Decision Tool 50 includes a 'second plurality of software modules' 50a including the following software modules: software module 10, software module 11, software module 12, software module 13, software module 14, software module 15, software module 16, software module 17, and software module 18. In response to the first specific workflow 42a, the workflow harness 44 chooses 'certain selected ones of the first plurality of software modules' 7, 4, 5, 2, and 3 embodied within the Data Conditioner 46. In figure 12, the 'certain selected ones of the first plurality of software modules' 7, 4, 5, 2, and 3 consist of the following software modules: software module 7, software module 4, software module 5, software module 2, and software module 3. Then, in response to the first specific workflow 42a, the workflow harness 44 also chooses 'certain selected ones of the second plurality of software modules' 16, 13, 14, 11, and 12 embodied within the Decision Tool 50. The 'certain selected ones of the second plurality of software modules' 16, 13, 14, 11, and 12 consist of the following software modules: software module 16, software module 13, software module 14, software module 11, and software module 12. The 'certain selected ones of the first plurality of software modules' 7, 4, 5, 2, and 3 embodied within the Data Conditioner 46 will be executed first by the processor 20a of the computer system 20 of figure 1 in response to the 'Input Data 1' 22a thereby generating the Data Conditioner Products 48. The Data Conditioner Products 48 will include and will therefore generate a set of 'Conditioned Data' 48a (e.g., calibrated data). Then, in response to the 'Conditioned Data' 48a, the 'certain selected ones of the second plurality of software modules' 16, 13, 14, 11, and 12 embodied within the Decision Tool 50 will then be executed by the processor 20a of the computer system 20 of figure 1 (while using the Conditioned Data 48a) thereby generating the 'Decision Tool Product for User Objective 1' 20b1A.

In figure 13, the 'specific workflow 1' 42a of figure 12, including the 'certain selected ones of the first plurality of software modules' 7, 4, 5, 2, and 3 and the 'certain selected ones of the second plurality of software modules' 16, 13, 14, 11, and 12 which are selected from the Data Conditioner 46 and the Decision Tool 50 by the workflow harness 44 and which are executed by the processor 20a of the computer system 20 of figure 1, is illustrated. In figure 13, in response to the 'Input Data 1' 22a, the 'certain selected ones of the first plurality of software modules' 7, 4, 5, 2, and 3 are executed in sequence by processor 20a; then, in response to the 'Conditioned Data' 48a, the 'certain selected ones of the second plurality of software modules' 16, 13, 14, 11, and 12 are executed in sequence thereby generating the 'Decision Tool Product for User Objective 1' 20b1A.

In figures 12-13, the user introduced a first user objective (User Objective 1) and a first set of input data (Input Data 1) for to generate the 'Decision Tool Product for User Objective 1' 20b1A. In the following paragraphs, assume that the user introduces a second user objective (User Objective 2) and a second set of input data (Input Data 2) for the purpose of generating a 'Decision Tool Product for User Objective 2' 20b1B.

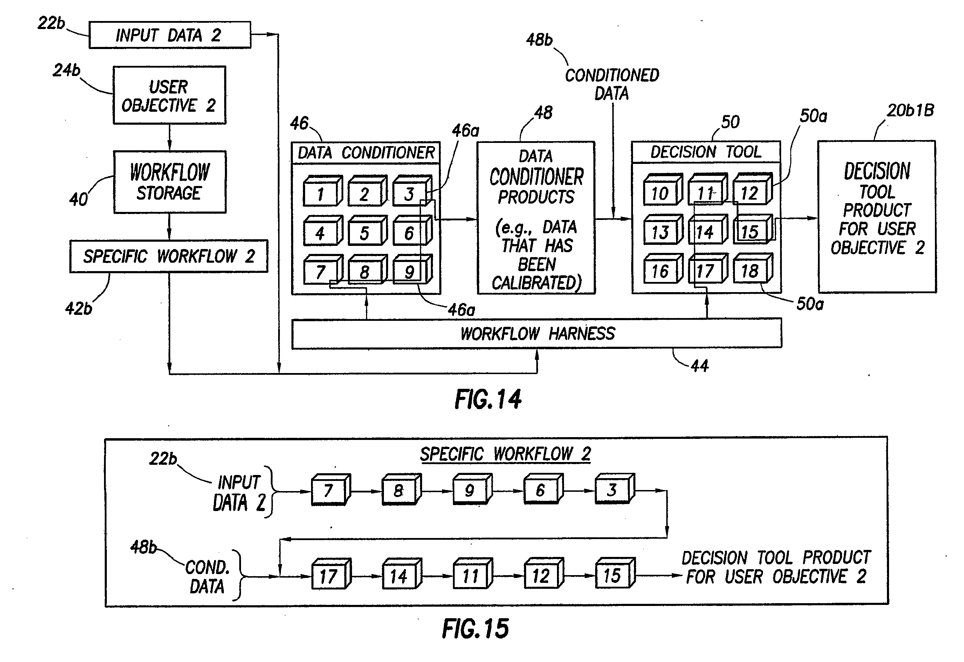

In figure 14, assume that the user introduces, as input data, the following information into the SWPM software based computer system 20 of figure 1: (1) a second set of User Objectives (i.e., User Objective 2) 24b, and (2) a second set of Input Data (i.e., Input Data 2) 22b. The second set of Input Data 22b are input to the workflow harness 44. The second set of User Objectives 24b are input to the Workflow Storage 40, and, responsive thereto, a second specific workflow (specific workflow 2) 42b corresponding to the second set of User Objectives 24b is generated from the workflow storage 40, the second specific workflow 42b being input to the Workflow Harness 44. Recall that the Data Conditioner 46 includes a 'first plurality of software modules' 46a including the following software modules: software module 1, software module 2, software module 3, software module 4, software module 5, software module 6, software module 7, software module 8, and software module 9. Recall that the Decision Tool 50 includes a 'second plurality of software modules' 50a including the following software modules: software module 10, software module 11, software module 12, software module 13, software module 14, software module 15, software module 16, software module 17, and software module 18. In response to the second specific workflow 42b, the workflow harness 44 will choose 'certain selected ones of the first plurality of software modules' 7, 8, 9, 6, and 3 embodied within the Data Conditioner 46. In figure 14, the 'certain selected ones of the first plurality of software modules' 7, 8, 9, 6, and 3 consist of the following software modules: software module 7, software module 8, software module 9, software module 6, and software module 3. Then, in response to the second specific workflow 42b, the workflow harness 44 will also choose 'certain selected ones of the second plurality of software modules' 17, 14, 11, 12, and 15 embodied within the Decision Tool 50. The 'certain selected ones of the second plurality of software modules' 17, 14, 11, 12, and 15 consist of the following software modules: software module 17, software module 14, software module 11, software module 12, and software module 15. The 'certain selected ones of the first plurality of software modules' 7, 8, 9, 6, and 3 embodied within the Data Conditioner 46 will be executed in sequence by the processor 20a of the computer system 20 of figure 1 in response to the 'Input Data 2' 22b thereby generating the Data Conditioner Products 48. The Data Conditioner Products 48 will include and will therefore generate a set of 'Conditioned Data' 48b (e.g., calibrated data). Then, in response to the 'Conditioned Data' 48b, the 'certain selected ones of the second plurality of software modules' 17, 14, 11, 12, and 15 embodied within the Decision Tool 50 are executed in sequence by the processor 20a of the computer system 20 of figure 1 (while using the Conditioned Data 48b), thereby generating the 'Decision Tool Product for User Objective 2' 20b1B.

In figure 15, the 'specific workflow 2' 42b of figure 14, including the 'certain selected ones of the first plurality of software modules' 7, 8, 9, 6, and 3 and the 'certain selected ones of the second plurality of software modules' 17, 14, 11, 12, and 15 which are selected from the Data Conditioner 46 and the Decision Tool 50 by the workflow harness 44 and which are executed by the processor 20a of the computer system 20 of figure 1, is illustrated. In figure 15, in response to the 'Input Data 2' 22b; the 'certain selected ones of the first plurality of software modules' 7, 8, 9, 6, and 3 are executed in sequence by processor 20a; then, in response to the 'Conditioned Data' 48b, the 'certain selected ones of the second set of software modules' 17, 14, 11, 12, and 15 are executed in sequence thereby generating the 'Decision Tool Product for User Objective 2' 20b1B.

In figures 14-15, the user introduced a second user objective (User Objective 2) and a second set of input data (Input Data 2) to generate the 'Decision Tool Product for User Objective 2' 20b1B. In the following paragraphs, assume that the user introduces a third user objective (User Objective 3) and a third set of input data (Input Data 3) for the purpose of ultimately generating a 'Decision Tool Product for User Objective 3' 20b1C.

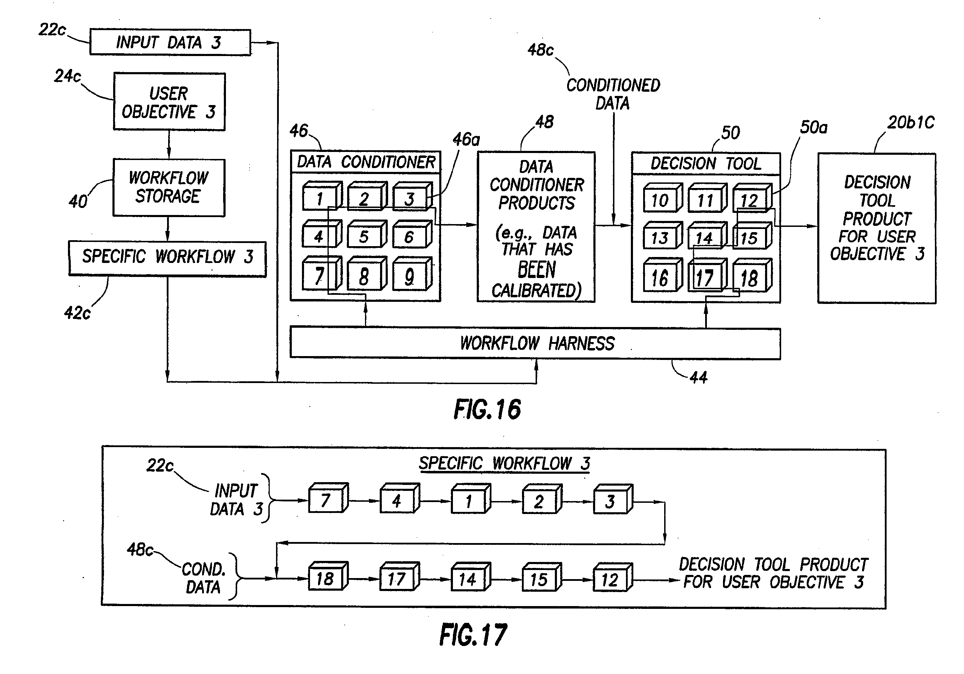

In figure 16, assume that the user introduces, as input data, the following information into the SWPM software based computer system 20 of figure 1: (1) a third set of User Objectives (i.e., User Objective 3) 24c, and (2) a third set of Input Data (i.e., Input Data 3) 22c. The third set of Input Data 22c are input to the workflow harness 44. The third set of User Objectives 24c are input to the Workflow Storage 40, and, responsive thereto, a third specific workflow (specific workflow 3) 42c corresponding to the third set of User Objectives 24c is generated from the workflow storage 40, the third specific workflow 42c being input to the Workflow Harness 44. Recall that the Data Conditioner 46 includes a 'first plurality of software modules' 46a including the following software modules: software module 1, software module 2, software module 3, software module 4, software module 5, software module 6, software module 7, software module 8, and software module 9. Recall that the Decision Tool 50 includes a 'second plurality of software modules' 50a including the following software modules: software module 10, software module 11, software module 12, software module 13, software module 14, software module 15, software module 16, software module 17, and software module 18. In response to the third specific workflow 42c, the workflow harness 44 chooses 'certain selected ones of the first plurality of software modules' 7, 4, 1, 2, and 3 embodied within the Data Conditioner 46. In figure 16, the 'certain selected ones of the first plurality of software modules' 7, 4, 1, 2, and 3 consist of the following software, modules: software module 7, software module 4, software module 1, software module 2, and software module 3. Then, in response to the third specific workflow 42c, the workflow harness 44 also chooses 'certain selected ones of the second plurality of software modules' 18, 17, 14, 15, and 12 embodied within the Decision Tool 50. The 'certain selected ones of the second plurality of software modules' 18, 17, 14, 15, and 12 consist of the following software modules: software module 18, software module 17, software module 14, software module 15, and software module 12. The 'certain selected ones of the first plurality of software modules' 7,4,1,2, and 3 embodied within the Data Conditioner 46 is executed in sequence by the processor 20a of the computer system 20 of figure 1 in response to the 'Input Data 3' 22c thereby generating the Data Conditioner Products 48. The Data Conditioner Products 48 will include and will therefore generate a set of 'Conditioned Data' 48c (e.g., calibrated data). Then, in response to the 'Conditioned Data' 48c, the 'certain selected ones of the second plurality of software modules' 18, 17, 14, 15, and 12 embodied within the Decision Tool 50 will then be executed in sequence by the processor 20a of the computer system 20 of figure 1 (while using the Conditioned Data 48c) thereby generating the 'Decision Tool Product for User Objective 3' 20b1C.

In figure 17, the 'specific workflow 3' 42c of figure 16, including the 'certain selected ones of the first plurality of software modules' 7, 4, 1, 2, and 3 and the 'certain selected ones of the second plurality of software modules' 18, 17, 14, 15, and 12 which are selected from the Data Conditioner 46 and the Decision Tool 50 by the workflow harness 44 and which are executed by the processor 20a of the computer system 20 of figure 1, is illustrated. In response to the 'Input Data 3' 22c, the 'certain selected ones of the first plurality of software modules' 7, 4, 1, 2, and 3 are executed in sequence by processor 20a; then, in response to the 'Conditioned Data' 48c, the 'certain selected ones of the second plurality of software modules' 18, 17, 14, 15, and 12 are executed in sequence, thereby generating the 'Decision Tool Product for User Objective 3' 20b1C.

Examples of the 'Decision Tool Products' 20b1A, 20b1b, and 20b1C in figures 12, 14, and 16 will be provided in the following section of this specification. In figures 5 and 10 through 17, the 'software modules' (such as the 'software modules' 1 through 18 shown in figures 12, 14, and 16), were also referred to as 'Tasks'. Therefore, the 'software module 1' is also known as 'Task 1', the 'software module 2' is known as 'Task 2, etc. In the following section of this specification, three (3) examples of a 'Task' will be provided: a 'Risk Assessment Task', a 'Bit Selection Task', and a 'Drillstring Design Task'. In addition, after the three 'Tasks' are discussed, a 'workflow control system' will be disclosed. The 'workflow control system' will: (1) receive the 'specific workflow 1' of figure 13, or the 'specific workflow 2' of figure 15, or the 'specific workflow 3' of figure 17 (which were generated by the workflow storage 40 in response to a user objective 24 provided by a user), and (2) execute the 'specific workflow'; however, the 'input data' can be changed by a user and the Tasks can be reexecuted.

As noted above, implementation of the 'Automatic Well Planning Software System' (AWPSS) of the present invention is built on a flexible architecture that permits integration with commercial-off-the-shelf (COTS) tools. Referring now to figure 14, a software architecture schematic is illustrated indicating the 'modular nature' of the AWPSS for supporting custom workflows. This modular architecture provides the ability to configure the application based on the desired usage. For a quick estimation of the time, cost and risk associated with the well, a workflow consisting of lookup tables and simple algorithms can be selected. For a more detailed analysis, complex algorithms can be included in the workflow. In addition to customizing the workflow, the software associated with the AWPSS was designed to use user-specified equipment catalogs for its analysis. This design ensures that any results produced by the software are always based on local best practices and available equipment at the project site. From a usability perspective, application user interfaces were designed to allow the user to navigate through the workflow' with ease.

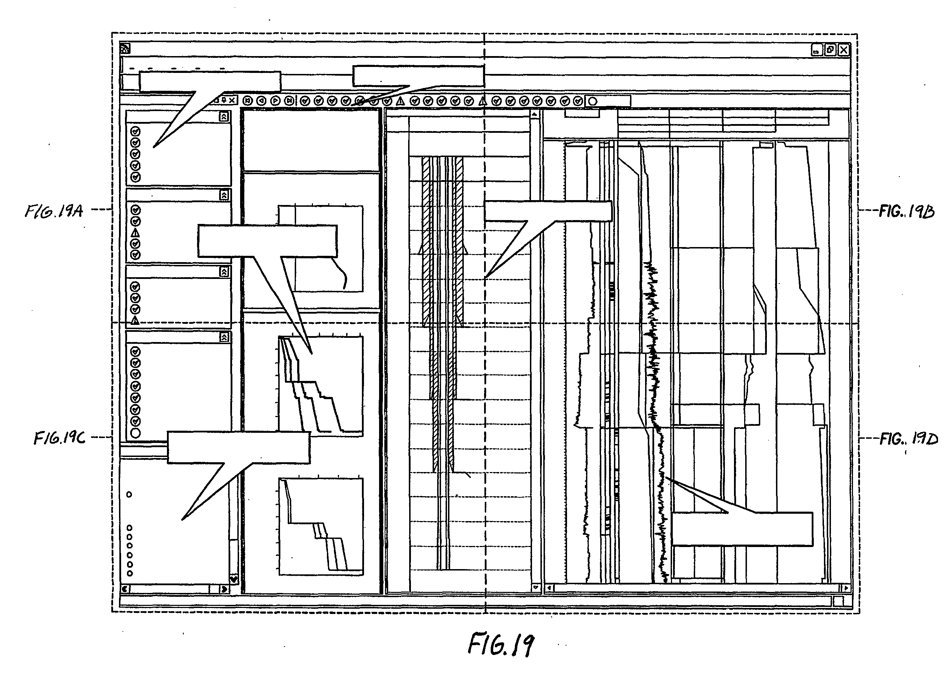

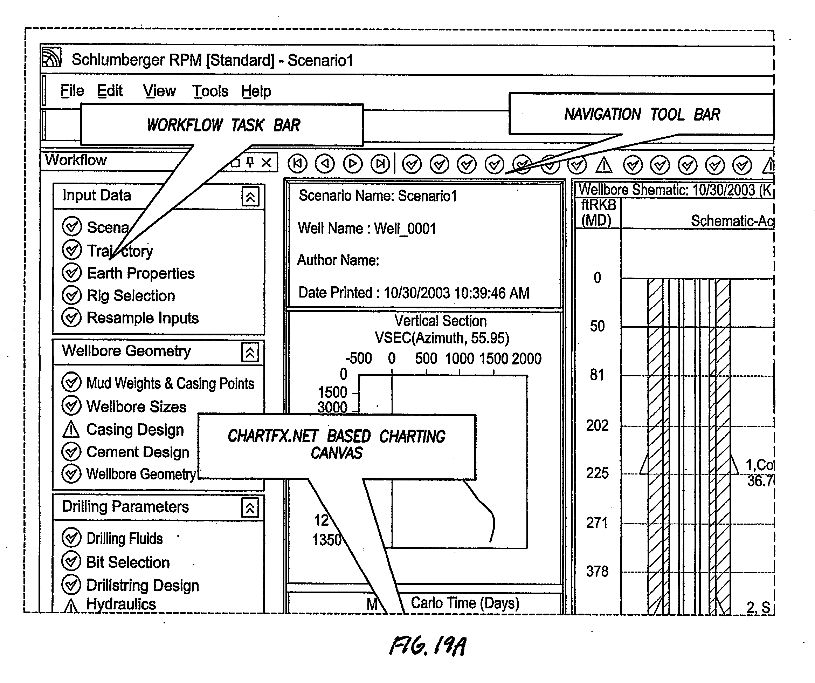

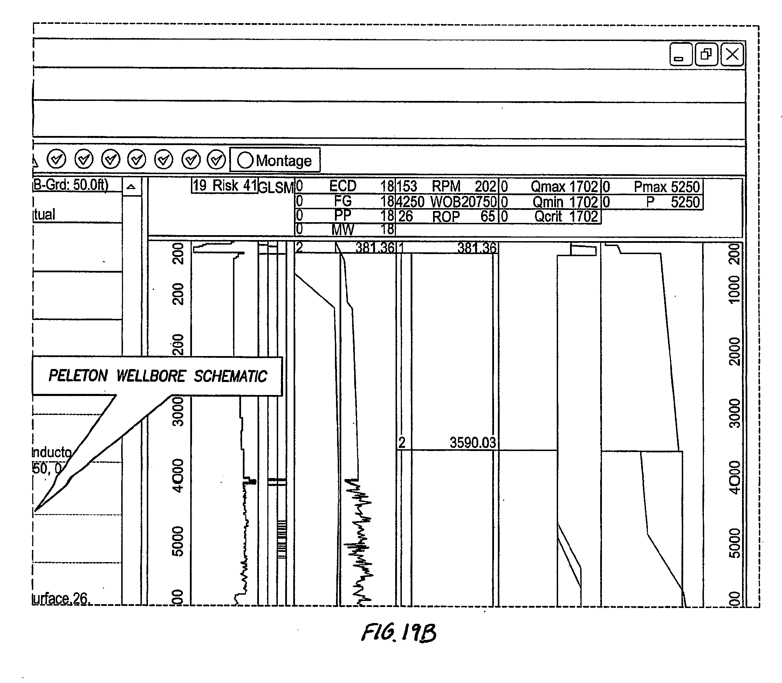

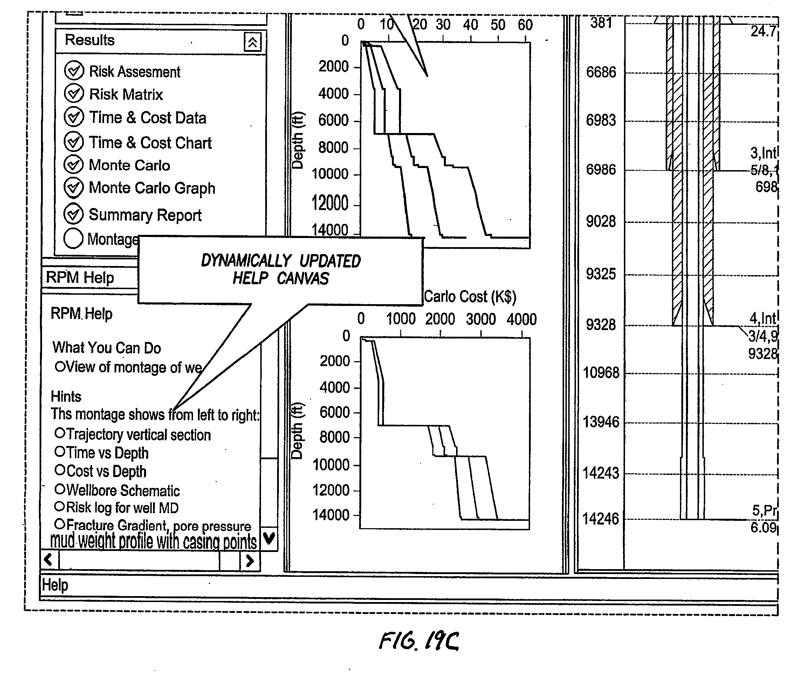

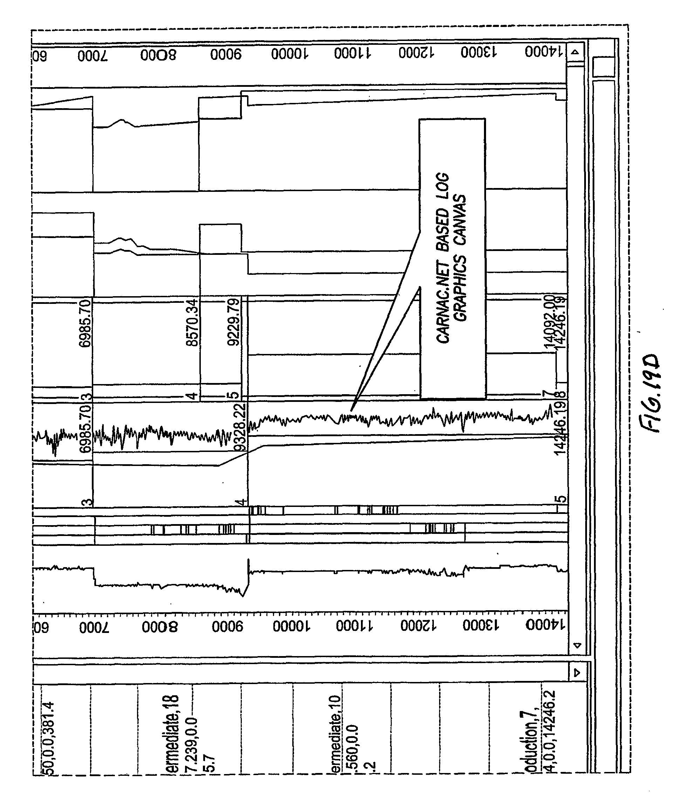

Referring to figure 19, a typical Task view consisting of workflow, help and data canvases is illustrated. A typical Task view consists of a workflow Task bar, a dynamically updating help canvas, and a combination of data canvases based on COTS tools like log graphics, Data Grids, Wellbore Schematic and charting tools. In any Task" the user has the option to modify data through any of the canvases; the application then synchronizes the data in the other canvases based on these user modifications. The modular nature of the software architecture associated with the AWPSS also allows the setting-up of a non-graphical workflow, which is key to implementing advanced functionality, such as batch processing of an entire field, and sensitivity analysis based on key parameters, etc.

Basic information for a scenario, typical of well header information for the well and wellsite, is captured in the first task. The trajectory (measured depth, inclination, and azimuth) is loaded and the other directional parameters like true vertical depth and dogleg severity are calculated automatically and graphically presented to the user.

The AWPSS disclosed in this specification requires the loading of either geomechanical earth properties extracted from an earth model, or, at a minimum, pore pressure, fracture gradient, and unconfined compressive strength. From this input data, the AWPSS automatically selects the most appropriate rig and associated properties, costs, and mechanical capabilities. The rig properties include parameters like derrick rating to evaluate risks when running heavy casing strings, pump characteristics for the hydraulics, size of the BOP, which influences the sizes of the casings, and very importantly the daily rig rate and spread rate. The user can select a different rig than what the AWPSS proposed and can modify any of the technical specifications suggested by the software.

Other wellbore stability algorithms (which are offered by Schlumberger Technology Corporation, Houston, Texas) calculate the predicted shear failure and the fracture pressure as a function of depth and display these values with the pore pressure. The AWPSS then proposes automatically the casing seats and maximum mud weight per hole section using customizable logic and rules. The rules include safety margins to the pore pressure and fracture gradient, minimum and maximum lengths for hole sections and limits for maximum overbalance of the drilling fluid to the pore pressure before a setting an additional casing point. The AWPSS evaluates the casing seat selection from top-to-bottom and from bottom-to-top and determines the most economic variant. The user can change, insert, or delete casing points at any time, which will reflect in the risk, time, and cost for the well.

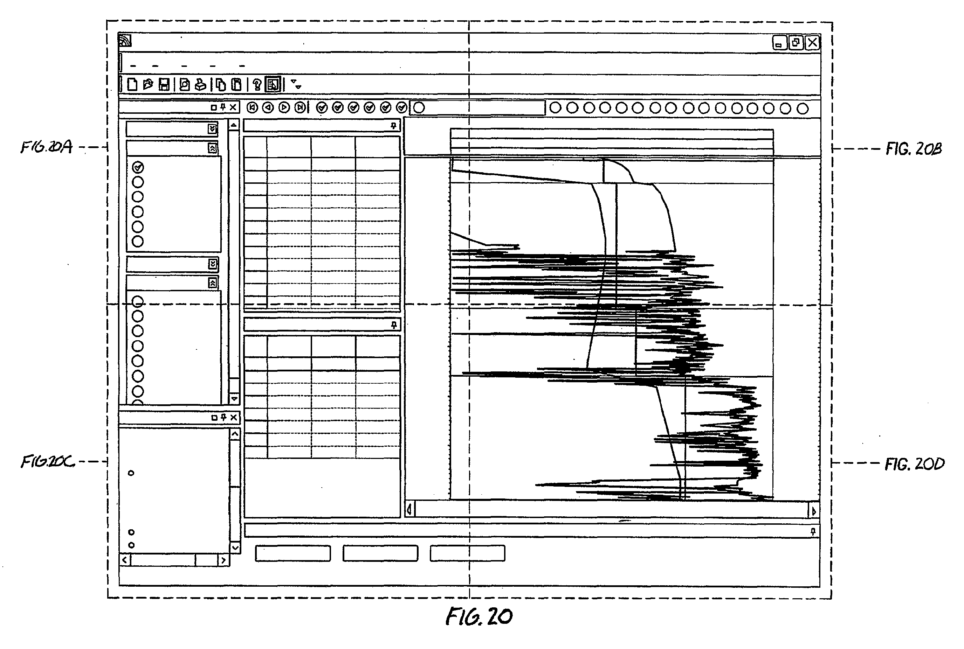

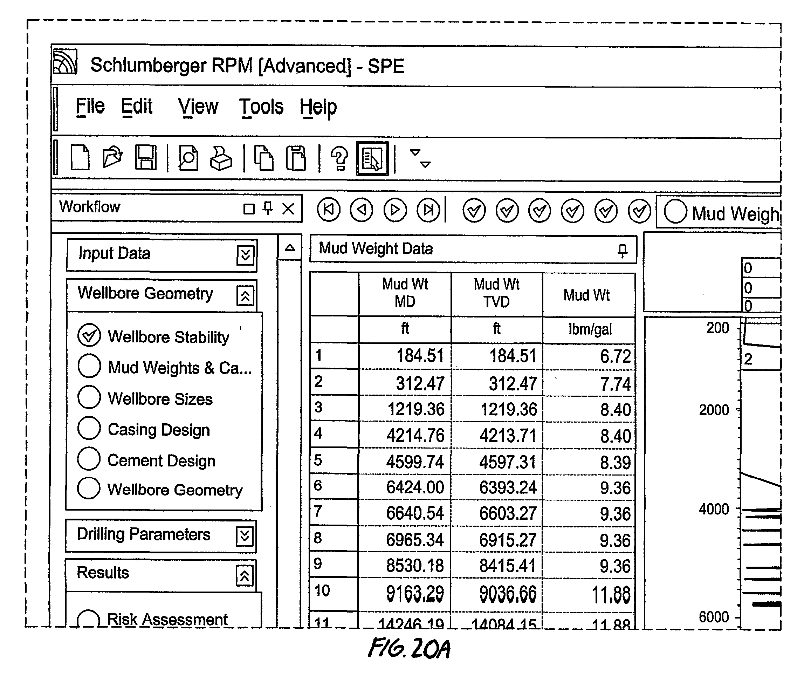

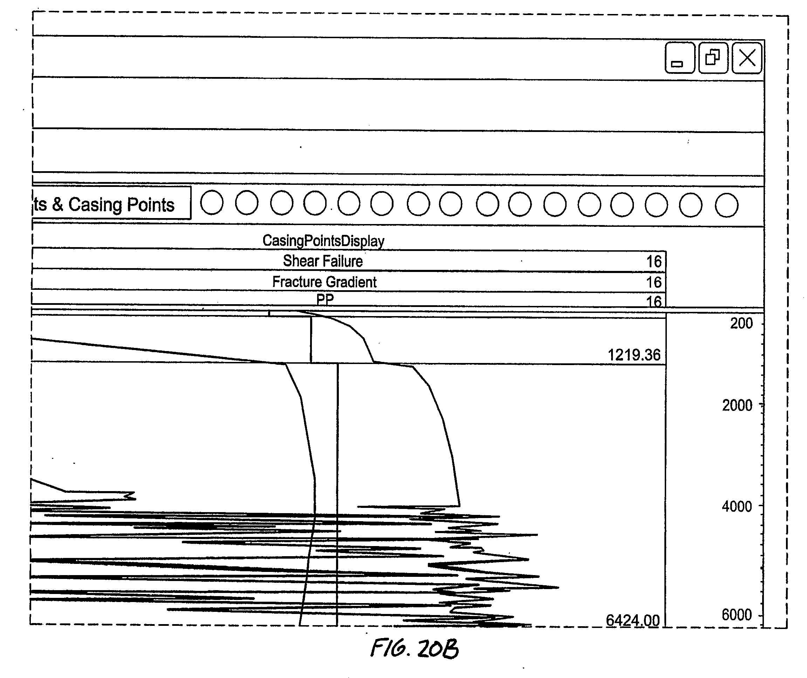

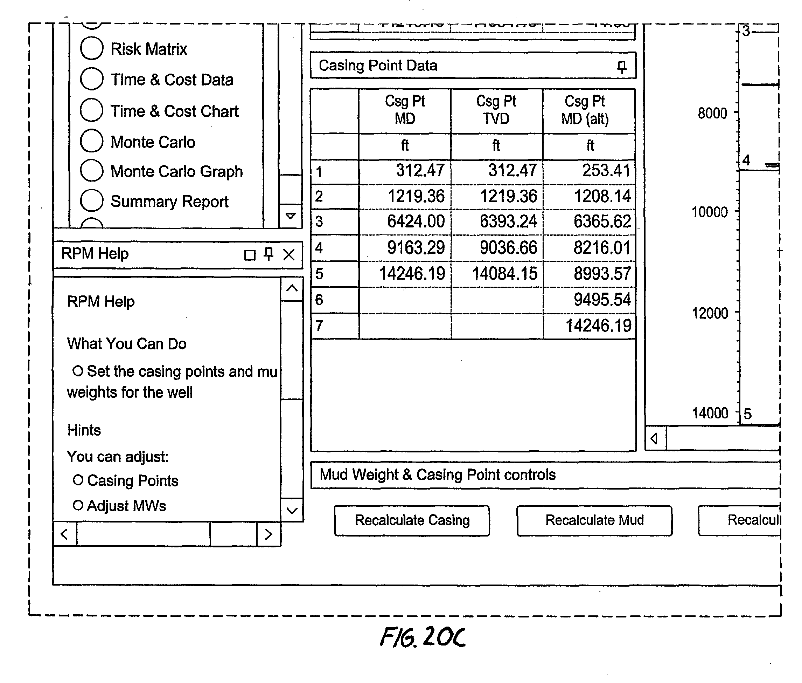

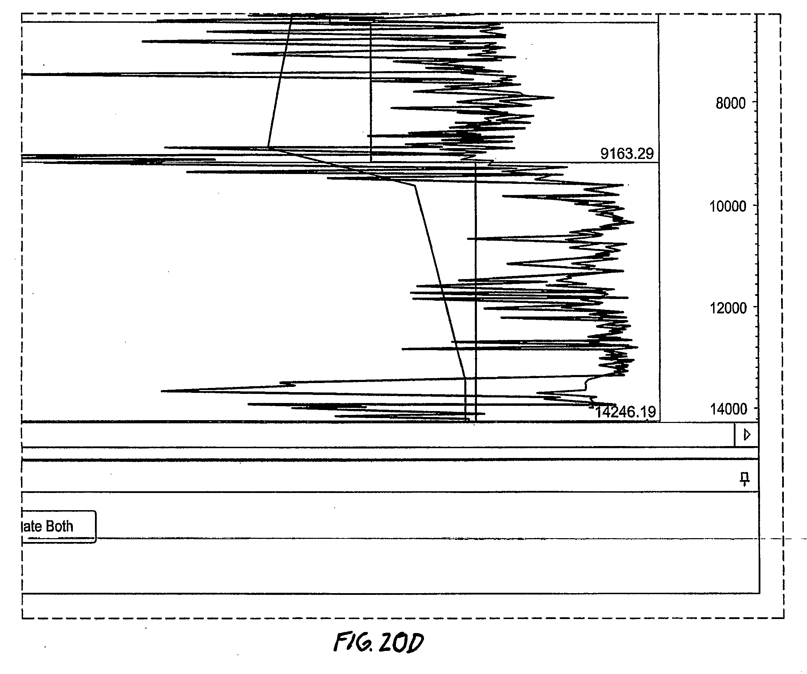

Referring to figure 20, a display showing wellbore stability, mud weights, and casing points is illustrated. The wellbore sizes are driven primarily by the production tubing size. The preceding casing and hole sizes are determined using clearance factors. The wellbore sizes can be restricted by additional constraints, such as logging requirements or platform slot size. Casing weights, grades, and connection types are automatically calculated using traditional biaxial design algorithms and simple load cases for burst, collapse and tension. The most cost effective solution is chosen when multiple suitable pipes are found in the extensive tubular catalog. Non-compliance with the minimum required design factors are highlighted to the user, pointing out that a manual change of the proposed design may be in order. The AWPSS allows full strings to be replaced with liners, in which case liner overlap and hanger cost are automatically suggested while all strings are redesigned as necessary to account for changes in load cases. The cement slurries and placement are automatically proposed by the AWPSS. The lead and tail cement tops, volumes, and densities are suggested. The cementing hydrostatic pressures are validated against fracture pressures, while allowing the user to modify the slurry interval tops, lengths, and densities. The cost is derived from the volume of the cement job and length of time required to place the cement.

The 'Automatic Well Planning Software System' proposes the proper drilling fluid type including rheology properties that are required for hydraulic calculations. A sophisticated scoring system ranks the appropriate fluid systems, based on operating environment, discharge legislation, temperature, fluid density, wellbore stability, wellbore friction and cost. The system is proposing not more than three different fluid systems for a well, although the user can easily override the proposed fluid systems.

A new and novel algorithm used by the AWPSS selects appropriate bit types that are best suited to the anticipated rock strengths, hole sizes, and drilled intervals. For each bit candidate, the footage and bit life is determined by comparing the work required to drill the rock interval with the statistical work potential for that bit. The most economic bit is selected from all candidates by evaluating the cost per foot which takes into account the rig rate, bit cost, tripping time and drilling performance (ROP). Drilling parameters like string surface revolutions and weight on bit are proposed based on statistical or historical data.

In the 'Automatic Well Planning Software System', the bottom hole assembly (BHA) and drillstrings is designed based on the required maximum weight on bit, inclination, directional trajectory and formation evaluation requirements in the hole section. The well trajectory influences the relative weight distribution between drill collars and heavy weight drill pipe. The BHA components are automatically selected based on the hole size, the internal diameter of the preceding casings, and bending stress ratios are calculated for each component size transition. Final kick tolerances for each hole section are also calculated as part of the risk analysis. *See* Booth, J., Bradford, LD.R., Cook, J.M., Dowell, J.D., Ritchie, G., Tuddenham, I.: 'Meeting Future Drilling Planning and Decision Support Requirements: A New Drilling Simulator', IADC/SPE 67816 presented at the 2001 IADC/SPE Drilling Conference, Amsterdam, The Netherlands, 27 February -1 March.

The minimum flow rate for hole cleaning is calculated using Luo's (Luo, Y., Bern, P.A. and Chambers, B.D.: 'Flow-Rate Predictions for Cleaning Deviated Wells', paper IADC/SPE 23884 presented at the 1992 IADC/SPE Drilling Conference, New Orleans, Louisiana, February 18-21) and Moore's (the Moore and Chien theory is published in 'Applied Drilling Engineering', Bourgoyne, A.T., Jr, et al., SPE Textbook Series Vol. 2) criteria considering the wellbore geometry, BHA configuration, fluid density and rheology, rock density, and ROP. The bit nozzles total flow area (TFA) are sized to maximize the standpipe pressure within the liner operating pressure envelopes. Pump liner sizes are selected based on the flow requirements for hole cleaning and corresponding circulating pressures. The Power Law rheology model is used to calculate the pressure drops through the circulating system, including the equivalent circulating density (ECD).

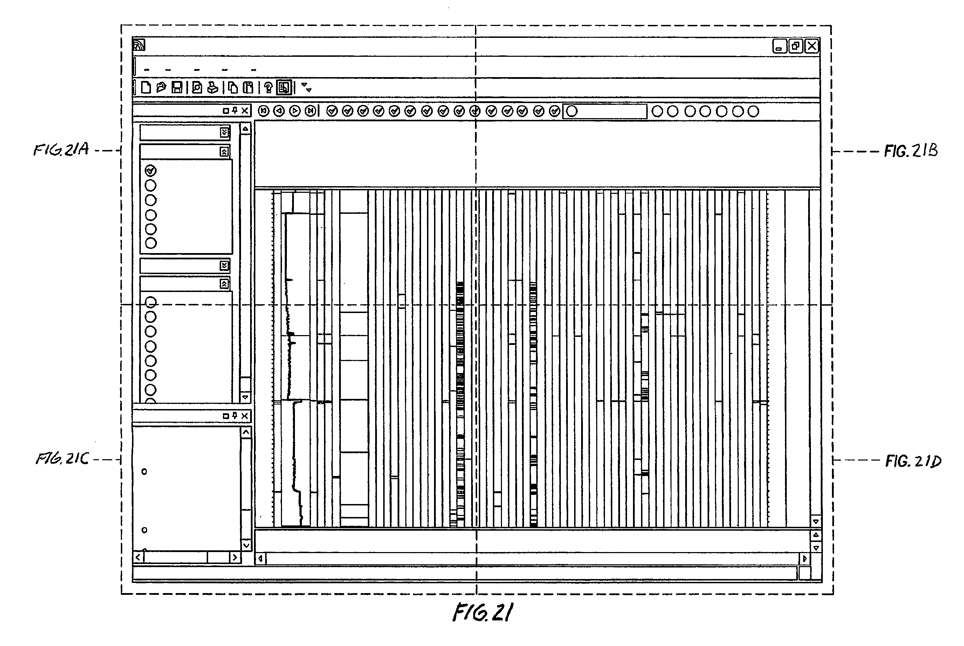

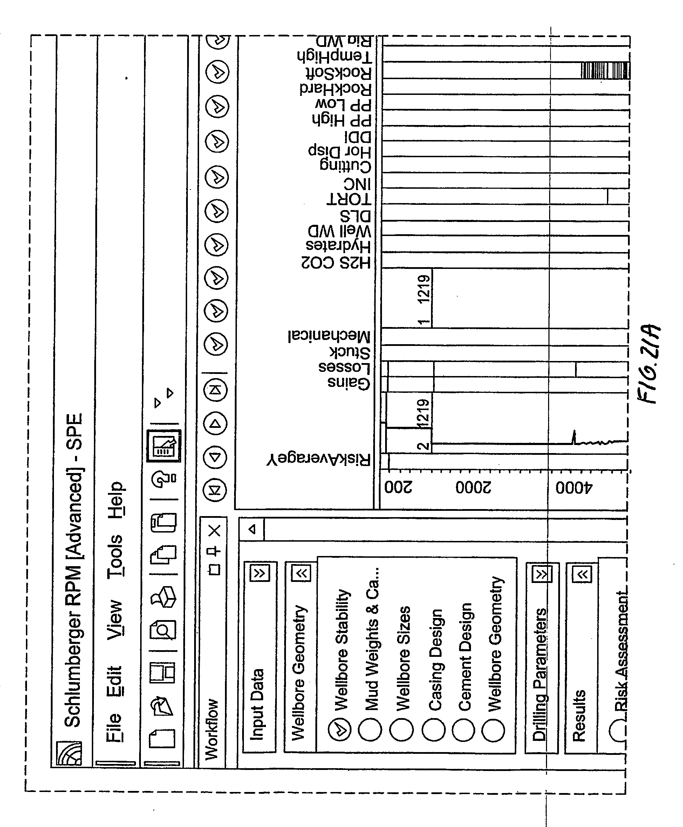

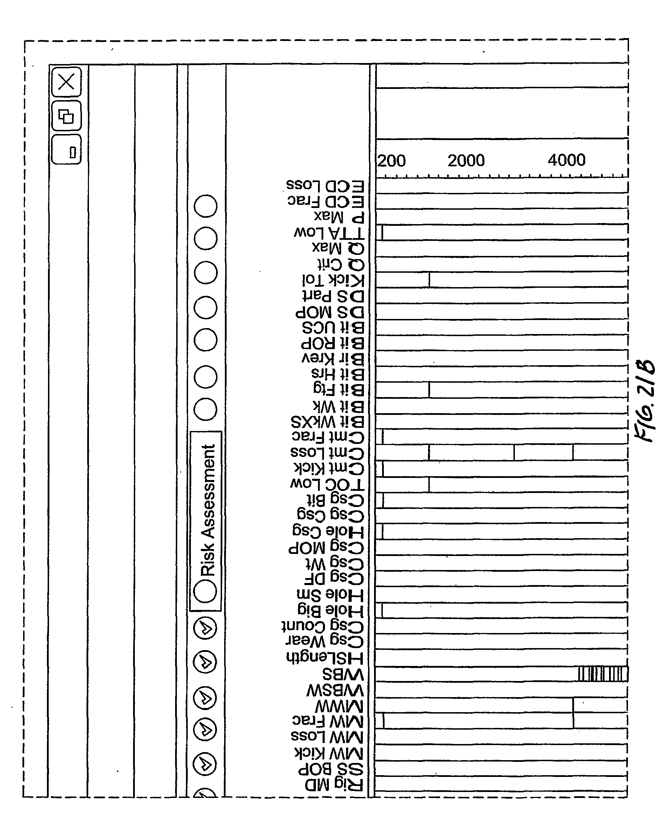

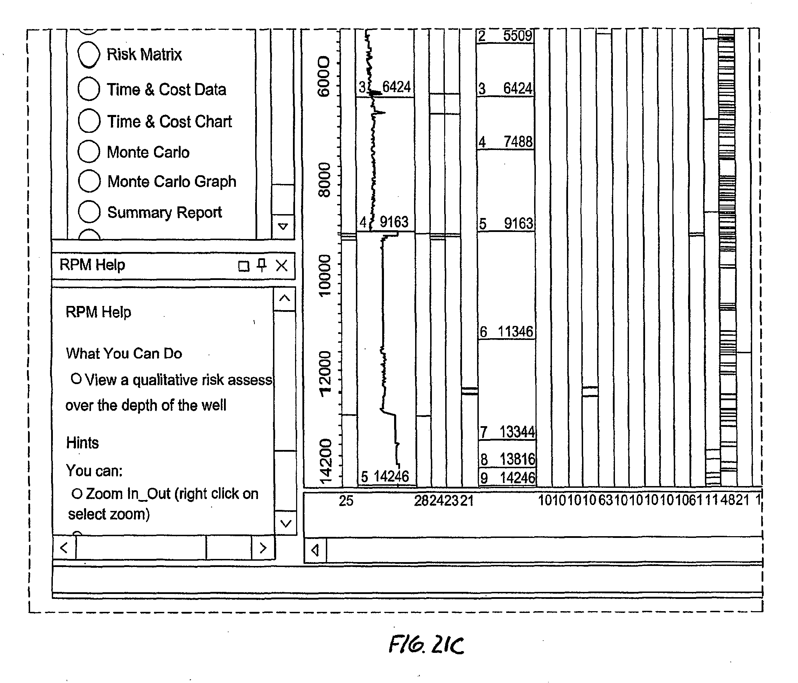

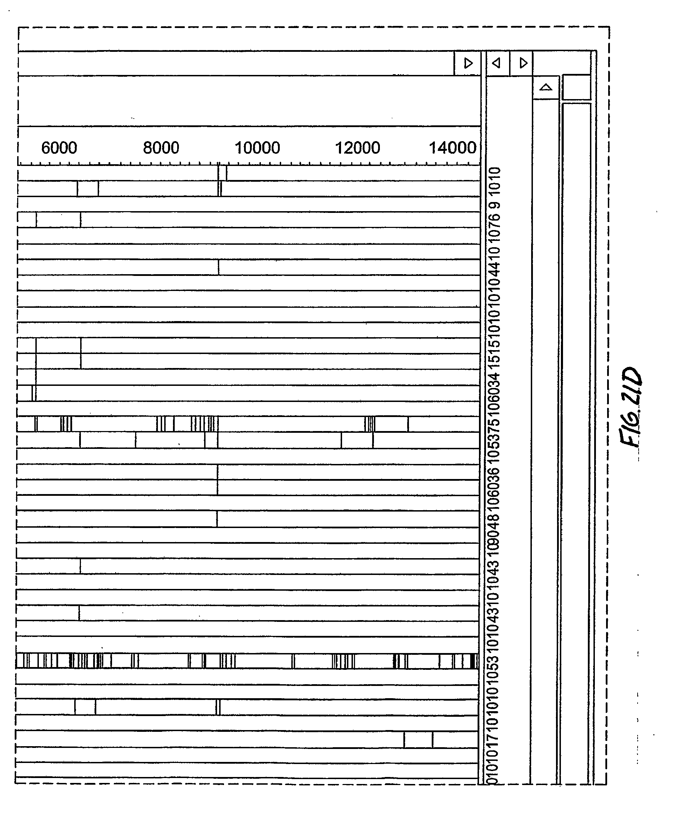

Referring to figure 21, a display showing 'Risk Assessment' is illustrated. In the AWPSS, drilling event 'risks' are quantified in a total of 54 risk categories of which the user can customize the risk thresholds. The risk categories are plotted as a function of depth and color coded to aid in visual interpretation of potential trouble spots. Further risk assessment is achieved by grouping these categories in the following categories: 'gains', 'losses', 'stuck pipe', and 'mechanical problems'. The total risk log curve can be displayed along the trajectory to correlate drilling risks with geological markers. Additional risk analysis views display the "actual risk" as a portion of the "potential risk" for each design task.

In the AWPSS, a detailed operational activity plan is automatically assembled from customizable templates. The duration for each activity is calculated based on the engineered results of the previous tasks and Non-Productive Time (NPT) can be included. The activity plan specifies a range (minimum, average, and maximum) of time and cost for each activity and lists the operations sequentially as a function of depth and hole section. This information is graphically presented in the time vs depth and cost vs depth graphs.

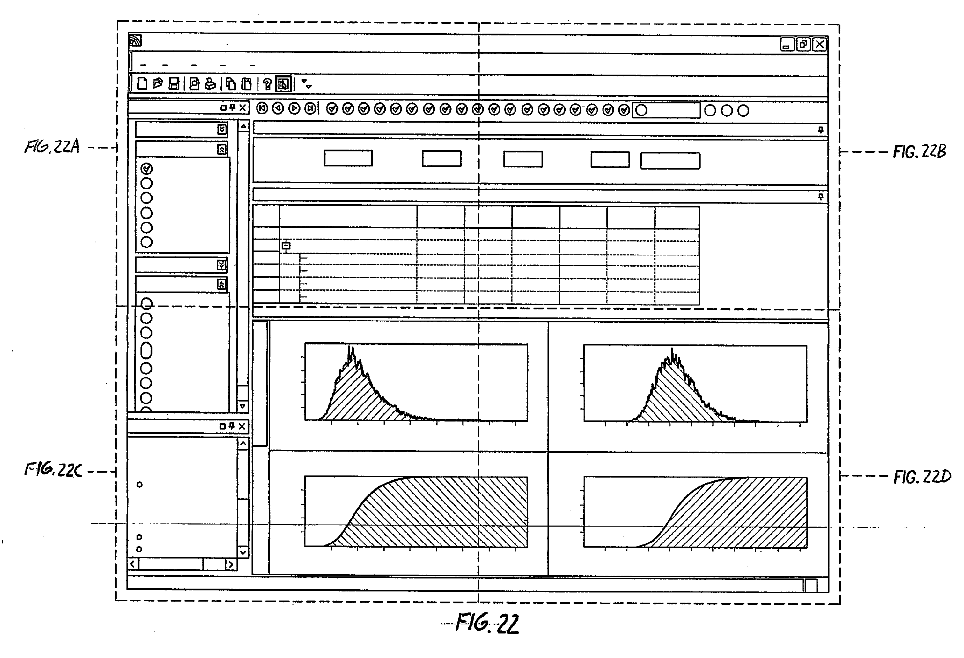

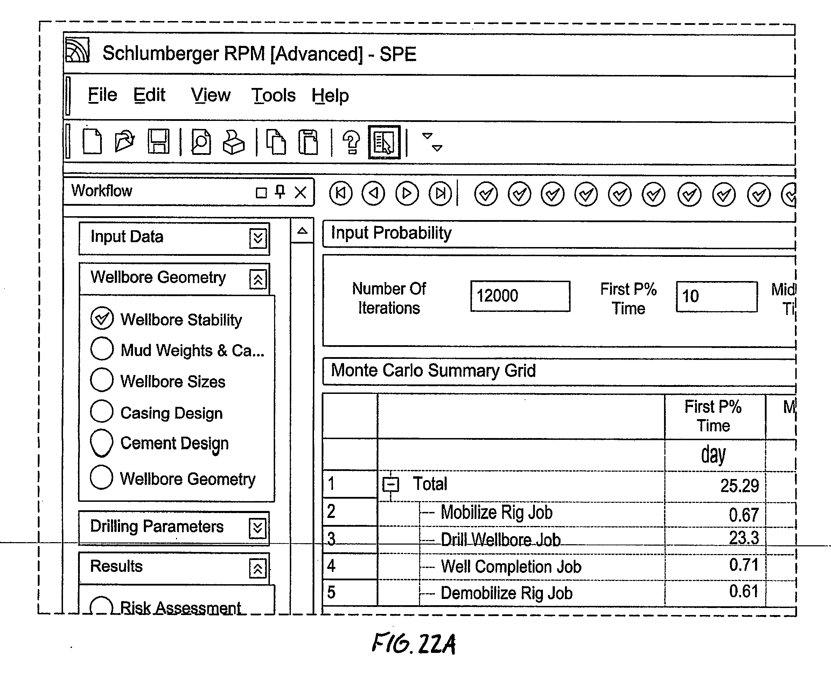

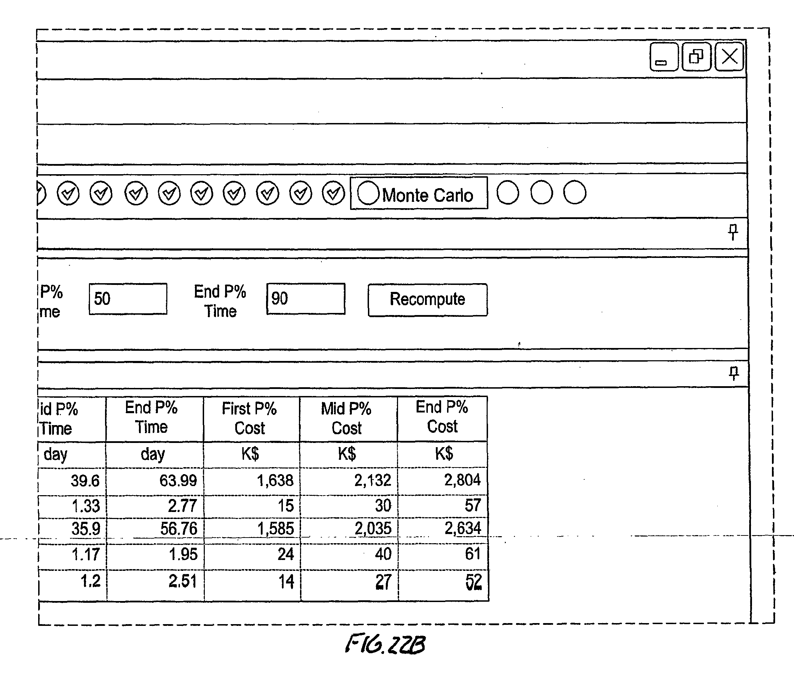

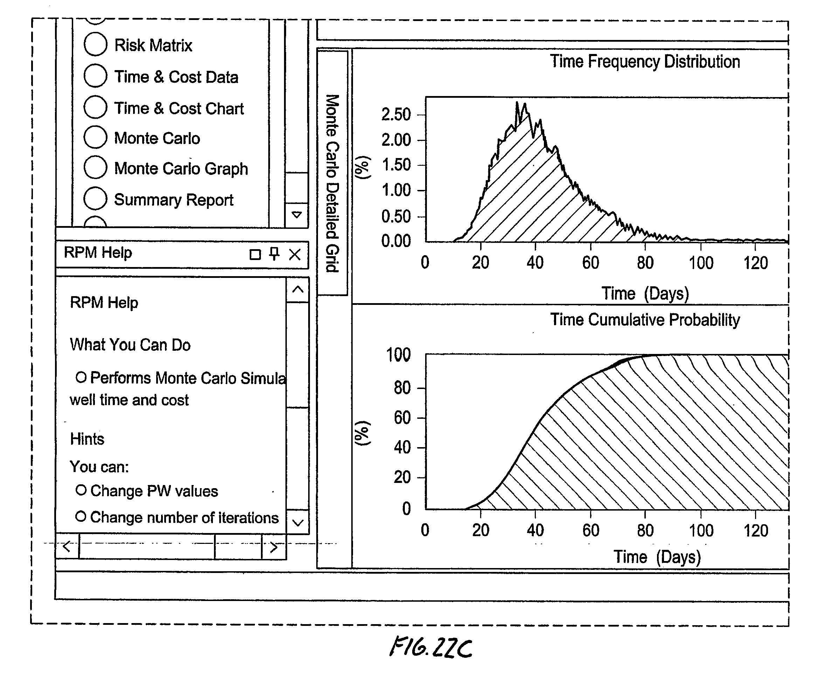

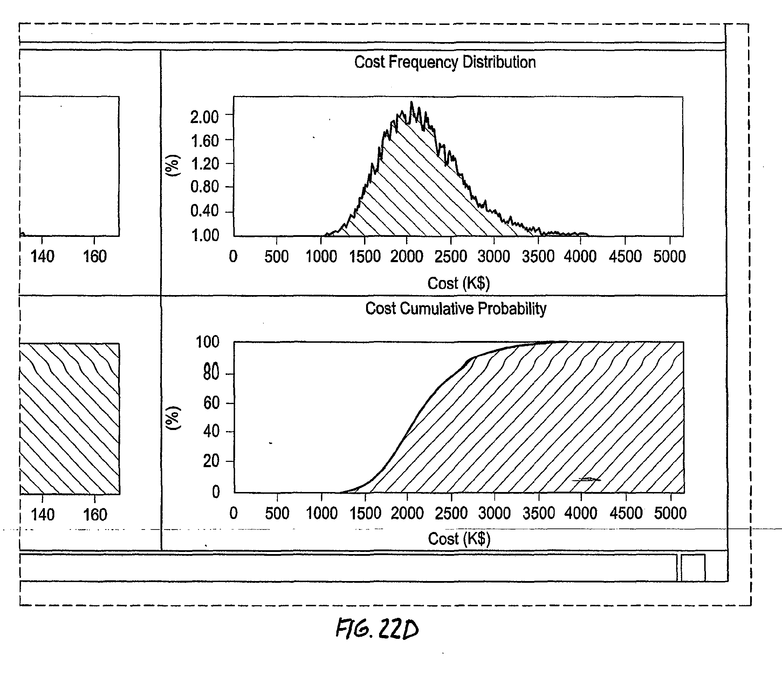

Referring to figure 22, a display showing Monte Carlo time and cost distributions is illustrated. The AWPSS uses Monte Carlo simulation to reconcile all of the range of time and cost data to produce probabilistic time and cost distributions.

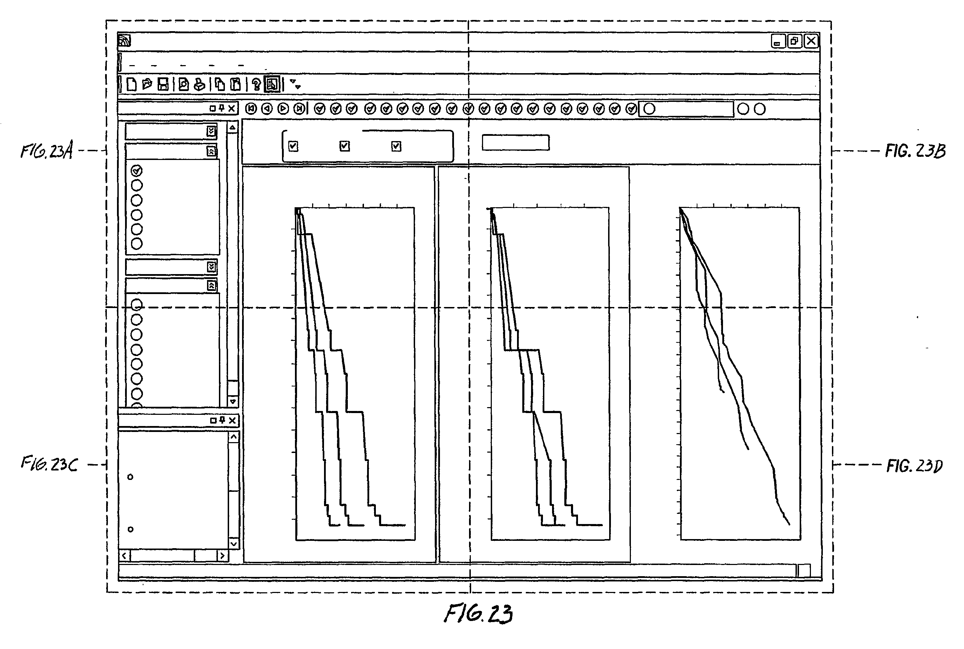

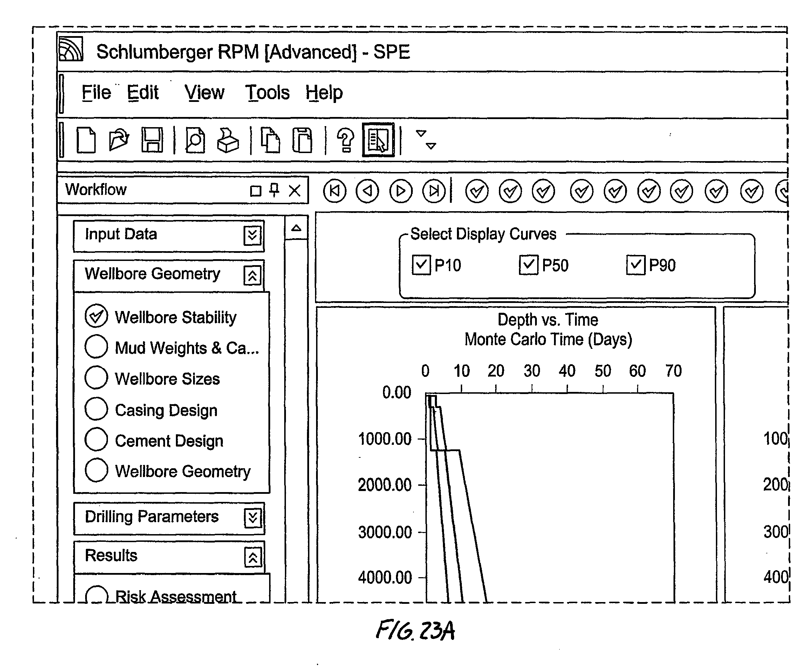

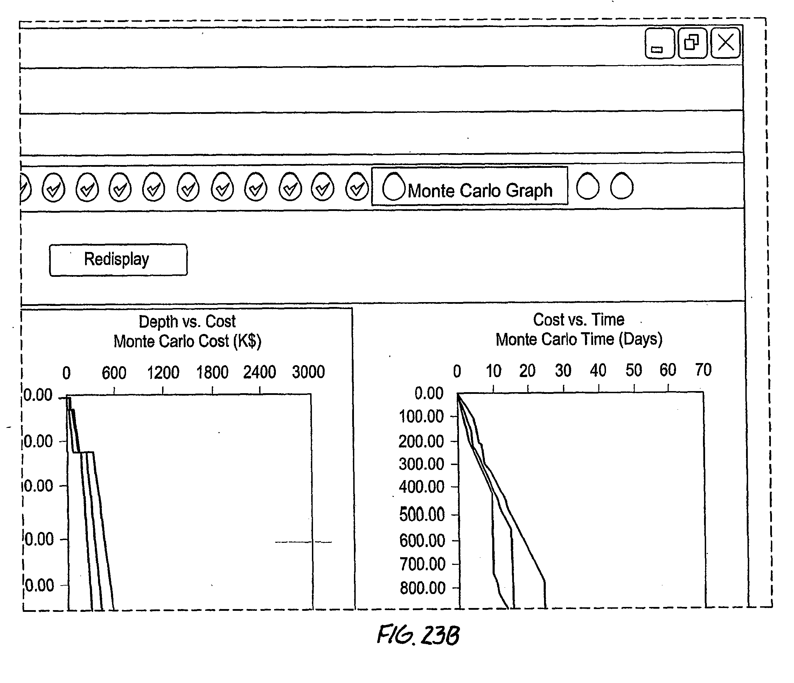

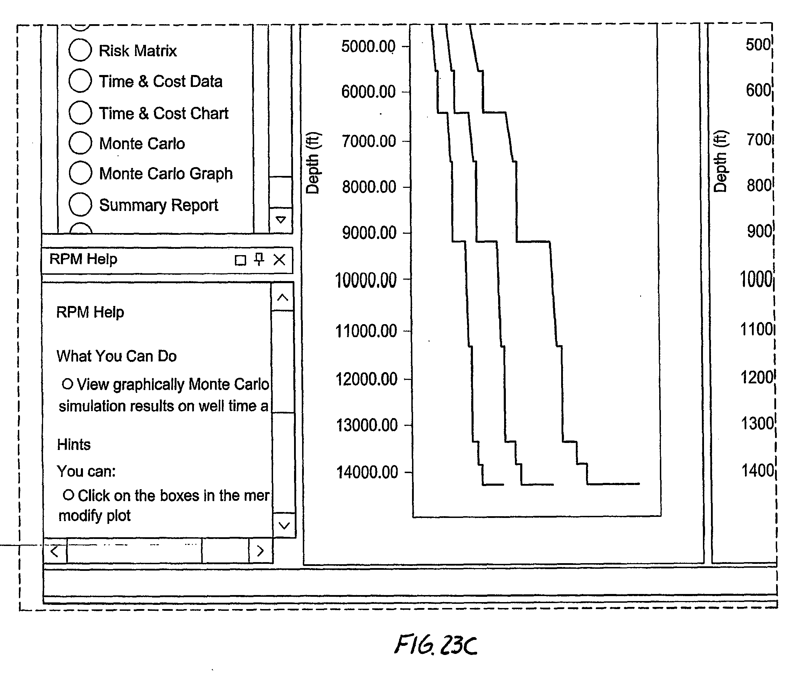

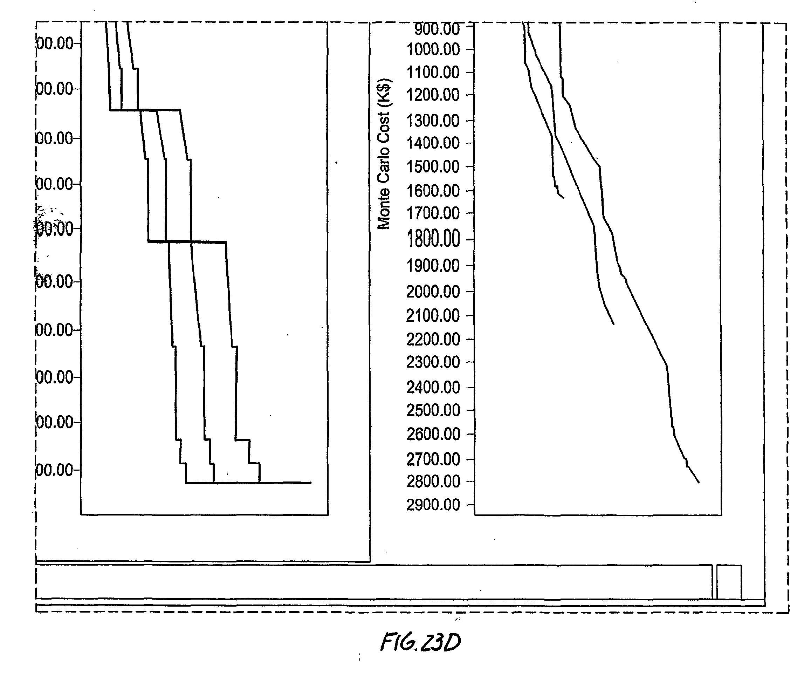

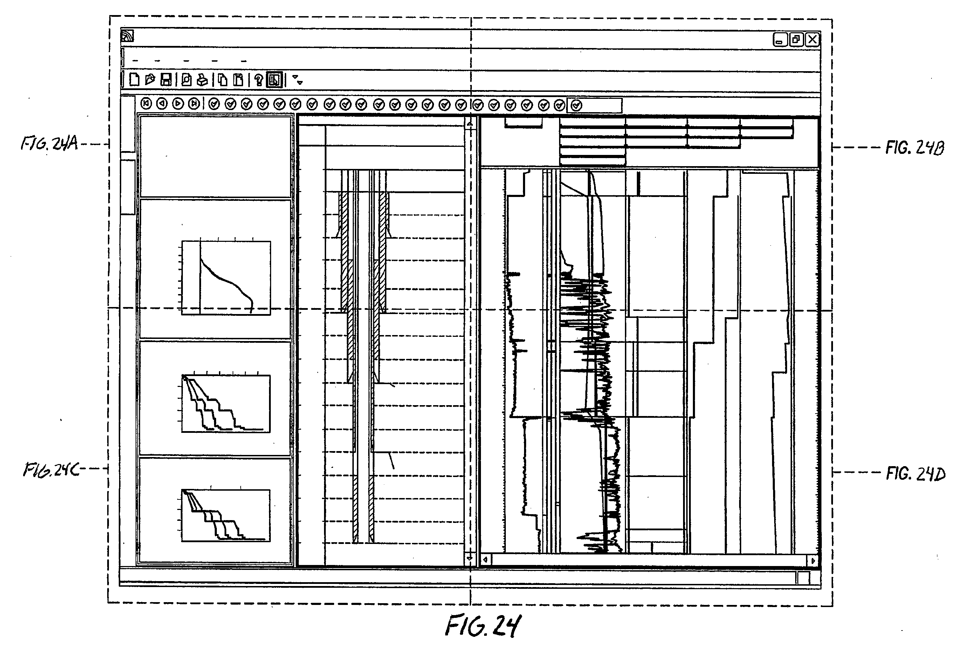

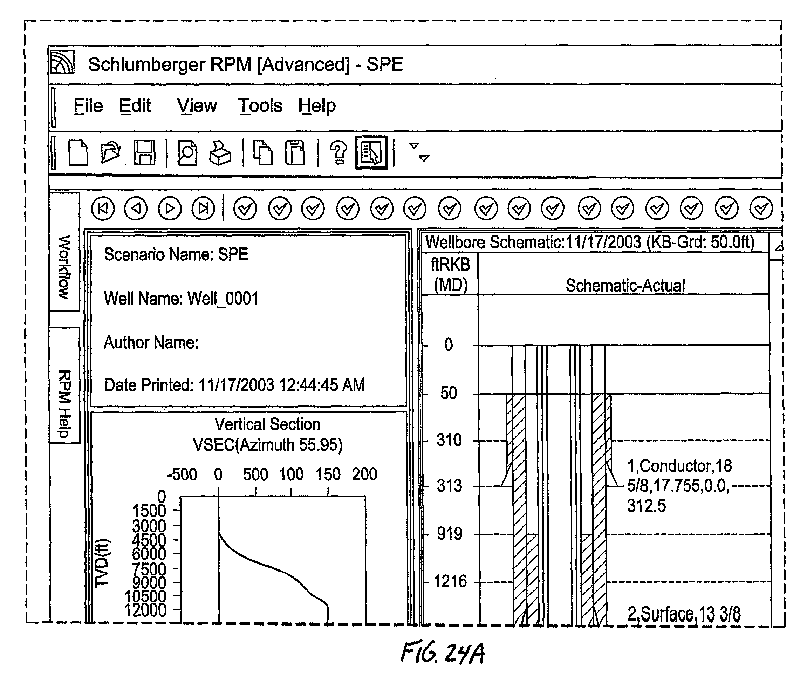

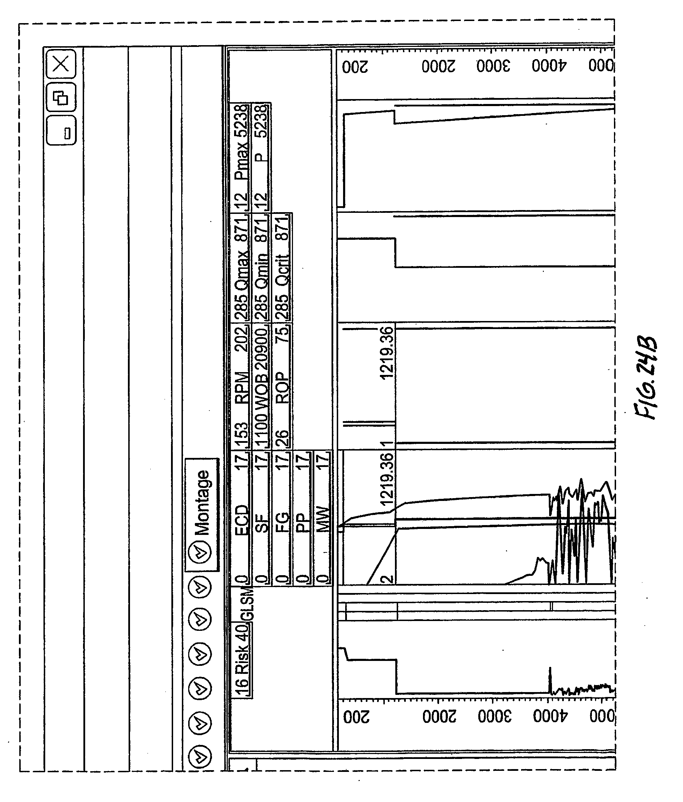

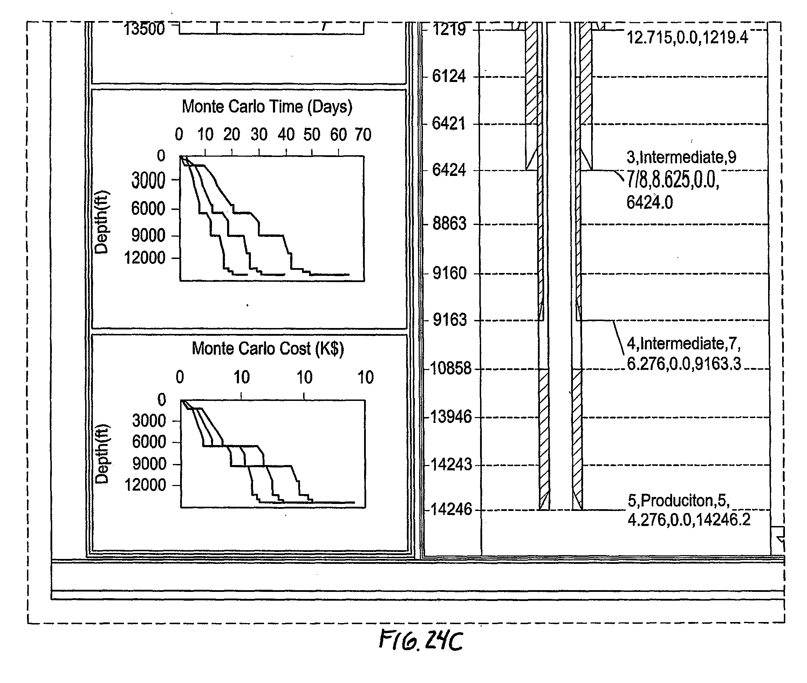

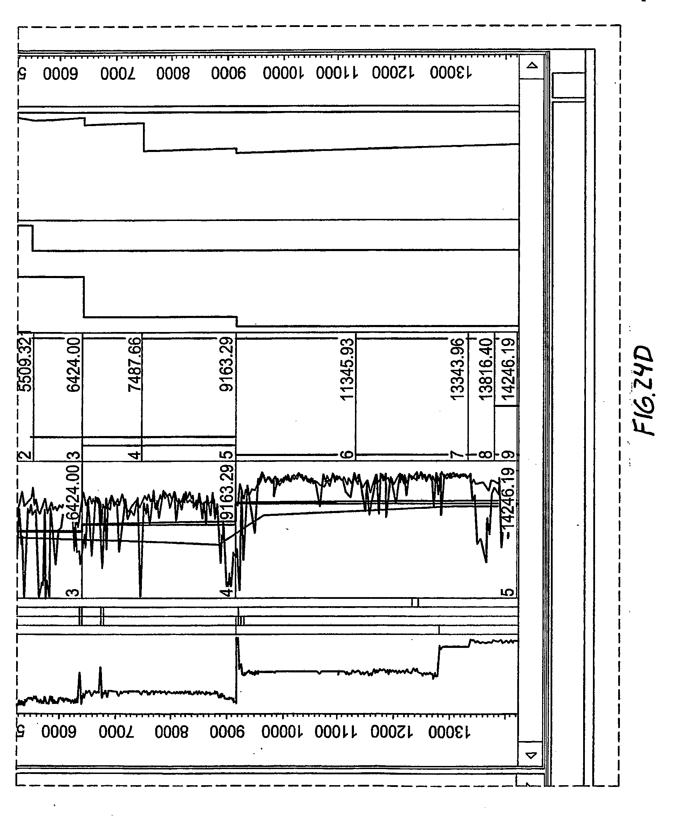

Referring to figure 23, a display showing Probabilistic time and cost vs. depth is illustrated. This probabilistic analysis, used by the AWPSS, allows quantifying the P10, P50 and P90 probabilities for time and cost. Referring to figure 24, a display showing a summary montage is illustrated. In figure 24, a comprehensive summary report and a montage display, utilized by the AWPSS, can be printed or plotted in large scale and are also available as a standard result output.

Using its expert system and logic, the AWPSS disclosed in this specification automatically proposes sound technical solutions and provides a smooth path through the well planning workflow. Graphical interaction with the results of each task allows the user to efficiently fine-tune the results. In just minutes, asset teams, geoscientists, and drilling engineers can evaluate drilling projects and economics using probabilistic cost estimates based on solid engineering fundamentals instead of traditional, less rigorous estimation methods. The testing program combined with feedback received from other users of the program during the development of the software package made it possible to draw the following conclusions: (1) The AWPSS can be installed and used by inexperienced users with a minimum amount of training and by referencing the documentation provided, (2) The need for good earth property data enhances the link to geological and geomechanical models and encourages improved subsurface interpretation; it can also be used to quantify the value of acquiring additional information to reduce uncertainty, (3) With a minimum amount of input data, the AWPSS can create reasonable probabilistic time and cost estimates faithful to an engineered well design; based on the field test results, if the number of casing points and rig rates are accurate, the results will be within 20% of a fully engineered well design and AFE, (4) With additional customization and localization, predicted results compare to within 10% of a fully engineered well design AFE, (5) Once the AWPSS has been localized, the ability to quickly run new scenarios and assess the business impact and associated risks of applying new technologies, procedures or approaches to well designs is readily possible, (6) The speed of the AWPSS allows quick iteration and refinement of well plans and creation of different 'what if' scenarios for sensitivity analysis, (7) The AWPSS provides consistent and transparent well cost estimates to a process that has historically been arbitrary, inconsistent, and opaque; streamlining the workflow and eliminating human bias provides drilling staff the confidence to delegate and empower non-drilling staff to do their own scoping estimates, (8) The AWPSS provides unique understanding of drilling risk and uncertainty enabling more realistic economic modeling and improved decision making, (9) The risk assessment accurately identifies the type and location of risk in the wellbore enabling drilling engineers to focus their detailed engineering efforts most effectively, (10) It was possible to integrate and automate the well construction planning workflow based on an earth model and produce technically sound usable results, (11) The project was able to extensively use COTS technology to accelerate development of the software, and (12) The well engineering workflow interdependencies were able to be mapped and managed by the software.

The following nomenclature is used in this specification:

RT =        Real-Time, usually used in the context of real-time data (while drilling).
G&G =       Geological and Geophysical
SEM =       Shared Earth Model
MEM =       Mechanical Earth Model
NPT =       Non Productive Time, when operations are not planned, or due to operational difficulties, the progress of the well has be delayed, also often referred to as Trouble Time.
NOT =       Non Optimum Time, when operations take longer than they should for various reasons
WOB =       Weight on bit
ROP =       Rate of penetration
RPM =       Revolutions per minute
BHA =       Bottom hole assembly
SMR =       Software Modification Request
BOD =       Basis of Design, document specifying the requirements for a well to be drilled.
AFE =       Authorization for Expenditure

A functional specification associated with the overall AWPSS (termed a 'use case') is set forth in the following paragraphs. This functional specification relates to the overall AWPSS. The following defines information that pertains to this particular 'use case'. Each piece of information is important in understanding the purpose behind the 'use Case'.

| | |
|---|---|
| Goal In Context: | Describe the full workflow for the low level user |
| Scope: | N/A |
| Level: | Low Level |
| Pre-Condition: | Geological targets pre-defined |
| Success End Condition: | Probability based time estimate with cost and frisk |
| Failed End Condition: | Failure in calculations due to assumptions or if distribution of results is too large |
| Primary Actor: | Well Engineer |
| Trigger Event: | N/A |

Main Success Scenario -- This Scenario describes the steps that are taken from trigger event to goal completion when everything works without failure. It also describes any required cleanup that is done after the goal has been reached. The steps are listed below:

1. User opens program, and system prompts user whether to open an old file or create a new one. User creates new model and system prompts user for well information (well name, field, country, coordinates). System prompts user to insert earth model. Window with different options appears and user selects data level. Secondary window appears where file is loaded or data inserted manually. System displays 3D view of earth model with key horizons, targets, anti-targets, markers, seismic, etc.

2. System prompts user for a well trajectory. The user either loads from a file or creates one in Caviar for Swordfish. System generates 3D view of trajectory in the earth model and 2D views, both plan and vertical section. User prompted to verify trajectory and modify if needed via direct interaction with 3D window.

3. The system will extract mechanical earth properties (PP, FG, WBS, lithology, density, strength, min/max horizontal stress, etc.) for every point along the trajectory and store it. These properties come from either a populated mechanical earth model, from interpreted logs applied to this trajectory, or is entered manually.

4. The system will prompt the user for the rig constraints. Rig specification options will be offered and the user will choose either the type of rig and basic configurations or insert data manually for a specific drilling unit.

5. The system will prompt the user to enter pore pressure data, if applicable, otherwise taken from the mechanical earth model previously inserted and a MW window will be generated using PP, FG, and WBS curves. The MW window will be displayed and allow interactive modification.

6. The system will automatically divide the well into hole/casing sections based on kick tolerance and trajectory sections and then propose a mud weight schedule. These will be displayed on the MW window and allow the user to interactively modify their values. The casing points can also be interactively modified on the 2D and 3D trajectory displays

7. The system will prompt the user for casing size constraints (tubing size, surface slot size, evaluation requirements), and based on the number of sections generate the appropriate hole size - casing size combinations. The hole/casing circle chart will be used, again allowing for interaction from the user to modify the hole/casing size progression.

8. The system will successively calculate casing grades, weights/wall thickness and connections based on the sizes selected and the depths. User will be able to interact and define availability of types of casing.

9. The system will generate a basic cementing program, with simple slurry designs and corresponding volumes.

10. The system display the wellbore schematic based on previously performed calculations and this interface is fully interactive, allowing the user to click and drag hole and casing sizes, top and bottom setting depths, and recalculate based on these selections. System will flag user if selection is not feasible.

11. The system generates the appropriate mud types, corresponding rheology, and composition based on lithology, previous calculations, and the user's selection.

12. The system successively splits the well sections into bit runs, and based on the rock properties, selects drilling bits for each section with ROP and drilling parameters.

13. The system will generate a basic BHA configuration, based on the bit section runs, trajectory and rock properties.

Items 14, 15, and 16 represent one task: Hydraulics.

14. The system will run a hole cleaning calculation, based on trajectory, wellbore geometry, BHA composition and MW characteristics.

15. The system does an initial hydraulics/ECD calculation using statistical ROP data. This data is either selected or user defined by the system based on smart table lookup.

16. Using the data generated on the first hydraulics calculation, the system performs an ROP simulation based on drilling bit characteristics and rock properties.

17. The system runs a successive hydraulics/ECD calculation using the ROP simulation data. System will flag user if parameters are not feasible.

18. The system calculates the drilling parameters and display them on a multi display panel. This display is exportable, portable, and printable.

19. The system generates an activity planning sequence using default activity sequences for similar hole sections and end conditions. This sequence is fully modifiable by the user, permitting modification in sequence order and duration of the event. This sequence is in the same standard as the Well Operations or Drilling Reporting software and will be interchangeable with the Well Operations or Drilling Reporting software. The durations of activities will be populated from tables containing default "best practice" data or from historical data (DIMS, Snapper...).

20. The system generates time vs. depth curve based on the activity planning details. The system creates a best, mean, and worst set of time curves using combinations of default and historical data. These curves are exportable to other documents and printable.

21. The system prompts the user to select probability points such as P10, P50, P90 and then run a Monte Carlo simulation to generate a probability distribution curve for the scenario highlighting the user selected reference points and corresponding values of time, provided as frequency data or cumulative probability curves. These curves are again exportable and printable.

22. A cost plan is generated using pre-configured default cost templates that can be modified at this point. Many costs reference durations of the entire well, hole sections, or specific activities to calculate applied cost. The system generates P10, P50, and P90 cost vs. depth curves.

23. The system generates a summary of the well plan, in word format, along with the main display graphs. The user selects all that should be exported via a check box interface. The system will generate a large one-page summary of the whole process. This document will be as per a standard Well Operations Program template.

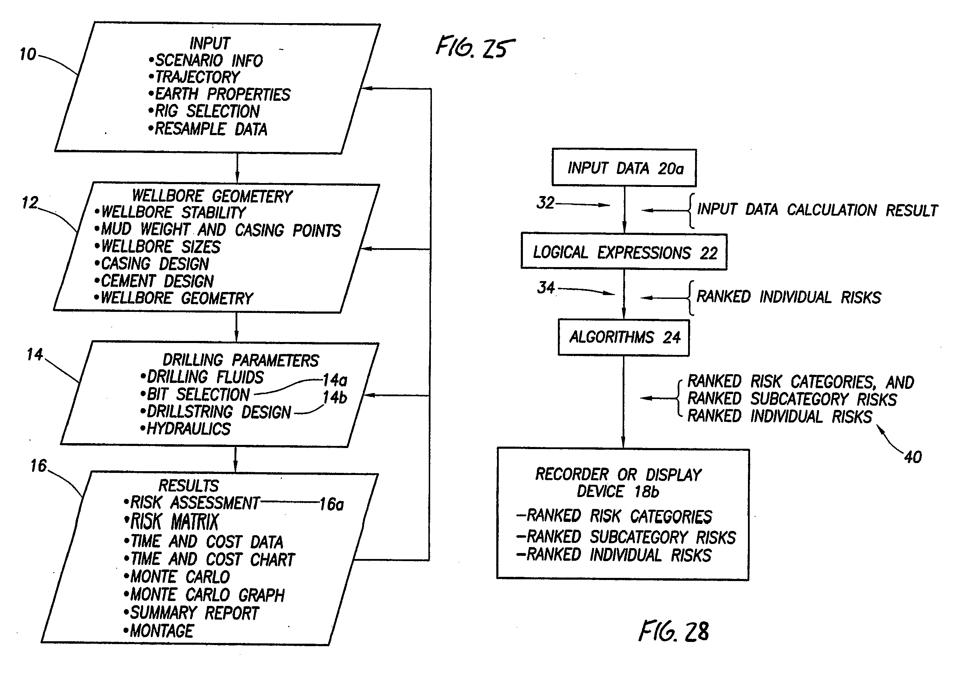

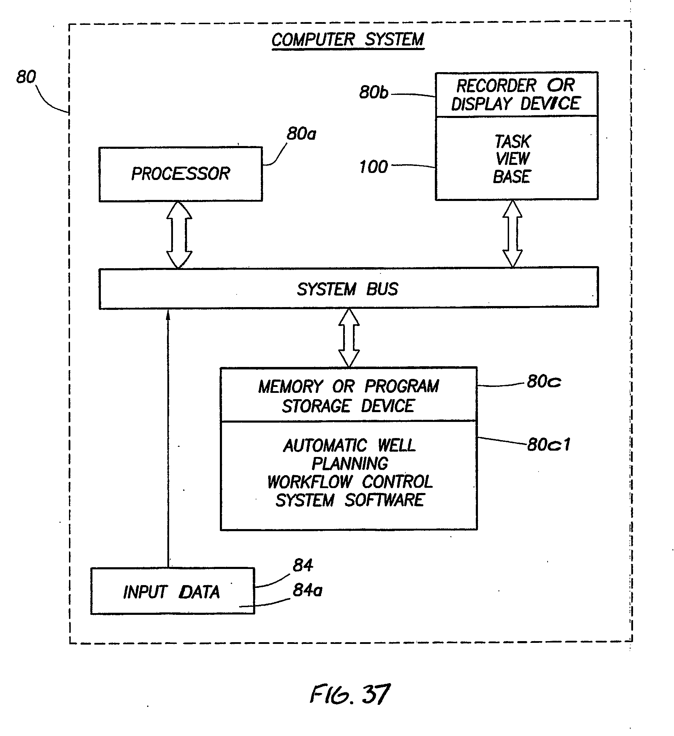

Referring to figure 25, as can be seen on the left side of the displays illustrated in figures 19 through 23, the AWPSS includes a plurality of 'Tasks', and each of those 'Tasks' are illustrated in figure 25. Recall that each of the 'software modules 1-18 of figures 12 through 17 are 'Tasks', and any one of those 'Tasks' can include one of the 'Tasks' shown in figure 25. These 'Tasks' of figure 25 will be discussed again below with reference to figures 37-45 when the 'Automatic Well Planning Workflow Control System software is discussed. In figure 25, those plurality of 'tasks' are divided into four groups: (1) Input task 10, where input data is provided, (2) Wellbore Geometry task 12 and Drilling Parameters task 14, where calculations are performed, and (3) a Results task 16, where a set of results are calculated and presented to a user. The Input task 10 includes the following sub-tasks: (1) scenario information, (2) trajectory, (3) Earth properties, (4) Rig selection, (5) Resample Data. The Wellbore Geometry task 12 includes the following sub-tasks: (1) Wellbore stability, (2) Mud weights and casing points, (3) Wellbore sizes, (4) Casing design, (5) Cement design, (6) Wellbore geometry. The Drilling Parameters task 14 includes the following sub-tasks: (1) Drilling fluids, (2) Bit selection 14a, (3) Drillstring design 14b, (4) Hydraulics. The Results task 16 includes the following sub-tasks: (1) Risk Assessment 16a, (2) Risk Matrix, (3) Time and cost data, (4) Time and cost chart, (5) Monte Carlo, (6) Monte Carlo graph, (7) Summary report, and (8) montage.

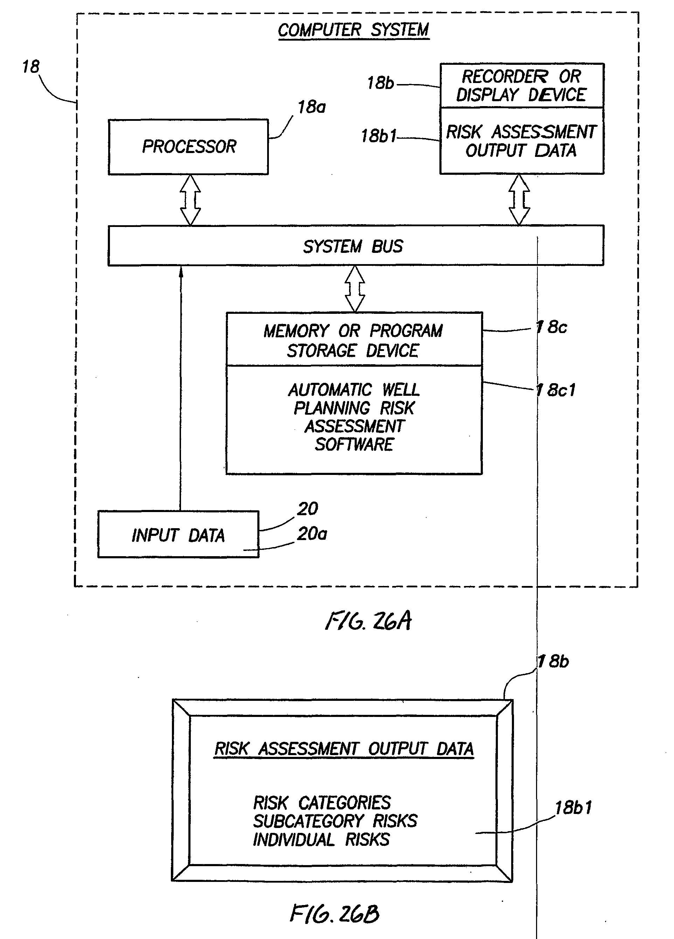

Recalling that the Results task 16 of figure 25 includes a 'Risk Assessment' sub-task 16a, the 'Risk Assessment' sub-task 16a will be discussed in detail in the following paragraphs with reference to figures 26A, 26B, and 27.

Automatic Well Planning Software System - Risk Assessment sub-task 16a - Software

Identifying the risks associated with drilling a well is probably the most subjective process in well planning today. This is based on a person recognizing part of a technical well design that is out of place relative to the earth properties or mechanical equipment to be used to drill the well. The identification of any risks is brought about by integrating all of the well, earth, and equipment information in the mind of a person and mentally sifting through all of the information, mapping the interdependencies, and based solely on personal experience extracting which parts of the project pose what potential risks to the overall success of that project. This is tremendously sensitive to human bias, the individual's ability to remember and integrate all of the data in their mind, and the individual's experience to enable them to recognize the conditions that trigger each drilling risk. Most people are not equipped to do this and those that do are very inconsistent unless strict process and checklists are followed. There are some drilling risk software systems in existence today, but they all require the same human process to identify and assess the likelihood of each individual risks and the consequences. They are simply a computer system for manually recording the results of the risk identification process.

The Risk Assessment sub-task 16a associated with the AWPSS is a system that will automatically assess risks associated with the technical well design decisions in relation to the earth's geology and geomechanical properties and in relation to the mechanical limitations of the equipment specified or recommended for use. Risks are calculated in four ways: (1) by 'Individual Risk Parameters', (2) by 'Risk Categories', (3) by 'Total Risk', and (4) the calculation of 'Qualitative Risk Indices' for each.

Individual Risk Parameters are calculated along the measured depth of the well and color coded into high, medium, or low risk for display to the user. Each risk will identify to the user: an explanation of exactly what is the risk violation, and the value and the task in the workflow controlling the risk. These risks are calculated consistently and transparently allowing users to see and understand all of the known risks and how they are identified. These risks also tell the users which aspects of the well justify further engineering effort to investigate in more detail.

Group/category risks are calculated by incorporating the individual risks in specific combinations. Each individual risk is a member of one or more Risk Categories. Four principal Risk Categories are defined as: (1) Gains, (2) Losses, (3) Stuck, and (4) Mechanical; since these four Risk Categories are the most common and costly groups of troublesome events in drilling worldwide. The Total Risk for a scenario is calculated based on the cumulative results of all of the group/category risks along both the risk and depth axes.

Risk indexing - Each individual risk parameter is used to produce an individual risk index which is a relative indicator of the likelihood that a particular risk will occur. This is purely qualitative, but allows for comparison of the relative likelihood of one risk to another - this is especially indicative when looked at from a percentage change. Each Risk Category is used to produce a category risk index also indicating the likelihood of occurrence and useful for identifying the most likely types of trouble events to expect. Finally, a single risk index is produced for the scenario that is specifically useful for comparing the relative risk of one scenario to another.

The 'Automatic Well Planning Software System' is capable of automatically delivering a comprehensive technical risk assessment. Lacking an integrated model of the technical well design to relate design decisions to associated risks, the A WPSS attributes the risks to specific design decisions and directs users to the appropriate place to modify a design choice in efforts to modify the risk profile of the well.

Referring to figure 26A, a Computer System 18 is illustrated. Computer System 18 includes a Processor 18a connected to a system bus, a Recorder or Display Device 18b connected to the system bus, and a Memory or Program Storage Device 18c connected to the system bus. The Recorder or Display Device 18b is adapted to display 'Risk Assessment Output Data' 18b1. The Memory or Program Storage Device 18c is adapted to store an 'Automatic Well Planning Risk Assessment Software' (AWPRAS) 18c1. The AWPRAS 18c1 is originally stored on another 'program storage device', such as a hard disk; however, the hard disk was inserted into the Computer System 18 and the AWPRAS 18c1 was loaded from the hard disk into the Memory or Program Storage Device 18c of Computer System 18 of figure 26A. In addition, a Storage Medium 20 containing a plurality of 'Input Data' 20a is adapted to be connected to the system bus of the Computer System 18, the 'Input Data' 20a being accessible to the Processor 18a of Computer System 18 when the Storage Medium 20 is connected to the system bus of Computer System 18. In operation, the Processor 18a of the Computer System 18 will execute the AWPRAS 18c1 stored in the Memory or Program Storage Device 18c of the Computer System 18 while, simultaneously, using the 'Input Data' 20a stored in the Storage Medium 20 during that execution. When the Processor 18a completes the execution of the AWPRAS 18c1 stored in the Memory or Program Storage Device 18c (while using the 'Input Data' 20a), the Recorder or Display Device 18b will record or display the 'Risk Assessment Output Data' 18b1, as shown in figure 26A. For example the 'Risk Assessment Output Data' 18b1 can be displayed on a display screen of the Computer System 18, or the 'Risk Assessment Output Data' 18b1 can be recorded on a printout which is generated by the Computer System 18. The Computer System 18 of figure 26A may be a personal computer (PC). The Memory or Program Storage Device 18c is a computer readable medium or a program storage device which is readable by a machine, such as the processor 18a. The processor 18a may be, for example, a microprocessor, microcontroller, or a mainframe or workstation processor. The Memory or Program Storage Device 18c, which stores the AWPRAS 18c1, may be, for example, a hard disk, ROM, CD-ROM, DRAM, or other RAM, flash memory, magnetic storage, optical storage, registers, or other volatile and/or nonvolatile memory.

Referring to figure 26B, a larger view of the Recorder or Display Device 18b of figure 26A is illustrated. In figure 26B, the 'Risk Assessment Output Data' 18b1 includes: a plurality or Risk Categories, (2) a plurality of Subcategory Risks (each of which have been ranked as either a High Risk or a Medium Risk or a Low Risk), and (3) a plurality of Individual Risks (each of which have been ranked as either a High Risk or a Medium Risk or a Low Risk). The Recorder or Display Device 18b of figure 26B will display or record the 'Risk Assessment Output Data' 18b1 including the Risk Categories, the Subcategory Risks, and the Individual Risks.

Referring to figure 27, a detailed construction of the AWPRAS 18c1 of figure 26A is illustrated. In figure 27, the AWPRAS 18c1 includes a first block which stores the Input Data 20a, a second block 22 which stores a plurality of Risk Assessment Logical Expressions 22; a third block 24 which stores a plurality of Risk Assessment Algorithms 24, a fourth block 26 which stores a plurality of Risk Assessment Constants 26, and a fifth block 28 which stores a plurality of Risk Assessment Catalogs 28. The Risk Assessment Constants 26 include values which are used as input for the Risk Assessment Algorithms 24 and the Risk Assessment Logical Expressions 22. The Risk Assessment Catalogs 28 include look-up values which are used as input by the Risk Assessment Algorithms 24 and the Risk Assessment Logical Expressions 22. The 'Input Data' 20a includes values which are used as input for the Risk Assessment Algorithms 24 and the Risk Assessment Logical Expressions 22. The 'Risk Assessment Output Data' 18b1 includes values which are computed by the Risk Assessment Algorithms 24 and which result from the Risk Assessment Logical Expressions 22. In operation, referring to figures 9 and 10, the Processor 18a of the Computer System 18 of figure 26A executes the AWPRAS 18c1 by executing the Risk Assessment Logical Expressions 22 and the Risk Assessment Algorithms 24 of the Risk Assessment Software 18c1 while, simultaneously, using the 'Input Data' 20a, the Risk Assessment Constants 26, and the values stored in the Risk Assessment Catalogs 28 as 'input data' for the Risk Assessment Logical Expressions 22 and the Risk Assessment Algorithms 24 during that execution. When that execution by the Processor 18a of the Risk Assessment Logical Expressions 22 and the Risk Assessment Algorithms 24 (while using the 'Input Data' 20a, Constants 26, and Catalogs 28) is completed, the 'Risk Assessment Output Data' 18b1 will be generated as a 'result'. That 'Risk Assessment Output Data' 18b1 is recorded or displayed on the Recorder or Display Device 18b of the Computer System 18 of figure 26A. In addition, that 'Risk Assessment Output Data' 18b1 can be manually input, by an operator, to the Risk Assessment Logical Expressions block 22 and the Risk Assessment Algorithms block 24 via a 'Manual Input' block 30 shown in figure 27.

Input Data 20a

The following paragraphs will set forth the 'Input Data' 20a which is used by the 'Risk Assessment Logical Expressions' 22 and the 'Risk Assessment Algorithms' 24. Values of the Input Data 20a that are used as input for the Risk Assessment Algorithms 24 and the Risk Assessment Logical Expressions 22 are as follows:

(1) Casing Point Depth
(2) Measured Depth
(3) True Vertical Depth
(4) Mud Weight
(5) Measured Depth
(6) ROP
(7) Pore Pressure
(8) Static Temperature
(9) Pump Rate
(10) Dog Leg Severity
(11) ECD
(12) Inclination
(13) Hole Size
(14) Casing Size
(15) Easting-westing
(16) Northing-Southing
(17) Water Depth
(18) Maximum Water Depth
(19) Maximum well Depth
(20) Kick Tolerance
(21) Drill Collar 1 Weight
(22) Drill Collar 2Weight

(23) Drill Pipe Weight

(24) Heavy Weight Weight

(25) Drill Pipe Tensile Rating

(26) Upper Wellbore Stability Limit

(27) Lower Wellbore Stability Limit

(28) Unconfined Compressive Strength

(29) Bit Size

(30) Mechanical drilling energy (UCS integrated over distance drilled by the bit)

(31) Ratio of footage drilled compared to statistical footage

(32) Cumulative UCS

(33) Cumulative Excess UCS

(34) Cumulative UCS Ratio

(35) Average UCS of rock in section

(36) Bit Average UCS of rock in section

(37) Statistical Bit Hours

(38) Statistical Drilled Footage for the bit

(39) RPM

(40) On Bottom Hours

(41) Calculated Total Bit Revolutions

(42) Time to Trip

(43) Critical Flow Rate

(44) Maximum Flow Rate in hole section

(45) Minimum Flow Rate in hole section

(46) Flow Rate

(47) Total Nozzle Flow Area of bit

(48) Top Of Cement

(49) Top of Tail slurry

(50) Length of Lead slurry

(51) Length of Tail slurry

(52) Cement Density Of Lead

(53) Cement Density Of Tail slurry

(54) Casing Weight per foot

(55) Casing Burst Pressure

(56) Casing Collapse Pressure

(57) Casing Type Name

(58) Hydrostatic Pressure of Cement column

(59) Start Depth

(60) End Depth

(61) Conductor

(62) Hole Section Begin Depth

(63) Openhole Or Cased hole completion

(64) Casing Internal Diameter

(65) Casing Outer Diameter

(66) Mud Type

(67) Pore Pressure without Safety Margin

(68) Tubular Burst Design Factor

(69) Casing Collapse Pressure Design Factor

(70) Tubular Tension Design Factor

(71) Derrick Load Rating

(72) Drawworks Rating

(73) Motion Compensator Rating

(74) Tubular Tension rating

(75) Statistical Bit ROP

(76) Statistical Bit RPM

(77) Well Type

(78) Maximum Pressure

(79) Maximum Liner Pressure Rating

(80) Circulating Pressure

(81) Maximum UCS of bit
(82) Air Gap
(83) Casing Point Depth
(84) Presence of H2S
(85) Presence of CO2
(86) Offshore Well
(87) Flow Rate Maximum Limit

Risk Assessment Constants 26

The following paragraphs set forth the 'Risk Assessment Constants' 26 used by the 'Risk Assessment Logical Expressions' 22 and the 'Risk Assessment Algorithms' 24. Values of the Constants 26 that are used as input data for Risk Assessment Algorithms 24 and the Risk Assessment Logical Expressions 22 are as follows:

(1) Maximum Mud Weight Overbalance to Pore Pressure
(2) Minimum Required Collapse Design Factor
(3) Minimum Required Tension Design Factor
(4) Minimum Required Burst Design Factor
(5) Rock density
(6) Seawater density

Risk Assessment Catalogs 28

The following paragraphs set forth the 'Risk Assessment Catalogs' 28 used by the 'Risk Assessment Logical Expressions' 22 and the 'Risk Assessment Algorithms' 24. Values of the Catalogs 28 that are used as input data for Risk Assessment Algorithms 24 and the Risk Assessment Logical Expressions 22 include the following:

(1) Risk Matrix Catalog
(2) Risk Calculation Catalog
(3) Drillstring component catalog
(4) Drill Bit Catalog
(5) Clearance Factor Catalog
(6) Drill Collar Catalog
(7) Drill Pipes Catalog
(8) Minimum and maximum flow rate catalog
(9) Pump catalog
(10) Rig Catalog
(11) Constants and variables Settings catalog
(12) Tubular Catalog

Risk Assessment Output Data 18b1

The following paragraphs set forth the 'Risk Assessment Output Data' 18b1 generated by the 'Risk Assessment Algorithms' 24. The 'Risk Assessment Output Data' 18b1, which is generated by the 'Risk Assessment Algorithms' 24, includes the following types of output data: (1) Risk Categories, (2) Subcategory Risks, and (3) Individual Risks. The 'Risk Categories', 'Subcategory Risks', and 'Individual Risks' included within the 'Risk Assessment Output Data' 18b1 comprise the following:

The following 'Risk Categories' are calculated:

(1) Individual Risk
(2) Average Individual Risk
(3) Subcategory Risk
(4) Average Subcategory Risk
(5) Total risk
(6) Average total risk
(7) Potential risk for each design task
(8) Actual risk for each design task

The following 'Subcategory Risks' are calculated

(1) Gains risks
(2) Losses risks
(3) Stuck Pipe risks
(4) Mechanical risks

The following 'Individual Risks' are calculated

(1) $H_2S$ and $CO_2$,
(2) Hydrates,
(3) Well water depth,
(4) Tortuosity,
(5) Dogleg severity,
(6) Directional Drilling Index,
(7) Inclination,
(8) Horizontal displacement,
(9) Casing Wear,
(10) High pore pressure,
(11) Low pore pressure,
(12) Hard rock,
(13) Soft Rock,
(14) High temperature,
(15) Water-depth to rig rating,
(16) Well depth to rig rating,
(17) mud weight to kick,
(18) mud weight to losses,
(19) mud weight to fracture,
(20) mud weight window,
(21) Wellbore stability window,
(22) wellbore stability,
(23) Hole section length,
(24) Casing design factor,
(25) Hole to casing clearance,
(26) casing to casing clearance,
(27) casing to bit clearance,
(28) casing linear weight,
(29) Casing maximum overpull,
(30) Low top of cement,
(31) Cement to kick,
(32) cement to losses,
(33) cement to fracture,
(34) Bit excess work,
(35) Bit work,
(36) Bit footage,
(37) bit hours,
(38) Bit revolutions,
(39) Bit ROP,
(40) Drillstring maximum overputt,
(41) Bit compressive strength,
(42) Kick tolerance,
(43) Critical flow rate,
(44) Maximum flow rate,
(45) Small nozzle area,
(46) Standpipe pressure,
(47) ECD to fracture,
(48) ECD to losses,
(49) Subsea BOP,

(50) Large Hole,
(51) Small Hole,
(52) Number of casing strings,
(53) Drillstring parting,
(54) Cuttings.

Risk Assessment Logical Expressions 22

The following paragraphs set forth the 'Risk Assessment Logical Expressions' 22. The 'Risk Assessment Logical Expressions' 22 will: (1) receive the 'Input Data 20a' including a 'plurality of Input Data calculation results' that has been generated by the 'Input Data 20a'; (2) determine whether each of the 'plurality of Input Data calculation results' represent a high risk, a medium risk, or a low risk; and (3) generate a 'plurality of Risk Values' (also known as a 'plurality of Individual Risks'), in response thereto, each of the plurality of Risk Values/plurality of Individual Risks representing 'an Input Data calculation result' that has been 'ranked' as either a 'high risk', a 'medium risk', or a 'low risk'.

The Risk Assessment Logical Expressions 22 include the following:

Task: Scenario
Description: $H_2S$ and $CO_2$ present for scenario indicated by user (per well)
Short Name: $H_2S\_CO_2$
Data Name: $H_2S$
Calculation: $H_2S$ and $CO_2$ check boxes checked yes
Calculation Name: Calculate $H_2S\_CO_2$
High: Both selected
Medium: Either one selected
Low: Neither selected
Unit: unitless

Task: Scenario
Description: Hydrate development (per well)
Short Name: Hydrates
Data Name: Water Depth
Calculation: = Water Depth
Calculation Name: CalculateHydrates
High: >= 3000
Medium: >= 2000
Low: < 2000
Unit: ft

Task: Scenario
Description: Hydrate development (per well)
Short Name: Well_WD
Data Name: Water Depth
Calculation: = WaterDepth
Calculation Name: CalculateHydrates
High: >= 5000
Medium: >= 1000
Low: < 1000
Unit: ft

Task: Trajectory
Description: Dogleg severity (per depth)
Short Name: DLS
Data Name: Dog Leg Severity
Calculation: NA
Calculation Name: CalculateRisk
High: >=6
Medium: >= 4
Low: < 4

Unit: deg/100ft


Task: Trajectory
Description: Tortuosity (per depth)
Short Name: TORT
Data Name: Dog Leg Severity
Calculation: Summation of DLS
Calculation Name: CalculateTort
High: >= 90
Medium: >= 60
Low: < 60
Unit: deg


Task: Trajectory
Description: Inclination (per depth)
Short Name: INC
Data Name: Inclination
Calculation: NA
Calculation Name: CalculateRisk
High: >= 65
Medium: >=40
Low: < 40
Unit: deg


Task: Trajectory
Description: Well inclinations with difficult cuttings transport conditions (per depth)
Short Name: Cutting
Data Name: Inclination
Calculation: NA
Calculation Name: CalculateCutting
High: >= 45
Medium: > 65
Low: < 45
Unit: deg


Task: Trajectory
Description: Horizontal to vertical ratio (per depth)
Short Name: Hor_Disp
Data Name: Inclination
Calculation: = Horizontal Displacement /True Vertical Depth
Calculation Name: CalculateHor Disp
High: >=1.0
Medium: >=0.5
Low: <0.5
Unit: Ratio


Task: Trajectory
Description: Directional Drillability Index (per depth) Fake Threshold
Short Name: DDI
Data Name: Inclination
Calculation: = Calculate DDI using Resample data
Calculation Name: CalculateDDI
High: >6.8
Medium: >=6.0
Low: <6.0
Unit: unitless


Task: EarthModel

Description: High or supernormal Pore Pressure (per depth)
Short Name: PP_High
Data Name: Pore Pressure without Safety Margin
Calculation: = PP
Calculation Name: CalculateRisk
High: >=16
Medium: >= 12
Low: <12
Unit: ppg

Task: EarthModel
Description: Depleted or subnormal Pore Pressure (per depth)
Short Name: PP_Low
Data Name: Pore Pressure without Safety Margin
Calculation: = Pore Pressure without Safety Margin
Calculation Name: CalculateRisk
High: <= 8.33
Medium: <=8.65
Low: > 8.65
Unit: ppg

Task: EarthModel
Description: Superhard rock (per depth)
Short Name: RockHard
Data Name: Unconfined Compressive Strength
Calculation: = Unconfined Compressive Strength
Calculation Name: CalculateRisk
High: >= 25
Medium: >= 16
Low: < 16
Unit: kpsi

Task: EarthModel
Description: Gumbo (per depth)
Short Name: RockSoft
Data Name: Unconfined Compressive Strength
Calculation: = Unconfined Compressive Strength
Calculation Name: CalculateRisk
High: <= 2
Medium: <= 4
Low: > 4
Unit: kpsi

Task: EarthModel
Description: High Geothermal Temperature (per depth)
Short Name: TempHigh
Data Name: StaticTemperature
Calculation: = Temp
Calculation Name: CalculateRisk
High: >= 280
Medium: >= 220
Low: < 220
Unit: degF

Task: RigConstraint
Description: Water depth as a ratio to the maximum water depth rating of the rig (per depth) Short Name: Rig_WD
Data Name:
Calculation: = WD , Rig WD rating

Calculation Name: CalculateRig_WD
High: >=0.75
Medium: >=0.5
Low: <0.5
Unit: Ratio

Task: RigConstraint
Description: Total measured depth as a ratio to the maximum depth rating of the rig (per depth)
Short Name: Rig_MD
Data Name:
Calculation: =MD/Rig MD rating
Calculation Name: CalculateRig_MD
High: >= 0.75
Medium: >=0.5
Low: < 0.5
Unit: Ratio

Task: RigConstraint
"Description: Subsea BOP or wellhead (per well), not quite sure how to compute it"
Short Name: SS_BOP
Data Name: Water Depth
Calculation: =
Calculation Name: CalculateHydrates
High: >= 3000
Medium: >= 1000
Low: < 1000
Unit: ft

Task: MudWindow
Description: Kick potential where Mud Weight is too low relative to Pore Pressure (per depth)
Short Name: MW_Kick
Data Name:
Calculation: = Mud Weight - Pore Pressure
Calculation Name: CalculateMW_Kick
High: <= 0.3
Medium: <=0.5
Low: >0.5
Unit: ppg

Task: MudWindow
Description: Loss potential where Hydrostatic Pressure is too high relative to Pore Pressure (per depth)
Short Name: MW_Loss
Data Name:
Calculation: = Hydrostatic Pressure - Pore Pressure
Calculation Name: CalculateMW_Loss
"PreCondition: =Mud Type (HP-WBM, ND-WBM, D-WBM)"
High: >= 2500
Medium: >= 2000
Low: < 2000
Unit: psi

Task: MudWindow
Description: Loss potential where Hydrostatic Pressure is too high relative to
Pore Pressure (per depth)
Short Name: MW_Loss
Data Name:
Calculation: = Hydrostatic Pressure - Pore Pressure
Calculation Method: CalculateMW_Loss

"PreCondition: =Mud Type (OBM, MOBM, SOBM)"
High: >= 2000
Medium: >= 1500
Low: < 1500
Unit: psi

Task: MudWindow
Description: Loss potential where Mud Weight is too high relative to Fracture Gradient (per depth)
Short Name: MW_Frac
Data Name:
Calculation: = Upper Bound - Mud Weight
Calculation Method: CalculateMW_Frac
High: <= 0.2
Medium: <= 0.5
Low: > 0.5
Unit: ppg

Task: MudWindow
Description: Narrow mud weight window (per depth)
Short Name: MWW
Data Name:
Calculation: = Upper Wellbore Stability Limit - Pore Pressure without Safety Margin
Calculation Method: CalculateMWW
High: <= 0.5
Medium: <=1.0
Low: > 1.0
Unit: ppg

Task: MudWindow
Description: Narrow wellbore stability window (per depth)
Short Name: WBSW
Data Name:
Calculation: = Upper Bound-Lower Bound
Calculation Method: CalculateWBSW
"PreCondition: =Mud Type (OBM, MOBM, SOBM)"
High: <= 0.3
Medium: <= 0.6
Low: > 0.6
Unit: ppg

Task: MudWindow
Description: Narrow wellbore stability window (per depth)
Short Name: WBSW
Data Name:
Calculation: = Upper Bound - Lower Bound
Calculation Method: CalculateWBSW
"PreCondition: =Mud Type (HP-WBM, ND-WBM, D-WBM)"
High: <= 0.4
Medium: <= 0.8
Low: > 0.8
Unit: ppg

Task: MudWindow
Description: Wellbore Stability (per depth)
Short Name: WBS
Data Name: Pore Pressure without Safety Margin
Calculation: = Pore Pressure without Safety Margin
Calculation Method: CalculateWBS

High: LB >= MW >= PP
Medium: MW >= LB >= PP
Low: MW >= PP >= LB
Unit: unitless

Task: MudWindow
Description: Hole section length (per hole section)
Short Name: HSLength
Data Name:
Calculation: = HoleEnd - HoleStart
Calculation Method: CalculateHSLength
High: >= 8000
Medium: >= 7001
Low: < 7001
Unit: ft

Task: MudWindow
Description: Dogleg severity at Casing points for casing wear (per hole section)
Short Name: Csg_Wear
Data Name: Dog Leg Severity
Calculation: = Hole diameter
Calculation Method: CalculateCsg_Wear
High: >=4
Medium: >= 3
Low: < 3
Unit: deg/100ft

Task: MudWindow
Description: Number of Casing strings (per hole section)
Short Name: Csg_Count
Data Name: Casing Point Depth
Calculation: = Number of Casing strings
Calculation Method: CalculateCsg_Count
High: >= 6
Medium: >= 4
Low: < 4
Unit: unitless

Task: WellboreSizes
Description: Large Hole size (per hole section)
Short Name: Hole_Big
Data Name: Hole Size
Calculation: = Hole diameter
Calculation Method: CalculateHoleSectionRisk
High: >= 24
Medium: >= 18.625
Low: < 18.625
Unit: in

Task: WellboreSizes
Description: Small Hole size (per hole section)
Short Name: Hole_Sm
Data Name: Hole Size
Calculation: = Hole diameter
Calculation Method: CalculateHole_Sm
PreCondition: Onshore
High: <=4.75
Medium: <=6.5

Low: > 6.5
Unit: in

Task: WellboreSizes
Description: Small Hole size (per hole section)
Short Name: Hole_Sm
Data Name: Hole Size
Calculation: = Hole diameter
Calculation Method: CalculateHole_Sm
PreCondition: Offshore
High: <=6.5
Medium: <= 7.875
Low: > 7.875
Unit: in

Task: TubularDesign
"Description: Casing Design Factors for Burst, Collapse, & Tension (per hole section), DFb,c,t <= 1.0 for High, DFb,c,t <= 1.1 for Medium, DFb,c,t > 1.1 for Low"
Short Name: Csg_DF
Data Name:
Calculation: = DF/Design Factor
Calculation Method: CalculateCsg_DF
High: <=1.0
Medium: <=1.1
Low: > 1.1
Unit: unitless

Task: TubularDesign
Description: Casing string weight relative to rig lifting capabilities (per casing string)
Short Name: Csg_Wt
Data Name:
Calculation: = CasingWeight/RigMinRating
Calculation Method: CalculateCsg_Wt
High: >= 0.95
Medium: < 0.95
Low: < 0.8
Unit: Ratio

Task: TubularDesign
Description: Casing string allowable Margin of Overpull (per casing string)
Short Name: Csg_MOP
Data Name:
Calculation: = Tubular Tension rating-CasingWeight
Calculation Method: CalculateCsg_MOP
High: <= 50
Medium: <=100
Low: > 100
Unit: klbs

Task: WellboreSizes
Description: Clearance between hole size and casing max OD (per hole section)
Short Name: Hole_Csg
Data Name:
Calculation: = Area of hole size , Area of casing size (max OD)
Calculation Method: CalculateHole_Csg
High: <= 1.1
Medium: <=1.25
Low: > 1.25

Unit: Ratio

Task: WellboreSizes
Description:
Short Name: Csg_Csg
Data Name:
Calculation: = CainsgID/NextMaxCasingSize
Calculation Method: CalculateCsg_Csg
High: <=1.05
Medium: <=1.1
Low: > 1.1
Unit: Ratio

Task: WellboreSizes
Description: Clearance between casing inside diameter and subsequent bit size (per bit run)
Short Name: Csg_Bit
Data Name:
Calculation: = CainsgID/NextBit Size
Calculation Method: CalculateCsg_Bit
High: <= 1.05
Medium: <= 1.1
Low: > 1.1
Unit: Ratio

Task: CementDesign
Description: Cement height relative to design guidelines for each string type (per hole section)
Short Name: TOC_Low
Data Name:
Calculation: = CasingBottomDepth - TopDepthOfCement
Calculation Method: CalculateTOC_Low
High: <= 0.75
Medium: <=1.0
Low: > 1.0
Unit: Ratio

Task: CementDesign
Description: Kick potential where Hydrostatic Pressure is too low relative to
Pore Pressure (per depth)
Short Name: Cmt_Kick
Data Name:
Calculation: = (Cementing Hydrostatic Pressure - Pore Pressure)/TVD
Calculation Method: CalculateCmt_Kick
High: <=0.3
Medium: <= 0.5
Low: >0.5
Unit: ppg

Task: CementDesign
Description: Loss potential where Hydrostatic Pressure is too high relative to Pore Pressure (per depth)
Short Name: Cmt_Loss
Data Name:
Calculation: = Cementing Hydrostatic Pressure - Pore Pressure
Calculation Method: CalculateCmt_Loss
High: >= 2500
Medium: >= 2000
Low: < 2000
Unit: psi

Task: CementDesign
Description: Loss potential where Hydrostatic Pressure is too high relative to Fracture Gradient (per depth)
Short Name: Cmt_Frac
Data Name:
Calculation: = (UpperBound - Cementing Hydrostatic Pressure)/TVD
Calculation Method: CalculateCmt_Frac
High: <= 0.2
Medium: <= 0.5
Low: > 0.5
Unit: ppg

Task: BitsSelection
Description: Excess bit work as a ratio to the Cumulative Mechanical drilling energy (UCS integrated over distance drilled by the bit)
Short Name: Bit_WkXS
Data Name: CumExcessCumulative UCSRatio
Calculation: = CumExcess/Cumulative UCS
Calculation Method: CalculateBitSectionRisk
High: >= 0.2
Medium: >= 0.1
Low: <0.1
Unit: Ratio

Task: BitsSelection
Description: Cumulative bit work as a ratio to the bit catalog average Mechanical drilling energy (UCS integrated over distance drilled by the bit)
Short Name: Bit_Wk
Data Name:
Calculation: = Cumulative UCS/ Mechanical drilling energy (UCS integrated over distance drilled by the bit)
Calculation Method: CalculateBit_Wk
High: >= 1.5
Medium: >= 1.25
Low: <1.25
Unit: Ratio

Task: BitsSelection
Description: Cumulative bit footage as a ratio to the bit catalog average footage (drilled length) (per depth)
Short Name: Bit_Ftg
Data Name: Ratio of footage drilled compared to statistical footage
Calculation: = Ratio of footage drilled compared to statistical footage
Calculation Method: CalculateBitSectionRisk
High: >= 2
Medium: >= 1.5
Low: < 1.5
Unit: Ratio

Task: BitsSelection
Description: Cumulative bit hours as a ratio to the bit catalog average hours (on bottom rotating time) (per depth)
Short Name: Bit_Hrs
Data Name: Bit_Ftg
Calculation: = On Bottom Hours/Statistical Bit Hours
Calculation Method: CalculateBit_Hrs
High: >= 2
Medium: >= 1.5
Low: <1.5
Unit: Ratio

Task: BitsSelection

Description: Cumulative bit Krevs as a ratio to the bit catalog average Krevs (RPM*hours) (per depth)
Short Name: Bit_Krev
Data Name:
Calculation: = Cumulative Krevs , Bit average Krevs
Calculation Method: CalculateBit_Krev
High: >= 2
Medium: >= 1.5
Low: <1.5
Unit: Ratio

Task: BitsSelection
Description: Bit ROP as a ratio to the bit catalog average ROP (per bit run)
Short Name: Bit_ROP
Data Name:
Calculation: = ROP/Statistical Bit ROP
Calculation Method: CalculateBit_ROP
High: >= 1.5
Medium: >= 1.25
Low: <1.25
Unit: Ratio

Task: BitsSelection
Description: UCS relative to Bit UCS and Max Bit UCS (per depth)
Short Name: Bit_UCS
Data Name:
Calculation: = UCS
Calculation Method: CalculateBit_UCS
High: UCS >= Max Bit UCS >= Bit UCS
Medium: Max Bit UCS >= UCS >= Bit UCS
Low: Max Bit UCS >= Bit UCS >= UCS
Unit: Ratio

Task: DrillstringDesign
Description: Drillstring allowable Margin of Overpull (per bit run)
Short Name: DS_MOP
Data Name:
Calculation: = MOP
Calculation Method: CalculateDS_MOP
High: <= 50
Medium: <=100
Low: > 100
Unit: klbs

Task: DrillstringDesign
"Description: Potential parting of the drillstrings where required tension approaches mechanical tension limits of drill pipe, heavy weight, drill pipe, drill collars, or connections (per bit run) "
Short Name: DS_Part
Data Name:
Calculation: = Required Tension (including MOP)/Tension limit of drilling component (DP)
Calculation Method: CalculateDS_Part
High: >= 0.9
Medium: >= 0.8
Low: > 0.8
Unit: ratio

Task: DrillstringDesign
Description: Kick Tolerance (per hole section)
Short Name: Kick_Tol

Data Name: Bit_UCS
"Calculation: NA (already calculated), Exploration/Development"
Calculation Method: CalculateKick_Tol
PreCondition: Exporation
High: <= 50
Medium: <= 100
Low: > 100
Unit: bbl

Task: DrillstringDesign
Description: Kick Tolerance (per hole section)
Short Name: Kick_Tol
Data Name: Bit_UCS
"Calculation: NA (already calculated), Exploration/Development"
Calculation Method: CalculateKick_Tol
PreCondition: Development
High: <= 25
Medium: <= 50
Low: > 50
Unit: bbl

Task: Hydraulics
Description: Flow rate for hole cleaning (per depth)
Short Name: Q_Crit
"Data Name: Flow Rate, Critical Flow Rate"
Calculation: = Flow Rate/Critical Flow Rate
Calculation Method: CalculateQ_Crit
High: <=1.0
Medium: <= 1.1
Low: > 1.1
Unit: Ratio

Task: Hydraulics
Description: Flow rate relative to pump capabilities(per depth)
Short Name: Q_Max
Data Name: Bit_UCS
Calculation: = Q/Qmax
Calculation Method: CalculateQ_Max
High: >= 1.0
Medium: >= 0.9
Low: < 0.9
Unit: Ratio

Task: Hydraulics
"Description: TFA size relative to minimum TFA (per bit run), 0.2301 = 3 of 10/32 inch, 0.3313 = 3 of 12/32inch"
Short Name: TFA_Low
Data Name: Bit_UCS
Calculation: TFA
Calculation Method: CalculateTFA_Low
High: <= 0.2301
Medium: <= 0.3313
Low: > 0.3313
Unit: inch

Task: Hydraulics
Description: Circulating pressure relative to rig and pump maximum pressure (per depth)
Short Name: P_Max
Data Name: Bit_UCS

Calculation: P_Max
Calculation Method: CalculateP_Max
High: >= 1.0
Medium: >= 0.9
Low: < 0.9
Unit: Ratio


Task: Hydraulics
Description: Loss potential where ECD is too high relative to Fracture Gradient (per depth)
Short Name: ECD_Frac
Data Name: Bit_UCS
Calculation: UpperBound-ECD
Calculation Method: CalculateECD_Frac
High: <=0.0
Medium: <= 0.2
Low: >0.2
Unit: ppg


Task: Hydraulics
Description: Loss potential where ECD is too high relative to Pore Pressure (per depth)
Short Name: ECD_Loss
Data Name: Bit_UCS
Calculation: = ECD - Pore Pressure
Calculation Method: CalculateECD_Loss
"PreCondition: Mud Type (HP-WBM, ND-WBM, D-WBM)"
High: >=2500
Medium: >=2000
Low: < 2000
Unit: psi


Task: Hydraulics
Description: Loss potential where ECD is too high relative to Pore Pressure (per depth)
Short Name: ECD_Loss
Data Name: Bit_UCS
Calculation: = ECD - Pore Pressure
Calculation Method: CalculateECD_Loss
"PreCondition: Mud Type (OBM, MOBM, SOBM)"
High: >=2000
Medium: >= 1500
Low: < 1500
Unit: psi


Risk Assessment Algorithms 24

As an example of the "Risk Assessment Logical Expressions' 22, recall the following task:

Task: Hydraulics
Description: Loss potential where ECD is too high relative to Pore Pressure (per depth)
Short Name: ECD_Loss
Data Name: Bit_UCS
Calculation: = ECD - Pore Pressure
Calculation Method: CalculateECD_Loss
"PreCondition: Mud Type (OBM, MOBM, SOBM)"
High: >= 2000
Medium: >= 1500
Low: < 1500
Unit: psi

When the Calculation 'ECD- Pore Pressure' associated with the above referenced Hydraulics task is >= 2000, a 'high' rank is assigned to that calculation; but if the Calculation 'ECD - Pore Pressure' is >= 1500, a 'medium' rank is assigned to that calculation, but if the Calculation 'ECD - Pore Pressure' is < 1500, a 'low' rank is assigned to that calculation. Therefore, the 'Risk Assessment Logical Expressions' 22 ranks each of the 'Input Data calculation results' as 'high risk', 'medium risk', or 'low risk' thereby generating a 'plurality of ranked Risk Values', also known as a 'plurality of ranked Individual Risks'. In response to the 'plurality of ranked Individual Risks' received from the Logical Expressions 22, the 'Risk Assessment Logical Algorithms' 24 then assigns a 'value' and 'color' to each of the plurality of ranked Individual Risks received from the Logical Expressions 22, where the 'value' and 'color' depend upon the particular ranking (i.e., the 'high risk', 'medium risk', or 'low risk' rank) that is associated with each of the plurality of ranked Individual Risks. The 'value' and the 'color' is assigned, by the 'Risk Assessment Algorithms' 24, to each of the plurality of Individual Risks received from the Logical Expressions 22 in the following manner:

Risk Calculation #1 - Individual Risk Calculation :

Referring to the 'Risk Assessment Output Data' 18b1 set forth above, there are fifty-four (54) 'Individual Risks' currently specified. For an 'Individual Risk':

    a High risk = 90,
    a Medium risk = 70, and
    a Low risk = 10

    High risk color code = Red
    Medium risk color code = Yellow
    Low risk color code = Green

If the 'Risk Assessment Logical Expressions' 22 assigns a 'high risk' rank to a particular 'Input Data calculation result', the 'Risk Assessment Algorithms' 24 assigns a value '90' to that 'Input Data calculation result' and a color 'red' to that 'Input Data calculation result'. If the 'Risk Assessment Logical Expressions' 22 assigns a 'medium risk' rank to a particular 'Input Data calculation result', the 'Risk Assessment Algorithms' 24 assigns a value '70' to that 'Input Data calculation result' and a color 'yellow' to that 'Input Data calculation result'. If the 'Risk Assessment Logical Expressions' 22 assigns a 'low risk' rank to a particular "Input Data calculation result', the 'Risk Assessment Algorithms' 24 assigns a value '10' to that 'Input Data calculation result' and a color 'green' to that 'Input Data calculation result'.

Therefore, in response to the 'Ranked Individual Risks' from the Logical Expressions 22, the Risk Assessment Algorithms 24 will assign to each of the 'Ranked Individual Risks' a value of 90 and a color 'red' for a high risk, a value of 70 and a color 'yellow' for the medium risk, and a value of 10 and a color 'green' for the low risk. However, in addition, in response to the 'Ranked Individual Risks' from the Logical Expressions 22, the Risk Assessment Algorithms 24 will also generate a plurality of ranked 'Risk Categories' and a plurality of ranked 'Subcategory Risks'

Referring to the 'Risk Assessment Output Data' 18b1 set forth above, the 'Risk Assessment Output Data' 18b1 includes: (1) eight 'Risk Categories', (2) four 'Subcategory Risks', and (3) fifty-four (54) 'Individual Risks' (that is, 54 individual risks plus 2 'gains' plus 2 'losses' plus 2 'stuck' plus 2 'mechanical' plus 1 'total' = 63 risks). The eight 'Risk Categories' include: (1) an Individual Risk, (2) an Average Individual Risk, (3) a Risk Subcategory (or Subcategory Risk), (4) an Average Subcategory Risk, (5) a Risk Total (or Total Risk), (6) an Average Total Risk, (7) a potential Risk for each design task, and (8) an Actual Risk for each design task.

Recalling that the 'Risk Assessment Algorithms' 24 have already established and generated the above referenced 'Risk Category (1)' (i.e., the plurality of ranked Individual Risks') by assigning a value of 90 and a color 'red' to a high risk 'Input Data calculation result', a value of 70 and a color 'yellow' to a medium risk 'Input Data calculation result', and a value of 10 and a color 'green' to a low risk 'Input Data calculation result', the 'Risk Assessment Algorithms' 24 now calculate and establish and generate the above referenced 'Risk Categories (2) through (8)' in response to the plurality of Risk Values/plurality of Individual Risks received from the 'Risk Assessment Logical Expressions' 22 in the following manner:

Risk Calculation #2 - Average Individual Risk:

The average of all of the 'Risk Values' is calculated as follows:

$$Average\ individual\ risk = \frac{\sum_{i}^{n} Riskvalue_i}{n}$$

To determine the 'Average Individual Risk', sum the above referenced 'Risk Values' and then divide by the number of such 'Risk Values', where i = number of sample points. The value for the 'Average Individual Risk' is displayed at the bottom of the colored individual risk track.

Risk Calculation #3 - Risk subcategory

Referring to the 'Risk Assessment Output Data' 18b1 set forth above, the following 'Subcategory Risks' are defined: (a) gains, (b) losses, (c) stuck and (d) mechanical, where a 'Subcategory Risk' (or 'Risk Subcategory') is defined as follows:

$$Risk\ Subcategory = \frac{\sum_{j}^{n}(Riskvalue_j\ x\ severity_j\ x\ N_j)}{\sum_{j}(severity_j\ x\ N_j)}$$

j = number of individual risks,
$0 \le Severity \le 5$ , and
N j = either 1 or 0 depending on whether the Risk Value$_j$ contributes to the sub category
Severity $_j$ = from the risk matrix catalog.
Red risk display for *Risk Subcategory* $\ge 40$
Yellow risk display for $20 \le$ *Risk Subcategory* < 40
Green risk display for *Risk Subcategory* < 20

Risk Calculation #4 - Average subcategory risk:

$$Average\ subcategory\ risk = \frac{\sum_{i}^{n}(Risk\ Subcategory_i\ x\ risk\ multiplier_i)}{\sum_{1}^{n} risk\ multiplier_i}$$

n = number of sample points.

The value for the average subcategory risk is displayed at the bottom of the colored subcategory risk track.

Risk Multiplier = 3 for *Risk Subcategory* $\ge 40$,
Risk Multiplier = 2 for $20 \le$ *Risk Subcategor y* < 40
Risk Multiplier = 1 for *Risk Subcategory* < 20

Risk Calculation #5 - Total Risk

The total risk calculation is based on the following categories: (a) gains, (b) losses, (c) stuck, and (d) mechanical.

$$Risk\ Total = \frac{\sum_{1}^{4} Risk\ subcategory_k}{4}\ \text{where k = number of subcategories}$$

Red risk display for *Risk total* $\ge 40$
Yellow risk display for $20 \le$ *Risk Total* < 40
Green risk display for *Risk Total* < 20

Risk Calculation #6 - Average Total Risk

$$Average\ total\ risk = \frac{\sum_{i}^{n}(Risk\ Subcategory_i\ x\ risk\ multiplier_i)}{\sum_{1}^{n}risk\ multiplier_i}$$

n = number of sample points.
Risk Multiplier = 3 for *Risk Subcategory* $\geq$ 40,
Risk Multiplier = 2 for 20 $\leq$ *Risk Subcategor y* < 40
Risk Multiplier = 1 for *Risk Subcategory* < 20

The value for the average total risk is displayed at the bottom of the colored total risk track.

Risk calculation #7 - Risks per design task:

The following 14 design tasks have been defined: Scenario, Trajectory, Mechanical Earth Model, Rig, Wellbore stability, Mud weight and casing points, Wellbore Sizes, Casing, Cement, Mud, Bit, Drillstring, Hydraulics, and Time design. There are currently 54 individual risks specified.

Risk calculation #7A - Potential maximum risk per design task

$$Potential\ Risk_k = \frac{\sum_{j=1}^{55}(90\ x\ Severity_{k,j}\ x\ N_{k,j})}{\sum_{j=1}^{55}(Severity_{k,j}\ x\ N_{k,j})}$$

k = index of design tasks, there are 14 design tasks,
$N_j$ = either 0 or 1 depending on whether the Risk Value$_j$ contributes to the design task.
$0 \leq Severity \leq 5$

Risk calculation #7B - Actual risk per design task

$$Actual\ Risk_k = \frac{\sum_{j=1}^{55}(Average\ Individual\ Risk_j\ x\ Severity_j\ x\ N_{k,j})}{\sum_{j=1}^{55}(Severity_j\ x\ N_{k,j})}$$

k = index of design tasks, there are 14 design tasks
$N_{k,j} \in [0,...,M]$
$0 \leq Severity_j \leq 5$

The 'Severity' in the above equations are defined as follows:

| Risk | Severity |
|---|---|
| $H_2S\_CO_2$ | 2.67 |
| Hydrates | 3.33 |
| Well_WD | 3.67 |
| DLS | 3 |
| TORT | 3 |

(continued)

| Risk | Severity |
| --- | --- |
| Well_MD | 4.33 |
| INC | 3 |
| Hor_Disp | 4.67 |
| DDI | 4.33 |
| PP_High | 4.33 |
| PP_Low | 2.67 |
| RockHard | 2 |
| RockSoft | 1.33 |
| TempHigh | 3 |
| Rig_WD | 5 |
| Rig_MD | 5 |
| SS_BOP | 3.67 |
| MW_Kick | 4 |
| MW_Loss | 3 |
| MW_Frac | 3.33 |
| MWW | 3.33 |
| WBS | 3 |
| WBSW | 3.33 |
| HSLength | 3 |
| Hole_Big | 2 |
| Hole_Sm | 2.67 |
| Hole_Csg | 2.67 |
| Csg_Csg | 2.33 |
| Csg_Bit | 1.67 |
| Csg_DF | 4 |
| Csg_Wt | 3 |
| Csg_MOP | 2.67 |
| Csg_Wear | 1.33 |
| Csg_Count | 4.33 |
| TOC Low | 1.67 |
| Cmt_Kick | 3.33 |
| Cmt_Loss | 2.33 |
| Cmt_Frac | 3.33 |
| Bit_Wk | 2.33 |
| Bit_WkXS | 2.33 |
| Bit_Ftg | 2.33 |
| Bit_Hrs | 2 |
| Bit_Krev | 2 |
| Bit_ROP | 2 |
| Bit_UCS | 3 |
| DS_MOP | 3.67 |
| DS_Part | 3 |
| Kick_Tol | 4.33 |
| Q_Crit | 2.67 |
| Q_Max | 3.33 |
| Cutting | 3.33 |
| P_Max | 4 |
| TFA_Low | 1.33 |
| ECD_Frac | 4 |
| ECD_Loss | 3.33 |

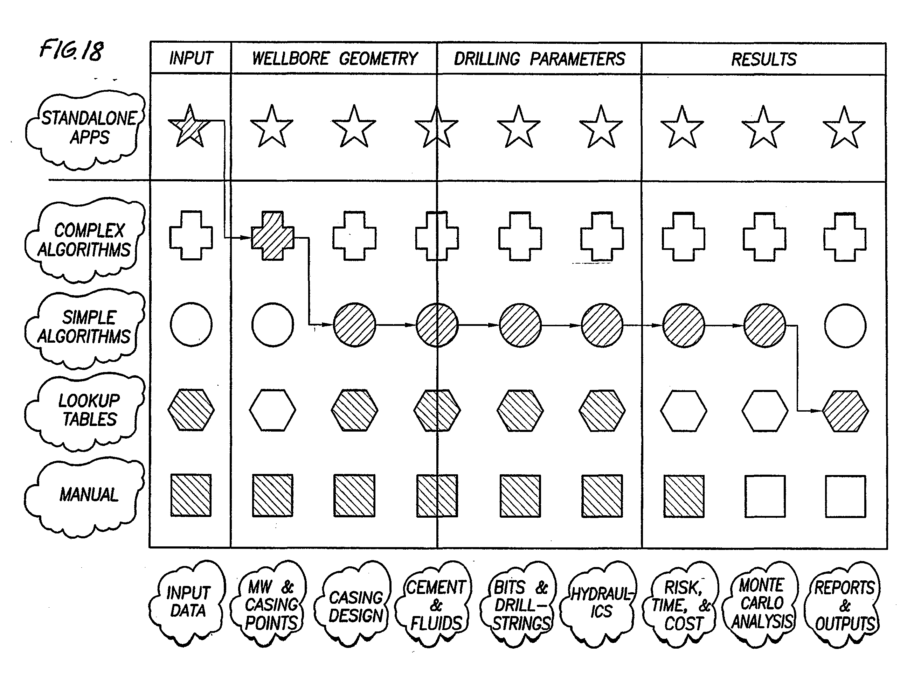

Refer now to figure 28, which will be used during the following functional description of the operation of the present invention. A functional description of the operation of the Automatic Well Planning Risk Assessment Software (AWPRAS) 18c1 is set forth in the following paragraphs with reference to figures 18 through 28.

The Input Data 20a shown in figure 26A will be introduced as 'input data' to the Computer System 18 of figure 26A. The Processor 18a executes the AWPRAS 18c1, while using the Input Data 20a, and, responsive thereto, Processor 18a generates the Risk Assessment Output Data 18b1, the Risk Assessment Output Data 18b1 being recorded or displayed on the Recorder or Display Device 18b in the manner illustrated in figure 26B. The Risk Assessment Output Data 18b1 includes the 'Risk Categories', the 'Subcategory Risks', and the 'Individual Risks'. When the AWPRAS 18c1 is executed by the Processor 18a of figure 26A, referring to figures 10 and 11, the Input Data 20a (and the Risk Assessment Constants 26 and the Risk Assessment Catalogs 28) are collectively provided as 'input data' to the Risk Assessment Logical Expressions 22. Recall that the Input Data 20a includes a 'plurality of Input Data Calculation results'. As a result, as denoted by element numeral 32 in figure 28, the 'plurality of Input Data Calculation results' associated with the Input Data 20a is provided directly to the Logical Expressions block 22 in figure 28. During execution of the Logical Expressions 22 by Processor 18a, each of the 'plurality of Input Data Calculation results' from the Input Data 20a will be compared with each of the 'logical expressions' in the Risk Assessment Logical Expressions block 22 in figure 28. When a match is found between an 'Input Data Calculation result' from the Input Data 20a and an 'expression' in the Logical Expressions block 22, a 'Risk Value' or 'Individual Risk' 34 is generated (by Processor 18a) from the Logical Expressions block 22 in figure 28. As a result, since a 'plurality of Input Data Calculation results' 32 from the Input Data 20a have been compared with a 'plurality of expressions' in the Logical Expressions' block 22 in figure 28, the Logical Expressions block 22 generates a plurality of Risk Values/plurality of Individual Risks 34 in figure 28, where each of the plurality of Risk Values/plurality of Individual Risks on line 34 in figure 28 that are generated by the Logical Expressions block 22 represents an 'Input Data Calculation result' from the Input Data 20a that has been ranked as 'High Risk', 'Medium Risk', or 'Low Risk' by the Logical Expressions block 22. Therefore, a 'Risk Value' or 'Individual Risk' is defined as an 'Input Data Calculation result' from the Input Data 20a that has been matched with one of the 'expressions' in the Logical Expressions 22 and ranked, by the Logical Expressions block 22, as 'High Risk', 'Medium Risk', or 'Low Risk'. For example, consider the following 'expression' in the Logical Expressions' 22:

> Task: MudWindow
> Description: Hole section length (per hole section)
> Short Name: HSLength
> Data Name:
> Calculation: = HoleEnd - HoleStart
> Calculation Method: CalculateHSLength
> High: >= 8000
> Medium: >= 7001
> Low: < 7001

The 'Hole End - HoleStart' calculation is an 'Input Data Calculation result' from the Input Data 20a. The Processor 18a will find a match between the 'Hole End - HoleStart Input Data Calculation result' originating from the Input Data 20a and the above identified 'expression' in the Logical Expressions 22. As a result, the Logical Expressions block 22 will 'rank' the 'Hole End - HoleStart Input Data Calculation result' as either a 'High Risk', or a 'Medium Risk', or a 'Low Risk' depending upon the value of the 'Hole End - HoleStart Input Data Calculation result'.

When the 'Risk Assessment Logical Expressions' 22 ranks the 'Input Data calculation result' as either a 'high risk' or a 'medium risk' or a 'low risk' thereby generating a plurality of ranked Risk Values/plurality of ranked Individual Risks, the 'Risk Assessment Logical Algorithms' 24 will then assign a 'value' and a 'color' to that ranked 'Risk Value' or ranked 'Individual Risk', where the 'value' and the 'color' depends upon the particular ranking (i.e., the 'high risk' rank, or the 'medium risk' rank, or the 'low risk' rank) that is associated with that 'Risk Value' or 'Individual Risk'. The 'value' and the 'color' is assigned, by the 'Risk Assessment Logical Algorithms' 24, to the ranked 'Risk Values' or ranked 'Individual Risks' in the following manner:

> a High risk = 90,
> a Medium risk = 70, and
> a Low risk = 10

> High risk color code = Red
> Medium risk color code = Yellow
> Low risk color code = Green

If the 'Risk Assessment Logical Expressions' 22 assigns a 'high risk' rank to the 'Input Data calculation result' thereby generating a ranked 'Individual Risk', the 'Risk Assessment Logical Algorithms' 24 assigns a value '90' to that ranked 'Risk Value' or ranked 'Individual Risk' and a color 'red' to that ranked 'Risk Value' or that ranked 'Individual Risk'. If the 'Risk Assessment Logical Expressions' 22 assigns a 'medium risk' rank to the 'Input Data calculation result' thereby generating a ranked 'Individual Risk', the 'Risk Assessment Logical Algorithms' 24 assigns a value '70' to that ranked 'Risk Value' or ranked 'Individual Risk' and a color 'yellow' to that ranked 'Risk Value' or that ranked 'Individual Risk'. If the 'Risk Assessment Logical Expressions' 22 assigns a 'low risk' rank to the 'Input Data calculation result' thereby generating a ranked 'Individual Risk', the 'Risk Assessment Logical Algorithms' 24 assigns a value '10' to that ranked 'Risk Value' or ranked 'Individual Risk' and a color 'green' to that ranked 'Risk Value' or that ranked 'Individual Risk'.

Therefore, in figure 28, a plurality of ranked Individual Risks (or ranked Risk Values) is generated along line 34 by the Logical Expressions block 22, the plurality of ranked Individual Risks (which forms a part of the 'Risk Assessment Output Data' 18b1) being provided directly to 'Risk Assessment Algorithms' block 24. Responsive thereto, the 'Risk Assessment Algorithms' 24: (1) generates the 'Ranked Individual Risks' including the 'values' and 'colors' associated therewith in the manner described above, and, in addition, (2) calculates and generates the 'Ranked Risk Categories' 40 and the 'Ranked Subcategory Risks' 40 associated with the 'Risk Assessment Output Data' 18b1. The 'Ranked Risk-Categories' 40 and the 'Ranked Subcategory Risks' 40 and the 'Ranked Individual Risks' 40 can then be recorded or displayed on the Recorder or Display device 18b. Recall that the 'Ranked Risk Categories' 40 include: an Average Individual Risk, an Average Subcategory Risk, a Risk Total (or Total Risk), an Average Total Risk, a potential Risk for each design task, and an Actual Risk for each design task. Recall that the 'Ranked Subcategory Risks' 40 include a Risk Subcategory (or Subcategory Risk). As a result, recalling that the 'Risk Assessment Output Data' 18b1 includes 'one or more Risk Categories' and 'one or more Subcategory Risks' and 'one or more Individual Risks', the 'Risk Assessment Output Data' 18b1, which includes the Risk Categories 40 and the Subcategory Risks 40 and the Individual Risks 40, can now be recorded or displayed on the Recorder or Display Device 18b of the Computer System 18 shown in figure 26A. As noted earlier, the 'Risk Assessment Algorithms' 24 will receive the 'Ranked Individual Risks' from the Logical Expressions 22 along line 34 in figure 28; and, responsive thereto, the 'Risk Assessment Algorithms' 24 will (1) assign the 'values' and the 'colors' to the 'Ranked Individual Risks' in the manner described above, and, in addition, (2) calculate and generate the 'one or more Risk Categories' 40 and the 'one or more Subcategory Risks' 40 by using the following equations (set forth above).

The average Individual Risk is calculated from the 'Risk Values' as follows:

$$Average\ individual\ risk = \frac{\sum_i^n Riskvalue_i}{n}$$

The Subcategory Risk, or Risk Subcategory, is calculated from the 'Risk Values' and the 'Severity', as defined above, as follows:

$$Risk\ Subcategory = \frac{\sum_j^n (Riskvalue_j\ x\ severity_j\ x\ N_j)}{\sum_j (severity_j\ x\ N_j)}$$

The Average Subcategory Risk is calculated from the Risk Subcategory as follows:

$$Average\ subcategory\ risk = \frac{\sum_i^n (Risk\ Subcategory_i\ x\ risk\ multiplier_i)}{\sum_1^n risk\ multiplier_i}$$

The Risk Total is calculated from the Risk Subcategory as follows:

$$Risk\ Total = \frac{\sum_1^4 Risk\ subcategory_k}{4}$$

The Average Total Risk is calculated from the Risk Subcategory as follows:

$$Average\ total\ risk = \frac{\sum_{i}^{n}(Risk\ Subcategory_i \times risk\ multiplier_i)}{\sum_{1}^{n} risk\ multiplier_i}$$

The Potential Risk is calculated from the Severity, as defined above, as follows:

$$Potential\ Risk_k = \frac{\sum_{j=1}^{55}(90 \times Severity_{k,j} \times N_{k,j})}{\sum_{j=1}^{55}(Severity_{k,j} \times N_{k,j})}$$

The Actual Risk is calculated from the Average Individual Risk and the Severity (defined above) as follows:

$$Actual\ Risk_k = \frac{\sum_{j=1}^{55}(Average\ Individual\ Risk_j \times Severity_j \times N_{k,j})}{\sum_{j=1}^{55}(Severity_j \times N_{k,j})}$$

Recall that the Logical Expressions block 22 generates a 'plurality of Risk Values/Ranked Individual Risks' along line 34 in figure 28, where each of the 'plurality of Risk Values/Ranked Individual Risks' represents a received 'Input Data Calculation result' from the Input Data 20a 'ranked' as a 'High Risk', 'Medium Risk', or 'Low Risk' by the Logical Expressions 22. A 'High Risk' is assigned a 'Red' color, a 'Medium Risk' is assigned a 'Yellow' color, and a 'Low Risk' is assigned a 'Green' color. Therefore, noting the word 'rank' in the following, Logical Expressions block 22 generates a 'plurality of ranked Risk Values/ranked Individual Risks'. In addition, in figure 28, recall that the 'Risk Assessment Algorithms' block 24 receives (from line 34) the 'plurality of ranked Risk Values/ranked Individual Risks' from Logical Expressions block 22. In response thereto, noting the word 'rank' in the following, the 'Risk Assessment Algorithms' block 24 generates: (1) the 'one or more Individual Risks having 'values' and 'colors' assigned thereto, (2) the 'one or more ranked Risk Categories' 40, and (3) the 'one or more ranked Subcategory Risks' 40. Since the 'Risk Categories' and the 'Subcategory Risks' are each 'ranked', a 'High Risk' (associated with a Risk Category 40 or a Subcategory Risk 40) is assigned a 'Red' color, a 'Medium Risk' is assigned a 'Yellow' color, and a 'Low Risk' is assigned a 'Green' color. In view of the above 'rankings' and the colors associated therewith, the 'Risk Assessment Output Data' 18b1, including the 'ranked' Risk Categories 40 and the 'ranked' Subcategory Risks 40 and the 'ranked' Individual Risks 38, are recorded or displayed on the Recorder or Display Device 18b of the Computer System 18 shown in figure 26A in the manner illustrated in figure 26B.

Automatic Well Planning Software System - Bit Selection sub-task 14a

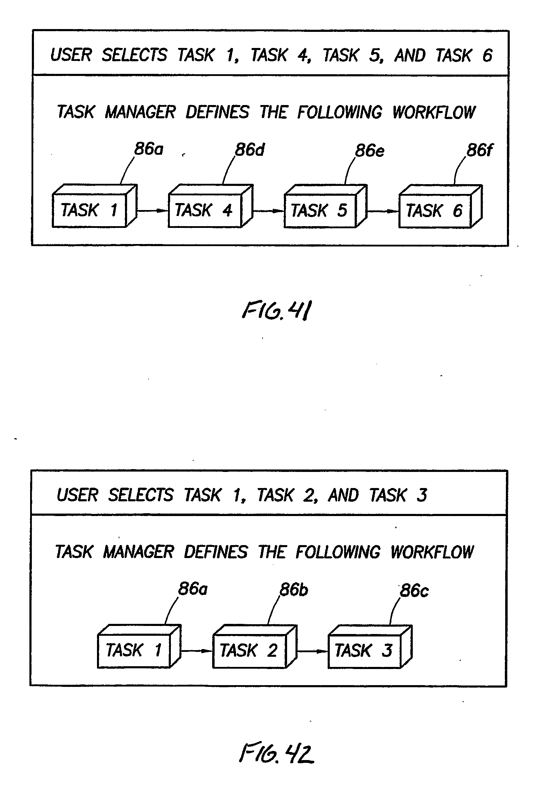

In figure 42, the Bit Selection sub-task 14a is illustrated. The selection of drill bits is a manual subjective process based heavily on personal, previous experiences. The experience of the individual recommending or selecting the drill bits can have a large impact on the drilling performance for the better or for the worse. The fact that bit selection is done primarily based on personal experiences and uses little information of the actual rock to be drilled makes it very easy to choose the incorrect bit for the application. The Bit Selection sub-task 14a utilizes an 'Automatic Well Planning Bit Selection software' (AWPBSS) to automatically generate the required drill bits to drill the specified hole sizes through the specified hole section at unspecified intervals of earth. The AWPBSS includes a piece of software (called an 'algorithm') adapted for automatically selecting the required sequence of drill bits to drill each hole section (defined by a top/bottom depth interval and diameter) in the well. It uses statistical processing of historical bit performance data and several specific Key Performance Indicators (KPI) to match the earth properties and rock strength data to the appropriate bit while optimizing the aggregate time and cost to drill each hole section. It determines the bit life and corresponding depths to pull and replace a bit based on proprietary algorithms, statistics, logic, and risk factors.

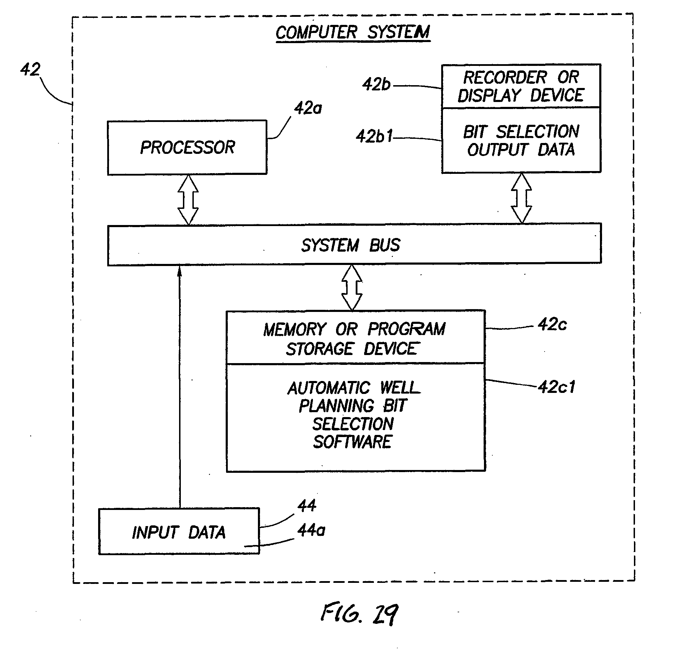

Referring to figure 29, a Computer System 42 is illustrated. The Computer System 42 includes a Processor 42a connected to a system bus, a Recorder or Display Device 42b connected to the system bus, and a Memory or Program Storage Device 42c connected to the system bus. The Recorder or Display Device 42b is adapted to display 'Bit Selection Output Data' 42b1. The Memory or Program Storage Device 42c is adapted to store the AWPBSS 42c1. The AWPBSS 42c1 is originally stored on another 'program storage device', such as a hard disk; however, the hard disk was inserted into the Computer System 42 and the AWPBSS 42c1 was loaded from the hard disk into the Memory or Program Storage Device 42c of the Computer System 42 of figure 29. In addition, a Storage Medium 44 containing a plurality of 'Input Data' 44a is adapted to be connected to the system bus of the Computer System 42, the 'Input Data' 44a being accessible to the Processor 42a of the Computer System 42 when the Storage Medium 44 is connected to the system bus of the Computer System 42. In operation, the Processor 42a of the Computer System 42 executes the AWPBSS 42c1 stored in the Memory or Program Storage Device 42c of Computer System 42 while simultaneously using the 'Input Data' 44a stored in the Storage Medium 44 during that execution. When Processor 42a completes execution of the AWPBSS 42c1 stored in the Memory or Program Storage Device 42c (while using the 'Input Data' 44a), the Recorder or Display Device 42b will record or display the 'Bit selection Output Data' 4-2b1, as shown in figure 29. For example the 'Bit selection Output Data' 42b1 can be displayed on a display screen of the Computer System 42, or the 'Bit selection Output Data' 42b1 can be recorded on a printout which is generated by the Computer System 42. The 'Input Data' 44a and the 'Bit Selection Output Data' 42b1 will be discussed and specifically identified in the following paragraphs of this specification. The AWPBSS 42c1 will also be discussed in the following paragraphs of this specification. The Computer System 42 of figure 29 may be a personal computer (PC). The Memory or Program Storage Device 42c is a computer readable medium or a program storage device which is readable by a machine, such as the processor 42a. The processor 42a may be, for example, a microprocessor, a microcontroller, or a mainframe or workstation processor. The Memory or Program Storage Device 42c, which stores the AWPBSS 42c1, may be, for example, a hard disk, ROM, CD-ROM, DRAM, or other RAM, flash memory, magnetic storage, optical storage, registers, or other volatile and/or non-volatile memory.

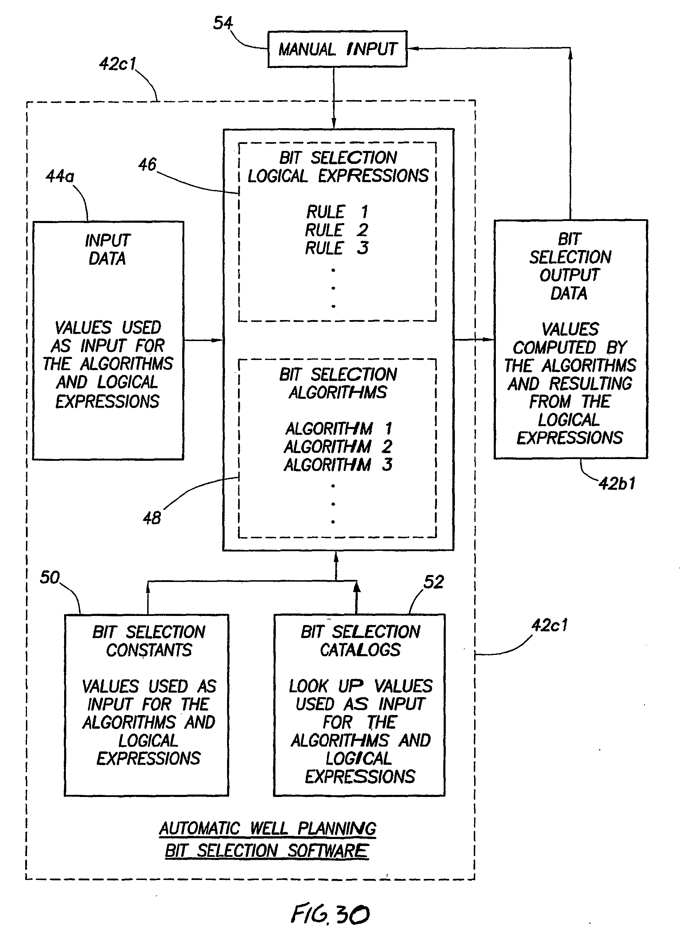

Referring to figure 30, a detailed construction of the 'Automatic Well Planning Bit selection Software' 42c1 of figure 29 is illustrated. In figure 30, the AWPBSS 42c1 includes a first block which stores the Input Data 44a, a second block 46 which stores a plurality of Bit selection Logical Expressions 46; a third block 48 which stores a plurality of Bit selection Algorithms 48, a fourth block 50 which stores a plurality of Bit selection Constants 50, and a fifth block 52 which stores a plurality of Bit selection Catalogs 52. The Bit selection Constants 50 include values which are used as input for the Bit selection Algorithms 48 and the Bit selection Logical Expressions 46. The Bit selection Catalogs 52 include look-up values which are used as input by the Bit selection Algorithms 48 and the Bit selection Logical Expressions 46. The 'Input Data' 44a includes values which are used as input for the Bit selection Algorithms 48 and the Bit selection Logical Expressions 46. The 'Bit selection Output Data' 42b1 includes values which are computed by the Bit selection Algorithms 48 and which result from the Bit selection Logical Expressions 46. In operation, referring to figures 12 and 13, the Processor 42a of the Computer System 42 of figure 29 executes the AWPBSS 42c1 by executing the Bit selection Logical Expressions 46 and the Bit selection Algorithms 48 of the AWPBSS 42c1 while, simultaneously, using the 'Input Data' 44a, the Bit selection Constants 50, and the values stored in the Bit selection Catalogs 52 as 'input data' for the Bit selection Logical Expressions 46 and the Bit selection Algorithms 48 during that execution. When that execution by the Processor 42a of the Bit selection Logical Expressions 46 and the Bit selection Algorithms 48 (while using the 'Input Data' 44a, Constants 50, and Catalogs 52) is completed, the 'Bit selection Output Data' 42b1 will be generated as a 'result'. The 'Bit selection Output Data' 42b1 is recorded or displayed on the Recorder or Display Device 42b of the Computer System 42 of figure 29. In addition, that 'Bit selection Output Data' 42b1 can be manually input, by an operator, to the Bit selection Logical Expressions block 46 and the Bit selection Algorithms block 48 via a 'Manual Input' block 54 shown in figure 30.

Input Data 44a

The following paragraphs will set forth the 'Input Data' 44a which is used by the 'Bit Selection Logical Expressions' 46 and the 'Bit Selection Algorithms' 48. Values of the Input Data 44a that are used as input for the Bit Selection Algorithms 48 and the Bit Selection Logical Expressions 46 include the following:

(1) Measured Depth
(2) Unconfined Compressive Strength
(3) Casing Point Depth
(4) Hole Size
(5) Conductor
(6) Casing Type Name
(7) Casing Point
(8) Day Rate Rig
(9) Spread Rate Rig
(10) Hole Section Name

Bit selection Constants 50

The 'Bit Selection Constants' 50 are used by the 'Bit selection Logical Expressions' 46 and the 'Bit selection Algorithms' 48. The values of the 'Bit Selection Constants 50 that are used as input data for Bit selection Algorithms 48 and the Bit selection Logical Expressions 46 include the following: Trip Speed

Bit selection Catalogs 52

The 'Bit selection Catalogs' 52 are used by the 'Bit selection Logical Expressions' 46 and the 'Bit selection Algorithms' 48. The values of the Catalogs 52 that are used as input data for Bit selection Algorithms 48 and the Bit selection Logical Expressions 46 include the following: Bit Catalog

Bit selection Output Data 42b 1

The 'Bit selection Output Data' 42b1 is generated by the 'Bit selection Algorithms' 48. The 'Bit selection Output Data' 42b1, that is generated by the 'Bit selection Algorithms' 48, includes the following types of output data:

(1) Measured Depth
(2) Cumulative Unconfined Compressive Strength (UCS)
(3) Cumulative Excess UCS
(4) Bit Size
(5) Bit Type
(6) Start Depth
(7) End Depth
(8) Hole Section Begin Depth
(9) Average UCS of rock in section
(10) Maximum UCS of bit
(11) BitAverage UCS of rock in section
(12) Footage
(13) Statistical Drilled Footage for the bit
(14) Ratio of footage drilled compared to statistical footage
(15) Statistical Bit Hours
(16) On Bottom Hours
(17) Rate of Penetration (ROP)
(18) Statistical Bit Rate of Penetration (ROP)
(19) Mechanical drilling energy (UCS integrated over distance drilled by the bit)
(20) Weight On Bit
(21) Revolutions per Minute (RPM)
(22) Statistical Bit RPM
(23) Calculated Total Bit Revolutions
(24) Time to Trip
(25) Cumulative Excess as a ration to the Cumulative UCS
(26) Bit Cost
(27) Hole Section Name

Bit selection Logical Expressions 46

The following paragraphs will set forth the 'Bit selection Logical Expressions' 46. The 'Bit selection Logical Expressions' 46 will: (1) receive the 'Input Data. 44a', including a 'plurality of Input Data calculation results' that has been generated by the 'Input Data 44a'; and (2) evaluate the 'Input Data calculation results' during the processing of the 'Input Data'. The Bit Selection Logical Expressions 46, which evaluate the processing of the Input Data 44a, include the following:

(1) Verify hole size and filter out bit sizes that do not match the hole size.
(2) Check if the bit is not drilling beyond the casing point.
(3) Check the cumulative mechanical drilling energy for the bit run and compare it with the statistical mechanical drilling energy for that bit, and assign the proper risk to the bit run.
(4) Check the cumulative bit revolutions and compare it with the statistical bit revolutions for that bit type and assign the proper risk to the bit run.

(5) Verify that the encountered rock strength is not outside the range of rock strengths that is optimum for the selected bit type.

(6) Extend footage by 25% in case the casing point could be reached by the last selected bit.

Bit Selection Algorithms 48

The following paragraphs set forth the 'Bit Selection Algorithms' 48. The 'Bit Selection Algorithms' 48 receive the output from the 'Bit Selection Logical Expressions' 46 and process that output from the 'Bit Selection Logical Expressions 46' in the following manner:

(1) Read variables and constants
(2) Read catalogs
(3) Build cumulative rock strength curve from casing point to casing point.

$$CumUCS = \int_{start}^{end}(UCS)d\ ft$$

(4) Determine the required hole size
(5) Find the bit candidates that match the closest unconfined compressive strength of the rock to drill.
(6) Determine the end depth of the bit by comparing the historical drilling energy with the cumulative rock strength curve for all bit candidates.
(7) Calculate the cost per foot for each bit candidate taking into accounts the rig rate, trip speed and drilling rate of penetration.

$$TOT\ Cost = (RIG\ RATE + SPREAD\ RATE)(T\_TripIn + \frac{footage}{ROP} + T\_Trip) + Bit\ Cost$$

Evaluate which bit candidate is most economic.
(8) Calculate the remaining cumulative rock strength to casing point.
(9) Repeat step 5 to 9 until the end of the hole section
(10) Build cumulative UCS
(11) Select bits - display bit performance and operating parameters
(12) Remove sub-optimum bits
(13) Find most economic bit based on cost per foot

A functional description of the operation of the AWPBSS 42c1 will be set forth in the following paragraphs with reference to figures 18 through 31B. Recall that drill bit selection is a subjective process based on personal, previous experience. The experience of the individual recommending or selecting the drill bits can have a large impact on the drilling performance. The fact that bit selection is done primarily based on personal experiences and uses little information of the actual rock to be drilled makes it very easy to choose the incorrect bit for the application. Recall that the Bit Selection sub-task 14a utilizes an 'Automatic Well Planning Bit Selection software' (AWPBSS) 42c1 to automatically generate the required roller cone drill bits to drill the specified hole sizes through the specified hole section at unspecified intervals of earth. The AWPBSS 42c1 includes the 'Bit Selection Logical Expressions' 46 and the 'Bit Selection Algorithms' 48 that are adapted for automatically selecting the required sequence of drill bits to drill each hole section (defined by a top/bottom depth interval and diameter) in the well. The AWPBSS 42c1 uses statistical processing of historical bit performance data and several specific Key Performance Indicators (KPI) to match the earth properties and rock strength data to the appropriate bit while optimizing the aggregate time and cost to drill each hole section. It determines the bit life and corresponding depths to pull and replace a bit based on proprietary algorithms, statistics, logic, and risk factors.

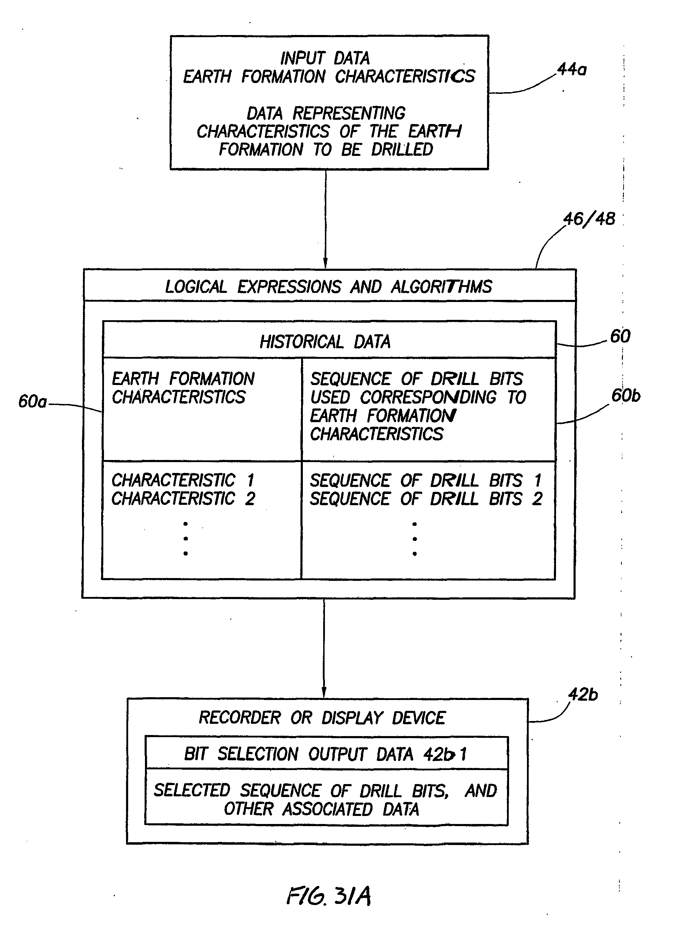

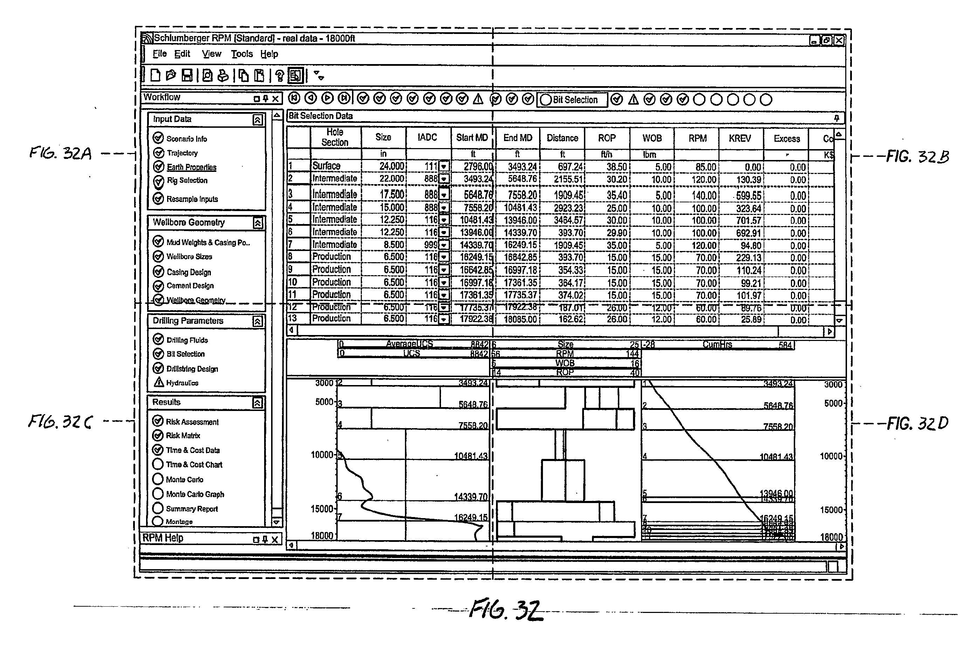

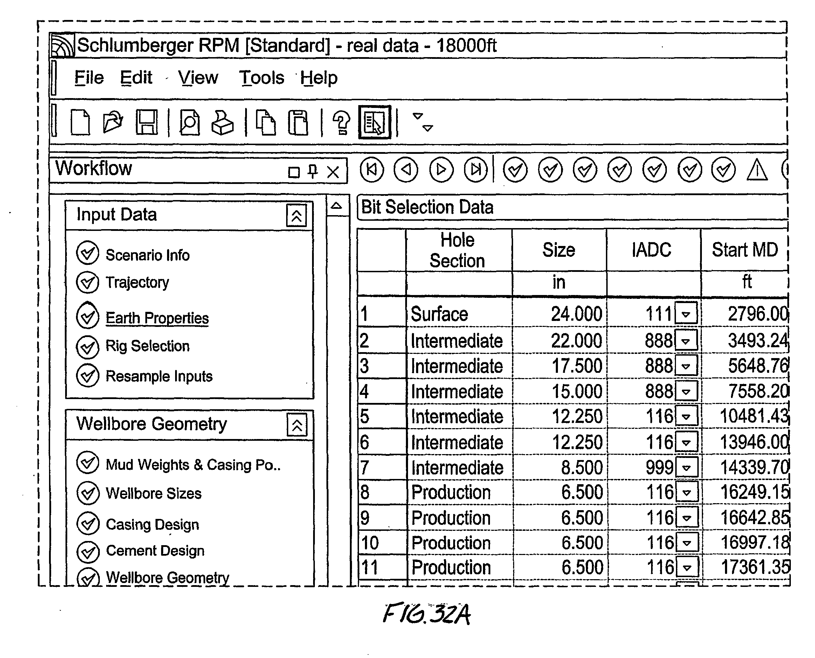

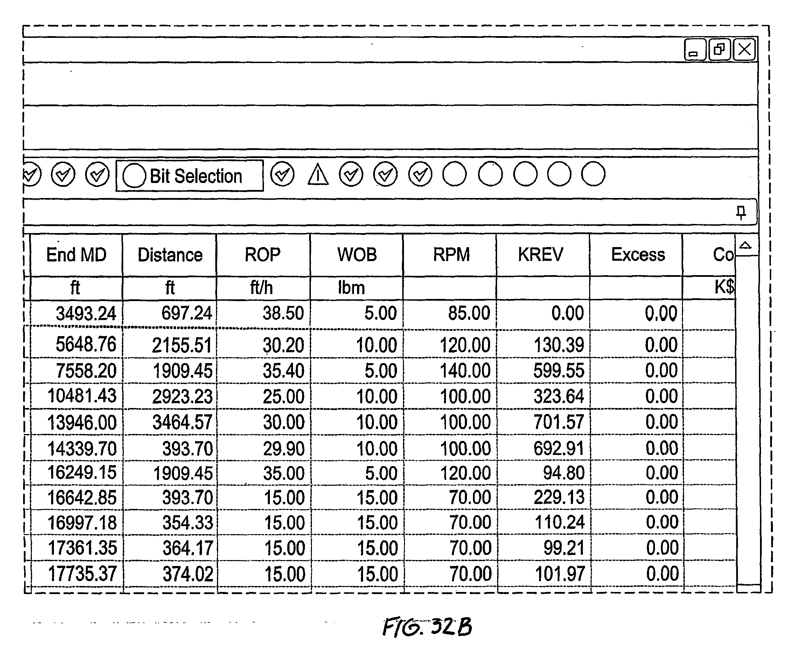

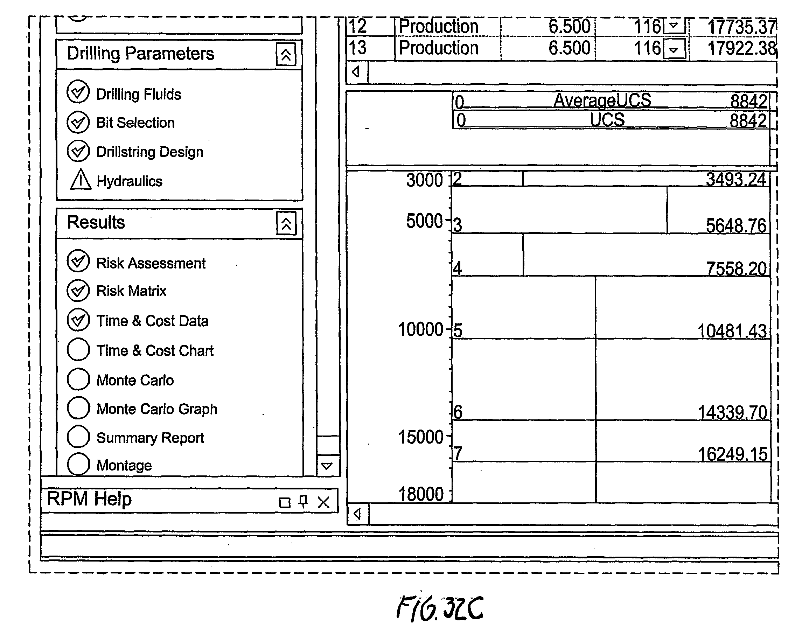

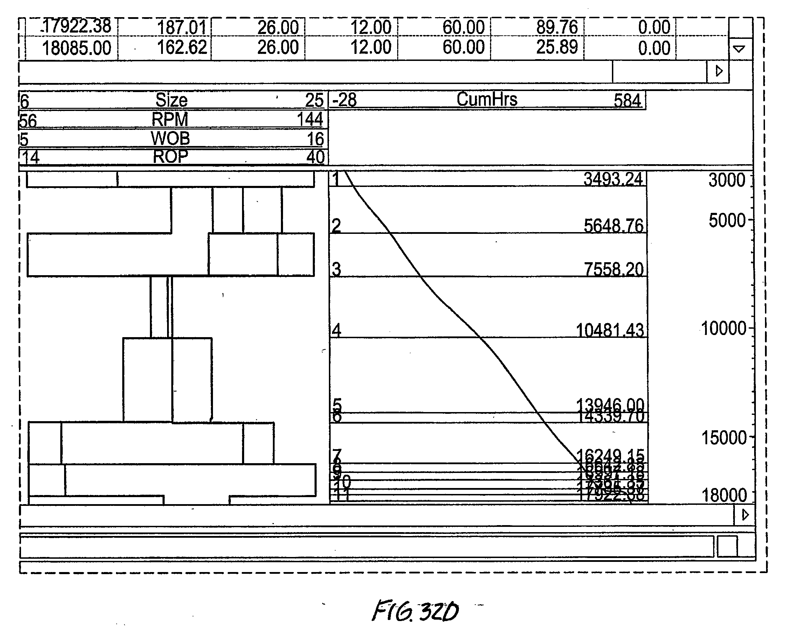

In figure 31A, the Input Data 44a represents a set of Earth formation characteristics comprised of data representing characteristics of a particular Earth formation 'To Be Drilled'. The Logical Expressions and Algorithms 46/48 are comprised of Historical Data 60 that can be viewed as a table consisting of a first column 60a including 'historical Earth formation characteristics' and a second column 60b including 'sequences of drill bits used corresponding to the historical Earth formation characteristics'. The Recorder or Display device 42b will record or display 'Bit Selection Output Data' 42b, where the 'Bit Selection Output Data' 42b is comprised of the 'Selected Sequence of Drill Bits, and other associated data'. In operation, referring to figure 31A, Input Data 44a represents a set of Earth formation characteristics associated with an Earth formation 'To Be Drilled'. The 'Earth formation characteristics (associated with a section of Earth Formation 'to be drilled') corresponding to the Input Data 44a' is compared with each 'characteristic in column 60a associated with the Historical Data 60' of the Logical Expressions and Algorithms 46/48. When a match (or a substantial match) is found between the 'Earth formation characteristics (associated with a section of Earth Formation 'to be drilled') corresponding to the Input Data 44a' and a 'characteristic in column 60a associated with the Historical Data 60', a 'Sequence of Drill Bits' (called a 'selected sequence of drill bits') corresponding to that 'characteristic in column 60a associated with the Historical Data 60' is generated as an output from the Logical Expressions and Algorithms block 46/48 in figure 31A. The aforementioned 'selected sequence of drill bits along with other data associated with the selected sequence of drill bits' is generated as an 'output' by the Recorder or Display device 42b of the Computer System 42 in figure 29 (see figure 32 for an example of that 'output'). The 'output' can be a 'display' (as illustrated in figure 32) on a computer display screen or an 'output record' printed by the Recorder or Display device 42b.

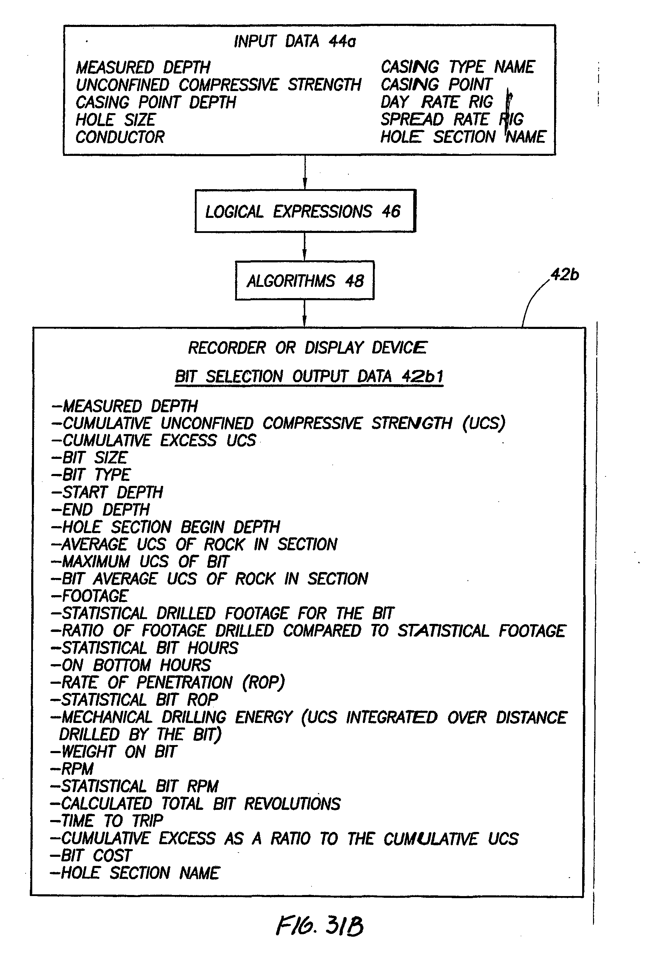

The functions discussed above with reference to figure 31A, pertaining to the manner by which the 'Logical Expressions and Algorithms' 46/48 generate the 'Bit Selection Output Data' 42b1 in response to the 'Input Data' 44a, will be discussed in greater detail below with reference to figure 31B. In figure 31B, recall that the Input Data 44a represents a set of 'Earth formation characteristics', where the 'Earth formation characteristics' are comprised of data representing characteristics of a particular Earth formation 'To Be Drilled'. As a result, Input Data 44a is comprised of the following specific data: Measured Depth, Unconfined Compressive Strength, Casing Point Depth, Hole Size, Conductor, Casing Type Name, Casing Point, Day Rate Rig, Spread Rate Rig, and Hole Section Name. Recall that the Logical Expressions 46 and Algorithms 48 respond to Input Data 44a by generating a set of 'Bit Selection Output Data' 42b1, where the 'Bit Selection Output Data' 42b1 represents the aforementioned 'selected drill bit along with other data associated with the selected drill bit'. As a result, the 'Bit Selection Output Data' 42b1 is comprised of the following specific data: Measured Depth, Cumulative Unconfined Compressive Strength (UCS), Cumulative Excess UCS, Bit Size, Bit Type, Start Depth, End Depth, Hole Section Begin Depth, Average UCS of rock in section, Maximum UCS of bit, Bit Average UCS of rock in section, Footage, Statistical Drilled Footage for the bit, Ratio of footage drilled compared to statistical footage, Statistical Bit Hours, On Bottom Hours, Rate of Penetration (ROP), Statistical Bit Rate of Penetration (ROP), Mechanical drilling energy (UCS integrated over distance drilled by the bit), Weight On Bit, Revolutions per Minute (RPM), Statistical Bit RPM, Calculated Total Bit Revolutions, Time to Trip, Cumulative Excess as a ration to the Cumulative UCS, Bit Cost, and Hole Section Name. To generate the 'Bit Selection Output Data' 42b1 in response to the 'Input Data' 44a, the Logical Expressions 46 and the Algorithms 48 must perform the following functions.

The Bit Selection Logical Expressions 46 perform the following functions: (1) Verify the hole size and filter out the bit sizes that do not match the hole size, (2) Check if the bit is not drilling beyond the casing point, (3) Check the cumulative mechanical drilling energy for the bit run and compare it with the statistical mechanical drilling energy for that bit, and assign the proper risk to the bit run, (4) Check the cumulative bit revolutions and compare it with the statistical bit revolutions for that bit type and assign the proper risk to the bit run, (5) Verify that the encountered rock strength is not outside the range of rock strengths that is optimum for the selected bit type, and (6) Extend footage by 25% in case the casing point could be reached by the last selected bit. The Bit Selection Algorithms 48 perform the following functions: (1) Read variables and constants, (2) Read catalogs, (3) Build cumulative rock strength curve from casing point to casing point, using the following equation:

$$CumUCS = \int_{start}^{end} (UCS) d\ ft\ ,$$

Determine the required hole size, (5) Find the bit candidates that match the closest unconfined compressive strength of the rock to drill, (6) Determine the end depth of the bit by comparing the historical drilling energy with the cumulative rock strength curve for all bit candidates, (7) Calculate cost per foot for each bit candidate taking into account the rig rate, trip speed and drilling rate of penetration by using the following equation:

$$TOT\ Cost = (RIG\ RATE + SPREAD\ RATE)(T\_TripIn + \frac{footage}{ROP} + T\_Trip) + Bit\ Cost$$

Evaluate which bit candidate is most economic, (9) Calculate the remaining cumulative rock strength to casing point, (10) Repeat steps 5 to 9 until the end of the hole section, (11) Build cumulative UCS, (12) Select bits - display bit performance and operating parameters, (13) Remove sub-optimum bits, and (14) Find the most economic bit based on cost per foot.

The following paragraphs will describe how the AWPBSS generates a 'Selected Sequence of Drill Bits' in response to 'Input Data'. The 'Input Data', including the 'trajectory' data and Earth formation property data is loaded. The main characteristic of the Earth formation property data, which was loaded as input data, is the rock strength. The AWPBSS software has calculated the casing points, and the number of 'hole sizes' is also known. The casing sizes are known, and therefore the wellbore sizes are also known. The number of 'hole sections' and the size of the 'hole sections' are also known. The drilling fluids are also known. The most important part of the 'input data' is the 'hole section length', 'hole section size', and 'rock hardness' (also known as the 'Unconfined Compressive Strength' or 'UCS') associated with the rock that exists in the hole sections. In addition, the 'input data' includes 'historical bit performance data'. The 'Bit Assessment Catalogs' include: bit sizes, bit-types, and the relative performance of the bit types. The 'historical bit performance data' includes the footage that the bit drills associated with each bit-type. The AWPBSS starts by determining the average rock hardness that the bit-type can drill. The bit-types have been classified in the 'International Association for Drilling Contractors (IADC)' bit classification. Therefore, there exists a 'classification' for each 'bit-type'. We assign an 'average UCS' (that is, an 'average rock strength') to the bit-type and a minimum and maximum rock strength to each of the bit-types. Therefore, each 'bit type' has been assigned the following information: (1) the 'softest rock that each bit type can drill', (2) the 'hardest rock that each bit type can drill', and (3) the 'average or the optimuin hardness that each bit type can drill'. All 'bit sizes' associated with the 'bit types' are examined for the wellbore 'hole section' that will be drilled (electronically) when the AWPBSS is executed. Some 'particular bit types' from the Bit Selection Catalog are filtered-out because those 'particular bit types' do not have the appropriate size for use in connection with the hole section to be drilled (electronically). As a result, a 'list of bit candidates' is generated. When the drilling of the rock (electronically - in the software) begins, for each foot of the rock, a 'rock strength' is defined, where the 'rock strength' has units of 'pressure' in 'psi'. For each foot of rock that we (electronically) drill, the AWPBSS performs a mathematical integration to determine the 'cumulative rock strength' using the equation:

$$CumUCS = \int_{start}^{end} (UCS)d\ ft$$

where:

    'CumUCS' is the 'cumulative rock strength', and
    'UCS' (Unconfined Compressive Strength') is the 'average rock strength' per
    'bit candidate', and
    'd' is the drilling distance using that 'bit candidate'.

Thus, if the 'average rock strength/foot' is 1000 psi/foot and 10 feet of rock is drilled, the 'cumulative rock strength' is (1000 psi/foot)(10 feet) = 10000 psi 'cumulative rock strength'. If the next 10 feet of rock has an 'average rock strength/foot' of 2000 psi/foot, that next 10 feet will take (2000 psi/foot)(10 feet) = 20000 psi 'cumulative rock strength'; then, when we add the 10000 psi 'cumulative rock strength' that we already drilled, the resultant 'cumulative rock strength' for the 20 feet equals 30000 psi. Drilling (in the software) continues. At this point, the 30000 psi 'cumulative rock strength' for the 20 feet of drilling is compared with the 'statistical performance of the bit'. For example, if, for a 'particular bit', the 'statistical performance of the bit' indicates that, statistically, 'particular bit' can drill fifty (50) feet in a 'particular rock', where the 'particular rock' has 'rock strength' of 1000 psi/foot. In that case, the 'particular bit' has a 'statistical amount of energy that the particular bit is capable of drilling' which equals (50 feet)(1000 psi/foot) = 50000 psi. Compare the previously calculated 'cumulative rock strength' of 30000 psi with the aforementioned 'statistical amount of energy that the particular bit is capable of drilling' of 50000 psi. Even though 'actual energy' (the 30000 psi) was used to drill the first 20 feet of the rock, there still exists a 'residual energy' in the 'particular bit' (the 'residual energy' being the difference between 50000 psi and 30000 psi). As a result, from 20 feet to 30 feet, we use the 'particular bit' to drill once again (in the software) an additional 10 feet. Assume the 'rock strength' is 2000 psi. Determine the 'cumulative rock strength' by multiplying (2000 psi/foot)(10, additional feet) = 20000 psi. Therefore, 'cumulative rock strength' for the additional 10 feet is 20000 psi. Add the 20000 psi 'cumulative rock strength' (for the additional 10 feet) to the previously calculated 30000 psi 'cumulative rock strength' (for the first 20 feet) already drilled. The result will yield a 'resultant cumulative rock strength' of 50000 psi' associated with 30 feet of drilling. Compare the aforementioned 'resultant cumulative rock strength' of 50000 psi with the 'statistical amount of energy that the particular bit is capable of drilling' of 50000 psi. As a result, there is only one conclusion: the bit life of the 'particular bit' ends and terminates at 50000 psi; and in addition, the 'particular bit' can drill up to 30 feet. If the aforementioned 'particular bit' is 'bit candidate A', there is only one conclusion: 'bit candidate A' can drill 30 feet of rock. The same process is now repeated for the next 'bit candidate' for the same size category. We continue to drill (in the software) from point A to point B in the rock, and integrate the energy as previously described (as 'footage' in units of 'psi') until the life of the bit has terminated. The above described process is repeated for each 'bit candidate' in the aforementioned 'list of bit candidates' to compute the 'footage' (in units of psi) for each 'bit candidate' on the 'list of bit candidates'. The next step involves selecting which bit (among the 'list of bit candidates') is the 'optimum bit candidate'. One would think that the 'optimum bit candidate' would be the one with the maximum footage. However, how fast the bit drills (i.e., the Rate of Penetration or ROP) is also a factor. Therefore, a cost computation or economic analysis must be performed. In that economic analysis, when drilling, a rig is used, and, as a result, rig time is consumed which has a cost associated therewith, and a bit is also consumed which also has a certain associated cost. If we (electronically) drill from point A to point B, it is necessary to first run into the hole where point A starts, and this consumes 'tripping time'. Then, drilling time is consumed. When (electronic) drilling is done, pull the bit out of the hole from point B to the surface, and additional rig time is also consumed. Thus, a 'total time in drilling' can be computed from point A to point B and that 'total time in drilling' is converted into 'dollar'. To those 'dollars', the bit cost is added. This calculation will yield: a 'total cost to drill that certain footage (from point A to B)'. The 'total cost to drill that certain footage (from point A to B)' is normalized by converting the 'total cost to drill that certain footage (from point A to B)' to a number that represents 'what it costs to drill one foot'. This operation is performed for each bit candidate. At this point, the following evaluation is performed: 'which bit candidate drills the cheapest per foot'. Of all the 'bit candidates' on the 'list of bit candidates', we select the 'most economic bit candidate'. Although we computed the cost to drill from point A to point B, it is now necessary to consider drilling to point C or point D in the hole. In that case, the AWPBSS software conducts the same steps as previously described by evaluating which bit candidate is the most suitable in terms of energy potential to drill that hole section and performing an economic evaluation to determine which bit candidate is cheapest. As a result, when (electronically) drilling from point A to point B to point C, the AWPBSS performs the following functions: (1) determine if 'one or two or more bits' are necessary to satisfy the requirements to drill each hole section and, responsive thereto, (2) select the 'optimum bit candidates' associated with the 'one or two or more bits' for each hole section.

In connection with the Bit Selection Catalogs 52, the Catalogs 52 include a 'list of bit candidates'. The will disregard certain bit candidates based on: the classification of each bit candidate and the minimum and maximum rock strength that the bit candidate can handle. In addition, the AWPBSS software will disregard the bit candidates which are not serving our purpose in terms of (electronically) drill from point A to point B. If rocks are encountered which have a UCS which exceeds the UCS rating for that 'particular bit candidate', that 'particular bit candidate' will not qualify. In addition, if the rock strength is considerably less than the minimum rock strength for that 'particular bit candidate', disregard that 'particular bit candidate'.

In connection with the Input Data 44a, the Input Data 44a includes the following data: which hole section to drill, where the hole starts and stops, the length of the entire hole, the size of the hole in order to determine the correct size of the bit, and the rock strength (UCS) for each foot of hole section. In addition, for each foot of rock being drilled, the following data is known: rock strength (UCS), trip speed, the footage that a bit drills, the minimum and maximum UCS for which that the bit is designed, Rate of Penetration (ROP), and drilling performance. When selecting the bit candidates, the 'historical performance' of the 'bit candidate' in terms of Rate of Penetration (ROP) is known. The drilling parameters are known, such as the 'weight on bit' or WOB, and the Revolutions per Minute (RPM) to turn the bit is also known.

In connection with the Bit Selection Output Data 42b1, since each bit drills a hole section, the output data includes a start point and an end point in the hole section for each bit. The difference between the start point and the end point is the 'distance that the bit will drill'. Therefore, the output data further includes the 'distance that the drill bit will drill'. In addition, the output data includes: the 'performance of the bit in terms of Rate of Penetration (ROP)' and the 'bit cost'. In summary, the AWPBSS 42c1 will: (1) suggest the right type of bit for the right formation, (2) determine longevity for each bit, (3) determine how far can that bit drill, and (4) determine and generate 'bit performance' data based on historical data for each bit.

Referring to figure 32, the AWPBSS 42c1 generates the display illustrated, the display of figure 32 illustrating 'Bit Selection Output Data 42b1' representing the selected sequence of drill bits which are selected by the AWPBSS 42c1.

Automatic Well Planning Software System - Drill string Design sub-task 14b

In figure 42, the Drillstring Design sub-task 14b is illustrated. Designing a drillstrings is not terribly complex, but it is very tedious. The sheer number of components, methods, and calculations required to ensure the mechanical suitability of stacking one component on top of another component is quite cumbersome. Add to this fact that a different drillstring is created for every hole section and often every different bit run in the drilling of a well and the amount of work involved can be large and prone to human error. The 'Automatic Well Planning Drillstring Design software' (AWPDDS) includes an algorithm for automatically generating the required drillstrings to support the weight requirements of each bit, the directional requirements of the trajectory, the mechanical requirements of the rig and drill pipe, and other general requirements for the well, i.e. formation evaluation. The resulting drillstrings are accurate enough representations to facilitate calculations of frictional pressure losses (hydraulics), mechanical friction (torque & drag), and cost (BHA components for directional drilling and formation evaluation).

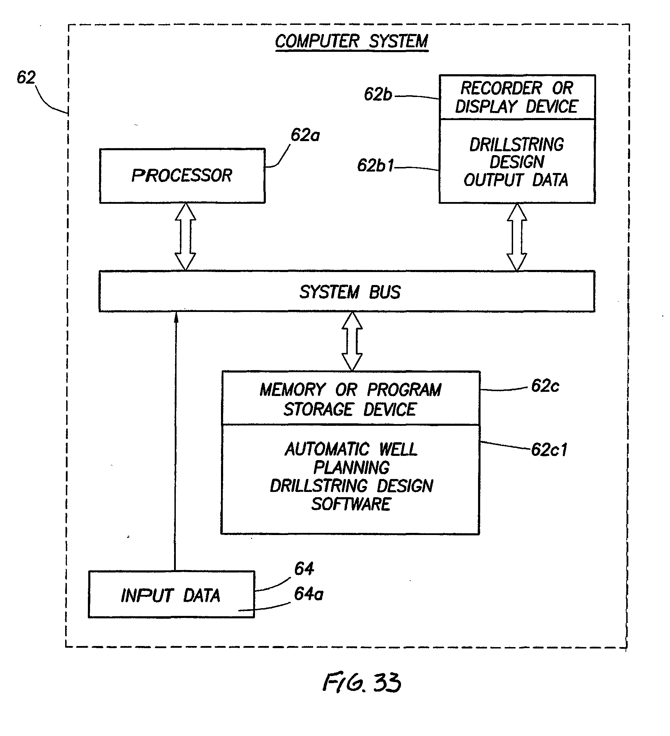

Referring to figure 33, a Computer System 62 is illustrated. Computer System 62 includes a Processor 62a connected to a system bus, a Recorder or Display Device 62b connected to the system bus, and a Memory or Program Storage Device 62c connected to the system bus. The Recorder or Display Device 62b is adapted to display 'Drillstring Design Output Data' 62b1. The Memory or Program Storage Device 62c is adapted to store an 'Automatic Well Planning Drillstring Design Software' (AWPDDS) 62c1. AWPDDS 62c1 is originally stored on another 'program storage device', such as a hard disk; however, the hard disk was inserted into the Computer System 62 and AWPDDS 62c1 was loaded from the hard disk into the Memory or Program Storage Device 62c of Computer System 62 of figure 33. In addition, a Storage Medium 64 containing a plurality of 'Input Data' 64a is adapted to be connected to the system bus of the Computer System 62, the 'Input Data' 64a being accessible to the Processor 62a of the Computer System 62 when the Storage Medium 64 is connected to the system bus of the Computer System 62. In operation, the Processor 62a of Computer System 62 executes the AWPDDS 62c1 stored in the Memory or Program Storage Device 62c of Computer System 62 while simultaneously using the 'Input Data' 64a stored in the Storage Medium 64 during that execution. When Processor 62a completes the execution of AWPDDS 62c1 stored in the Memory or Program Storage Device 62c (while using the 'Input Data' 64a), the Recorder or Display Device 62b will record or display the 'Drillstring Design Output Data' 62b1 as shown in figure 33. For example, the 'Drillstring Design Output Data' 62b1 can be displayed on a displays screen of Computer System 62, or the 'Drillstring Design Output Data' 62b1 can be recorded on a printout generated by the Computer System 62.

The 'Input Data' 64a and the 'Drillstring Design Output Data' 62b1 will be discussed and specifically identified in the following paragraphs. AWPDDS 62c1 will also be discussed in the following paragraphs of this specification. The Computer System 62 of figure 33 may be a personal computer (PC). The Memory or Program Storage Device 62c is a computer readable medium or a program storage device readable by a machine, such as the processor 62a. The processor 62a may be, for example, a microprocessor, a microcontroller, or a mainframe or workstation processor. The Memory or Program Storage Device 62c, which stores the AWPDDS 62c1, may be, for example, a hard disk, ROM, CD-ROM, DRAM, or other RAM, flash memory, magnetic storage, optical storage, registers, or other volatile and/or non-volatile memory.

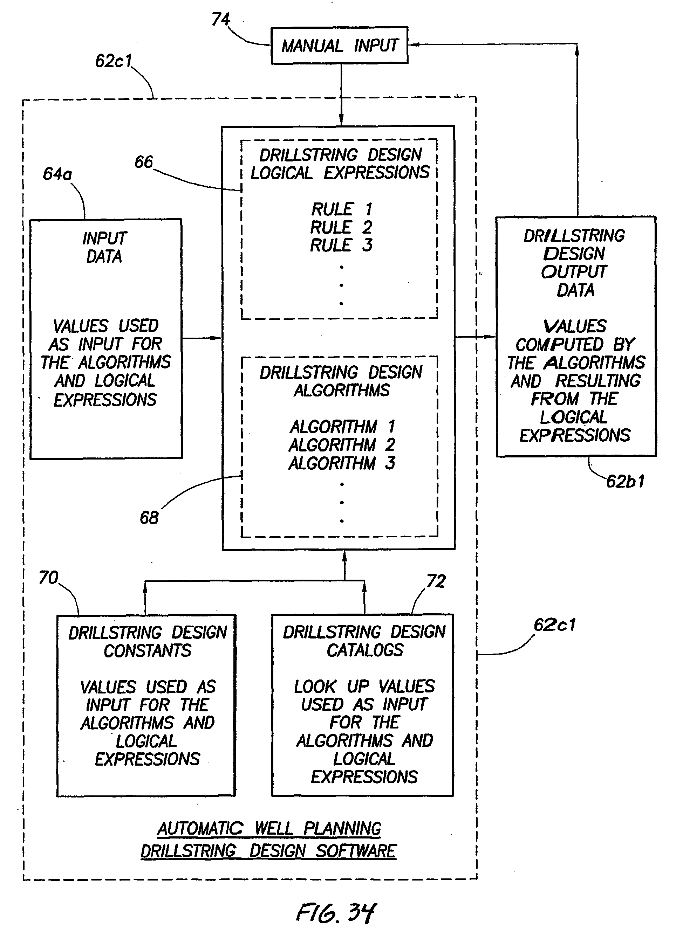

Referring to figure 34, a detailed construction of the AWPDDS 62c1 of figure 33 is illustrated. AWPDDS 62c1 includes a first block which stores the Input Data 64a, a second block 66 which stores a plurality of Drillstring Design Logical Expressions 66; a third block 68 which stores a plurality of Drillstring Design Algorithms 68, a fourth block 70 which stores a plurality of Drillstring Design Constants 70, and a fifth block 72 which stores a plurality of Drillstring Design Catalogs 72. The Drillstring Design Constants 70 include values which are used as input for the Drillstring Design Algorithms 68 and the Drillstring Design Logical Expressions 66. The Drillstring Design Catalogs 72 include look-up values which are used as input by the Drillstring Design Algorithms 68 and the Drillstring Design Logical Expressions 66. The 'Input Data' 64a includes values which are used as input for the Drillstring Design Algorithms 68 and the Drillstring Design Logical Expressions 66. The 'Drillstring Design Output Data' 62b1 includes values which are computed by the Drillstring Design Algorithms 68 and which result from the Drillstring Design Logical Expressions 66. In operation, referring to figures 16 and 17, the Processor 62a of the Computer System 62 of figure 33 executes the AWPDDS 62c1 by executing the Drillstring Design Logical Expressions 66 and the Drillstring Design Algorithms 68 of the AWPDDS 62c1 while, simultaneously, using the 'Input Data' 64a, the Drillstring Design Constants 70, and the values stored in the Drillstring Design Catalogs 72 as 'input data' for the Drillstring Design Logical Expressions 66 and the Drillstring Design Algorithms 68 during that execution. When that execution by the Processor 62a of the Drillstring Design Logical Expressions 66 and the Drillstring Design Algorithms 68 (while using the 'Input Data' 64a, Constants 70, and Catalogs 72) is completed, the 'Drillstring Design Output Data' 62b1 will be generated as a 'result'. The 'Drillstring Design Output Data' 62b1 is recorded or displayed on the Recorder or Display Device 62b of the Computer System 62 of figure 33. In addition, that drillstring Design Output Data' 62b1 can be manually input, by an operator, to the Drillstring Design Logical Expressions block 66 and the Drillstring Design Algorithms block 68 via a 'Manual Input' block 74 shown in figure 34.

Input Data 64a

The following paragraphs set forth the 'Input Data' 64a used by the 'Drillstring Design Logical Expressions' 66 and the 'Drillstring Design Algorithms' 68. Values of the Input Data 64a that are used as input for the Drillstring Design Algorithms 68 and the Drillstring Design Logical Expressions 66 include the following:

    (1) Measured Depth
    (2) True Vertical Depth
    (3) Weight On Bit
    (4) Mud Weight
    (5) Mud Weight Measured Depth
    (6) Inclination

(7) Casing Point Depth

(8) Hole Size

(9) Footage

(10) ROP

(11) Time to Trip

(12) Dog Leg Severity

(13) True Vertical Depth

(14) Pore Pressure without Safety Margin

(15) Bit Size

(16) Upper Wellbore Stability Limit

(17) Lower Wellbore Stability Limit

(18) Openhole Or Cased hole completion

(19) BOP Location

(20) Casing Type Name

(21) Hole Section Name

(22) Conductor

(23) Start Depth

(24) End Depth

(25) On Bottom Hours

(26) Statistical Drilled Footage for the bit

(27) Cumulative UCS

(28) Casing Point

(29) Casing Size

(30) Casing Burst Pressure

(31) Casing Collapse Pressure

(32) Casing Connector

(33) Casing Cost

(34) Casing Grade

(35) Casing Weight per foot

(36) Casing Outer Diameter

(37) Casing Internal Diameter

(38) Air Gap

(39) Casing Top Measure Depth

(40) Water Depth

(41) Top of Tail slurry

(42) Top Of Cement

(43) Mud Volume

(44) Offshore Well

Drillstring Design Constants 70

The 'Drillstring Design Constants' 70 are used by the 'Drillstring Design Logical Expressions' 66 and the 'Drillstring Design Algorithms' 68. The values of the 'Drillstring Design Constants 70 that are used as input data for Drillstring Design Algorithms 68 and the Drillstring Design Logical Expressions 66 include the following:

(1) Design Factor

(2) Stand Length

(3) Safety Margin Kick Tolerance

(4) Minimum well inclination flag

(5) Minimum well dogleg severity flag

(6) Gravitation constant

(7) Mud surface volume

Drillstring Design Catalogs 72

The 'Drillstring Design Catalogs' 72 are used by the 'Drillstring Design Logical Expressions' 66 and the 'Drillstring Design Algorithms' 68. The values of the Catalogs 72 that are used as input data for Drillstring Design Algorithms 68 and the Drillstring Design Logical Expressions 66 include the following:

(1) Drill Pipe Catalog
(2) Drill Collar Catalog File
(3) Heavy Weight Drill Pipe Catalog File
(4) Drill Pipe Catalog File
(5) BHA Catalog File
(6) Required overpull

<u>Drillstring Design Output Data 62b1</u>

The 'Drillstring Design Output Data' 62b1 is generated by the 'Drillstring Design Algorithms' 68. The 'Drillstring Design Output Data' 62b1, that is generated by the 'Drillstring Design Algorithms' 68, includes the following types of output data:

(1) Hole Section Begin Depth
(2) Drill Collar 1 Length
(3) Drill Collar 1 Weight
(4) Drill Collar 1
(5) Drill Collar 1 OD
(6) Drill Collar 1 ID
(7) Drill Collar 2 Length
(8) Drill Collar 2 Weight
(9) Drill Collar 2
(10) Drill Collar 2 OD
(11) Drill Collar 2 ID
(12) Heavy Weight Length
(13) Heavy Weight Weight
(14) Heavy Weight
(15) Heavy Weight OD
(16) Heavy Weight ID
(17) Drill Pipe Length
(18) Drill Pipe Weight
(19) Pipe
(20) Pipe OD
(21) Pipe ID
(22) Drill Pipe Tensile Rating
(23) BHA tools
(24) Duration
(25) Kick Tolerance
(26) Drill Collar 1 Linear Weight
(27) Drill Collar 2 Linear Weight
(28) Heavy Weight Linear Weight
(29) Drill Pipe Linear Weight
(30) DC OD
(31) DC ID
(32) DC Linear Weight
(33) HW OD
(34) HW ID
(35) HW Linear Weight
(36) DP OD
(37) DP ID
(38) DP Linear Weight

<u>Drillstring Design Logical Expressions 66</u>

The following paragraphs set forth the 'Drillstring Design Logical Expressions' 66. The 'Drillstring Design Logical Expressions' 66: (1) receive the 'Input Data 64a', including a 'plurality of Input Data calculation results' that has been generated by the 'Input Data 64a'; and (2) evaluate the 'Input Data calculation results' during the processing of the 'Input Data' 64a. A better understanding of the following 'Drillstring Design Logical Expressions 66' is obtained in the paragraphs to follow when a 'functional description of the operation of the present invention' is presented.

The 'Drillstring Design Logical Expressions 66, which evaluate the processing of the Input Data 64a, include the following:

Check that all drill string components will fit into the wellbore geometry, including after manual alteration of component size.

The first stand consists of a combination of a Positive Displacement Motor (PDM), a Measurement While Drilling (MWD) device, a Logging While Drilling (LWD) tool, and/or drill collars, and is named DC1. The actual configuration is based on the maximum inclination and dogleg severity in the hole section, using the following rules:

(1) A PDM is required when the inclination and dogleg exceed the threshold values.
(2) A MWD is required when the PDM is selected.
(3) A LWD is suggested in the last hole section

Drillstring Design Algorithms 68

The following paragraphs set forth the 'Drillstring Design Algorithms' 68. The 'Drillstring Design Algorithms' 68 receives the output from the 'Drillstring Design Logical Expressions' 66 and processes that 'output from the Drillstring Design Logical Expressions 66' in the following manner. DC is an acronym for 'Drill Collar', HW is an acronym for 'Heavy Weight', and DP is an acronym for 'Drill Pipe'. DC1 is 'Drill Coller 1', and DC2 is 'Drill Collar 2'. - A better understanding of the following 'Drillstring Design Algorithms 68' is obtained in the paragraphs to follow when a 'functional description of the operation of the present invention' is presented. In the following, DF is a 'design factor' and 'WFT' is a 'weight/foot'.

(1) Read variables and constants;
(2) Read catalogs;
(3) Determine Outer Diameter DC1, DC2, HW and DP:

(a) DC1 Outer diameter is obtained from table by using the Hole Size,
(b) DP,

Use Stiffness Ratio to Determine the Outer Diameter.
$DP_{OD}$ = Obtained from table by using the Hole Size (Bit Diameter)
$DP_{OD} <= DC1_{OD}$,

(c) DC2,

Use Stiffness Ratio to Determine the Outer Diameter.
$SR = Z_{BKG}/Z_{SMALL}$
$Z = (\pi/32) ((OD^4 - ID^4) / OD)$
$SR < 3.5$
$DC2_{OD} <= DC1_{OD}$ & $DC2_{OD} >= DP_{OD}$,

(d) HW,

Use Stiffness Ratio to Determine the Outer Diameter.
$SR = Z_{BIG}/Z_{SMALL}$
$Z = (\pi/32) ((OD^4 - ID^4) / OD)$
$SR < 3.5$
$HW_{OD} <= DC2_{OD}$ & $HW_{OD} >= DP_{OD}$,

(e) $DP_{OD} <= HW_{OD}$;

(4) Determine the maximum weight on bit used in the hole section;
(5) Determine Weight of DC1, DC2 and HW, where '$\theta$' is used for the wellbore inclination, and 'DF' is the Design Factor:

$$HW_w = \frac{WOB(DF)}{K_b * COS(\theta)}\left(\frac{5+\theta}{100}\right),$$

$$DC1_w + DC2_w = \frac{WOB(DF)}{K_b * COS(\theta)}\left(\frac{95-\theta}{100}\right),$$

or

$$DC1_w + DC2_w = \frac{WOB(DF)}{K_b * COS(\theta)} - HW_w,$$

$$DC1_W = DC1_L * DC1_{WFT},$$

$$DC2_W = (DC1 + DC2) - DC1;$$

(6) Determine Length of DC1, DC2, HW, DP:

    (a) DC1 - $DC1_L$ = 90 Feet = 1 Stand = 3 Joint,
    (b) DC2 - $DC2_L$ = $DC2_W$ / $DC2_{WFT}$,
    (c) HW - $HW_L$ = $HW_W$/$HW_{WFT}$,
    (d) DP - $DP_L$ = (Bit Section Length) - ($DC1_L$- $DC2_L$ - $HV_L$);

(7) Determine the tensile Risk:

    (a) Take the rating of the top most Drill Pipe (Premium 80%),
    (b) Tensile Risk = (($\Sigma$($W_{Components}$) * $K_b$) + Min. Overpull) / (Pipe Tensile Rating * 0.8);

(8) Calculate cost, based on the duration to drill the section; and
(9) Calculate the kick tolerance volume and assign risk based on the well type.

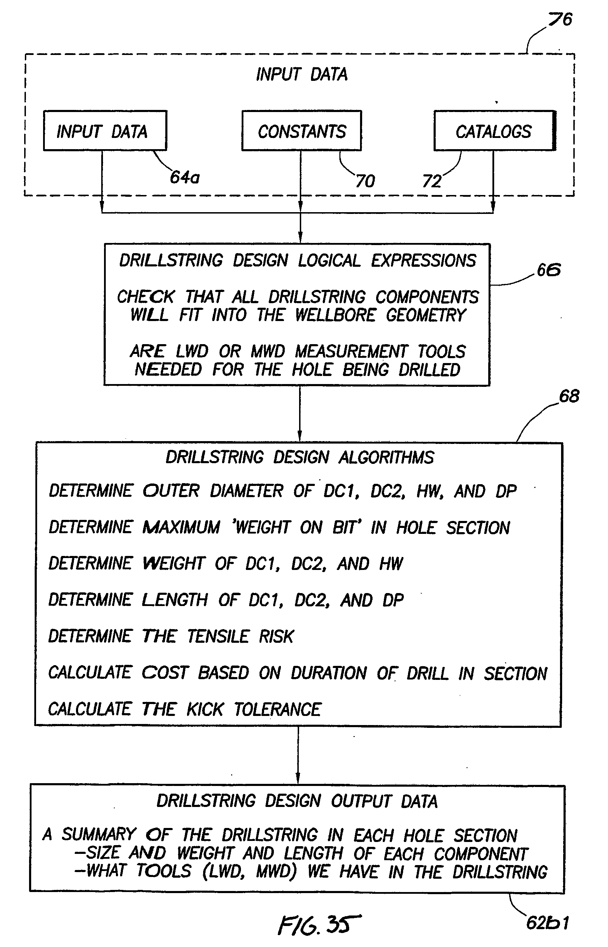

Figure 35 will be used during the following functional description. Lnput Data 76 includes the 'Input Data' 64a, the Constants 70, and the Catalogs 72. Input Data 76 is provided as 'input data' to the Drillstring Design Logical Expressions 66. The Drillstring Design Logical Expressions 66 checks that all drillstring components fit into the wellbore geometry and determines whether LWD or MWD measurement tools are needed for the hole being drilled. Then, the 'Drillstring Design Algorithms 68' will: determine the outer diameter for Drill Collar 1 (DC1), Drill Collar 2 (DC2), the Heavy Weights (HW), and the Drill Pipe (DP); determine the maximum 'Weight on Bit' in the hole section; determine the weight of DC1, DC2, and HW; determine the length of DC1, DC2, HW, and DP; determine the tensile risk; calculate the cost based on during of the drill in the section; and calculate the kick tolerance. Then, the Drillstring Design Output Data 62b1 will be generated and recorded or displayed on the 'recorder or display device' 62b in figure 33, the Drillstring Design Output Data 62b1 including: a summary of the drill string in each hole section, where that summary includes (1) size and weight and length of each components in the drill string, and (2) what tools (e.g., LWD, and MWD) exist in the drill string. A better understanding of the above referenced 'Drillstring Design Algorithms 68' will be obtained in connection with the 'functional description of the operation of the present invention' which is presented in the following paragraphs.

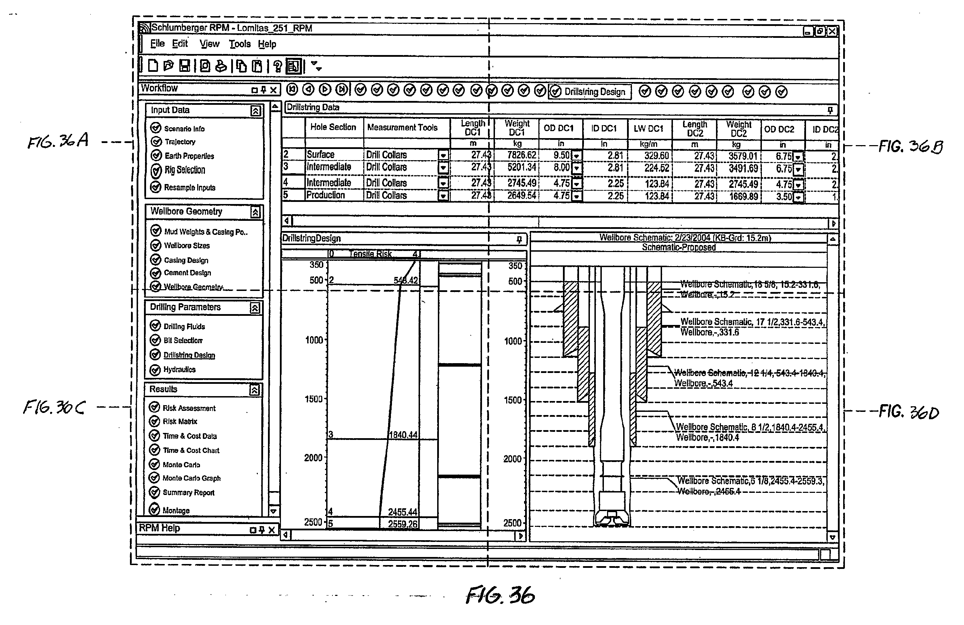

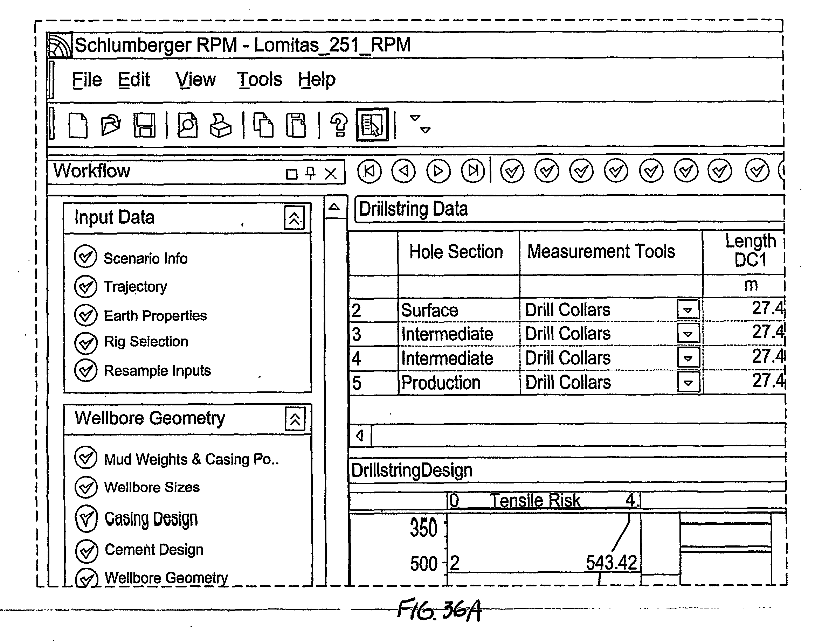

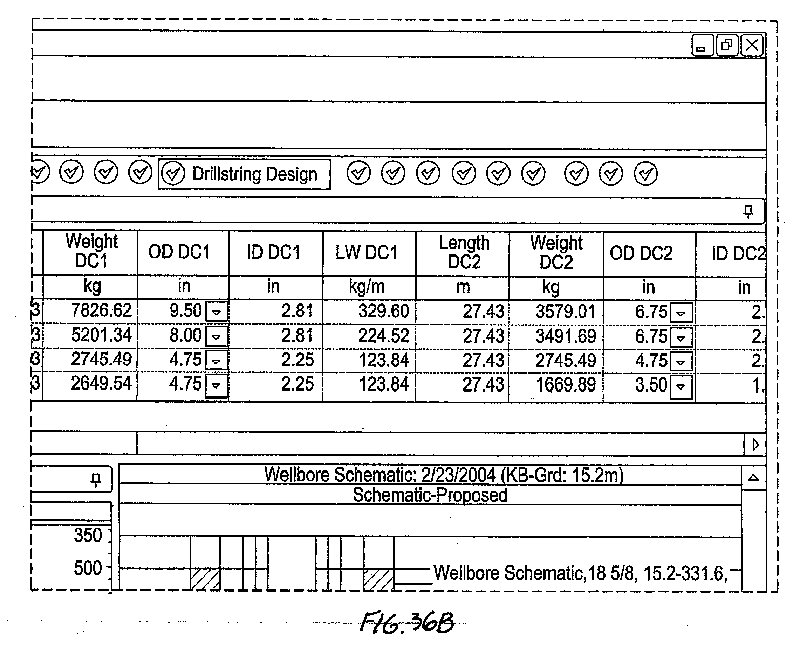

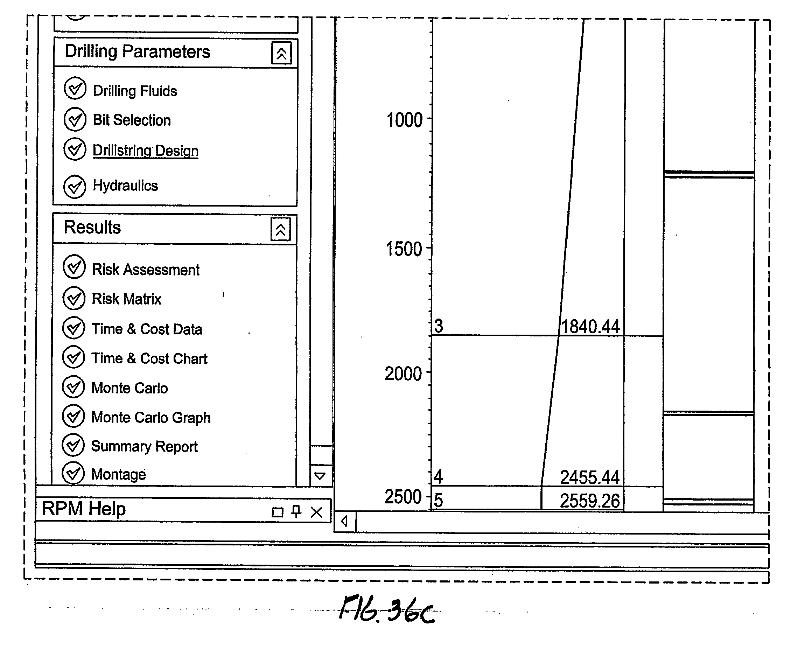

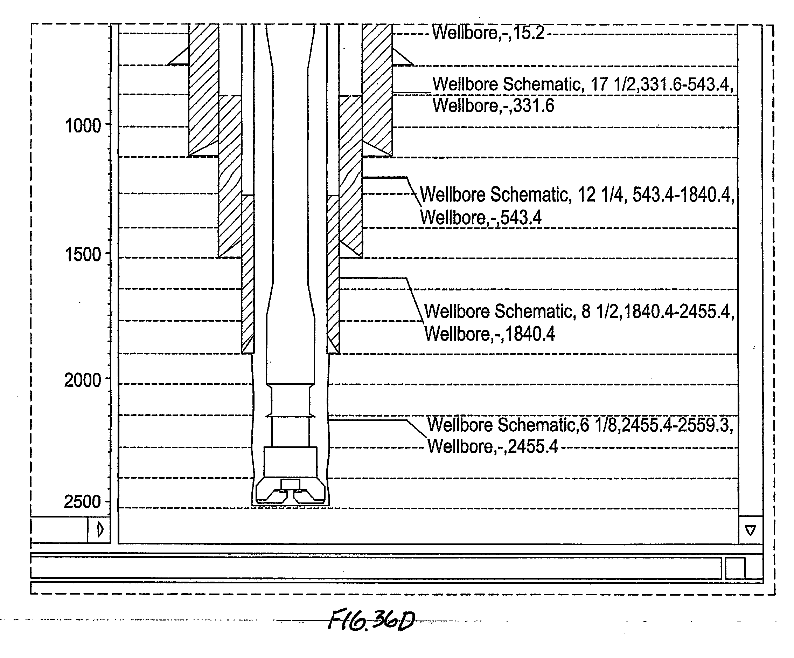

Referring to figure 36, a typical 'Drillstring Design output display' is illustrated which can be recorded or displayed on the recorder or display device 62b of figure 33 and which displays the Drillstring Design Output Data 62b1 in figure 33. A functional description of the operation of the AWPDDS 62c1 will be set forth in the following paragraphs with reference to figures 1 through 19 of the drawings.

In the order of the workflow in figure 42, we know the wellbore 'hole size' and we know where the hole starts and where it finishes. The drill bits have been selected, and, from the drill bit, we know the drilling parameters, such as, how much 'weight on bit' is required to drill that bit, and how many revolutions per minute (RPM) are required to spin that bit. The last engineering task is the hydraulics task. This is the task where, based on the rate of penetration (ROP) for the particular drill bit, it is necessary to determine how much fluid do we need to pump in order to clean the hole free of cuttings. The hydraulics task reflects the 'pressure losses', and, in order to calculate the 'pressure losses', we need to know the structure of the drill string. As a result, drill string design takes place after bit selection and before hydraulics. From the bit selection, we know the sizes of the drill bits that are being used, we know how much 'weight on bit' is required for that particular bit, and we know, from the wellbore geometry, the casing size. All of the drill string components must be smaller than the drill bit size because all of the drill string components will be lowered into a newly drilled wellbore, and there needs to be sufficient room for the cuttings to be transported up to the surface between the wellbore and the Bottom Hole Assembly (BHA) components of the drillstring.

Recall the drillstring and compare the drillstring with an injection needle. Recalling the depths that are being drilled (e.g., 20,000 feet) using a five-inch Drill Pipe (DP), and comparing these dimensions, by analogy, with the injection needle, it would appear that the injection needle should be approximately 20 feet long. The drillstring is a very flexible hollow tube, since it is so much longer than the other dimensions of the drillstring pipe. The drillstring extends from a surface pipe to a bit pipe located downhole. The surface pipe is a common pipe, such as a five (5) inch pipe. If a seventeen and one half (17-1/2) inch wellbore is being drilled, different components of the drillstring are needed to extend the drillstring from a 5 inch diameter surface pipe to a 17-1/2 inch drill bit located downhole. Although most of the drillstring is in tension, we still need to have a 'weight on bit'. Therefore, 'components' are included in the drillstring which have a 'high-density' or a 'high-weight' located near to the drill bit, since those 'components' are in 'compression'. Those drillstring 'components' located near the drill bit need to be 'stiffer' and therefore the outer diameter of those 'components' must have an outer diameter (OD) larger than the OD of the surface pipe (that is, the OD of the surface pipe is smaller than the OD of the 'components' near the drill bit). As a result, 'components' located near the drill bit have a 'high-weight' and therefore a 'high outer diameter' (certainly higher than the surface pipe).

However, at an interface between a big OD pipe located near the drill bit (hereinafter called a 'drill collar' or 'DC') and a much smaller OD drill pipe (DP) located near the surface, a great deal of tension accumulates (called the 'stress bending ratio'). Therefore, a 'transition' is required between the big-OD drill collar located near the drill bit and the 'smaller-OD' drill pipe located near the surface. To provide the 'transition', two different sizes of 'big-OD' drill collars are used, Drill Coller 1 (DC1) and Drill Collar 2 (DC2). Between the Drill Collar 2 (DC2) and the 'smaller OD' drill pipe located near the surface, one more 'additional transition', called a 'heavy-weight' drill pipe or 'HW' drill pipe', is needed. The HW drill pipe is the same in size relative to the 'smaller OD' drill pipe; however, the HW drill pipe has a smaller inner diameter (ID). As a result, the HW drill pipe is heavier than the 'smaller OD' drill pipe helping produce a smooth 'stress transition' between a big OD pipe at the bottom of the wellbore and a smaller OD pipe at the surface of the wellbore. The 'stress bending ratio' (which must be a certain number) can be calculated, and, if that 'stress bending ratio' number is within certain limits, the aforementioned 'stress transition' (between the big OD pipe at the bottom of the wellbore and the smaller OD pipe at the surface of the wellbore) is smooth.

The drill bits must have a 'weight on bit' that is delivered by the weights of the drill collars. The drill collars must fit within the open-hole size, therefore, the maximum size drill collars can be calculated. When the maximum size of the drill collars is known, the number of 'pounds per foot' or 'weight' of the (drill collar) pipes is known. When the amount of weight required to drill is known, the length of the drill collars is back-calculated. In addition, the length of the heavy-weight 'HW' drill pipe that must be run into the wellbore to provide the aforementioned 'weight on bit' can be calculated. The drill pipe (DP) located near the surface is not delivering any 'weight on bit' for the drill bit, however, the drill pipe (DP) is needed to provide a flow-path for fluids produced from downhole.

These drill-collar components, which hang off the drill pipe in the wellbore, are heavy. As a result, there exists a 'tension factor' pulling on the last drill pipe at the surface of the wellbore. Since the drill pipe at the surface of the wellbore can only handle a certain tension, one can calculate the 'applied or actual tension' and compare that 'applied or actual tension' with the 'available tension' or the 'designed tension'. That comparison can be expressed as a 'ratio'. As long as 'available tension' is higher than the 'applied or actual tension', the 'ratio' is larger than '1'. If the 'available tension' is not higher than the 'applied or actual tension', that is, if the 'tension applied' is actually larger than the 'tension which the drill pipe possesses as a material characteristic', the 'ratio' will be smaller than '1' and consequently the pipe will break.

In addition, if we drill other than vertically in an Earth formation, special tools are needed. While drilling, if we need to turn the drillstring a certain 'degree' in a horizontal plane (such as turning the drillstring from a north direction to an east direction), the aforementioned 'degree' of 'turn' of the drill string downhole is called an 'inclination. A motor (called a Positive Displacement Motor, or PDM) is needed to make the 'turn'. When the motor is being used to produce that change of 'inclination', at any point in time, we need to know the 'direction' in which the motor is drilling and that 'direction' must be compared with a 'desired direction'. To measure the 'direction' of the motor, and therefore, the 'direction' of the drill bit, a 'measurement device' is needed, and that 'measurement device' is called an 'MWD' or 'Measurement While Drilling' measurement device. The 'Algorithm' 68 associated with the AWPDDS software' 62c1 knows that, if the drill bit is drilling 'directionally', a PDM motor is needed and an MWD measurement device is also needed.

Another logging tool is used, which is known as 'MWD' or 'Logging While Drilling'. In certain wellbore 'hole sections', it is advantageous to include an 'LWD' logging tool in the tool string. In connection with the 'Algorithm' 68, in the last hole section of a wellbore being drilled (known as the 'production hole section'), a maximum number of measurements is desired. When a maximum number of measurements is needed in the last hole section of the wellbore being drilled, the 'LWD' tool is utilized. Therefore, in connection with the logic of the 'Algorithm' 68, the 'trajectory' of the wellbore being drilled is measured, and the 'hole sections' being drilled are noted. Depending on the 'hole section' in the wellbore where the drill bit is drilling, and depending on the 'trajectory' and the 'inclination' and 'azimuth' change, certain 'drillstring components' are recommended for use, the 'drillstring components' including the Measurement While Drilling (MWD) measurement device, the Logging While Drilling (LWD) tool, and the Positive Displacement Motor (PDM).

Therefore, we know: (1) the 'weight on bit' that the drill bit requires, (2) the size of the bit, (3) the wellbore geometry, (4) the size of the 'drillstrings components', (5) the 'trajectory' of the 'hole section', (6) whether we need certain measurement tools (such as MWD and LWD), (7) the size of those measurement tools, and (8) the size of the drill pipe (since it has a rating characteristic). A Drillstring Design Algorithm 68 computes the size of the smaller drillstring components (located near the surface) in order to provide a smooth stress transition from the drill bit components (located downhole) to the smaller components (located near the surface).

In connection with the Drillstring Design Output Data 62b1 of figure 34 generated by the Drillstring Design Algorithm 68, since we use drill pipe, the Drillstring Design Output Data 62b1 includes: (1) the size of the drill pipe, (2) the length of the drill pipe (including the heavy weight drill pipe), (3) the size and the length of the drill collars, and (4) the identity and the size and the length of any PDM or MWD or LWD tools that are utilized. In connection with all of the aforementioned PDM and MWD and LWD 'components', we also know the weight of these 'components'. Therefore, we can compute the 'total tension' on the drill string, and we compare the computed 'total tension' with 'another tension' which represents a known tension rating that the drill string is capable of handling. The 'Input Data' 64 of figure 34 includes: (1) the trajectory, (2) the wellbore geometry including the casing size and the hole size, (3) the inclination associated with the trajectory, and (4) the drilling parameters associated with the drill bit that was previously selected. The Drillstring Design Catalogs 70 of figure 34 include: the sizes of all the Drillstring components, and the OD and the ID and the linear weight per foot, and the tension characteristics (the metal characteristics) associated with these Drillstring components. The Constants 70 of figure 34 include: Gravitational constants and the length of one drilling stand.

The Logical Expressions 66 of figure 34 indicate whether measurement tools (LWD, MWD) are needed for a particular wellbore to be drilled. In addition, the rules in the Logical Expressions 66 are compared with the actual 'trajectory' of the drill bit in a hole section when drilling a deviated wellbore. In addition, the hole sections in the wellbore being drilled are compared with the requirements of those hole sections. For example, in a production hole section, an LWD tool is suggested for use. In hole sections associated with a directional well, a PDM motor and an LWD tool is suggested for use. In addition, the Logical Expresions 66 indicate that, if these PDM or LWD or MWD components are used, it is necessary to pay for such components. That is, the PDM and LWD and MWD components must be rented. Therefore, in the Logical Expressions 66, a cost/day is assigned; or, alternatively, a cost/foot.

In connection with the Drillstring Design Algorithms 68, a 'smooth transition' in size from the larger size pipe at the bottom near the bit to the smaller size pipe at the surface is provided; and, from the drill bit, we know, for each bit, how much 'weight on bit' that bit requires. That weight is delivered by the DC1, and the DC2 and the HW (heavy weights). Therefore, for each component, we must determine what length we need to have in order to provide that 'weight on bit'. If we are drilling a vertical well, all components are hanging. One factor associated with a vertical wellbore is that the entire weight of the drill string is hanging from all those components. However, if the well is deviated (such as 45 degrees), about 30% of the weight is lost. When drilling inside a certain inclination, longer drillstring components are required in order to provide the same weight. Therefore, the Algorithm 68 corrects for the inclination.

In connection with the 'tensile risk', if the total weight hanging on the drill pipe is known, we also need to know the 'tensile capacity' that the drill pipe has at the surface. As a result, we compare the 'total tension' with the 'maximum allowable (or potential) tension'. If the 'total tension' and the 'maximum allowable (or potential) tension' are expressed as a 'ratio', as the 'ratio' approaches '1', the greater the likelihood that the pipe will fail. Therefore, in connection with 'tensile risk', we compute the 'amount of tension applied', and compare that with the 'maximum allowable tension to be applied'.

In connection with cost, drill pipes and drill collars come with a rig, which is paid for on a per-day basis. If specialized tools (e.g., PDM, MWD, or LWD) are needed, those tools must be rented, and the rental fee paid on a daily basis, so we need to compute how long those tools will be used for each drill section. If we know the time in days, we can calculate how much we need to pay. If we use a PDM motor, for example, a back up tool is needed for stand by. The stand by tool is paid at a lower rate.

In connection with the kick tolerance, the 'kick tolerance' is a volume of gas that can flow into the wellbore without any devastating effects. We can handle gas flowing into the well as long as the gas has a small volume. We can compute the 'volume' of gas that we can still safely handle and that volume is called the 'kick tolerance'. When computing the 'volume', during volumetric calculations, the 'volume' depends on: (a) hole size, and (b) the components in the drill string, such as the OD of the drill collars, the OD of the drill pipe, and the HW and the hole size. The 'kick tolerance' takes into account the pore pressure and the fracture pressure and the inclination and the geometric configuration of the drill string. The Drillstring Design Algorithm 68 receives the pore pressure and the fracture pressure and the inclination and the geometric configuration of the drill string, and computes the 'volume of gas' that we can safely handle. That 'volume of gas' is compared with the 'well type'. Exploration wells and development wells have different tolerances for the 'maximum volume' that such wells can handle.

Therefore, AWPDDS 62c1 receives as 'input data': the trajectory and the wellbore geometry and the drilling parameters, the drilling parameters meaning the 'weight on bit'. 'When AWPDDS 62c1 is executed by the processor 62a of computer system of figure 33, AWPDDS 62c1 generates as 'output data' information pertaining to the drill string 'components' that are needed, a description of those 'components', such as the Outer Diameter (OD), the Inner Diameter (ID), the linear weight, the total weight, and the length of those 'components', the kick tolerance and the tensile risk. In particular, the Drillstring Design Output Data 62b1 includes a 'summary of the drill string in each hole section'; that is, from top to bottom, the 'summary of the drill string in each hole section' includes: the size and the length of the drill pipe, the size and the weight of the heavy weight (HW) drill pipe, the size and the weight of the Drill Collar 2 (DC2), the size and the weight of the Drill Collar 1 (DC1), and the identity of other tools that are needed in the drill string (e.g., do we need to have: a PDM, or a LWD, or an MWD in the drill string). For each 'component' in the drillstring, the following information is reported: the inner diameter, the length/weight, the total weight for each 'component', the kick tolerance (that volume of gas that we can safely handle).

Automatic Well Planning Software System - Workflow Control System software

In figure 37, the 'Automatic Well Planning Workflow Control System software' (AWPWCS) 80c1 will: (1) receive the 'specific workflow 1' of figure 13, or the 'specific workflow 2' of figure 15, or the 'specific workflow 3' of figure 17, (2) execute the 'specific workflow 1, 2, or 3' of figures 13, 15, or 17, and (3) display or record the 'Decision Tool Product' 20b1A of figure 12, or the 'Decision Tool Product' 20b1B of figure 14, or the 'Decision Tool Product' 20b1C of figure 16. The Workflow Control System software 80c1 will also allow a user to change the 'input data' associated with a 'specific Task' and then the Workflow Control System 80c1 will re-execute the selected Tasks in-sequence starting with the 'specific Task'.

The 'Automatic Well Planning Workflow Control System software' (AWPWCS) of the present invention represents a software system that is the first and only product to integrate the various tasks required to explicitly design an oil and gas well for the purposes of estimating the time and costs required along with the associated risks. The process dependencies allow the system to take advantage of the impact of each task's results on any task downstream in the workflow. The workflow can be modified to support the application of different technical solutions that could require a different sequence of tasks. The AWPWCS of the present invention integrates the entire well planning process from the Geoscientist's interpretation environment of mechanical earth properties through the technical well design and operational activity planning resulting in the delivery of time estimates, cost estimates, and assessment, categorization, and summary of risk. The solution that is provided by the 'Automatic Well Planning Workflow Control System software' of the present invention is achieved with an open and flexible workflow control system which is illustrated in figures 21 and 22 (discussed later in this specification). The AWPWCS includes the following entities:

(1) The workflow is defined in the tasks definition file. Each task has the following information: Name, Assembly, Type of Task, Help File Name, and Information if the associated task view should be shown

| | | | | |
|---|---|---|---|---|
| LoadScenario | S1b.RPM.Task.LoadScenario | TaskInfo_InputData | LoadScenario.xml | TRUE |
| Trajectory | S1b.RPM.Task.Trajectory | TaskInfo_InputData | Trajectory.Xml | TRUE |

This file is loaded into a task registry (TaskTranslator) which ensures that the specified order of tasks is consistent (all input attributes have to be defined as a task is loaded) and that all tasks can be loaded into the system. The flexibility of the registry enables to load any task which inherits the task api's.

(2) Parameters and Types are introduced into the system by loading them into a registry (TypeTranslator). The types declaration includes the Name, datatype (both native of derived types are possible), measurement type, display unit, storage unit

| | | | | | |
|---|---|---|---|---|---|
| CasingTop | double[] | Length | m | m | MeasuredDepth |

As a result, it is very simple to introduce tasks that need additional parameters.

(3) Tasks define the data dependencies by defining which parameters are used as Input, Output or as constant attributes. Constant attributes are system wide defined attributes. To specify the attributes, the same names similar to that which is specified in the parameter definition are used.

(4) After loading a new workflow definition into the system, the task dependency map (TaskDependencies) is created. This map is a two-dimensional array where the rows define the attributes while the columns define the tasks. This map enables a very performing check of task dependencies and it can ensure that all necessary input attributes are available as a task is loaded.

(5) Task follow a strict model/view/Control pattern, where the view part is a subclass of TaskViewBase, the Model part is a subclass of TaskInfo, and the Control is subclassed from TaskBase. The system is architectured in such a way that every task can run in batch and the TaskManager is the control for performing a workflow.

(6) During the workflow, each task execution includes several steps. Each step returns a 'state' to the system to keep the user informed. The states are:

```
public enum TaskState
{
/// The Task has not run yet
    NotStarted,
    BeforeInput,
    InputFailed,
/// Input finished
    InputSucceeded
/// Input validation has failed
    InputCheckFailed,
/// Input validation has succeeded
    InputCheckSucceeded,
/// The Task is running
    Running,
/// The Task is running
    Recompute,
/// The Task execution was aborted
    ExecutionFailed,
/// The Task has successfully completed execution
    ExecutionSucceeded,
/// Output validation has failed
    OutputCheckFailed,
/// Output validation has succeeded
    OutputCheckSucceeded,
Finished
```

If the user decides to run 'n' steps at once, the system runs 'n-1' tasks in batch (no user interface) and only shows the results of the last task in its view. In the event that one of the 'n-1' tasks shows a severe problem, the system loads the view of the affected tasks and resumes at this stage until the user takes corrective measures. Referring to figure 37, a computer system 80 is illustrated. The computer system 80 is similar to the computer systems 18, 42, and 62 illustrated in figures 9A, 12, and 16, respectively. In figure 37, the computer system 80 includes a processor 80a, a recorder or display device 80b, and a memory or program storage device 80c. The computer system 80 is adapted to receive Input Data 84a from a memory or other storage device 84 which stores that Input Data 84a. The recorder or display device 80b is adapted to record or display a 'task view base' 100, the 'task view base' being discussed later in this specification. The memory or program storage device 80c is adapted to store an 'Automatic Well Planning Workflow Control System software' 80c1 in accordance with the present invention. The AWPWCS 80c1 was initially stored on 'another storage device', such as a 'hard disk' or CD-Rom, the AWPWCS 80c1 being loaded from that 'hard disk' (or other storage device) into the 'memory or program storage device' 80c in figure 37. The Input Data 84a can be the Input Data 20a of figure 26A, or it can be the Input Data 44a of figure 33, or it can be the Input Data 64a of figure 33. The Computer System 80 of figure 37 may be a personal computer (PC). The Memory or Program Storage Device 80c is a computer readable medium or a program storage device which is readable by a machine, such as the processor 80a. The processor 80a may be, for example, a microprocessor, a microcontroller, or a mainframe or workstation processor. The Memory or Program Storage Device 80c, which stores the 'Automatic Well Planning Workflow Control System Software' 80c1, may be, for example, a hard disk, ROM, CD-ROM, DRAM, or other RAM, flash memory, magnetic storage, optical storage, registers, or other volatile and/or non-volatile memory.

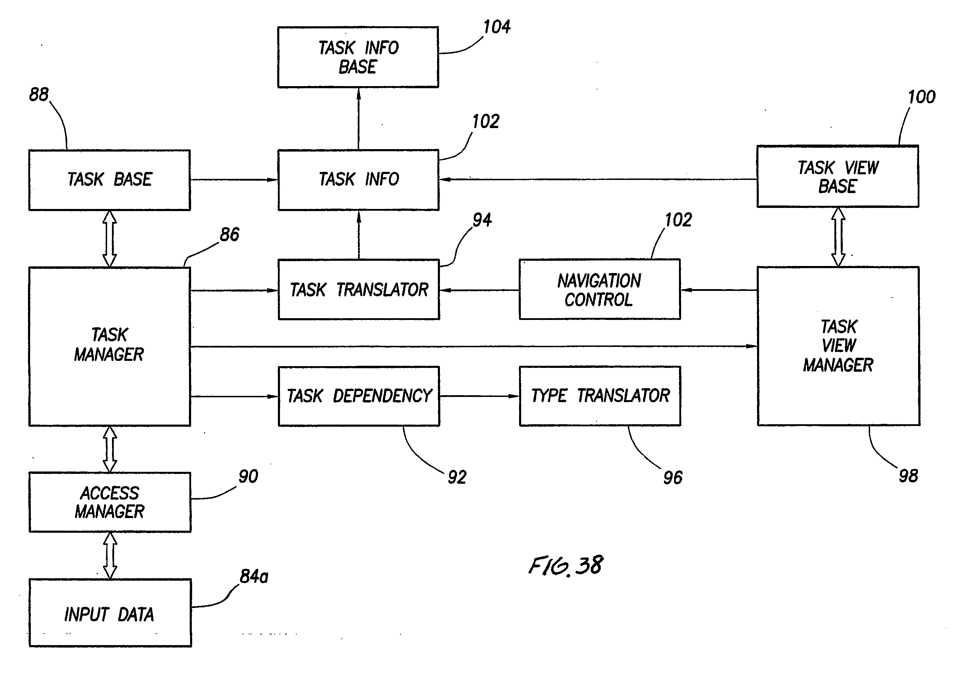

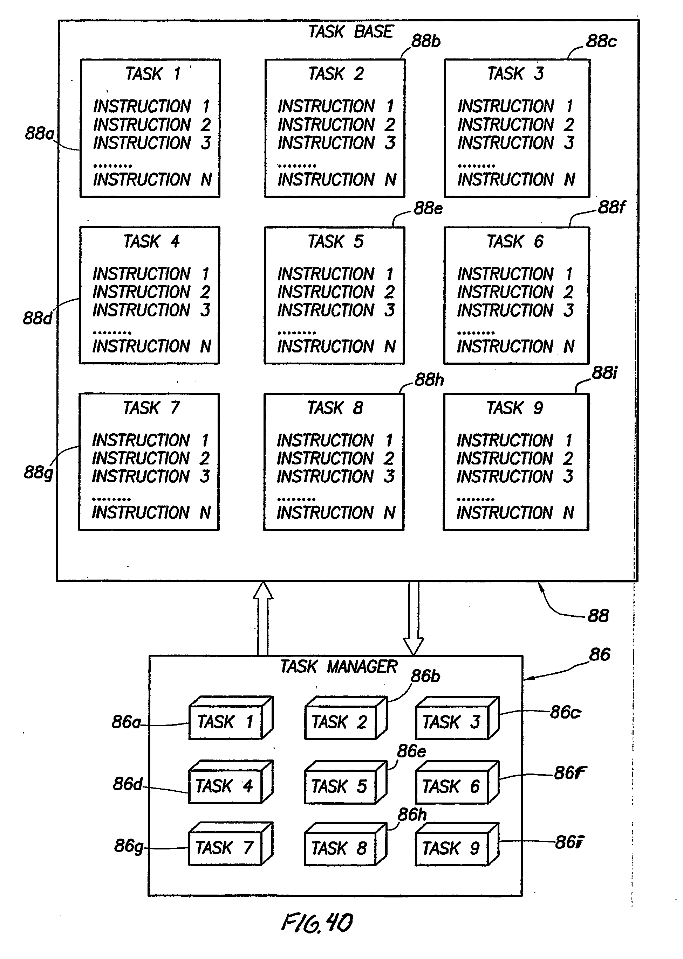

Referring to figure 38, a detailed construction of the AWPWCS 80c1 of the present invention (hereinafter called is illustrated. In figure 38, the AWPWCS 80c1 includes a 'Task Manager' 86, a 'Task base' 88, and an 'Access Manager' 90. The Task Manager 86 is the 'brain' of the AWPWCS 80c1, the Task Manager 86 performing the function of a processor, similar to the processor 80a in figure 37. The Task Manager 86 stores a plurality of Tasks associated with the Workflow Control System 80c1; however, the Task Base 88 stores a plurality of 'instruction sets' associated, respectively, with the plurality of the Tasks in the Task Manager 86, one 'instruction set' in the 'Task Base 88 being reserved for each Task in the Task Manager 86. This concept is illustrated in figure 40, to be discussed later. The Access Manager 90 stores all of the data that is needed by each of the plurality of 'instruction sets' in the Task Base 88 associated with each of the Tasks in the Task Manager 86. Since the Task Manager 86 stores the plurality of Tasks, when a user selects a 'plurality of Tasks' via the Task Manager, the Task Manager 86 will receive and store the 'selected plurality of Tasks' which were selected by the user.

The AWPWCSS 80c1 also includes a 'Task Dependency' block 92, a 'Task Translator' block 94, and a 'Type Translator' block 96. As noted earlier, when the user selects a 'plurality of Tasks' via the Task Manager 86, the 'selected plurality of Tasks' will be stored in the Task Manager 86. The Task Manager 86 will then access the Task Base 88 to locate and, execute the plurality of 'instruction sets' stored in the Task Base 88 which are associated with the 'selected plurality of Tasks'. However, the Task Dependency block 92 will ensure that the plurality of 'instruction sets' located in the Task Base 88 by the Task Manager 86 are located and executed in the 'proper order', where the term 'proper order' is defined by the 'order' of the 'plurality of Tasks' that were previously selected by the user. When the plurality of 'instruction sets' are located in the Task Base 88 by the Task Manager 86, and when the 'proper order' of the plurality of 'instruction sets' in the Task Base 88 is established by the Task Dependency block 92, the Task Translator block 94 and the Type Translator block 96 will ensure that each of the plurality of 'instruction sets' located in the Task Base 88, associated with the selected plurality of Tasks in the Task Manager 86 (as selected by the user), will receive its corresponding 'set of input data' from the Access Manager 90, and that corresponding 'set of input data' will be received by each of the 'instruction sets' in the Task Base 88 in the 'proper form'.

AWPWCS 80c1 also includes a "Task View Manager' 98, a 'Task View Base' 100, and a 'Navigation Control' 102. Therefore, when the plurality of 'instruction sets' are located in the Task Base 88 and the 'proper order' of the 'instruction sets' are established by the Task Dependency block 92, Task Manager 86 executes the plurality of 'instruction sets' in the 'proper order' (as selected by the user) and, during the execution of the plurality of 'instruction sets' by the Task Manager 86, the Task Translator 94 and the Type Translator 96 ensure that each of the plurality of 'instruction sets' will, during its execution, receive its 'set of input data' from Access Manager 90 in the 'proper form'. During and after execution, by Task Manager 86, of the plurality of 'instruction sets' in the Task Base 88, a 'set of results' are generated by Task Manager 86, the 'set of results' being received by Task View Manager 98. Task View Manager 98 converts a 'first unit of measure' associated with the 'set of results' generated by Task Manager 86 into a 'second unit of measure' associated with the 'set of results'. The 'second unit of measure' associated with the 'set of results' is then transferred from Task View Manager 98 to the Task View Base 100, where the Task View Base 100 will record or display the 'set of results' in the 'second unit of measure' on the recorder or display device 80b of the computer system 80 of figure 37. In the above description, the plurality of Tasks in the Task Base 88 were executed by Task Manager 86 in the 'proper order', in accordance with the function of the Task Dependency block 92; and, during that execution, each of the plurality of Tasks received its 'set of input data' in the 'proper form' in accordance with the functions of Task Translator 94 and Type Translator 96. Assume that the user wants to change 'some of the sets of input data' associated with some of the plurality of Tasks (thereby creating 'changed sets of input data'), and then re-execute (by the Task Manager 86) the plurality of 'instruction sets' (stored in the Task Base 88) corresponding to the plurality of Tasks (in Task Manager 86) while using the 'changed sets of input data' during the re-execution of the 'instruction sets' thereby creating a 'new set of results'. The Navigation Control 102 allows the user to change 'some of the sets of input data' and then re-execute the plurality of 'instruction sets' to thereby create the 'new set of results'. In fact, the user can change any of the 'sets of input data' associated with any of the plurality of Tasks, and re-execute the plurality of 'instruction sets' associated with the plurality of Tasks to create the 'new set of results'. This concept is discussed below with reference to figures 23-28.

AWPWCS 80c1 also includes a 'Task Info' block 102 and a 'Task Info Base' block 104. The Task Info Base block 104 is used only when setting-up the 'workflow' comprised of the plurality of Tasks selected by the user. When the 'workflow' is set-up, the Task Info Base block 104 is no longer used. The Task Info block 102 will generate a 'state', associated with 'each Task' of the plurality of Tasks, after 'each Task' has been executed by the Task Manager 86. A plurality of the 'states', associated with the execution of 'each Task' which are generated by the Task Info block 102, are set forth above and are duplicated below, as follows:

```
    public enum TaskState
     {
    /// The Task has not run yet
        NotStarted,
        BeforeInput,
        InputFailed,
```

```
/// Input finished
    InputSucceeded
/// Input validation has failed
    InputCheckFailed,
/// Input validation has succeeded
    InputCheckSucceeded,
/// The Task is running
    Running,
/// The Task is running
    Recompute,
/// The Task execution was aborted
    ExecutionFailed,
/// The Task has successfully completed execution
    ExecutionSucceeded,
/// Output validation has failed
    OutputCheckFailed,
/// Output validation has succeeded
    OutputCheckSucceeded,
    Finished
```

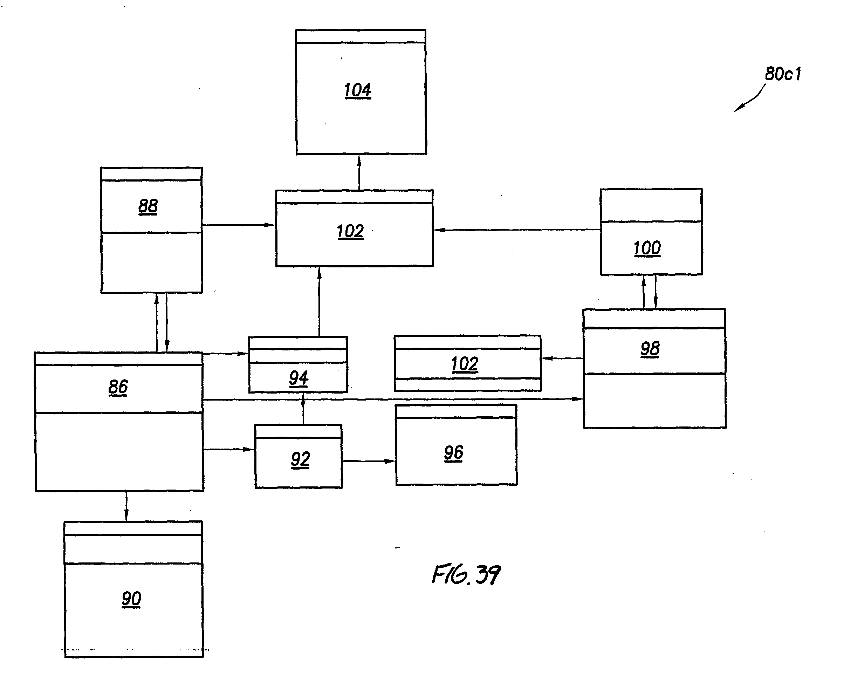

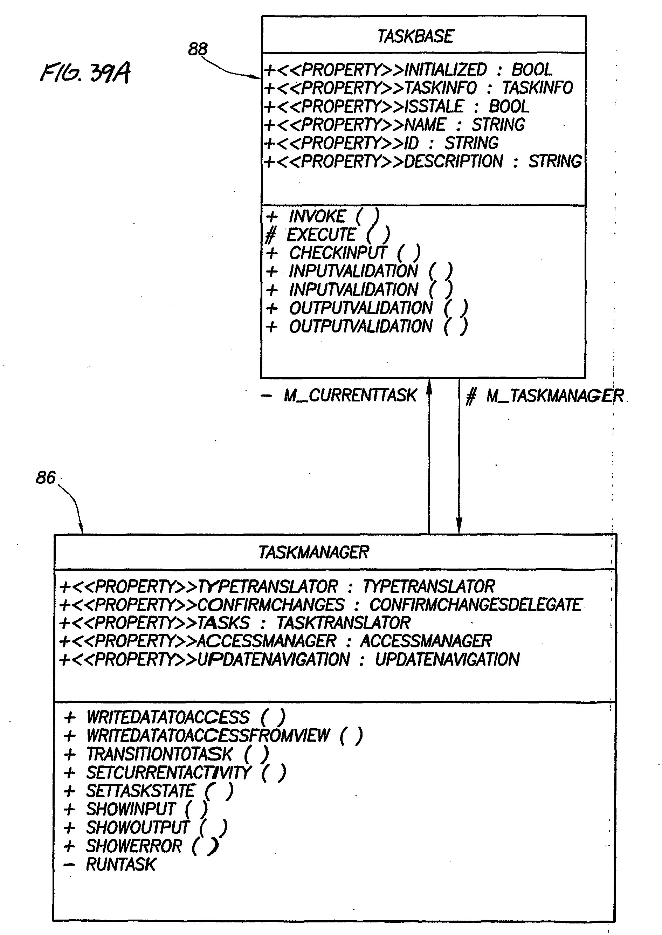

Referring to figures 39A through 39F, a more detailed construction of each of the blocks which comprise the AWPWCS 80c1 of figure 38 is illustrated. Referring to figure 40, a more detailed construction of the Task Manager 86 and the Task Base 88 of figures 21 and 22 is illustrated. In figure 40, a 'concept' was presented earlier, as follows: the Task Manager 86 stores a plurality of Tasks associated with the AWPWCS 80c1; however, the Task Base 88 stores a plurality of 'instruction sets' associated, respectively, with the plurality of the Tasks in the Task Manager 86, one 'instruction set' in the Task Base 88 being reserved for each Task in the Task Manager 86. Figure 40 illustrates that 'concept'. In figure 40, the Task Base 88 includes a plurality of 'instruction sets' including: a 'task 1 instruction set' 88a, a 'task 2 instruction set' 88b, a 'task 3 instruction set' 88c, a 'task 4 instruction set' 88d, a 'task 5 instruction set' 88e, a 'task 6 instruction set' 88f, a 'task 7 instruction set' 88g, a 'task 8 instruction set' 88h, and a 'task 9 instruction set' 88i. The Task Manager 86 includes: a 'task 1' 86a corresponding to the 'task 1 instruction set 88a', a 'task 2' 86b corresponding to the 'task 2 instruction set 88b', a 'task 3' 86c corresponding to the 'task 1 instruction set 88c', a 'task 4' 86d corresponding to the 'task 1 instruction set 88d', a 'task 5' 86e corresponding to the 'task 1 instruction set 88e', a 'task 6' 86f corresponding to the 'task 1 instruction set 88f', a 'task 7' 86g corresponding to the 'task 1 instruction set 88g', a 'task 8' 86h corresponding to the 'task 1 instruction set 8 8h', and a 'task 9' 86i corresponding to the 'task 1 instruction set 88i'. When the Task Manager 86 executes 'task 1' 86a in the Task Manager, the Task Manager 86 is really executing the 'task 1 instruction set 88a' in the Task Base 88; similarly, when the Task Manager 86 executes 'task 2' 86b in the Task Manager, the Task Manager 86 is really executing the 'task 2 instruction set 88b' in the Task Base 88; and when the Task Manager 86 executes 'task 3' 86c in the Task Manager, the Task Manager 86 is really executing the 'task 3 instruction set 88c' in the Task Base 88; and when the Task Manager 86 executes 'task 4' 86d in the Task Manager, the Task Manager 86 is really executing the 'task 4 instruction set 88d' in the Task Base 88; and when the Task Manager 86 executes 'task 5' 86e in the Task Manager, the Task Manager 86 is really executing the 'task 5 instruction set 88e' in the Task Base 88; and when the Task Manager 86 executes 'task 6' 86f in the Task Manager, the Task Manager 86 is really executing the 'task 6 instruction set 88f' in the Task Base 88; and when the Task Manager 86 executes 'task 7' 86g in the Task Manager, the Task Manager 86 is really executing the 'task 7 instruction set 88g' in the Task Base 88; and when the Task Manager 86 executes 'task 8' 86h in the Task Manager, the Task Manager 86 is really executing the 'task 8 instruction set 88h' in the Task Base 88, and when the Task Manager 86 executes 'task 9' 86i in the Task Manager, the Task Manager 86 is really executing the 'task 9 instruction set 88i' in the Task Base 88.

Referring to figures 41 and 42, a workflow is selected in the manner discussed above with reference to figures 5 and 10 through 17 of the drawings. In figure 12, for example, recall that a 'user objective 1' 24a is provided by a user/operator, that 'user objective 1' 24a interrogating a workflow storage 40. An attempt is made to match the 'user objective 1' 24a with a plurality of user objectives set forth in a first column of a table in the workflow storage 40. When a match is made between the 'user objective 1' 24a and a 'first column user objective' in the table of the workflow storage 40, a 'second column specific workflow', that is set forth in the second column of the table of the workflow storage 40 which corresponds to the 'first column user objective', is generated from the workflow storage 40. In figure 12, in response to the 'second column specific workflow', the workflow harness 44 will define a 'series of Tasks' which corresponds to that 'second column specific workflow' that has been generated by the workflow storage 40. In figure 13, the 'series of Tasks', which has been defined by the workflow harness 44, comprises: Task 7, Task 4, Task 5, Task 2, Task 3, Task 16, Task 13, Task 14, Task 11, and Task 12. Therefore, in figures 41 and 42, assume that the user selects Task 1, Task 4, Task 5, and Task 6 in the Task Manager 86 of figure 40; in that case, the Task Manager 86 defines the workflow shown in figure 41, as follows: 'Task 1' followed by 'Task 4' followed by 'Task 5' followed 'Task 6'. Similarly, assume that the user selects Task 1, Task 2, and Task 3 in the Task Manager 86 of figure 40; in that case, the Task Manager 86 defines the workflow shown in figure 42, as follows: 'Task 1' followed by 'Task 2' followed by 'Task 3'.

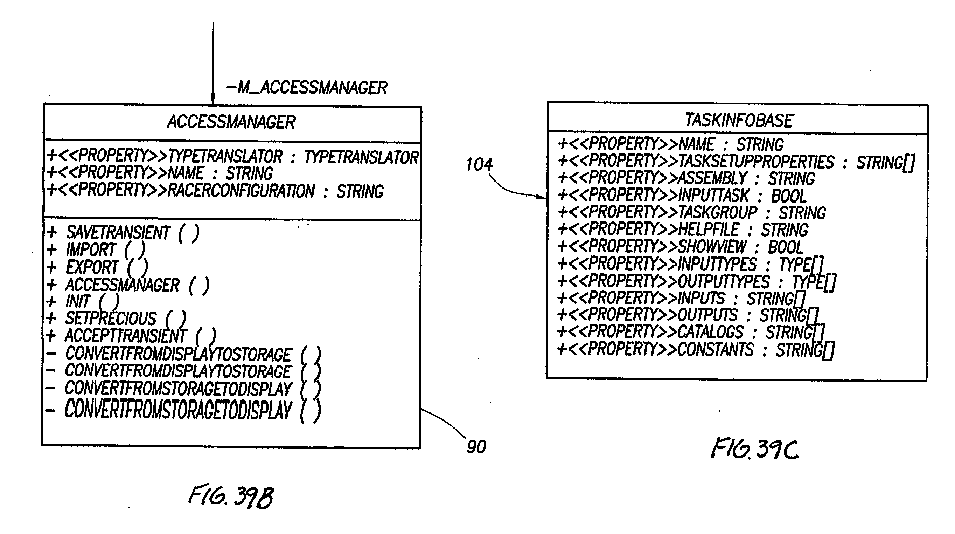

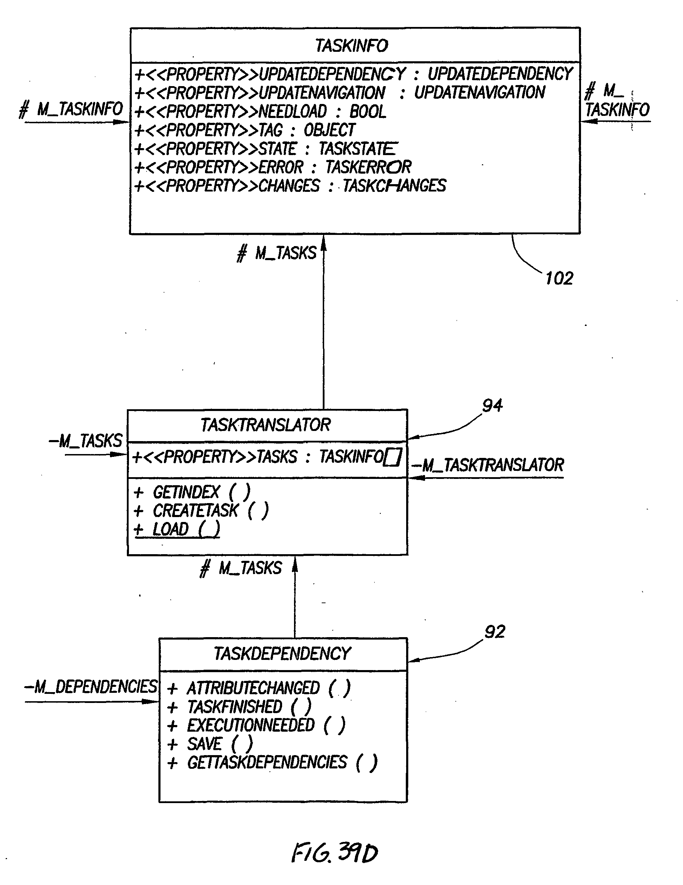

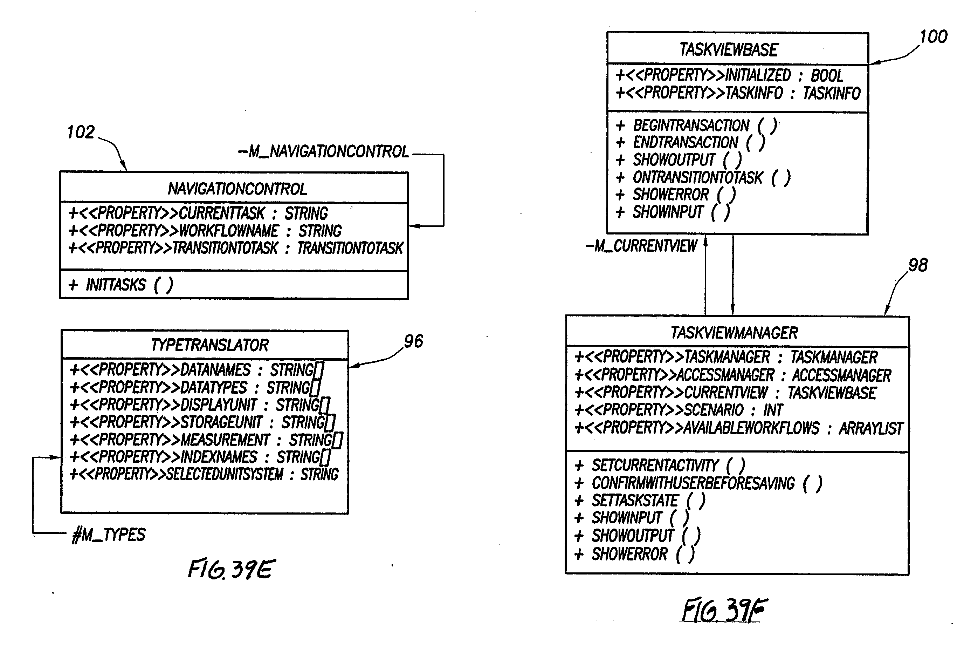

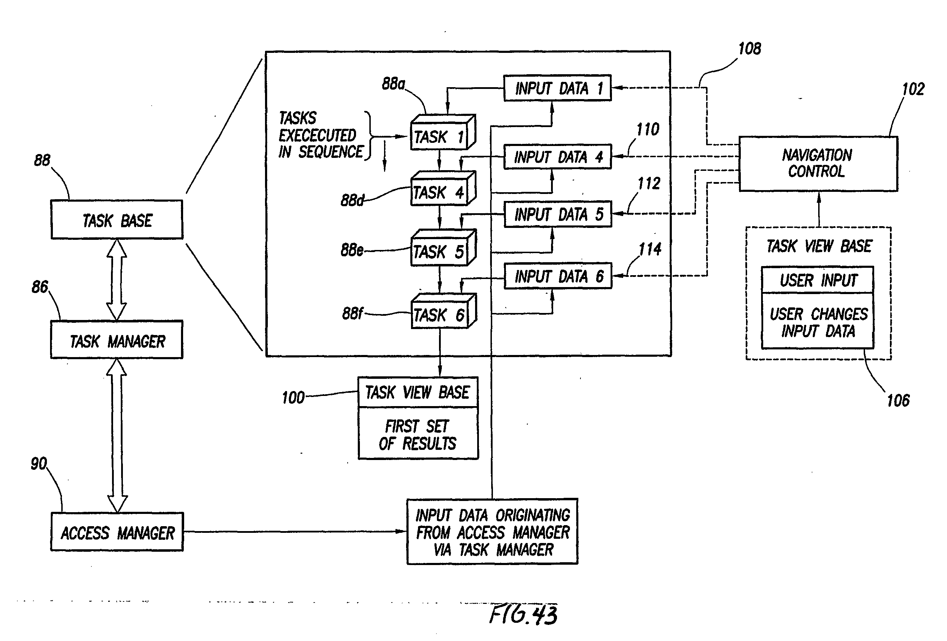

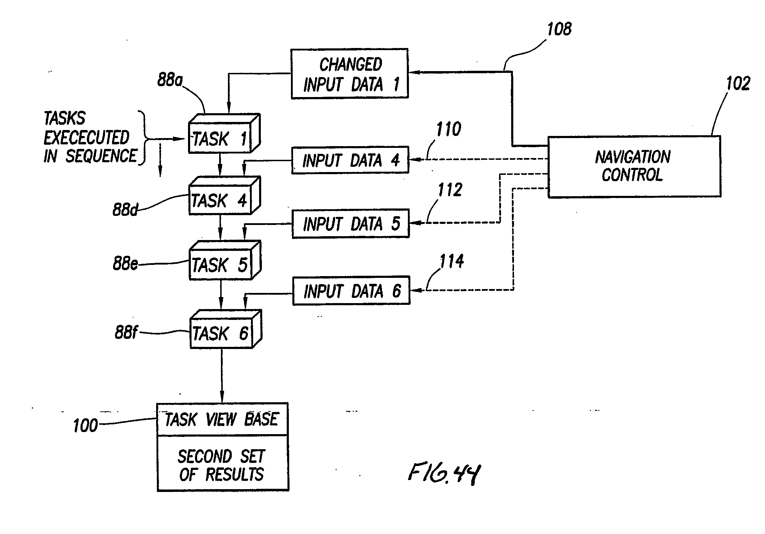

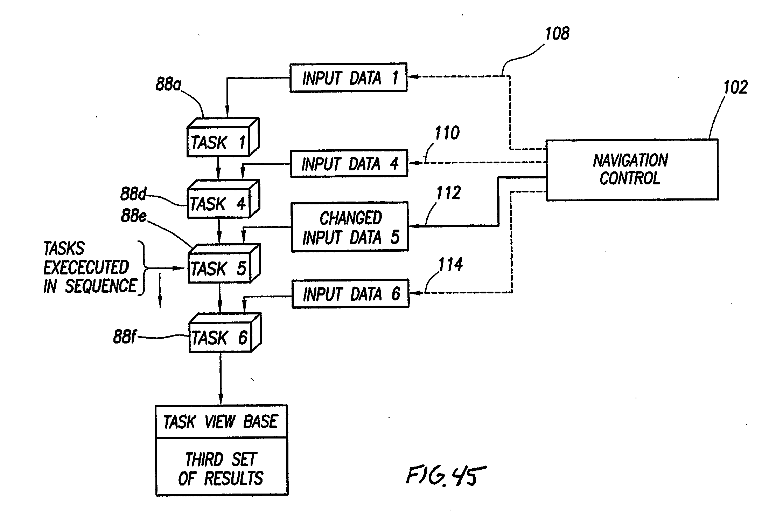

Referring to figure 43A, another construction of the AWPWCS 80c1 of figures 38 and 39 of the present invention is illustrated. In figure 43A, assuming from figure 41 that the user selects: 'task 1', 'task 4', 'task 5', and 'task 6', the Task Manager 86 defines the workflow shown in figure 41: 'task 1' 86a followed by 'task 4' 86d followed by 'task 5' 86e followed by 'task 6' 86f. In that case, in figure 40, in accordance with the workflow shown in figure 41, Task Manager 86 executes the following 'instruction sets' stored in the Task Base 88 in the following order: 'task 1 instruction set 88a' followed by 'task 4 instruction set 88d' followed by 'task 5 instruction set 88e' followed by 'task 6 instruction set 88f. In figure 43A, Task Manager 86 executes, in sequence, the 'task 1 instruction set' 88a, the 'task 4 instruction set' 88d, the 'task 5 instruction set' 88e, and the 'task 6 instruction set' 88f stored in the Task Base 88 as shown in figure 26A. The Access Manager 90 (via the task translator 94 and the type translator 96 of figure 38) provides the required input data to each of the tasks, as follows: 'Input Data 1' is provided to 'task 1 instruction set' 88a, 'Input Data 4' is provided to 'task 4 instruction set' 88d, 'Input Data 5' is provided to 'task 5 instruction set' 88e, and 'Input Data 6' is provided to 'task 6 instruction set' 88f. When the tasks ('task 1' 88a followed by 'task 4' 88d followed by 'task 5' 88e followed by 'task 6' 88f) are executed in sequence as shown in figure 26A, the Task View Base 100 will record or display (on the recorder or display device 80b in figure 37) a 'First Set of Results' as shown in figure 43A. However, the user can change any of the above sets of input data by interfacing with Task View Base 100 to use the Navigation Control 102; in that case, Task Manager 86 will re-execute 'only those tasks which were affected by the changed input data' (i.e., 'task 1' 88a followed by 'task 4' 88d followed by 'task 5' 88e followed by 'task 6' 88f in figure 44; and 'task 5' 88e followed by 'task 6' 88f in figure 45) and use the 'changed input data' during the re-execution of 'only those tasks which were affected by the changed input data'. In figure 43A, for example, the user can interface with the Task View Base 100 to change the input data to each task (block 106 in figure 43A) thereby producing 'changed input data'. That is, the user can change 'Input Data 1' for 'Task 1' 88a or 'Input Data 4' for 'Task 4' 88d or 'Input Data 5' for 'Task 5' 88e or 'Input Data 6' for 'Task 6' 88f. Navigation Control 102 will receive that 'changed input data' from block 106. In figure 43A, however, lines 108, 110, 112, and 114 which extend from the Navigation Control 102 to the 'Input Data' for each 'Task' are 'dotted lines' indicating that Navigation Control 102 has not yet changed the input data for any task.

Referring to figure 44, recall that the user can interface with the Task View Base 100 to change the input data to each task (block 106 in figure 43A) thereby producing 'changed input data'; that is, the user can change 'Input Data 1' for 'Task 1' 88a, or 'Input Data 4' for 'Task 4' 88d, or 'Input Data 5' for 'Task 5' 88e, or 'Input Data 6' for 'Task 6' 88f; and, responsive thereto, the Navigation Control 102 will receive that 'changed input data' from block 106. In figure 44, assume that the user (via block 106 in figure 43A) wants to change 'Input Data' 1 for 'Task 1' 88a. In that case, the user will interface with the Task View Base 100 to change 'Input Data 1' for 'Task 1' 88a; and, responsive thereto, the Navigation Control 102 will energize line 108 and change the 'Input Data 1' for 'Task 1' 88a. In that case, in figure 44, a 'Changed Input Data 1' will represent the input data for the 'task 1 instruction set 88a' ('Task 1' 88a) in the Task Base 88. At this point, since tasks 1, 4, 5, and 6 are all affected by the changed input data, the Task Manager 86 will re-execute each of the designated tasks in the Task Base 88 in sequence [i.e., the Task Manager 86 will re-execute again, in sequence, the 'task 1 instruction set' 88a ('Task 1' 88a) followed by the 'task 4 instruction set' 88d ('Task 4' 88d) followed by the 'task 5 instructions set' 88e ('Task 5' 88e) followed by 'the task 6 instruction set' 88f ('Task 6' 88f)] while using a 'new set of input data' as follows: 'Changed Input Data 1' and 'Input Data 4' and 'Input Data 5' and 'Input Data 6'. When those tasks in the Task Base 88 (that have been affected by the changed input data) have been re-executed again, in sequence, in response to the 'new set of input data', the Task View Base 100 will record or display (on the recorder or display device 80b in figure 37) a 'Second Set of Results', as shown in figure 44.

Referring to figure 45, assume that the user (via block 106 in figure 43A) wants to interface with the Task View Base 100 to change 'Input Data' 5 for 'Task 5' 88e. In that case, the Navigation Control 102 will energize line 112 in figure 45 and change the 'Input Data 5' for 'Task 5' 88e to a 'Changed Input Data 5'. As a result, in figure 45, a 'Changed Input Data 5' represents the input data for the 'task 5 instruction set 88e' ('Task 5' 88e) in the Task Base 88. At this point, Task Manager 86 will re-execute 'only those tasks in the Task Base 88 which were affected by the changed input data'. Since 'Task 5' and 'Task 6' are the 'only tasks that are affected by the changed input data', in figure 45, the Task Manager 86 will re-execute again, in sequence, the 'task 5 instruction set' 88e ('Task 5' 88e) followed by 'the task 6 instruction set' 88f ('Task 6' 88f); in addition, Task Manager 86 will use a 'new set of input data' during the re-execution of 'Task 5' 88e and 'Task 6' 88f, as follows: 'Changed Input Data 5' and 'Input Data 6'. When the designated tasks in the Task Base 88, which were affected by the changed input data, have been re-executed again, in sequence, in response to the 'new set of input data' (which was changed by the Navigation Control 102), the Task View Base 100 will record or display (on the recorder or display device 80b in figure 37) a 'Third Set of Results', as shown in figure 45.

A functional description of the operation of the 'Automatic Well Planning Software System' of the present invention, including the 'Automatic Well Planning Workflow Control System software' (AWPWCSS) 80c1 of the present invention, will be set forth in the following paragraphs with reference to figures 18 through 45 of the drawings, with emphasis on figures 37 through 45. A user begins by selecting one or more tasks via the Task Manager 86 of the AWPWCSS of figure 38 which is stored in memory 80c of the computer system 80 shown in figure 37, such as (by way of example) 'Task 1' 86a in figure 40 or 'Task 2' 86b or 'Task 3' 86c or 'Task 4' 86d or 'Task 5' 86e or 'Task 6' 86f or 'Task 7' 86g or 'Task 8' 86h or 'Task 9' 86i. If the user selects (via Task Manager 86) the 'Task 1' followed by 'Task 4' followed by 'Task 5' followed by 'Task 6' in figure 40, then, a worltflow consisting of 'Task 1' followed by 'Task 4' followed by 'Task 5' followed by 'Task 6' will be executed by Task Manager 86 of the processor 80a of the computer system 80 in figure 37 (see figures 41 and 42 for an example of tasks selected by the user and workflows which could be executed by Task Manager 86). If a workflow consisting of 'Task 1' followed by 'Task 4' followed by 'Task 5' followed by 'Task 6' is executed by Task Manager 86, in figure 40, a 'task 1 instruction set' 88a stored in the Task Base 8.8 will first be executed by Task Manager 86, then a 'task 4 instruction set' 88d stored in the Task Base 88 will then be executed by Task Manager 86, then a 'task 5 instruction set' 88e stored in the Task Base 88 will then be executed by Task Manager 86, then a 'task 6 instruction set' 88f stored in to Task Base 88 will then be executed by Task Manager 86. In figure 38, the Task Dependency 92 (of the AWPWCSS 80c1 stored in memory 80c of the computer system 80 in figure 37) will ensure that the tasks are executed by Task Manager 86 in the 'proper order', that is, Task Dependency 92 will ensure that the 'Task 1 instruction set' 88a is executed first, the 'Task 4 instruction set' 88d is executed second, the 'Task 5 instruction set' 88e is executed third, and then the 'Task 6 instruction set' 88f is executed last by Task Manager 86 of the processor 80a of the computer system 80 in figure 37. In figure 38, the Task Translator 94 and the Type Translator 96 will jointly ensure that each task receives its required 'input data' in the 'proper form'; that is, in figure 43A, the Task Translator 94 and the Type Translator 96 jointly ensure that 'Task 1' 88a receives its 'Input Data 1' from line 108 in 'proper form', and 'Task 4' 88d receives its 'Input Data 4' from line 110 in 'proper form', and 'Task 5' 88e receives its 'Input Data 5' from line 112 in 'proper form', and 'Task 6' 88f receives its 'Input Data 6' from line 114 in 'proper form'. In figure 43A, when Task Manager 86 and processor 80a execute 'Task 1' 88a, a 'first state' is generated by the 'Task Info' block 102 in figure 38; and when Task Manager 86 and processor 80a execute 'Task 4' 88d, a 'second state' is generated by the 'Task Info' block 102 in figure 38; and when Task Manager 86 and processor 80a execute 'Task 5' 88e, a 'third state' is generated by the 'Task Info' block 102 in figure 38; and when Task Manager 86 and processor 80a execute 'Task 6' 88a, a 'fourth state' is generated by the 'Task Info' block 102 in figure 38. The 'first state' and the 'second state' and the 'third state' and the 'fourth state' can each include one of the following 'states', as follows:

```
/// The Task has not run yet
   NotStarted,
   BeforeInput,
   InputFailed,
/// Input finished
   InputSucceeded
/// Input validation has failed
   InputCheckFailed,
/// Input validation has succeeded
   InputCheckSucceeded,
/// The Task is running
   Running,
/// The Task is running
   Recompute,
/// The Task execution was aborted
   ExecutionFailed,
/// The Task has successfully completed execution
   ExecutionSucceeded,
/// Output validation has failed
   OutputCheckFailed,
/// Output validation has succeeded
   OutputCheckSucceeded,
```

In figure 38, it was noted earlier that the Task Dependency 92 (of AWPWCSS 80c1 stored in memory 80c of the computer system 80 in figure 37) will ensure that the 'task instruction sets' stored in the Task Base 88 (i.e., 'Task 1' 88a and 'Task 4' 88d and 'Task 5' 88e and 'Task 6' 88f in figure 43A) are executed by Task Manager 86 in the 'proper order'. When the execution of these 'task instruction sets' by Task Manager 86 is completed, a 'first set of results' will be transmitted to the Task View Manager 98, Task View Manager 98 ensuring that a 'first unit of measure' associated with the 'first set of results' is converted into a 'second unit of measure' prior to transmitting the 'first set of results' to the Task View Base 100. The 'first set of results' will then be recorded or displayed by the Task View Base 100 on the Recorder or Display device 80b of computer system 80 in figure 37. If the user is not satisfied with one or more of the 'first set of results', in figure 43A, the user can change one or more of the 'input data' being provided to one or more of the tasks, that is, in figure 43A, the user can interface with the Task View Base 100 to use the Navigation Control 102 to change the 'Input Data 1' associated with 'Task 1' 88a, or the user can interface with the Task View Base 100 to use the Navigation Control 102 to change the 'Input Data 4' associated with 'Task 4' 88d, or the user can interface with the Task View Base 100 to use the Navigation Control 102 to change the 'Input Data 5' associated with "Task 5' 88e, or the user can interface with the Task View Base 100 to use the Navigation Control 102 to change the 'Input Data 6' associated with 'Task 6' 88f. At that time, only those tasks that were affected by the changed input data (i.e., 'Task 1' followed by 'Task 4' followed by 'Task 5' followed by 'Task 6' in figure 44; or 'Task 5' followed by 'Task 6' in figure 45) will be re-executed in sequence by the Task Manager 86. For example, in figure 27, the user can interface with the Task View Base 100 to use Navigation Control 102 to change 'Input Data 1' associated with 'Task 1' 88a, thereby providing 'Changed Input Data 1' to Task 1' 88a and producing a 'second set of results' on the Task View Base 100 of the recorder or display device 80b. When the 'Input Data 1' has been changed to 'Changed Input Data 1', since Tasks 1, 4, 5, and 6 are affected by the changed input data, the following tasks will be re-executed in sequence: 'Task 1', 'Task 4', 'Task 5', and 'Task 6'. In figure 45, the user can interface with Task View Base 100 to use Navigation Control 102 to change 'Input Data 5' associated with 'Task 5' 88e, thereby providing 'Changed Input Data 5' to Task 5 88e and producing a 'third set of results' on Task View Base 100 of the recorder or display device 80b. When the 'Input Data 5' has been changed to 'Changed Input Data 5', since Tasks 5 and 6 are affected by the changed input data, the following tasks will be re-executed in sequence: 'Task 5', and 'Task 6'.

In figure 40, the 'tasks' in Task Manager 86 (i.e., 'Task 1' 86a through 'Task 9' 86i) can include the following: (1) the "Risk Assessment' task of figures 9A-11, (2) the 'Bit Selection' task of figures 12-15, or (3) the 'Drillstring Design' task of figures 16-19. In figures 20 and 21, the Input Data 84a stored in memory 80c and accessed by the Access Manager 90 of the AWPWCSS 80c1 of figures 20 and 21 of the present invention can include the following: (1) in figure 27, the Input Data 20a being provided to the Risk Assessment Logical Expressions 22 and the Risk Assessment Algorithms 24, (2) in figure 30, the Input Data 44a. being provided to the Bit Selection Logical Expressions 46 and the Bit Selection Algorithms 48, and (3) in figure 34, the Input Data 64a being provided to the Drillstring Design Logical Expressions 66 and the Drillstring Design Algorithms 68.

In figure 40, the 'instruction sets' stored in Task Base 88 (that is, the 'Task 1 instruction set' 88a through and including the 'Task 9 instruction set' 88i) can include the following: (1) in figure 27, the Risk Assessment Logical Expressions 22 and the Risk Assessment Algorithms 24, (2) in figure 30, the Bit Selection Logical Expressions 46 and the Bit Selection Algorithms 48, and (3) in figure 34, the Drillstring Design Logical Expressions 66 and the Drillstring Design Algorithms 68. In figures 20 and 21, the 'set of results' recorded or displayed by Task View Base 100 on the Recorder or Display device 80b of computer system 80, such as the 'first set of results' recorded or displayed by Task View Base 100 in figure 26A or the 'second set of results' recorded or displayed by Task View Base 100 in figure 27 or the 'third set of results' recorded or displayed by Task View Base 100 in figure 28, can include the following: (1) in figure 27, the Risk Assessment Output Data 18b1, (2) in figure 30, the Bit Selection Output Data 42bl, and (3) in figure 34, the Drillstring Design Output Data 62b1.

In figures 43, 44, and 45, if a user wanted to interface with Task View Base 100 to use Navigation Control 102 to change any of the 'input data' being provided to the 'tasks' (such as 'Input Data 1' for 'Task 1' 88a or 'Input Data 4' for 'Task 4' 88d, or 'Input Data 5' for 'Task 5' 88e, or 'Input Data 6 'for 'Task 6' 88f), the user can do one of the following: (1) in figure 27, the user could use Navigation Control 102 to change one or more of the 'Input Data'20a being input to the Risk Assessment Logical Expressions 22 and the Risk Assessment Algorithms 24, (2) in figure 30, the user could use Navigation Control 102 to change one or more of the 'Input Data' 44a being input to the Bit Selection Logical Expressions 46 and the Bit Selection Algorithms 48, and (3) in figure 34, the user could use Navigation Control 102 to change one or more of the 'Input Data' 64a being input to the Drillstring Design Logical Expressions 66 and the Drillstring Design Algorithms 68.

**Claims**

1. A method for determining a final product (20b1), comprising the steps of:

    providing a first user objective (24, 24a) and providing first input data (22, 22a) selected from one or both of wellbore data (32a) and reservoir data (32b) and providing a second user objective (24, 24b) and providing second input data (22, 22b) selected from one or both of wellbore data (32a) and reservoir data (32b);
    generating a first workflow (42a) corresponding to said first user objective (24a) and generating a second workflow (42b) corresponding to said second user objective' (24, 24b);
    selecting a plurality of software modules (46a, 50a) in response to said first workflow (42a), said plurality of software modules (46a, 50a) including a first subset of software modules (46a) having a first predetermined sequence and a second subset of software modules (50a) having a second predetermined sequence, wherein the software modules of the first subset (46a) are part of a first tool (46), and the software modules of the second subset (50a) are part of a second tool (50);

selecting a different plurality of software modules (46a, 50a) in response to said second workflow (42b), said different plurality of software modules (46a, 50a) including a third subset of software modules (46a) having a third predetermined sequence, and a fourth subset of software modules (50a) having a fourth predetermined sequence, wherein the software modules of the third subset (46a) are part of the first tool (46), the software modules of the fourth subset (50a) are part of the second tool (50), wherein the third predetermined sequence is different from the first predetermined sequence, and the fourth predetermined sequence is different from the second predetermined sequence;

executing said software modules of the first subset (46a) in said predetermined first sequence in response to said first input data (22, 22a);

executing said software modules of the second subset (50a) in said second predetermined sequence in response to output of the first subset of software modules (46a);

executing said software modules of the third subset (46a) in said third predetermined sequence in response to said second input data (22, 22b);

executing said software modules of the fourth subset (50a) in said fourth predetermined sequence in response to output of the third subset of software modules (46a);

generating a first final product (20b1) when the execution of said first and second subsets of software modules (46a, 50a) is complete, wherein said first final product (20b1) includes a model of a reservoir to be produced by a well; and

generating a second final product (20b1) when the execution of said third and fourth subsets of said software modules (46a, 50a) is complete, wherein said second final product (20b1) includes another model of the reservoir

2. The method of claim 1, wherein executing said first subset of software modules (46a) in said first predetermined sequence in response to said first input data (22, 22a) generates first conditioned data (48a); wherein executing said third subset of software modules (46a) in said third predetermined sequence in response to said second input data (22, 22b) generates second conditioned data (48b); wherein executing said second subset of software modules (50a) in said second predetermined sequence is in response to said first conditioned data (48a); wherein executing said fourth subset of software modules (50a) in said fourth predetermined sequence is in response to said second conditioned data (48b), said first final product (20bb1) being generated when the execution of said second subset of software modules (50a) in said second predetermined sequence is complete, and said second final product (20b1) being generated when the execution of fourth subset of software modules (50a) in said fourth predetermined sequence is complete.

3. The method of claim 1, wherein executing the first subset of software modules (46a) causes conditioning of the first input data (22, 22a) to provide output that includes conditioned input data (48a).

4. The method of claim 3, wherein conditioning the first input data (22, 22a) includes interpreting the first input data (22, 22a).

5. The method of claim 1, further comprising using the reservoir models to predict performance of producing from the reservoir.

6. A program storage device readable by a machine tangibly embodying a set of instructions executable by the machine to perform method steps for determining a final product (20b1), said method steps comprising:

providing a first user objective (24, 24a) and providing first input data (22, 22a) selected from one or both of wellbore data (32a) and reservoir data (32b) and providing a second user objective (24, 24b) and providing second input data (22, 22b) selected from one or both of wellbore data (32a) and reservoir data (32b);

generating a first workflow (42a) corresponding to said first user objective (24, 24a), and generating a second workflow (42b) corresponding to said second user objective (24, 24b);

selecting a plurality of software modules (46a, 50a) in response to said first workflow (42a), said plurality of software modules (46a, 50a) including a first subset of software modules (46a) having a first predetermined sequence and a second subset of software modules (50a) having a second predetermined sequence, wherein the software modules of the first subset (46a) are part of a first tool (46), and the software modules of the second subset (50a) are part of a second tool (50);

selecting a different plurality of software modules (46a, 50a) in response to said second workflow (42b), said different plurality of software modules (46a, 50a) including a third subset of software modules (46a) having a third predetermined sequence, and a fourth subset of software modules (50a) having a fourth predetermined sequence, wherein the software modules of the third subset (46a) are part of the first tool (46), the software modules of the fourth subset (50a) are part of the second tool (50), wherein the third predetermined sequence is different from the first predetermined sequence, and the fourth predetermined sequence is different from the second predetermined sequence;

executing said software modules of the first subset (46a) in said predetermined first sequence in response to said first input data (22, 22a);

executing said software modules of the second subset (50a) in said second predetermined sequence in response to output of the first subset of software modules (46a);

executing said software modules of the third subset (46a) in said third predetermined sequence in response to said second input data (22, 22b);

executing said software modules of the fourth subset (50a) in said fourth predetermined sequence in response to output of the third subset of software modules (46a);

generating a first final product (20b1) when the execution of said first and second subsets of software modules (46a, 50a) is complete, wherein said first final product (20b1) includes a model of a reservoir to be produced by a well; and

generating a second final product (20b1) when the execution of said third and fourth subsets of said software modules (46a, 50a) is complete, wherein said second final product (20b1) includes another model of the reservoir.

7. The program storage device of claim 6, wherein executing said first subset of software modules (46a) in said first predetermined sequence in response to said first input data (22, 22a) generates first conditioned data (48a); wherein executing said third subset of software modules (46a) in said third predetermined sequence in response to said second input data (22, 22b) generates second conditioned data (48b); wherein executing said second subset of software modules (50a) in said second predetermined sequence is in response to said first conditioned data (48a); wherein executing said fourth subset of software modules (50a) in said fourth predetermined sequence is in response to said second conditioned data (48b), said first final product (20b1) being generated when the execution of said second subset of software modules (50a) in said second predetermined sequence is complete and said second final product (20b1) being generated when the execution of said fourth subset of software modules (50a) in said fourth predetermined sequence is complete.

8. A system adapted for determining a final product (20b1), comprising:

first apparatus adapted for receiving a first user objective (24, 24a) and receiving first input data (22, 22a) selected from one or both of wellbore data (32a) and reservoir data (32b) and for receiving a second user objective (24, 24b) and providing second input data (22, 22b) selected from one or both of wellbore data (32a) and reservoir data (32b);

second apparatus adapted for generating a first workflow (42a) corresponding to said user first objective (24, 24a), and for generating a second workflow (42b) corresponding to said second user objective (24, 24b);

third apparatus adapted for selecting a plurality of software modules (46a, 50a) in response to said first workflow (42a), said plurality of software modules (46a, 50a) including a first subset of software modules (46a) having a first predetermined sequence and a second subset of software modules (50a) having a second predetermined sequence, wherein the software modules of the first subset (46a) are part of a first tool (46), and the software modules of the second subset (50a) are part of a second tool (50) and for selecting a different plurality of software modules (46a, 50a) in response to said second workflow (42b), said different plurality of software modules (46a, 50a) including a third subset of software modules (46a) having a third predetermined sequence, and a fourth subset of software modules (50a) having a fourth predetermined sequence, wherein the software modules of the third subset (46a) are part of the first tool (46), the software modules of the fourth subset (50a) are part of the second tool (50), wherein the third predetermined sequence is different from the first predetermined sequence, and the fourth predetermined sequence is different from the second predetermined sequence;

fourth apparatus adapted for executing said software modules of the first subset (46a) in said first predetermined sequence in response to said first input data (22, 22a);

executing said software modules of the second subset (50a) in said second predetermined sequence in response to output of the first subset of software modules (46a); executing said software modules of the third subset (46a) in said third predetermined sequence in response to said second input data (22, 22b); executing said software modules of the fourth subset (50a) in said fourth predetermined sequence in response to output of the third subset of software modules (46a); and

fifth apparatus adapted for generating a first final product (20b1) when the execution of said first and second subsets of software modules (46a, 50a) is complete and generating a second final product (20b1) when the execution of said third and fourth subsets of said software modules (46a, 50a) is complete, wherein said first final product (20b1) includes a model of the reservoir to be produced by a well; and wherein said second final product (20b1) includes another model of the reservoir.

9. The system of claim 8, wherein the fourth apparatus for executing said first subset of software modules (46a) in said first predetermined sequence in response to said first input data (22, 22a) generates first conditioned data (48a); the fourth apparatus for executing said third subset of software modules (46a) in said third predetermined sequence in response to said second input data (22, 22b) generates second conditioned data (48b); the fourth apparatus for executing said second subset of software modules (50a) in said second predetermined sequence is in response to said first conditioned data (48a); and the fourth apparatus for executing said fourth subset of software modules (50a) in said fourth predetermined sequence is in response to said second condition data (48b), said first final product (20b1) being generated when the execution of said second subset of software modules (50a) in said second predetermined sequence is complete and said second final product (20b1) being generated when the execution of said fourth subset of software modules (50a) in said fourth predetermined sequence is complete.

10. The system of claim 8, wherein executing the first subset of software modules (46a) causes conditioning of the first input data (22, 22a) to provide output that includes conditioned input data (48a).

11. The system of claim 10, wherein conditioning the first input data (22, 22a) includes interpreting the first input data (22, 22a).

12. The system of claim 8, further comprising a sixth apparatus to use the reservoir models to predict performance of producing from the reservoir.

**Patentansprüche**

1. Verfahren zum Bestimmen eines Endprodukts (20b1), wobei das Verfahren die folgenden Schritte umfasst:

Bereitstellen eines ersten Nutzerziels (24, 24a) und Bereitstellen erster Eingangsdaten (22, 22a), die aus Bohrlochdaten (32a) und/oder Lagerstättendaten (32b) ausgewählt werden, und Bereitstellen eines zweiten Nutzerziels (24, 24b) und Bereitstellen zweiter Eingangsdaten (22, 22b), die aus den Bohrlochdaten (32a) und/oder aus den Lagerstättendaten (32b) ausgewählt werden;
Erzeugen eines ersten Arbeitsablaufs (42a), der dem ersten Nutzerziel (24a) entspricht, und Erzeugen eines zweiten Arbeitsablaufs (42b), der dem zweiten Nutzerziel (24, 24b) entspricht;
Auswählen einer Mehrzahl von Softwaremodulen (46a, 50a) in Ansprechen auf den ersten Arbeitsablauf (42a), wobei die Mehrzahl von Softwaremodulen (46a, 50a) eine erste Teilmenge von Softwaremodulen (46a), die eine erste vorgegebene Reihenfolge aufweisen, und eine zweite Teilmenge von Softwaremodulen (50a), die eine zweite vorgegebene Reihenfolge aufweisen, enthält, wobei die Softwaremodule der ersten Teilmenge (46a) Teil eines ersten Werkzeugs (46) sind und die Softwaremodule der zweiten Teilmenge (50a) Teil eines zweiten Werkzeugs (50) sind;
Auswählen einer anderen Mehrzahl von Softwaremodulen (46a, 50a) in Ansprechen auf den zweiten Arbeitsablauf (42b), wobei die andere Mehrzahl von Softwaremodulen (46a, 50a) eine dritte Teilmenge von Softwaremodulen (46a), die eine dritte vorgegebene Reihenfolge aufweisen, und eine vierte Teilmenge von Softwaremodulen (50a), die eine vierte vorgegebene Reihenfolge aufweisen, enthält, wobei die Softwaremodule der dritten Teilmenge (46a) Teil des ersten Werkzeugs (46) sind, wobei die Softwaremodule der vierten Teilmenge (50a) Teil des zweiten Werkzeugs (50) sind, wobei sich die dritte vorgegebene Reihenfolge von der ersten vorgegebenen Reihenfolge unterscheidet und wobei sich die vierte vorgegebene Reihenfolge von der zweiten vorgegebenen Reihenfolge unterscheidet;
Ausführen der Softwaremodule der ersten Teilmenge (46a) in der vorgegebenen ersten Reihenfolge in Ansprechen auf die ersten Eingangsdaten (22, 22a);
Ausführen der Softwaremodule der zweiten Teilmenge (50a) in der zweiten vorgegebenen Reihenfolge in Ansprechen auf die Ausgabe der ersten Teilmenge von Softwaremodulen (46a);
Ausführen der Softwaremodule der dritten Teilmenge (46a) in der dritten vorgegebenen Reihenfolge in Ansprechen auf die zweiten Eingangsdaten (22, 22b);
Ausführen der Softwaremodule der vierten Teilmenge (50a) in der vierten vorgegebenen Reihenfolge in Ansprechen auf die Ausgabe der dritten Teilmenge von Softwaremodulen (46a);

EP 1 644 800 B1

Erzeugen eines ersten Endprodukts (20b1), wenn die Ausführung der ersten und der zweiten Teilmenge von Softwaremodulen (46a, 50a) abgeschlossen ist, wobei das erste Endprodukt (20b1) ein Modell einer durch eine Bohrung zu fördernden Lagerstätte enthält; und

Erzeugen eines zweiten Endprodukts (20b1), wenn die Ausführung der dritten und der vierten Teilmenge der Softwaremodule (46a, 50a) abgeschlossen ist, wobei das zweite Endprodukt (20b1) ein anderes Modell der Lagerstätte enthält.

2. Verfahren nach Anspruch 1, wobei das Ausführen der ersten Teilmenge von Softwaremodulen (46a) in der ersten vorgegebenen Reihenfolge in Ansprechen auf die ersten Eingangsdaten (22, 22a) erste aufbereitete Daten (48a) erzeugt; wobei das Ausführen der dritten Teilmenge von Softwaremodulen (46a) in der dritten vorgegebenen Reihenfolge in Ansprechen auf die zweiten Eingangsdaten (22, 22b) zweite aufbereitete Daten (48b) erzeugt; wobei das Ausführen der zweiten Teilmenge von Softwaremodulen (50a) in der zweiten vorgegebenen Reihenfolge in Ansprechen auf die ersten aufbereiteten Daten (48a) erfolgt; wobei das Ausführen der vierten Teilmenge von Softwaremodulen (50a) in der vierten vorgegebenen Reihenfolge in Ansprechen auf die zweiten aufbereiteten Daten (48b) erfolgt, wobei das erste Endprodukt (20b1) erzeugt wird, wenn die Ausführung der zweiten Teilmenge von Softwaremodulen (50a) in der zweiten vorgegebenen Reihenfolge abgeschlossen ist, und wobei das zweite Endprodukt (20b1) erzeugt wird, wenn die Ausführung der vierten Teilmenge von Softwaremodulen (50a) in der vierten vorgegebenen Reihenfolge abgeschlossen ist.

3. Verfahren nach Anspruch 1, wobei das Ausführen der ersten Teilmenge von Softwaremodulen (46a) das Aufbereiten der ersten Eingangsdaten (22, 22a) veranlasst, um eine Ausgabe bereitzustellen, die aufbereitete Eingangsdaten (48a) enthält.

4. Verfahren nach Anspruch 3, wobei das Aufbereiten der ersten Eingangsdaten (22, 22a) das Interpretieren der ersten Eingangsdaten (22, 22a) enthält.

5. Verfahren nach Anspruch 1, das ferner das Verwenden der Lagerstättenmodelle zum Vorhersagen der Leistung des Förderns von der Lagerstätte umfasst.

6. Maschinenlesbare Programmspeichervorrichtung, die einen Satz von Anweisungen konkret verkörpert, die durch die Maschine ausgeführt werden können, um Verfahrensschritte zum Bestimmen eines Endprodukts (20b1) auszuführen, wobei die Verfahrensschritte umfassen:

Bereitstellen eines ersten Nutzerziels (24, 24a) und Bereitstellen erster Eingangsdaten (22, 22a), die aus Bohrlochdaten (32a) und/oder Lagerstättendaten (32b) ausgewählt werden, und Bereitstellen eines zweiten Nutzerziels (24, 24b) und Bereitstellen zweiter Eingangsdaten (22, 22b), die aus den Bohrlochdaten (32a) und/oder aus den Lagerstättendaten (32b) ausgewählt werden;

Erzeugen eines ersten Arbeitsablaufs (42a), der dem ersten Nutzerziel (24, 24a) entspricht, und Erzeugen eines zweiten Arbeitsablaufs (42b), der dem zweiten Nutzerziel (24, 24b) entspricht;

Auswählen einer Mehrzahl von Softwaremodulen (46a, 50a) in Ansprechen auf den ersten Arbeitsablauf (42a), wobei die Mehrzahl von Softwaremodulen (46a, 50a) eine erste Teilmenge von Softwaremodulen (46a), die eine erste vorgegebene Reihenfolge aufweisen, und eine zweite Teilmenge von Softwaremodulen (50a), die eine zweite vorgegebene Reihenfolge aufweisen, enthält, wobei die Softwaremodule der ersten Teilmenge (46a) Teil eines ersten Werkzeugs (46) sind und die Softwaremodule der zweiten Teilmenge (50a) Teil eines zweiten Werkzeugs (50) sind;

Auswählen einer anderen Mehrzahl von Softwaremodulen (46a, 50a) in Ansprechen auf den zweiten Arbeitsablauf (42b), wobei die andere Mehrzahl von Softwaremodulen (46a, 50a) eine dritte Teilmenge von Softwaremodulen (46a), die eine dritte vorgegebene Reihenfolge aufweisen, und eine vierte Teilmenge von Softwaremodulen (50a), die eine vierte vorgegebene Reihenfolge aufweisen, enthält, wobei die Softwaremodule der dritten Teilmenge (46a) Teil des ersten Werkzeugs (46) sind, wobei die Softwaremodule der vierten Teilmenge (50a) Teil des zweiten Werkzeugs (50) sind, wobei sich die dritte vorgegebene Reihenfolge von der ersten vorgegebenen Reihenfolge unterscheidet und wobei sich die vierte vorgegebene Reihenfolge von der zweiten vorgegebenen Reihenfolge unterscheidet;

Ausführen der Softwaremodule der ersten Teilmenge (46a) in der vorgegebenen ersten Reihenfolge in Ansprechen auf die ersten Eingangsdaten (22, 22a);

Ausführen der Softwaremodule der zweiten Teilmenge (50a) in der zweiten vorgegebenen Reihenfolge in Ansprechen auf die Ausgabe der ersten Teilmenge von Softwaremodulen (46a);

Ausführen der Softwaremodule der dritten Teilmenge (46a) in der dritten vorgegebenen Reihenfolge in Ansprechen auf die zweiten Eingangsdaten (22, 22b);

Ausführen der Softwaremodule der vierten Teilmenge (50a) in der vierten vorgegebenen Reihenfolge in Ansprechen auf die Ausgabe der dritten Teilmenge von Softwaremodulen (46a);

Erzeugen eines ersten Endprodukts (20b1), wenn die Ausführung der ersten und der zweiten Teilmenge von Softwaremodulen (46a, 50a) abgeschlossen ist, wobei das erste Endprodukt (20b1) ein Modell einer durch eine Bohrung zu fördernden Lagerstätte enthält; und

Erzeugen eines zweiten Endprodukts (20b1), wenn die Ausführung der dritten und der vierten Teilmenge der Softwaremodule (46a, 50a) abgeschlossen ist, wobei das zweite Endprodukt (20b1) ein anderes Modell der Lagerstätte enthält.

7. Programmspeichervorrichtung nach Anspruch 6, wobei das Ausführen der ersten Teilmenge von Softwaremodulen (46a) in der ersten vorgegebenen Reihenfolge in Ansprechen auf die ersten Eingangsdaten (22, 22a) erste aufbereitete Daten (48a) erzeugt; wobei das Ausführen der dritten Teilmenge von Softwaremodulen (46a) in der dritten vorgegebenen Reihenfolge in Ansprechen auf die zweiten Eingangsdaten (22, 22b) zweite aufbereitete Daten (48b) erzeugt; wobei das Ausführen der zweiten Teilmenge von Softwaremodulen (50a) in der zweiten vorgegebenen Reihenfolge in Ansprechen auf die ersten aufbereiteten Daten (48a) erfolgt; wobei das Ausführen der vierten Teilmenge von Softwaremodulen (50a) in der vierten vorgegebenen Reihenfolge in Ansprechen auf die zweiten aufbereiteten Daten (48b) erfolgt, wobei das erste Endprodukt (20b1) erzeugt wird, wenn die Ausführung der zweiten Teilmenge von Softwaremodulen (50a) in der zweiten vorgegebenen Reihenfolge abgeschlossen ist, und wobei das zweite Endprodukt (20b1) erzeugt wird, wenn die Ausführung der vierten Teilmenge von Softwaremodulen (50a) in der vierten vorgegebenen Reihenfolge abgeschlossen ist.

8. System, das dafür ausgelegt ist, ein Endprodukt (20b1) zu bestimmen, wobei das System umfasst:

eine erste Vorrichtung, die dafür ausgelegt ist, ein erstes Nutzerziel (24, 24a) zu empfangen und erste Eingangsdaten (22, 22a), die aus Bohrlochdaten (32a) und/oder Lagerstättendaten (32b) ausgewählt werden, zu empfangen und ein zweites Nutzerziel (24, 24b) zu empfangen und zweite Eingangsdaten (22, 22b), die aus den Bohrlochdaten (32a) und/oder aus den Lagerstättendaten (32b) ausgewählt werden, bereitzustellen;

eine zweite Vorrichtung, die dafür ausgelegt ist, einen ersten Arbeitsablauf (42a) zu erzeugen, der dem ersten Nutzerziel (24, 24a) entspricht, und einen zweiten Arbeitsablauf (42b) zu erzeugen, der dem zweiten Nutzerziel (24, 24b) entspricht;

eine dritte Vorrichtung, die dafür ausgelegt ist, in Ansprechen auf den ersten Arbeitsablauf (42a) eine Mehrzahl von Softwaremodulen (46a, 50a) auszuwählen, wobei die Mehrzahl von Softwaremodulen (46a, 50a) eine erste Teilmenge von Softwaremodulen (46a), die eine erste vorgegebene Reihenfolge aufweisen, und eine zweite Teilmenge von Softwaremodulen (50a), die eine zweite vorgegebene Reihenfolge aufweisen, enthält, wobei die Softwaremodule der ersten Teilmenge (46a) Teil eines ersten Werkzeugs (46) sind und die Softwaremodule der zweiten Teilmenge (50a) Teil eines zweiten Werkzeugs (50) sind, und in Ansprechen auf den zweiten Arbeitsablauf (42b) eine andere Mehrzahl von Softwaremodulen (46a, 50a) auszuwählen, wobei die andere Mehrzahl von Softwaremodulen (46a, 50a) eine dritte Teilmenge von Softwaremodulen (46a), die eine dritte vorgegebene Reihenfolge aufweisen, und eine vierte Teilmenge von Softwaremodulen (50a), die eine vierte vorgegebene Reihenfolge aufweisen, enthält, wobei die Softwaremodule der dritten Teilmenge (46a) Teil des ersten Werkzeugs (46) sind, wobei die Softwaremodule der vierten Teilmenge (50a) Teil des zweiten Werkzeugs (50) sind, wobei sich die dritte vorgegebene Reihenfolge von der ersten vorgegebenen Reihenfolge unterscheidet und wobei sich die vierte vorgegebene Reihenfolge von der zweiten vorgegebenen Reihenfolge unterscheidet;

eine vierte Vorrichtung, die dafür ausgelegt ist, in Ansprechen auf die ersten Eingangsdaten (22, 22a) die Softwaremodule der ersten Teilmenge (46a) in der ersten vorgegebenen Reihenfolge auszuführen; in Ansprechen auf die Ausgabe der ersten Teilmenge von Softwaremodulen (46a) die Softwaremodule der zweiten Teilmenge (50a) in der zweiten vorgegebenen Reihenfolge auszuführen; in Ansprechen auf die zweiten Eingangsdaten (22, 22b) die Softwaremodule der dritten Teilmenge (46a) in der dritten vorgegebenen Reihenfolge auszuführen; in Ansprechen auf die Ausgabe der dritten Teilmenge von Softwaremodulen (46a) die Softwaremodule der vierten Teilmenge (50a) in der vierten vorgegebenen Reihenfolge auszuführen; und

eine fünfte Vorrichtung, die dafür ausgelegt ist, ein erstes Endprodukt (20b1) zu erzeugen, wenn die Ausführung der ersten und der zweiten Teilmenge von Softwaremodulen (46a, 50a) abgeschlossen ist, und ein zweites Endprodukt (20b1) zu erzeugen, wenn die Ausführung der dritten und der vierten Teilmenge der Softwaremodule (46a, 50a) abgeschlossen ist, wobei das erste Endprodukt (20b1) ein Modell der durch die Bohrung zu fördernden Lagerstätte enthält; und wobei das zweite Endprodukt (20b1) ein anderes Modell der Lagerstätte enthält.

**9.** System nach Anspruch 8, wobei die vierte Vorrichtung zum Ausführen der ersten Teilmenge von Softwaremodulen (46a) in der ersten vorgegebenen Reihenfolge in Ansprechen auf die ersten Eingangsdaten (22, 22a) erste aufbereitete Daten (48a) erzeugt; die vierte Vorrichtung zum Ausführen der dritten Teilmenge von Softwaremodulen (46a) in der dritten vorgegebenen Reihenfolge in Ansprechen auf die zweiten Eingangsdaten (22, 22b) zweite aufbereitete Daten (48b) erzeugt; die vierte Vorrichtung zum Ausführen der zweiten Teilmenge von Softwaremodulen (50a) in der zweiten vorgegebenen Reihenfolge in Ansprechen auf die ersten aufbereiteten Daten (48a) erfolgt; und die vierte Vorrichtung zum Ausführen der vierten Teilmenge von Softwaremodulen (50a) in der vierten vorgegebenen Reihenfolge in Ansprechen auf die zweiten aufbereiteten Daten (48b) erfolgt, wobei das erste Endprodukt (20b1) erzeugt wird, wenn die Ausführung der zweiten Teilmenge von Softwaremodulen (50a) in der zweiten vorgegebenen Reihenfolge abgeschlossen ist, und das zweite Endprodukt (20b1) erzeugt wird, wenn die Ausführung der vierten Teilmenge von Softwaremodulen (50a) in der vierten vorgegebenen Reihenfolge abgeschlossen ist.

**10.** System nach Anspruch 8, wobei das Ausführen der ersten Teilmenge von Softwaremodulen (46a) das Aufbereiten der ersten Eingangsdaten (22, 22a), um eine Ausgabe bereitzustellen, die aufbereitete Eingangsdaten (48a) enthält, veranlasst.

**11.** System nach Anspruch 10, wobei das Aufbereiten der ersten Eingangsdaten (22, 22a) das Interpretieren der ersten Eingangsdaten (22, 22a) enthält.

**12.** System nach Anspruch 8, das ferner eine sechste Vorrichtung zum Verwenden der Lagerstättenmodelle zum Vorhersagen der Leistung des Förderns von der Lagerstätte umfasst.

**Revendications**

**1.** Méthode pour déterminer un produit final (20b1), comprenant les étapes de :

fournir un premier objectif d'utilisateur (24, 24a) et fournir des premières données d'entrée (22, 22a) sélectionnées parmi des données de puits de forage (32a) et/ou des données de réservoir (32b) et fournir un deuxième objectif d'utilisateur (24, 24b) et fournir des deuxièmes données d'entrée (22, 22b) sélectionnées parmi des données de puits de forage (32a) et/ou des données de réservoir (32b);
générer un premier flux de travail (42a) correspondant audit premier objectif d'utilisateur (24a) et générer un deuxième flux de travail (42b) correspondant audit deuxième objectif d'utilisateur (24, 24b) ;
sélectionner une pluralité de modules logiciels (46a, 50a) en réponse audit premier flux de travail (42a), ladite pluralité de modules logiciels (46a, 50a) incluant un premier sous-ensemble de modules logiciels (46a) ayant une première séquence prédéterminée et un deuxième sous-ensemble de modules logiciels (50a) ayant une deuxième séquence prédéterminée, dans laquelle les modules logiciels du premier sous-ensemble (46a) font partie d'un premier outil (46), et les modules logiciels du deuxième sous-ensemble (50a) font partie d'un deuxième outil (50) ;
sélectionner une pluralité différente de modules logiciels (46a, 50a) en réponse audit deuxième flux de travail (42b), ladite pluralité différente de modules logiciels (46a, 50a) incluant un troisième sous-ensemble de modules logiciels (46a) ayant une troisième séquence prédéterminée et un quatrième sous-ensemble de modules logiciels (50a) ayant une quatrième séquence prédéterminée, dans laquelle les modules logiciels du troisième sous-ensemble (46a) font partie du premier outil (46), les modules logiciels du quatrième sous-ensemble (50a) font partie du deuxième outil (50), dans laquelle la troisième séquence prédéterminée est différente de la première séquence prédéterminée, et la quatrième séquence prédéterminée est différente de la deuxième séquence prédéterminée ;
exécuter lesdits modules logiciels du premier sous-ensemble (46a) dans ladite première séquence prédéterminée en réponse auxdites premières données d'entrée (22, 22a) ;
exécuter lesdits modules logiciels du deuxième sous-ensemble (50a) dans ladite deuxième séquence prédéterminée en réponse à la sortie du premier sous-ensemble de modules logiciels (46a) ;
exécuter lesdits modules logiciels du troisième sous-ensemble (46a) dans ladite troisième séquence prédéterminée en réponse auxdites deuxièmes données d'entrée (22, 22b) ;
exécuter lesdits modules logiciels du quatrième sous-ensemble (50a) dans ladite quatrième séquence prédéterminée en réponse à la sortie du troisième sous-ensemble de modules logiciels (46a) ;
générer un premier produit final (20b1) lorsque l'exécution desdits premier et deuxième sous-ensembles de modules logiciels (46a, 50a) est terminée, dans laquelle ledit premier produit final (20b1) inclut un modèle d'un réservoir devant être produit par un puits; et

générer un deuxième produit final (20b1) lorsque l'exécution desdits troisième et quatrième sous-ensembles desdits modules logiciels (46a, 50a) est terminée, dans laquelle ledit deuxième produit final (20b1) inclut un autre modèle du réservoir.

2. Méthode selon la revendication 1, dans laquelle l'exécution dudit premier sous-ensemble de modules logiciels (46a) dans ladite première séquence prédéterminée en réponse auxdites premières données d'entrée (22, 22a) génère des premières données conditionnées (48a) ; dans laquelle l'exécution dudit troisième sous-ensemble de modules logiciels (46a) dans ladite troisième séquence prédéterminée en réponse auxdites deuxièmes données d'entrée (22, 22b) génère des deuxièmes données conditionnées (48b) ; dans laquelle l'exécution dudit deuxième sous-ensemble de modules logiciels (50a) dans ladite deuxième séquence prédéterminée est en réponse auxdites premières données conditionnées (48a) ; dans laquelle l'exécution dudit quatrième sous-ensemble de modules logiciels (50a) dans ladite quatrième séquence prédéterminée est en réponse auxdites deuxièmes données conditionnées (48b), ledit premier produit final (20b1) étant généré lorsque l'exécution dudit deuxième sous-ensemble de modules logiciels (50a) dans ladite deuxième séquence prédéterminée est terminée, et ledit deuxième produit final (20b1) étant généré lorsque l'exécution du quatrième sous-ensemble de modules logiciels (50a) dans ladite quatrième séquence prédéterminée est terminée.

3. Méthode selon la revendication 1, dans laquelle l'exécution du premier sous-ensemble de modules logiciels (46a) provoque le conditionnement des premières données d'entrée (22, 22a) pour fournir une sortie qui inclut des données d'entrée conditionnées (48a).

4. Méthode selon la revendication 3, dans laquelle le conditionnement des premières données d'entrée (22, 22a) inclut l'interprétation des premières données d'entrée (22, 22a).

5. Méthode selon la revendication 1, comprenant en outre l'utilisation des modèles de réservoir pour prédire des performances de production à partir du réservoir.

6. Dispositif de stockage de programme lisible par une machine incorporant de manière tangible un ensemble d'instructions exécutables par la machine pour effectuer des étapes de méthode pour déterminer un produit final (20b1), lesdites étapes de méthode comprenant de :

fournir un premier objectif d'utilisateur (24, 24a) et fournir des premières données d'entrée (22, 22a) sélectionnées parmi des données de puits de forage (32a) et/ou des données de réservoir (32b) et fournir un deuxième objectif d'utilisateur (24, 24b) et fournir des deuxièmes données d'entrée (22, 22b) sélectionnées parmi des données de puits de forage (32a) et/ou des données de réservoir (32b);
générer un premier flux de travail (42a) correspondant audit premier objectif d'utilisateur (24a) et générer un deuxième flux de travail (42b) correspondant audit deuxième objectif d'utilisateur (24, 24b) ;
sélectionner une pluralité de modules logiciels (46a, 50a) en réponse audit premier flux de travail (42a), ladite pluralité de modules logiciels (46a, 50a) incluant un premier sous-ensemble de modules logiciels (46a) ayant une première séquence prédéterminée et un deuxième sous-ensemble de modules logiciels (50a) ayant une deuxième séquence prédéterminée, dans lequel les modules logiciels du premier sous-ensemble (46a) font partie d'un premier outil (46), et les modules logiciels du deuxième sous-ensemble (50a) font partie d'un deuxième outil (50) ;
sélectionner une pluralité différente de modules logiciels (46a, 50a) en réponse audit deuxième flux de travail (42b), ladite pluralité différente de modules logiciels (46a, 50a) incluant un troisième sous-ensemble de modules logiciels (46a) ayant une troisième séquence prédéterminée et un quatrième sous-ensemble de modules logiciels (50a) ayant une quatrième séquence prédéterminée, dans lequel les modules logiciels du troisième sous-ensemble (46a) font partie du premier outil (46), les modules logiciels du quatrième sous-ensemble (50a) font partie du deuxième outil (50), dans lequel la troisième séquence prédéterminée est différente de la première séquence prédéterminée, et la quatrième séquence prédéterminée est différente de la deuxième séquence prédéterminée ;
exécuter lesdits modules logiciels du premier sous-ensemble (46a) dans ladite première séquence prédéterminée en réponse auxdites premières données d'entrée (22, 22a) ;
exécuter lesdits modules logiciels du deuxième sous-ensemble (50a) dans ladite deuxième séquence prédéterminée en réponse à la sortie du premier sous-ensemble de modules logiciels (46a) ;
exécuter lesdits modules logiciels du troisième sous-ensemble (46a) dans ladite troisième séquence prédéterminée en réponse auxdites deuxièmes données d'entrée (22, 22b) ;
exécuter lesdits modules logiciels du quatrième sous-ensemble (50a) dans ladite quatrième séquence prédéterminée en réponse à la sortie du troisième sous-ensemble de modules logiciels (46a) ;

générer un premier produit final (20b1) lorsque l'exécution desdits premier et deuxième sous-ensembles de modules logiciels (46a, 50a) est terminée, dans lequel ledit premier produit final (20b1) inclut un modèle d'un réservoir devant être produit par un puits; et

générer un deuxième produit final (20b1) lorsque l'exécution desdits troisième et quatrième sous-ensembles desdits modules logiciels (46a, 50a) est terminée, dans lequel ledit deuxième produit final (20b1) inclut un autre modèle du réservoir.

7. Dispositif de stockage de programme selon la revendication 6, dans lequel l'exécution dudit premier sous-ensemble de modules logiciels (46a) dans ladite première séquence prédéterminée en réponse auxdites premières données d'entrée (22, 22a) génère des premières données conditionnées (48a) ; dans lequel l'exécution dudit troisième sous-ensemble de modules logiciels (46a) dans ladite troisième séquence prédéterminée en réponse auxdites deuxièmes données d'entrée (22, 22b) génère des deuxièmes données conditionnées (48b) ; dans lequel l'exécution dudit deuxième sous-ensemble de modules logiciels (50a) dans ladite deuxième séquence prédéterminée est en réponse auxdites premières données conditionnées (48a) ; dans lequel l'exécution dudit quatrième sous-ensemble de modules logiciels (50a) dans ladite quatrième séquence prédéterminée est en réponse auxdites deuxièmes données conditionnées (48b), ledit premier produit final (20b1) étant généré lorsque l'exécution dudit deuxième sous-ensemble de modules logiciels (50a) dans ladite deuxième séquence prédéterminée est terminée, et ledit deuxième produit final (20b1) étant généré lorsque l'exécution dudit quatrième sous-ensemble de modules logiciels (50a) dans ladite quatrième séquence prédéterminée est terminée.

8. Système adapté pour déterminer un produit final (20b1), comprenant :

un premier appareil adapté pour recevoir un premier objectif d'utilisateur (24, 24a) et recevoir des premières données d'entrée (22, 22a) sélectionnées parmi des données de puits de forage (32a) et/ou des données de réservoir (32b) et pour recevoir un deuxième objectif d'utilisateur (24, 24b) et recevoir des deuxièmes données d'entrée (22, 22b) sélectionnées parmi des données de puits de forage (32a) et/ou des données de réservoir (32b) ;

un deuxième appareil adapté pour générer un premier flux de travail (42a) correspondant audit premier objectif d'utilisateur (24, 24a) et générer un deuxième flux de travail (42b) correspondant audit deuxième objectif d'utilisateur (24, 24b) ;

un troisième appareil adapté pour sélectionner une pluralité de modules logiciels (46a, 50a) en réponse audit premier flux de travail (42a), ladite pluralité de modules logiciels (46a, 50a) incluant un premier sous-ensemble de modules logiciels (46a) ayant une première séquence prédéterminée et un deuxième sous-ensemble de modules logiciels (50a) ayant une deuxième séquence prédéterminée, dans lequel les modules logiciels du premier sous-ensemble (46a) font partie d'un premier outil (46), et les modules logiciels du deuxième sous-ensemble (50a) font partie d'un deuxième outil (50), et pour sélectionner une pluralité différente de modules logiciels (46a, 50a) en réponse audit deuxième flux de travail (42b), ladite pluralité différente de modules logiciels (46a, 50a) incluant un troisième sous-ensemble de modules logiciels (46a) ayant une troisième séquence prédéterminée et un quatrième sous-ensemble de modules logiciels (50a) ayant une quatrième séquence prédéterminée, dans lequel les modules logiciels du troisième sous-ensemble (46a) font partie du premier outil (46), les modules logiciels du quatrième sous-ensemble (50a) font partie du deuxième outil (50), dans lequel la troisième séquence prédéterminée est différente de la première séquence prédéterminée, et la quatrième séquence prédéterminée est différente de la deuxième séquence prédéterminée ;

un quatrième appareil adapté pour exécuter lesdits modules logiciels du premier sous-ensemble (46a) dans ladite première séquence prédéterminée en réponse auxdites premières données d'entrée (22, 22a) ; exécuter lesdits modules logiciels du deuxième sous-ensemble (50a) dans ladite deuxième séquence prédéterminée en réponse à la sortie du premier sous-ensemble de modules logiciels (46a) ; exécuter lesdits modules logiciels du troisième sous-ensemble (46a) dans ladite troisième séquence prédéterminée en réponse auxdites deuxièmes données d'entrée (22, 22b) ; exécuter lesdits modules logiciels du quatrième sous-ensemble (50a) dans ladite quatrième séquence prédéterminée en réponse à la sortie du troisième sous-ensemble de modules logiciels (46a) ; et

un cinquième appareil adapté pour générer un premier produit final (20b1) lorsque l'exécution desdits premier et deuxième sous-ensembles de modules logiciels (46a, 50a) est terminée et générer un deuxième produit final (20b1) lorsque l'exécution desdits troisième et quatrième sous-ensembles desdits modules logiciels (46a, 50a) est terminée, dans lequel ledit premier produit final (20b1) inclut un modèle du réservoir devant être produit par un puits ; et dans lequel ledit deuxième produit final (20b1) inclut un autre modèle du réservoir.

9. Système selon la revendication 8, dans lequel le quatrième appareil pour exécuter ledit premier sous-ensemble de modules logiciels (46a) dans ladite première séquence prédéterminée en réponse auxdites premières données d'entrée (22, 22a) génère des premières données conditionnées (48a) ; le quatrième appareil pour exécuter ledit troisième sous-ensemble de modules logiciels (46a) dans ladite troisième séquence prédéterminée en réponse auxdites deuxièmes données d'entrée (22, 22b) génère des deuxièmes données conditionnées (48b) ; le quatrième appareil pour exécuter ledit deuxième sous-ensemble de modules logiciels (50a) dans ladite deuxième séquence prédéterminée est en réponse auxdites premières données conditionnées (48a) ; et le quatrième appareil pour exécuter ledit quatrième sous-ensemble de modules logiciels (50a) dans ladite quatrième séquence prédéterminée est en réponse auxdites deuxièmes données conditionnées (48b), ledit premier produit final (20b1) étant généré lorsque l'exécution dudit deuxième sous-ensemble de modules logiciels (50a) dans ladite deuxième séquence prédéterminée est terminée, et ledit deuxième produit final (20b1) étant généré lorsque l'exécution dudit quatrième sous-ensemble de modules logiciels (50a) dans ladite quatrième séquence prédéterminée est terminée.

10. Système selon la revendication 8, dans lequel l'exécution du premier sous-ensemble de modules logiciels (46a) provoque le conditionnement des premières données d'entrée (22, 22a) pour fournir une sortie qui inclut des données d'entrée conditionnées (48a).

11. Système selon la revendication 10, dans lequel le conditionnement des premières données d'entrée (22, 22a) inclut l'interprétation des premières données d'entrée (22, 22a).

12. Système selon la revendication 8, comprenant en outre un sixième appareil pour utiliser les modèles de réservoir pour prédire des performances de production à partir du réservoir.

_20_

WORKSTATION OR COMPUTER SYSTEM

_20a_

PROCESSOR

_20b_

RECORDER OR DISPLAY DEVICE

SYSTEM BUS

MEMORY _20c_

SINGLE WELL PREDICTIVE MODEL (SWPM) SOFTWARE _20c1_

_24_

USER OBJECTIVES

_22_

INPUT DATA (e.g., WELL DATA)

## FIG.1

RECORDER OR DISPLAY DEVICE _20b_

PRODUCTS PRODUCED FOR EACH USER OBJECTIVE _20b1_

## FIG.2

WHAT DO YOU WANT TO EVALUATE? — 26a

26

DATA ENTRY    VARIABLE/ALTERNATIVE DATA — 26b

28a

BUILD MODELS    GEOLOGICAL UNCERTAINTY

28

VERIFICATION OF RESERVOIR MODELS — 28b

28d

COMPLETION/PRODUCTION/
OPERATIONAL ALTERNATIVES

ITERATE ON ALTERNATIVES

28c

FIG.3

# SINGLE WELL PREDICTIVE MODEL

| 30 WELCOME STATION | 32 DATA ENTRY | 34 SWPM CONSTRUCTION | 36 SWPM SOLUTIONS |
|---|---|---|---|
| WHAT DO YOU WISH TO INVESTIGATE?<br><br>DYNAMIC WELL TOOL KIT<br><br>TEST DESIGN<br><br>COMPLETION OPTIMIZATION<br><br>STIMULATION OPTIMIZATION<br><br>INCREMENTAL DATA VALUATOR<br><br>MULTI–PURPOSE SENSITIVITY<br><br>WHILE DRILLING PRODUCTIVITY/ RESERVE ESTIMATOR | WELL DATA<br>32a<br><br>RESERVOIR DATA<br>32b<br><br>SUPPLEMENTARY KNOWLEDGE DATABASE<br>32c | 34b MULTI–DOMAIN INTEGRATED EXECUTION<br><br>PETROPHYSICAL PROPERTY DETERMINATION<br>34c<br><br>STATIC FRAMEWORK AND PROPERTY DISTRIBUTION<br>34d<br><br>TRANSITION TO FLOW AND EQUILIBRATION<br>34e<br><br>DYNAMIC DATA VERIFICATION<br>34f<br><br>PREDICTIVE MODEL<br>34a | DYNAMIC WELL TOOL KIT<br><br>TEST DESIGN COMPLETION STIMULATION DATA VALUATOR MULTI–PURPOSE SENSITIVITY OTHERS<br><br>WHILE DRILLING PRODUCTIVITY/ RESERVE ESTIMATOR |

*FIG.4*

20c1

EP 1 644 800 B1

**FIG.5**

WORKFLOW HARNESS ~44

DATA CONDITIONER

46

WORKFLOW HARNESS

DATA CONDITIONER (DC)

STATIC MODEL BUILDER ⟹ INTERPRETATION FORECASTING—ANALYSIS (DT—DECISION TOOL)

50

DT

DECISION TOOL

50

**FIG.6**

REQUIREMENTS

DATA CONDITIONER (DC)

GEOFRAME

LAS,DLIS, FLAT FILES

LOGS | IMAGE LOGS | MDT | CORES | PRODUCTION LOGS

DATA CONDITIONER

CALIBRATED CONSISTENT 1D—PRODUCT

"FLOW—UNIT ZONATION AND ROCKTYPING
LOG CALIBRATION
AVERAGE PROPERTIES—k,kr,φ,Pc,Sw"

**FIG.7**

## DATA CONDITIONER (DC) — DELIVERABLES

EXAMPLE OUTPUT

FORMATION PRESSURE        PERMEABILITY        SATURATION &        LITHOLOGY
                                              FRACTIONAL FLOW

ROCK TYPE                 1D FLOW         CAPILLARY        POROSITY
                          CALCULATION     PRESSURE

FIG.8

EP 1 644 800 B1

SWPM – FROM DC TO DT

CALIBRATED CONSISTENT (1D) RESERVOIR PROPERTIES

STATIC MODEL (3D)

INTERPRETATION/FORECASTING – ANALYSIS (DT)

DATA ENTRY

TEMPLATE MODELS

BUILD DYNAMIC MODEL (PVT,SCAL, SCHEDULE)

GRIDDING

INTERPRETATION

DIAGNOSTIC TOOLS

CALIBRATION VALIDATION

CREATE SOLUTIONS

FORECASTING COMPARATIVE ANALYSIS

DECISIONS

REPORTS

FIG.9

EP 1 644 800 B1

## SWPM ARCHITECTURE-SIMPLIFIED

GUI C#

OCEAN

(LEVEL 2)

| DATA CONDITIONING<br><br>LINK TO CORAL-ACCESS LOGS IN GEOFRAME | PETREL WORKFLOWS<br>DEFINE PETREL WORKFLOWS TO CREATE STATIC MODELS | INTERPRETATION/ FORECASTING-ANALYSIS<br>EXPLOIT HUGE OVER-LAP WITH NISE | WORKFLOWS & USABILITY<br>DEVELOP PROTOTYPES FOCUS ON EASE OF USE |
|---|---|---|---|

| SWPM | DATA CONDITIONING | DEFINE PETREL WORKFLOW | DT | WORKFLOWS & USABILITY |
|---|---|---|---|---|

| BASIC SIMULATION ENVIRONMENT | CASE/DATA TREE | RUN MANAGER | DATA MANAGER | RESULTS VIEWER |
|---|---|---|---|---|

CORE C++ (LEVEL 1)

AUTOMATIC CODE GENERATOR TO EXPOSE OBJECTS IN .NET THEN OCEAN

| ENGINEERING LAYER | SIMULATION CASE | WELL | PVT | GRID | RESULTS | SHARE WITH INTERSECT |
|---|---|---|---|---|---|---|

| BASIC LAYER KEYWORDS | RAW SIMULATOR KEYWORDS | SHARE WITH SIMULATORS<br><br>(E300), FRONTSIM, INTERSECT |
|---|---|---|

| UNITS SERVICE | XML DEFINITION |
|---|---|

FIG.9A

EP 1 644 800 B1

FIG.10

FIG.11

USER SPECIFY THE REQUEST. THE OBJECTIVE OF THE PROJECT — 60

USER ALWAYS STAYS AT THIS LEVEL. USER IS GUIDED BY THIS SYSTEM — 53

RESULTS ARE REPORTED. SESSION IS OVER — 57

62 — WELL DATA INPUT

24

52

55

46

50

50c

46c

50b

46b

50a

46a

22

20b1

64 — ACCORDING TO THE OBJECTIVE AND DATA AVAILABILITY, RIGHT WORKFLOW IS SELECTED AUTOMATICALLY

40

56

48

58

42

66 — PROGRESS WILL FOLLOW PATH OF THE SELECTED WORKFLOW

56

54

58

PROGRESS

RESULTS OF DT IS COLLECTED, READY FOR RECOMMENDATIONS TO THE FIELD — 74

1D WELL MODEL PROPERTIES ARE ESTIMATED IN DC MULTI DIMENSIONAL SOLUTION SYSTEM — 68

RESULTS OF DC IS COLLECTED, READY FOR RESERVOIR MODELING — 70

ACCORDING TO THE SET OBJECTIVE, DT PROCESSES THE 1D DATA AND THE DYNAMIC DATA TO CREATE RESULTS — 72

EP 1 644 800 B1

**FIG.12**

**FIG.13**

EP 1 644 800 B1

22b — INPUT DATA 2

24b — USER OBJECTIVE 2

40 — WORKFLOW STORAGE

42b — SPECIFIC WORKFLOW 2

48b — CONDITIONED DATA

46 — DATA CONDITIONER

| 1 | 2 | 3 |
| 4 | 5 | 6 |
| 7 | 8 | 9 |

46a

48 — DATA CONDITIONER PRODUCTS (e.g., DATA THAT HAS BEEN CALIBRATED)

50 — DECISION TOOL
50a

| 10 | 11 | 12 |
| 13 | 14 | 15 |
| 16 | 17 | 18 |

50a

20b1B — DECISION TOOL PRODUCT FOR USER OBJECTIVE 2

WORKFLOW HARNESS

44

**FIG.14**

SPECIFIC WORKFLOW 2

22b — INPUT DATA 2 → 7 → 8 → 9 → 6 → 3

48b — COND. DATA → 17 → 14 → 11 → 12 → 15 → DECISION TOOL PRODUCT FOR USER OBJECTIVE 2

**FIG.15**

**FIG.16**

**FIG.17**

EP 1 644 800 B1

FIG.18

EP 1 644 800 B1

FIG.19A

FIG.19C

FIG..19B

FIG..19D

FIG.19

FIG. 19A

NAVIGATION TOOL BAR

WORKFLOW TASK BAR

CHARTFX.NET BASED CHARTING CANVAS

Schlumberger RPM [Standard] - Scenario1

File   Edit   View   Tools   Help

Workflow

Input Data
- Scenario
- Trajectory
- Earth Properties
- Rig Selection
- Resample Inputs

Wellbore Geometry
- Mud Weights & Casing Points
- Wellbore Sizes
- Casing Design
- Cement Design
- Wellbore Geometry

Drilling Parameters
- Drilling Fluids
- Bit Selection
- Drillstring Design
- Hydraulics

Scenario Name: Scenario1

Well Name : Well_0001

Author Name:

Date Printed : 10/30/2003 10:39:46 AM

Vertical Section
VSEC(Azimuth, 55.95)

-500   0   500 1000 1500 2000

Carlo Time (Days)

Wellbore Shematic: 10/30/2003 (K

Schematic-Ac

ftRKB (MD)

0

50

81

202

225

271

378

1,Co
36.7

2, S

FIG.19B

## Results

⊘ Risk Assesment

⊘ Risk Matrix

⊘ Time & Cost Data

⊘ Time & Cost Chart

⊘ Monte Carlo

⊘ Monte Carlo Graph

⊘ Summary Report

◯ Montage

**DYNAMICALLY UPDATED
HELP CANVAS**

### RPM Help

RPM Help

What You Can Do
◯View of montage of we

Hints
Ths montage shows from left to right:
◯Trajectory vertical section
◯Time vs Depth
◯Cost vs Depth
◯Wellbore Schematic
◯Risk log for well MD
◯Fracture Gradient, pore pressure
mud weight profile with casing points

Help

**FIG. 19C**

FIG.19D

EP 1 644 800 B1

FIG. 20B

FIG. 20D

FIG. 20

FIG. 20A

FIG. 20C

FIG. 20A

EP 1 644 800 B1

FIG. 20B

ts & Casing Points

CasingPointsDisplay
Shear Failure       16
Fracture Gradient   16
PP                  16

1219.36

200
2000
4000
6000

6424.00

○ Risk Matrix

○ Time & Cost Data

○ Time & Cost Chart

○ Monte Carlo

○ Monte Carlo Graph

○ Summary Report

| Casing Point Data | | | 📌 |
|---|---|---|---|
| | Csg Pt MD | Csg Pt TVD | Csg Pt MD (alt) |
| | ft | ft | ft |
| 1 | 312.47 | 312.47 | 253.41 |
| 2 | 1219.36 | 1219.36 | 1208.14 |
| 3 | 6424.00 | 6393.24 | 6365.62 |
| 4 | 9163.29 | 9036.66 | 8216.01 |
| 5 | 14246.19 | 14084.15 | 8993.57 |
| 6 | | | 9495.54 |
| 7 | | | 14246.19 |

8000

10000

12000

14000

3

4

5

**RPM Help** ☐ 📌 ✕

RPM Help

What You Can Do

○ Set the casing points and mu weights for the well

Hints

You can adjust:

○ Casing Points

○ Adjust MWs

< >

Mud Weight & Casing Point controls

| Recalculate Casing | Recalculate Mud | Recalcul |
|---|---|---|

*FIG. 20C*

FIG. 20D

FIG. 21B

FIG. 21D

FIG. 21A

FIG. 21C

FIG. 21

96

FIG.21A

EP 1 644 800 B1

EP 1 644 800 B1

Risk Assessment

Rig MD
SS BOP
MW Kick
MW Loss
MW Frac
MWW
WBSW
WBS
HSLength
Csg Wear
Csg Count
Hole Big
Hole Sm
Csg DF
Csg Wt
Csg MOP
Hole Csg
Csg Csg
Csg Bit
TOC Low
Cmt Kick
Cmt Loss
Cmt Frac
Bit WkXS
Bit Wk
Bit Ftg
Bit Hrs
Bir Krev
Bit ROP
Bit UCS
DS MOP
DS Part
Kick Tol
Q Crit
Q Max
TTA Low
P Max
ECD Frac
ECD Loss

200    2000    4000

FIG. 21B

FIG. 21C

FIG. 21D

FIG. 22B

FIG. 22D

FIG. 22A

FIG. 22C

FIG. 22

## Schlumberger RPM [Advanced] - SPE

File  Edit  View  Tools  Help

Workflow

Input Data

**Wellbore Geometry**

- ✅ Wellbore Stability
- ⬭ Mud Weights & Ca...
- ⬭ Wellbore Sizes
- ⬭ Casing Design
- ⬭ Cement Design
- ⬭ Wellbore Geometry

Drilling Parameters

Results

Risk Assessment

Input Probability

| Number Of Iterations | 12000 | First P% Time | 10 | Mid Ti |

### Monte Carlo Summary Grid

| | | First P% Time | M |
|---|---|---|---|
| | | day | |
| 1 | ⊟ Total | 25.29 | |
| 2 | — Mobilize Rig Job | 0.67 | |
| 3 | — Drill Wellbore Job | 23.3 | |
| 4 | — Well Completion Job | 0.71 | |
| 5 | — Demobilize Rig Job | 0.61 | |

*FIG. 22A*

EP 1 644 800 B1

EP 1 644 800 B1

Monte Carlo

| P%<br>me | 50 | End P%<br>Time | 90 | Recompute |
|---|---|---|---|---|

| id P%<br>Time | End P%<br>Time | First P%<br>Cost | Mid P%<br>Cost | End P%<br>Cost |
|---|---|---|---|---|
| day | day | K$ | K$ | K$ |
| 39.6 | 63.99 | 1,638 | 2,132 | 2,804 |
| 1.33 | 2.77 | 15 | 30 | 57 |
| 35.9 | 56.76 | 1,585 | 2,035 | 2,634 |
| 1.17 | 1.95 | 24 | 40 | 61 |
| 1.2 | 2.51 | 14 | 27 | 52 |

FIG.22B

EP 1 644 800 B1

◯ Risk Matrix

◯ Time & Cost Data

◯ Time & Cost Chart

◯ Monte Carlo

◯ Monte Carlo Graph

◯ Summary Report

**RPM Help** ☐ 📌 ✕

RPM Help

What You Can Do

 ◯ Performs Monte Carlo Simula
well time and cost

Hints

You can:

 ◯ Change PW values

 ◯ Change number of iterations

Monte Carlo Detailed Grid

**Time Frequency Distribution**

Time (Days)

**Time Cumulative Probability**

Time (Days)

FIG. 22C

FIG. 22D

EP 1 644 800 B1

FIG.23A

FIG. 23B

FIG. 23C

FIG. 23D

FIG.23

EP 1 644 800 B1

106

FIG. 23A

EP 1 644 800 B1

| | | | | | | | | | | ◯ Monte Carlo Graph | ◯ ◯ |

Redisplay

### Depth vs. Cost
### Monte Carlo Cost (K$)

0   600   1200   1800   2400   3000

0.00
0.00
0.00
0.00
0.00

### Cost vs. Time
### Monte Carlo Time (Days)

0   10   20   30   40   50   60   70

0.00
100.00
200.00
300.00
400.00
500.00
600.00
700.00
800.00

*FIG. 23B*

EP 1 644 800 B1

FIG. 23C

*FIG. 23D*

FIG. 24A

FIG. 24B

FIG. 24C

FIG. 24D

FIG. 24

EP 1 644 800 B1

## Schlumberger RPM [Advanced] - SPE

File  Edit  View  Tools  Help

| Workflow | RPM Help |

**Scenario Name: SPE**

**Well Name: Well_0001**

**Author Name:**

**Date Printed: 11/17/2003 12:44:45 AM**

### Vertical Section
### VSEC(Azimuth 55.95)

-500  0  500  100  150  200

TVD(ft): 0, 1500, 3000, 4500, 6000, 7500, 9000, 10500, 12000

**Wellbore Schematic:11/17/2003 (KB-Grd: 50.0ft)**

| ftRKB (MD) | Schematic-Actual |
|---|---|
| 0 | |
| 50 | |
| 310 | |
| 313 | 1,Conductor,18 5/8,17.755,0.0, 312.5 |
| 919 | |
| 1216 | |
| | 2,Surface,13 3/8 |

**FIG. 24A**

FIG.24B

13500

Monte Carlo Time (Days)

0 10 20 30 40 50 60 70

Depth(ft)

0
3000
6000
9000
12000

Monte Carlo Cost (K$)

0   10   10   10

Depth(ft)

0
3000
6000
9000
12000

1219
6124
6421
6424
8863
9160
9163
10858
13946
14243
14246

12.715,0.0,1219.4

3,Intermediate,9
7/8,8.625,0.0,
6424.0

4,Intermediate,7,
6.276,0.0,9163.3

5,Produciton,5,
4.276,0.0,14246.2

*FIG.24C*

EP 1 644 800 B1

FIG.24D

EP 1 644 800 B1

**INPUT**
- SCENARIO INFO
- TRAJECTORY
- EARTH PROPERTIES
- RIG SELECTION
- RESAMPLE DATA

10

*FIG. 25*

**WELLBORE GEOMETERY**
- WELLBORE STABILITY
- MUD WEIGHT AND CASING POINTS
- WELLBORE SIZES
- CASING DESIGN
- CEMENT DESIGN
- WELLBORE GEOMETRY

12

**DRILLING PARAMETERS**
- DRILLING FLUIDS — 14a
- BIT SELECTION — 14b
- DRILLSTRING DESIGN
- HYDRAULICS

14

**RESULTS**
- RISK ASSESSMENT — 16a
- RISK MATRIX
- TIME AND COST DATA
- TIME AND COST CHART
- MONTE CARLO
- MONTE CARLO GRAPH
- SUMMARY REPORT
- MONTAGE

16

INPUT DATA 20a

32 → INPUT DATA CALCULATION RESULT

LOGICAL EXPRESSIONS 22

34 → RANKED INDIVIDUAL RISKS

ALGORITHMS 24

RANKED RISK CATEGORIES, AND
RANKED SUBCATEGORY RISKS
RANKED INDIVIDUAL RISKS

40

**RECORDER OR DISPLAY DEVICE 18b**
- RANKED RISK CATEGORIES
- RANKED SUBCATEGORY RISKS
- RANKED INDIVIDUAL RISKS

*FIG. 28*

COMPUTER SYSTEM

18

PROCESSOR
18a

18b — RECORDER OR DISPLAY DEVICE

18b1 — RISK ASSESSMENT OUTPUT DATA

SYSTEM BUS

MEMORY OR PROGRAM STORAGE DEVICE — 18c

AUTOMATIC WELL PLANNING RISK ASSESSMENT SOFTWARE — 18c1

INPUT DATA
20
20a

FIG. 26A

18b

RISK ASSESSMENT OUTPUT DATA

RISK CATEGORIES
SUBCATEGORY RISKS
INDIVIDUAL RISKS

18b1

FIG. 26B

30

MANUAL INPUT

18c1

20a

22

INPUT
DATA

VALUES USED
AS INPUT FOR
THE ALGORITHMS
AND LOGICAL
EXPRESSIONS

RISK ASSESSMENT
LOGICAL EXPRESSIONS

RULE 1
RULE 2
RULE 3
.
.
.

RISK ASSESSMENT
ALGORITHMS

ALGORITHM 1
ALGORITHM 2
ALGORITHM 3
.
.
.

24

RISK
ASSESSMENT
OUTPUT
DATA

VALUES
COMPUTED BY
THE ALGORITHMS
AND RESULTING
FROM THE
LOGICAL
EXPRESSIONS

18b1

26

RISK ASSESSMENT
CONSTANTS

VALUES USED AS
INPUT FOR THE
ALGORITHMS AND
LOGICAL
EXPRESSIONS

28

RISK ASSESSMENT
CATALOGS

LOOK UP VALUES
USED AS INPUT
FOR THE
ALGORITHMS AND
LOGICAL
EXPRESSIONS

18c1

AUTOMATIC WELL PLANNING
RISK ASSESSMENT SOFTWARE

FIG. 27

COMPUTER SYSTEM

42

RECORDER OR
DISPLAY DEVICE — 42b

BIT SELECTION
OUTPUT DATA — 42b1

PROCESSOR — 42a

SYSTEM BUS

MEMORY OR PROGRAM
STORAGE DEVICE — 42c

AUTOMATIC WELL
PLANNING BIT
SELECTION
SOFTWARE — 42c1

INPUT DATA — 44
44a

FIG. 29

54

MANUAL INPUT

42c1

44a

46

INPUT
DATA

VALUES USED
AS INPUT FOR
THE ALGORITHMS
AND LOGICAL
EXPRESSIONS

BIT SELECTION
LOGICAL EXPRESSIONS

RULE 1
RULE 2
RULE 3
.
.
.

BIT SELECTION
ALGORITHMS

ALGORITHM 1
ALGORITHM 2
ALGORITHM 3
.
.
.

48

BIT
SELECTION
OUTPUT
DATA

VALUES
COMPUTED BY
THE ALGORITHMS
AND RESULTING
FROM THE
LOGICAL
EXPRESSIONS

42b1

50

52

42c1

BIT SELECTION
CONSTANTS

VALUES USED AS
INPUT FOR THE
ALGORITHMS AND
LOGICAL
EXPRESSIONS

BIT SELECTION
CATALOGS

LOOK UP VALUES
USED AS INPUT
FOR THE
ALGORITHMS AND
LOGICAL
EXPRESSIONS

AUTOMATIC WELL PLANNING
BIT SELECTION SOFTWARE

FIG. 30

```
┌─────────────────────────────────────┐
│          INPUT DATA                  │
│  EARTH FORMATION CHARACTERISTICS     │      44a
│                                      │
│      DATA REPRESENTING               │
│  CHARACTERISTICS OF THE EARTH        │
│   FORMATION TO BE DRILLED            │
└─────────────────────────────────────┘
```

46/48

LOGICAL EXPRESSIONS AND ALGORITHMS

60

| HISTORICAL DATA | |
|---|---|
| EARTH FORMATION CHARACTERISTICS | SEQUENCE OF DRILL BITS USED CORRESPONDING TO EARTH FORMATION CHARACTERISTICS |
| CHARACTERISTIC 1 CHARACTERISTIC 2 • • • | SEQUENCE OF DRILL BITS 1 SEQUENCE OF DRILL BITS 2 • • • |

60a

60b

42b

RECORDER OR DISPLAY DEVICE

| BIT SELECTION OUTPUT DATA 42b1 |
|---|
| SELECTED SEQUENCE OF DRILL BITS, AND OTHER ASSOCIATED DATA |

FIG. 31A

INPUT DATA 44a

| | |
|---|---|
| MEASURED DEPTH | CASING TYPE NAME |
| UNCONFINED COMPRESSIVE STRENGTH | CASING POINT |
| CASING POINT DEPTH | DAY RATE RIG |
| HOLE SIZE | SPREAD RATE RIG |
| CONDUCTOR | HOLE SECTION NAME |

LOGICAL EXPRESSIONS 46

ALGORITHMS 48

42b

RECORDER OR DISPLAY DEVICE

BIT SELECTION OUTPUT DATA 42b1

−MEASURED DEPTH
−CUMULATIVE UNCONFINED COMPRESSIVE STRENGTH (UCS)
−CUMULATIVE EXCESS UCS
−BIT SIZE
−BIT TYPE
−START DEPTH
−END DEPTH
−HOLE SECTION BEGIN DEPTH
−AVERAGE UCS OF ROCK IN SECTION
−MAXIMUM UCS OF BIT
−BIT AVERAGE UCS OF ROCK IN SECTION
−FOOTAGE
−STATISTICAL DRILLED FOOTAGE FOR THE BIT
−RATIO OF FOOTAGE DRILLED COMPARED TO STATISTICAL FOOTAGE
−STATISTICAL BIT HOURS
−ON BOTTOM HOURS
−RATE OF PENETRATION (ROP)
−STATISTICAL BIT ROP
−MECHANICAL DRILLING ENERGY (UCS INTEGRATED OVER DISTANCE
  DRILLED BY THE BIT)
−WEIGHT ON BIT
−RPM
−STATISTICAL BIT RPM
−CALCULATED TOTAL BIT REVOLUTIONS
−TIME TO TRIP
−CUMULATIVE EXCESS AS A RATIO TO THE CUMULATIVE UCS
−BIT COST
−HOLE SECTION NAME

FIG. 31B

FIG. 32B

FIG. 32D

FIG. 32A

FIG. 32C

FIG. 32

**Schlumberger RPM [Standard] - real data - 18000ft**

File Edit View Tools Help

Workflow

**Input Data**

- Scenario Info
- Trajectory
- Earth Properties
- Rig Selection
- Resample Inputs

**Wellbore Geometry**

- Mud Weights & Casing Po..
- Wellbore Sizes
- Casing Design
- Cement Design
- Wellbore Geometry

**Bit Selection Data**

| | Hole Section | Size | IADC | Start MD |
|---|---|---|---|---|
| | | in | | ft |
| 1 | Surface | 24.000 | 111 ▾ | 2796.00 |
| 2 | Intermediate | 22.000 | 888 ▾ | 3493.24 |
| 3 | Intermediate | 17.500 | 888 ▾ | 5648.76 |
| 4 | Intermediate | 15.000 | 888 ▾ | 7558.20 |
| 5 | Intermediate | 12.250 | 116 ▾ | 10481.43 |
| 6 | Intermediate | 12.250 | 116 ▾ | 13946.00 |
| 7 | Intermediate | 8.500 | 999 ▾ | 14339.70 |
| 8 | Production | 6.500 | 116 ▾ | 16249.15 |
| 9 | Production | 6.500 | 116 ▾ | 16642.85 |
| 10 | Production | 6.500 | 116 ▾ | 16997.18 |
| 11 | Production | 6.500 | 116 ▾ | 17361.35 |

FIG. 32A

◉ ◉ ◉ ⦿ Bit Selection ◉ ⚠ ◉ ◉ ◉ ○ ○ ○ ○ ○

| End MD | Distance | ROP | WOB | RPM | KREV | Excess | Co |
|---|---|---|---|---|---|---|---|
| ft | ft | ft/h | lbm | | | | K$ |
| 3493.24 | 697.24 | 38.50 | 5.00 | 85.00 | 0.00 | 0.00 | |
| 5648.76 | 2155.51 | 30.20 | 10.00 | 120.00 | 130.39 | 0.00 | |
| 7558.20 | 1909.45 | 35.40 | 5.00 | 140.00 | 599.55 | 0.00 | |
| 10481.43 | 2923.23 | 25.00 | 10.00 | 100.00 | 323.64 | 0.00 | |
| 13946.00 | 3464.57 | 30.00 | 10.00 | 100.00 | 701.57 | 0.00 | |
| 14339.70 | 393.70 | 29.90 | 10.00 | 100.00 | 692.91 | 0.00 | |
| 16249.15 | 1909.45 | 35.00 | 5.00 | 120.00 | 94.80 | 0.00 | |
| 16642.85 | 393.70 | 15.00 | 15.00 | 70.00 | 229.13 | 0.00 | |
| 16997.18 | 354.33 | 15.00 | 15.00 | 70.00 | 110.24 | 0.00 | |
| 17361.35 | 364.17 | 15.00 | 15.00 | 70.00 | 99.21 | 0.00 | |
| 17735.37 | 374.02 | 15.00 | 15.00 | 70.00 | 101.97 | 0.00 | |

FIG. 32B

| 12 | Production | 6.500 | 116 ▾ | 17735.37 |
| 13 | Production | 6.500 | 116 ▾ | 17922.38 |

◁

**Drilling Parameters** ⌃

- ✓ Drilling Fluids
- ✓ Bit Selection
- ✓ Drillstring Design
- ⚠ Hydraulics

| 0 | AverageUCS | 8842 |
| 0 | UCS | 8842 |

**Results** ⌃

- ✓ Risk Assessment
- ✓ Risk Matrix
- ✓ Time & Cost Data
- ◯ Time & Cost Chart
- ◯ Monte Carlo
- ◯ Monte Carlo Graph
- ◯ Summary Report
- ◯ Montage

| 3000 | 2 | | 3493.24 |
| 5000 | 3 | | 5648.76 |
| | 4 | | 7558.20 |
| 10000 | 5 | | 10481.43 |
| | 6 | | 14339.70 |
| 15000 | 7 | | 16249.15 |
| 18000 | | | |

**RPM Help** ◻ ⊹ ✕

◁

FIG. 32C

EP 1 644 800 B1

| 17922.38 | 187.01 | 26.00 | 12.00 | 60.00 | 89.76 | 0.00 |
| 18085.00 | 162.62 | 26.00 | 12.00 | 60.00 | 25.89 | 0.00 |

| 6 | Size | 25 | -28 | CumHrs | 584 |
| 56 | RPM | 144 | | | |
| 5 | WOB | 16 | | | |
| 14 | ROP | 40 | | | |

| 1 | 3493.24 | 3000 |
| 2 | 5648.76 | 5000 |
| 3 | 7558.20 | |
| 4 | 10481.43 | 10000 |
| 5 | 13946.00 | |
| 6 | 14339.70 | |
| | | 15000 |
| 7 | 16249.15 | |
| 8 | | |
| 10 | | |
| 11 | | 18000 |

FIG. 32D

COMPUTER SYSTEM

62

62a
PROCESSOR

62b — RECORDER OR DISPLAY DEVICE

62b1 — DRILLSTRING DESIGN OUTPUT DATA

SYSTEM BUS

MEMORY OR PROGRAM STORAGE DEVICE — 62c

AUTOMATIC WELL PLANNING DRILLSTRING DESIGN SOFTWARE — 62c1

64
INPUT DATA
64a

FIG. 33

74

62c1

MANUAL INPUT

DRILLSTRING DESIGN
LOGICAL EXPRESSIONS

RULE 1
RULE 2
RULE 3
.
.
.

64a

66

INPUT
DATA

VALUES USED
AS INPUT FOR
THE ALGORITHMS
AND LOGICAL
EXPRESSIONS

DRILLSTRING
DESIGN
OUTPUT
DATA

VALUES
COMPUTED BY
THE ALGORITHMS
AND RESULTING
FROM THE
LOGICAL
EXPRESSIONS

62b1

DRILLSTRING DESIGN
ALGORITHMS

ALGORITHM 1
ALGORITHM 2
ALGORITHM 3
.
.
.

68

70

72

62c1

DRILLSTRING DESIGN
CONSTANTS

VALUES USED AS
INPUT FOR THE
ALGORITHMS AND
LOGICAL
EXPRESSIONS

DRILLSTRING DESIGN
CATALOGS

LOOK UP VALUES
USED AS INPUT
FOR THE
ALGORITHMS AND
LOGICAL
EXPRESSIONS

AUTOMATIC WELL PLANNING
DRILLSTRING DESIGN SOFTWARE

FIG. 34

76

INPUT DATA

| INPUT DATA | CONSTANTS | CATALOGS |

64a           70    72

DRILLSTRING DESIGN LOGICAL EXPRESSIONS

CHECK THAT ALL DRILLSTRING COMPONENTS
WILL FIT INTO THE WELLBORE GEOMETRY

ARE LWD OR MWD MEASUREMENT TOOLS
NEEDED FOR THE HOLE BEING DRILLED

66

68

DRILLSTRING DESIGN ALGORITHMS

DETERMINE OUTER DIAMETER OF DC1, DC2, HW, AND DP

DETERMINE MAXIMUM 'WEIGHT ON BIT' IN HOLE SECTION

DETERMINE WEIGHT OF DC1, DC2, AND HW

DETERMINE LENGTH OF DC1, DC2, AND DP

DETERMINE THE TENSILE RISK

CALCULATE COST BASED ON DURATION OF DRILL IN SECTION

CALCULATE THE KICK TOLERANCE

DRILLSTRING DESIGN OUTPUT DATA

A SUMMARY OF THE DRILLSTRING IN EACH HOLE SECTION
 —SIZE AND WEIGHT AND LENGTH OF EACH COMPONENT
 —WHAT TOOLS (LWD, MWD) WE HAVE IN THE DRILLSTRING

FIG. 35

62b1

FIG. 36A

FIG. 36C

**Schlumberger RPM - Lomitas_251_RPM**

File  Edit  View  Tools  Help

Workflow

| Input Data |
|---|
| Scenario Info |
| Trajectory |
| Earth Properties |
| Rig Selection |
| Resample Inputs |

| Wellbore Geometry |
|---|
| Mud Weights & Casing Po.. |
| Wellbore Sizes |
| Casing Design |
| Cement Design |
| Wellbore Geometry |

| Drilling Parameters |
|---|
| Drilling Fluids |
| Bit Selection |
| Drillstring Design |
| Hydraulics |

| Results |
|---|
| Risk Assessment |
| Risk Matrix |
| Time & Cost Data |
| Time & Cost Chart |
| Monte Carlo |
| Monte Carlo Graph |
| Summary Report |
| Montage |

RPM Help

Drillstring Design

**Drillstring Data**

| | Hole Section | Measurement Tools | Length DC1 (m) | Weight DC1 (kg) | OD DC1 (in) | ID DC1 (in) | LW DC1 (kg/m) | Length DC2 (m) | Weight DC2 (kg) | OD DC2 (in) | ID DC2 (in) |
|---|---|---|---|---|---|---|---|---|---|---|---|
| 2 | Surface | Drill Collars | 27.43 | 7826.62 | 9.50 | 2.81 | 329.60 | 27.43 | 3579.01 | 6.75 | 2. |
| 3 | Intermediate | Drill Collars | 27.43 | 5201.34 | 8.00 | 2.81 | 224.52 | 27.43 | 3491.69 | 6.75 | 2. |
| 4 | Intermediate | Drill Collars | 27.43 | 2745.49 | 4.75 | 2.25 | 123.84 | 27.43 | 2745.49 | 4.75 | 2. |
| 5 | Production | Drill Collars | 27.43 | 2649.54 | 4.75 | 2.25 | 123.84 | 27.43 | 1669.89 | 3.50 | 1. |

**DrillstringDesign**

Tensile Risk

| 350 | | | 350 |
| 500 | 2 | 546.42 | 500 |
| 1000 | | | 1000 |
| 1500 | | | 1500 |
| | 3 | 1840.44 | |
| 2000 | | | 2000 |
| 2500 | 4 | 2455.44 | 2500 |
| | 5 | 2559.26 | |

**Wellbore Schematic: 2/23/2004 (KB-Grd: 15.2m)**
Schematic-Proposed

Wellbore Schematic, 18 5/8, 15.2-331.6, Wellbore, -,15.2

Wellbore Schematic, 17 1/2,331.6-543.4, Wellbore,-,331.6

Wellbore Schematic, 12 1/4, 543.4-1840.4, Wellbore,-,543.4

Wellbore Schematic, 8 1/2,1840.4-2455.4, Wellbore,-,1840.4

Wellbore Schematic,6 1/8,2455.4-2559.3, Wellbore,-,2455.4

FIG. 36B

FIG. 36D

**FIG. 36**

EP 1 644 800 B1

Schlumberger RPM - Lomitas_251_RPM

File  Edit  View  Tools  Help

Workflow ☐ ⊹ ✕ | Ⓚ ◁ ▷ Ⓝ | ✓ ✓ ✓ ✓ ✓ ✓ ✓ ✓

Drillstring Data

| Input Data | ⌃ |
| --- | --- |
| ✓ Scenario Info | |
| ✓ Trajectory | |
| ✓ Earth Properties | |
| ✓ Rig Selection | |
| ✓ Resample Inputs | |

| | Hole Section | Measurement Tools | | Length DC1 |
| --- | --- | --- | --- | --- |
| | | | | m |
| 2 | Surface | Drill Collars | ▽ | 27.4 |
| 3 | Intermediate | Drill Collars | ▽ | 27.4 |
| 4 | Intermediate | Drill Collars | ▽ | 27.4 |
| 5 | Production | Drill Collars | ▽ | 27.4 |

◁

DrillstringDesign

| Wellbore Geometry | ⌃ |
| --- | --- |
| ✓ Mud Weights & Casing Po.. | |
| ✓ Wellbore Sizes | |
| ✓ Casing Design | |
| ✓ Cement Design | |
| ✓ Wellbore Geometry | |

| 0 | Tensile Risk | 4 |
| --- | --- | --- |

350
500 2                      543.42

FIG. 36A

⊘ ⊘ ⊘ ⊘ | ⊘ Drillstring Design | ⊘ ⊘ ⊘ ⊘ ⊘ ⊘ ⊘ ⊘ ⊘

| Weight DC1 | OD DC1 | ID DC1 | LW DC1 | Length DC2 | Weight DC2 | OD DC2 | ID DC2 |
|---|---|---|---|---|---|---|---|
| kg | in | in | kg/m | m | kg | in | in |
| 7826.62 | 9.50 ▾ | 2.81 | 329.60 | 27.43 | 3579.01 | 6.75 ▾ | 2. |
| 5201.34 | 8.00 ▾ | 2.81 | 224.52 | 27.43 | 3491.69 | 6.75 ▾ | 2. |
| 2745.49 | 4.75 ▾ | 2.25 | 123.84 | 27.43 | 2745.49 | 4.75 ▾ | 2. |
| 2649.54 | 4.75 ▾ | 2.25 | 123.84 | 27.43 | 1669.89 | 3.50 ▾ | 1. |

| | |
|---|---|
| 350 | Wellbore Schematic: 2/23/2004 (KB-Grd: 15.2m) |
| 500 | Schematic-Proposed |

Wellbore Schematic, 18 5/8, 15.2-331.6,

FIG. 36B

EP 1 644 800 B1

**Drilling Parameters** ⌃

- ⊘ Drilling Fluids
- ⊘ Bit Selection
- ⊘ <u>Drillstring Design</u>
- ⊘ Hydraulics

**Results** ⌃

- ⊘ Risk Assessment
- ⊘ Risk Matrix
- ⊘ Time & Cost Data
- ⊘ Time & Cost Chart
- ⊘ Monte Carlo
- ⊘ Monte Carlo Graph
- ⊘ Summary Report
- ⊘ Montage

**RPM Help** ▢ ⊡ ✕

1000

1500

3          1840.44

2000

4          2455.44
2500   5    2559.26

FIG. 36c

FIG.36D

**COMPUTER SYSTEM**

80

RECORDER OR
DISPLAY DEVICE — 80b

PROCESSOR — 80a

TASK
VIEW — 100
BASE

SYSTEM BUS

MEMORY OR PROGRAM
STORAGE DEVICE — 80c

AUTOMATIC WELL
PLANNING
WORKFLOW CONTROL
SYSTEM SOFTWARE — 80c1

INPUT DATA — 84
84a

FIG. 37

EP 1 644 800 B1

TASK INFO
BASE — 104

88

TASK BASE

102

TASK INFO

100

TASK VIEW
BASE

86

TASK
MANAGER

94

TASK TRANSLATOR

102

NAVIGATION
CONTROL

TASK
VIEW
MANAGER

90

ACCESS
MANAGER

92

TASK DEPENDENCY

96

TYPE TRANSLATOR

98

84a

INPUT DATA

FIG. 38

EP 1 644 800 B1

80c1

100

98

102

96

104

102

94

92

88

86

90

FIG. 39

138

*FIG. 39A*

88

### TASKBASE

+<<PROPERTY>>INITIALIZED : BOOL
+<<PROPERTY>>TASKINFO : TASKINFO
+<<PROPERTY>>ISSTALE : BOOL
+<<PROPERTY>>NAME : STRING
+<<PROPERTY>>ID : STRING
+<<PROPERTY>>DESCRIPTION : STRING

---

+ INVOKE ( )
# EXECUTE ( )
+ CHECKINPUT ( )
+ INPUTVALIDATION ( )
+ INPUTVALIDATION ( )
+ OUTPUTVALIDATION ( )
+ OUTPUTVALIDATION ( )

– M_CURRENTTASK          # M_TASKMANAGER

86

### TASKMANAGER

+<<PROPERTY>>TYPETRANSLATOR : TYPETRANSLATOR
+<<PROPERTY>>CONFIRMCHANGES : CONFIRMCHANGESDELEGATE
+<<PROPERTY>>TASKS : TASKTRANSLATOR
+<<PROPERTY>>ACCESSMANAGER : ACCESSMANAGER
+<<PROPERTY>>UPDATENAVIGATION : UPDATENAVIGATION

---

+ WRITEDATATOACCESS ( )
+ WRITEDATATOACCESSFROMVIEW ( )
+ TRANSITIONTOTASK ( )
+ SETCURRENTACTIVITY ( )
+ SETTASKSTATE ( )
+ SHOWINPUT ( )
+ SHOWOUTPUT ( )
+ SHOWERROR ( )
– RUNTASK

—M_ACCESSMANAGER

| ACCESSMANAGER |
|---|
| +<<PROPERTY>>TYPETRANSLATOR : TYPETRANSLATOR<br>+<<PROPERTY>>NAME : STRING<br>+<<PROPERTY>>RACERCONFIGURATION : STRING |
| + SAVETRANSIENT ( )<br>+ IMPORT ( )<br>+ EXPORT ( )<br>+ ACCESSMANAGER ( )<br>+ INIT ( )<br>+ SETPRECIOUS ( )<br>+ ACCEPTTRANSIENT ( )<br>– CONVERTFROMDISPLAYTOSTORAGE ( )<br>– CONVERTFROMDISPLAYTOSTORAGE ( )<br>– CONVERTFROMSTORAGETODISPLAY ( )<br>– CONVERTFROMSTORAGETODISPLAY ( ) |

90

FIG. 39B

104

| TASKINFOBASE |
|---|
| +<<PROPERTY>>NAME : STRING<br>+<<PROPERTY>>TASKSETUPPROPERTIES : STRING[]<br>+<<PROPERTY>>ASSEMBLY : STRING<br>+<<PROPERTY>>INPUTTASK : BOOL<br>+<<PROPERTY>>TASKGROUP : STRING<br>+<<PROPERTY>>HELPFILE : STRING<br>+<<PROPERTY>>SHOWVIEW : BOOL<br>+<<PROPERTY>>INPUTTYPES : TYPE[]<br>+<<PROPERTY>>OUTPUTTYPES : TYPE[]<br>+<<PROPERTY>>INPUTS : STRING[]<br>+<<PROPERTY>>OUTPUTS : STRING[]<br>+<<PROPERTY>>CATALOGS : STRING[]<br>+<<PROPERTY>>CONSTANTS : STRING[] |

FIG. 39C

EP 1 644 800 B1

```
                        ┌─────────────────────────────────────────────────┐
                        │                    TASKINFO                      │
                        ├─────────────────────────────────────────────────┤
                        │ +<<PROPERTY>>UPDATEDEPENDENCY : UPDATEDEPENDENCY │       # M_
  # M_TASKINFO          │ +<<PROPERTY>>UPDATENAVIGATION  : UPDATENAVIGATION│    TASKINFO
 ──────────────────────▶│ +<<PROPERTY>>NEEDLOAD  : BOOL                    │◀──────────────
                        │ +<<PROPERTY>>TAG : OBJECT                        │
                        │ +<<PROPERTY>>STATE : TASKSTATE                   │
                        │ +<<PROPERTY>>ERROR : TASKERROR                   │
                        │ +<<PROPERTY>>CHANGES : TASKCHANGES               │
                        │                                                 │
                        └─────────────────────────────────────────────────┘
                                                                        102
                            # M_TASKS
```

```
                        ┌──────────────────────────────────┐         94
                        │           TASKTRANSLATOR          │
  -M_TASKS              ├──────────────────────────────────┤
 ──────────────────────▶│ +<<PROPERTY>>TASKS : TASKINFO[]  │ -M_TASKTRANSLATOR
                        ├──────────────────────────────────┤◀─────────────
                        │ + GETINDEX ( )                   │
                        │ + CREATETASK ( )                 │
                        │ + LOAD ( )                       │
                        └──────────────────────────────────┘
                            # M_TASKS
```

```
                        ┌──────────────────────────────────┐      92
                        │          TASKDEPENDENCY          │
  -M_DEPENDENCIES       ├──────────────────────────────────┤
 ──────────────────────▶│ + ATTRIBUTECHANGED ( )           │
                        │ + TASKFINISHED ( )               │
                        │ + EXECUTIONNEEDED ( )            │
                        │ + SAVE ( )                       │
                        │ + GETTASKDEPENDENCIES ( )        │
                        └──────────────────────────────────┘
```

FIG. 39D

**102**

—M_NAVIGATIONCONTROL—

| NAVIGATIONCONTROL |
|---|
| +<<PROPERTY>>CURRENTTASK : STRING<br>+<<PROPERTY>>WORKFLOWNAME : STRING<br>+<<PROPERTY>>TRANSITIONTOTASK : TRANSITIONTOTASK |
| + INITTASKS ( ) |

| TYPETRANSLATOR | **96** |
|---|---|
| +<<PROPERTY>>DATANAMES : STRING[]<br>+<<PROPERTY>>DATATYPES : STRING[]<br>+<<PROPERTY>>DISPLAYUNIT : STRING[]<br>+<<PROPERTY>>STORAGEUNIT : STRING[]<br>+<<PROPERTY>>MEASUREMENT : STRING[]<br>+<<PROPERTY>>INDEXNAMES : STRING[]<br>+<<PROPERTY>>SELECTEDUNITSYSTEM : STRING | |

#M_TYPES

FIG. 39E

**100**

| TASKVIEWBASE |
|---|
| +<<PROPERTY>>INITIALIZED : BOOL<br>+<<PROPERTY>>TASKINFO : TASKINFO |
| + BEGINTRANSACTION ( )<br>+ ENDTRANSACTION ( )<br>+ SHOWOUTPUT ( )<br>+ ONTRANSITIONTOTASK ( )<br>+ SHOWERROR ( )<br>+ SHOWINPUT ( ) |

—M_CURRENTVIEW

**98**

| TASKVIEWMANAGER |
|---|
| +<<PROPERTY>>TASKMANAGER : TASKMANAGER<br>+<<PROPERTY>>ACCESSMANAGER : ACCESSMANAGER<br>+<<PROPERTY>>CURRENTVIEW : TASKVIEWBASE<br>+<<PROPERTY>>SCENARIO : INT<br>+<<PROPERTY>>AVAILABLEWORKFLOWS : ARRAYLIST |
| + SETCURRENTACTIVITY ( )<br>+ CONFIRMWITHUSERBEFORESAVING ( )<br>+ SETTASKSTATE ( )<br>+ SHOWINPUT ( )<br>+ SHOWOUTPUT ( )<br>+ SHOWERROR ( ) |

FIG. 39F

FIG. 40

USER SELECTS TASK 1, TASK 4, TASK 5, AND TASK 6

TASK MANAGER DEFINES THE FOLLOWING WORKFLOW

86a     86d     86e     86f

TASK 1 → TASK 4 → TASK 5 → TASK 6

FIG. 41

USER SELECTS TASK 1, TASK 2, AND TASK 3

TASK MANAGER DEFINES THE FOLLOWING WORKFLOW

86a     86b     86c

TASK 1 → TASK 2 → TASK 3

FIG. 42

FIG.43

FIG. 44

EP 1 644 800 B1

FIG. 45

**EP 1 644 800 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 27012899 A

**Non-patent literature cited in the description**

- **BOOTH, J. ; BRADFORD, LD.R ; COOK, J.M. ; DOWELL, J.D. ; RITCHIE, G. ; TUDDENHAM, I.** Meeting Future Drilling Planning and Decision Support Requirements: A New Drilling Simulator. *2001 IADC/SPE Drilling Conference,* 27 February 2001

- **LUO, Y. ; BERN, P.A. ; CHAMBERS, B.D.** Flow-Rate Predictions for Cleaning Deviated Wells. *1992 IADC/SPE Drilling Conference,* 18 February 1992
- Applied Drilling Engineering. **MOORE ; CHIEN et al.** SPE Textbook Series. vol. 2